# EUROPEAN PATENT SPECIFICATION

(11) **EP 4 336 354 B1**
(45) Date of publication and mention of the grant of the patent: **22.04.2026**
(21) Application number: 22819420.5
(22) Date of filing: 31.05.2022
(51) Int. Cl.: G06F 9/451, G06F 9/46, G06F 9/54, G06F 8/61, G06F 8/60, H04N 21/41, G06F 3/04847, G06F 3/14, H04N 21/43, A63F 13/26, G09G 5/12, G09G 5/14, G06F 1/16, A63F 13/31, A63F 13/327, G06F 3/0481

(54) **DISTRIBUTED DISPLAY METHOD FOR APPLICATION INTERFACE, AND TERMINAL**
VERTEILTES ANZEIGEVERFAHREN FÜR EINE ANWENDUNGSSCHNITTSTELLE UND ENDGERÄT
PROCÉDÉ D'AFFICHAGE DISTRIBUÉ POUR INTERFACE D'APPLICATION ET TERMINAL

(30) Priority: 08.06.2021 CN 202110638383; 30.09.2021 CN 202111166052
(43) Date of publication of application: 13.03.2024
(73) Proprietor: Huawei Technologies Co., Ltd., Longgang Shenzhen, Guangdong 518129 (CN)
(72) Inventor: WANG, Zhen, Shenzhen, Guangdong 518129 (CN); QIANG, Bo, Shenzhen, Guangdong 518129 (CN); SUN, Bingxin, Shenzhen, Guangdong 518129 (CN); ZHANG, Yanan, Shenzhen, Guangdong 518129 (CN); WANG, Hongjun, Shenzhen, Guangdong 518129 (CN); SI, Junjie, Shenzhen, Guangdong 518129 (CN); HUA, Mengzheng, Shenzhen, Guangdong 518129 (CN); LI, Gang, Shenzhen, Guangdong 518129 (CN); LUO, Cheng, Shenzhen, Guangdong 518129 (CN); DUAN, Xiaoxiao, Shenzhen, Guangdong 518129 (CN); LI, Wei, Shenzhen, Guangdong 518129 (CN); XU, Chao, Shenzhen, Guangdong 518129 (CN)
(74) Representative: Gill Jennings & Every LLP
(86) International application number: PCT/CN2022/096317
(87) International publication number: WO 2022/257822

(56) References cited:
- CN-A- 103 870 221
- CN-A- 104 104 992
- CN-A- 104 750 388
- CN-A- 106 030 491
- CN-A- 111 666 055
- CN-A- 112 540 739
- US-A1- 2013 314 302
- US-A1- 2016 035 312
- US-A1- 2021 042 132

## Description

This application claims priority to Chinese Patent Application No. 202110638383.5, filed with the China National Intellectual Property Administration on June 8, 2021 and entitled "APPLICATION VIEW LAYOUT METHOD AND APPARATUS", and Chinese Patent Application No. 2021111660522, filed with the China National Intellectual Property Administration on September 30, 2021 and entitled "DISTRIBUTED DISPLAY METHOD AND TERMINAL FOR APPLICATION INTERFACE.

### TECHNICAL FIELD

This disclosure relates to the terminal field, and in particular, the invention relates to a method for displaying different parts of an application interface on a plurality of devices including a first terminal and a second terminal , and terminal for an application interface.

### BACKGROUND

There are many types of terminals. Various types of terminals usually have displays with different sizes, and the displays with different sizes present different visual effects. In a current wireless screen projection technology, screen content of a mobile phone can be projected onto a large-screen device (for example, a PC or a television). In this case, the screen content displayed on the mobile phone is the same as screen content displayed on the large-screen device. Alternatively, in some other wireless screen projection technologies, a network address of a video or an audio played on a mobile phone can be sent to a large-screen device, and the large-screen device downloads and plays the video or the audio based on the network address. However, in general, a current manner for implementing collaboration between displays of a plurality of terminals is single, and has poor flexibility.

US 2013/314302 A1 relates to a system for connecting multiple devices via wireless communication and data transmission to create a wider screen, solving the problem of small keyboards on small touch screens and improving the input accuracy and usability of communication terminals.

US 2016/035312 A1 discloses that a first display apparatus includes a detector configured to detect a second display apparatus in proximity with the first display apparatus; a transparent display configured to display an image and receive a user input in an overlapping area of the transparent display, wherein the overlapping area is in proximity with the second display apparatus; a communicator configured to form a communication link with the second display apparatus when the second display apparatus is detected, and transmit, to the second display apparatus, a request related to an object corresponding to the user input via the communication link when the user input is received; and a controller configured to obtain data corresponding to the request via the communicator. In embodiments, when the object displayed on the second display apparatus 100 is an application execution icon installed in the second display apparatus 100, the controller 210 may obtain an application file for installing an application that is the same as the application installed in the second display apparatus 100.

### SUMMARY

This application provides a method for displaying a display different parts of an application interface on a plurality of terminals, so that manners for collaborative display between the plurality of terminals are more flexible and richer.,wherein the detecting that a first preset condition is met comprises: detecting that a distance between the second terminal and the first terminal is less than or equal to a threshold; or detecting that a distance between the second terminal and the first terminal is less than or equal to a threshold and the second terminal approaches the first terminal; or detecting that the second terminal collides with the first terminal; or detecting a first operation that a user enables a collaborative display function on the first terminal. This object is solved by the attached independent claims and further embodiments and improvements of the invention are listed in the attached dependent claims.

To achieve the foregoing objectives, embodiments of this application provide the following technical solutions.

According to a first aspect according to the invention, a method for displaying different parts of an application interface on a plurality of devices including a first terminal and a second terminal is provided, including: A first terminal displays a first interface of a first application, where the first interface includes a first part and a second part. When detecting that a first preset condition is met, the first terminal displays a second interface of the first application, where the second interface includes the first part, and the second interface does not include the second part; and the first terminal sends a first message to a second terminal, where the first message is used to notify the second terminal to download and install one of the first application or a lightweight application of the first application, and display a third interface of the first application after installing the one of the first application or the lightweight application of the first application, the third interface includes the second part, and the third interface does not include the first part.

In some embodiments, the first part of the first interface is an interface of an upper/lower area of the first interface, and the second part of the first interface is an interface of a lower/upper area of the first interface. Alternatively, the first part of the first interface is an interface of a left/right area of the first interface, and the second part of the first interface is an interface of a right/left area of the first interface. Alternatively, the first part of the first interface is display-type content/interaction-type content of the first interface, and the second part of the first interface is interaction-type content/display-type content of the first interface. The display-type content includes one or more of document content, web page content, video content, and main body content of an application; and the interaction-type content includes one or more of a button, a menu, a catalog, a tool bar, a remark, a keyboard, and a tag.

For example, the first interface is a video play interface, the first part of the first interface is a played video image, and the second part of the first interface is a play control group. For another example, the first interface is a document editing interface, the first part of the first interface is a document editing page, and the second part of the first interface is a catalog, a menu, and the like. Alternatively, the first part of the first interface is a document editing page and a menu, and the second part of the first interface is a catalog.

In some other embodiments, a first page of the first application includes a plurality of fragments. The fragment is a basic unit of page separation and has its own life cycle. The fragment includes one or more visual controls, for example, a text display control and a picture display control. The first page includes a first fragment and a second fragment, the first fragment is used to display a first part of the first page, and the second fragment is used to display a second part of the first page.

In an example not according to the invention, the second terminal has installed the first application before receiving the first message. In this case, the first message sent by the first terminal to the second terminal includes an identifier of the second fragment. After receiving the identifier of the second fragment, the second terminal starts the second fragment of the first application based on the identifier of the second fragment, to display the second part of the first application. In another example, the second terminal has installed the first application before receiving the first message. In this case, the first message sent by the first terminal to the second terminal includes an installation package of the second fragment. After receiving the installation package of the second fragment, the second terminal automatically installs and starts the second fragment, to display the second part of the first page.

It can be learned from the foregoing that according to the distributed display method for an application interface in this embodiment of this application, different parts of a same application interface are displayed on different terminals, so that manners for collaborative display between a plurality of terminals are more flexible and richer.

In a possible implementation, the detecting that a first preset condition is met includes: detecting that a distance between the second terminal and the first terminal is less than or equal to a threshold; detecting that a distance between the second terminal and the first terminal is less than or equal to a threshold and the second terminal approaches the first terminal; detecting that the second terminal collides with the first terminal; or detecting a first operation that a user enables a collaborative display function on the first terminal.

It can be learned that this embodiment of this application provides a plurality of manners for triggering collaborative display of the first terminal and the second terminal, and a user operation manner is flexible and convenient.

In a possible implementation, the method further includes: When detecting that the second terminal approaches the first terminal from a first side of the first terminal, the first terminal determines that content on the first side in the first interface is the second part, and content that is not on the first side in the first interface is the first part.

In other words, when the second terminal approaches the first terminal from a left side/right side of the first terminal, the second terminal displays an interface of a left/right area in the first interface, and the first terminal displays an interface of a right/left area in the first interface. Alternatively, when the second terminal approaches the first terminal from the top/bottom of the first terminal, the second terminal displays an interface of an upper/lower area in the first interface, and the first terminal displays an interface of a lower/upper area in the first interface.

It can be learned that, when the user controls the second terminal to approach the first terminal in different directions, interfaces collaboratively displayed by the first terminal and the second terminal are different. This enriches manners for collaborative display between the first terminal and the second terminal.

In a possible implementation, a layout style of the first part in the second interface is different from a layout style of the first part in the first interface.

In other words, after the second part on the first terminal is migrated to the second terminal for display, the layout style of the first layout reserved on the first terminal may also change. For example, as an area for displaying the first part on the first terminal becomes larger, the displayed first part may also change, to facilitate viewing by the user.

In a possible implementation, that the first terminal displays a first interface of a first application includes: The first terminal creates a first memory data object, and displays the first part of the first interface and the second part of the first interface based on the first memory data object. After the first terminal sends the first message to the second terminal, the method further includes: The first terminal sends an identifier of the first memory data object to the second terminal, where the identifier of the first memory data object is used by the second terminal to display the third interface.

In other words, before the first terminal and the second terminal perform collaborative display, when the first terminal displays the first interface, the first part and the second part share the first memory data object, to implement communication between the first part and the second part. After the first terminal and the second terminal perform collaborative display, the first part displayed on the first terminal and the second part displayed on the second terminal still share the first memory data object, to implement communication between the first part displayed on the first terminal and the second part displayed on the second terminal, so as to implement data synchronization between the first terminal and the second terminal.

In this case, when the first application on the first terminal modifies content of the first memory data object, the first application on the second terminal may receive a data change notification, and update, based on changed content of the first memory data object, a page displayed on the second terminal. On the contrary, when the first application on the second terminal modifies content of the first memory data object, the first application on the first terminal may receive a data change notification, and update, based on changed content of the first memory data object, a page displayed on an associated device. In other words, in this embodiment of this application, cross-device communication is implemented in a form of directly operating a memory data object, so that a developer does not need to process complex serialization, deserialization, and remote procedure call (remote procedure call, RPC) of a data object. It can be learned that the cross-device communication solution provided in this embodiment of this application helps improve application development efficiency, and also helps the developer focus on application service development.

In a possible implementation, after the first terminal sends the first message to the second terminal, the method further includes: The first terminal displays a fourth interface of the first application when the first terminal detects a second preset condition, where the fourth interface includes the first part and the second part. The detecting that a second preset condition is met includes: detecting that the distance between the second terminal and the first terminal is greater than the threshold; detecting that the second terminal moves away from the first terminal; or detecting a second operation that the user exits the collaborative display function on the first terminal.

In an example, the user may operate the second terminal to move away from the first terminal, or operate the first terminal to move away from the second terminal, so that the first terminal and the second terminal exit collaborative display of the first application interface. Alternatively, the second operation for exiting the collaborative display function is performed on the first terminal.

In a possible implementation, after the first terminal detects the second preset condition, the method further includes: The first terminal sends a second message to the second terminal, where the third message indicates the second terminal to exit the first application.

In some examples, when the first terminal determines to exit the collaborative display function, the first terminal sends the second message to the second terminal, to indicate the second terminal to exit the second message.

In a possible implementation, the detecting that a second preset condition is met further includes: The first terminal receives a third message indicating that the second terminal has exited the first application.

In some other examples, the user may perform an operation on the second terminal to exit the collaborative display function, or directly exit the first application on the second terminal, to exit the collaborative display function. Optionally, after determining to exit the collaborative display function, the second terminal sends the third message to the first terminal, to indicate the first terminal to exit the collaborative display function.

In a possible implementation of the first aspect, before the displaying, by the first terminal, a second interface, the method further includes:, the first terminal determines, based on one or more of a location of a second terminal relative to the first terminal, a type of the second terminal, a type of the first terminal, a device feature of the second terminal, a device feature of the first terminal, a device status of the second terminal, and a device status of the first terminal, that the first terminal is to display a second interface and the second terminal is to display a third interface.

For details, refer to the descriptions of the content and the beneficial effects in the fourth aspect. Details are not described herein again.

In a possible implementation of this aspect, the determining, based on one or more of a location of a second terminal relative to the first terminal, a type of the second terminal, a type of the first terminal, a device feature of the second terminal, a device feature of the first terminal, a device status of the second terminal, and a device status of the first terminal, that the first terminal is to display the first part of the first interface and the second terminal is to display the second part of the first interface includes: when the second terminal is located on the left of/above the first terminal, determining that the first terminal is to display right content of the first interface and the second terminal is to display left content of the first interface; when the second terminal is located on the left of/above the first terminal, determining that the first terminal is to display lower content of the first interface and the second terminal is to display upper content of the first interface; when the second terminal is located on the right of/below the first terminal, determining that the first terminal is to display left content of the first interface and the second terminal is to display right content of the first interface; or when the second terminal is located on the right of/below the first terminal, determining that the first terminal is to display upper content of the first interface and the second terminal is to display lower content of the first interface.

It can be learned that, when the user controls the second terminal to approach the first terminal in different directions, interfaces collaboratively displayed by the first terminal and the second terminal are different. This enriches manners for collaborative display between the first terminal and the second terminal.

In a possible implementation, the determining, based on one or more of a location of a second terminal relative to the first terminal, a type of the second terminal, a type of the first terminal, a device feature of the second terminal, a device feature of the first terminal, a device status of the second terminal, and a device status of the first terminal, that the first terminal is to display a second interface and the second terminal is to display a third interface further includes: when the first interface includes a first page and a second page of a first application, determining that the first terminal is to display the first page of the first application and the second terminal is to display the second page of the first application; when the first interface includes a third page of a second application and a fourth page of a third application, determining that the first terminal is to display the third page of the second application and the second terminal is to display the fourth page of the third application; or when the first interface includes a fifth page of a fourth application and a floating window, determining that the first terminal is to display the fifth page of the fourth application and the second terminal is to display a page of an application corresponding to the floating window; or determining that the second terminal is to display the fifth page of the fourth application and the third terminal is to display a page of an application corresponding to the floating window.

In this implementation, the first interface includes different parts of different applications.

In a possible implementation, the determining, based on one or more of a location of a second terminal relative to the first terminal, a type of the second terminal, a type of the first terminal, a device feature of the second terminal, a device feature of the first terminal, a device status of the second terminal, and a device status of the first terminal, that the first terminal is to display a second interface and the second terminal is to display a third interface further includes: when the device type of the first terminal is a first type, and/or the device type of the second terminal is a second type, displaying, by the first terminal, display-type content of the first interface, and displaying, by the second terminal, interaction-type content of the first interface, where the display-type content includes one or more of document content, web page content, video content, and main body content of an application; and the interaction-type content includes one or more of a button, a menu, a catalog, a tool bar, a remark, a keyboard, and a tag; and the first type is different from the second type.

It should be noted that, in some embodiments, the first terminal displays the display-type content of the first interface, and may also display some interaction-type content.

In a possible implementation, the device feature includes a screen size; and the determining, based on one or more of a location of a second terminal relative to the first terminal, a type of the second terminal, a type of the first terminal, a device feature of the second terminal, a device feature of the first terminal, a device status of the second terminal, and a device status of the first terminal, that the first terminal is to display a second interface and the second terminal is to display a third interface further includes: when a screen size of the first terminal is greater than that of the second terminal, displaying, by the first terminal, display-type content of the first interface, and displaying, by the second terminal, interaction-type content of the first interface, where the display-type content includes one or more of document content, web page content, video content, and main body content of an application; and the interaction-type content includes one or more of a button, a menu, a catalog, a tool bar, a remark, a keyboard, and a tag.

It should be noted that, in some embodiments, the first terminal displays the display-type content of the first interface, and may also display some interaction-type content.

In a possible implementation, the device feature includes a human-computer interaction manner; and the determining, based on one or more of a location of a second terminal relative to the first terminal, a type of the second terminal, a type of the first terminal, a device feature of the second terminal, a device feature of the first terminal, a device status of the second terminal, and a device status of the first terminal, that the first terminal is to display a second interface and the second terminal is to display a third interface further includes: when a priority of a human-computer interaction manner of the first terminal is higher than a priority of a human-computer interaction manner of the second terminal, displaying, by the first terminal, interaction-type content of the first interface, and displaying, by the second terminal, display-type content of the first interface, where the display-type content includes one or more of document content, web page content, video content, and main body content of an application; and the interaction-type content includes one or more of a button, a menu, a catalog, a tool bar, a remark, a keyboard, and a tag.

It should be noted that, in some embodiments, the first terminal displays the display-type content of the first interface, and may also display some interaction-type content.

According to another aspect according to the invention, a terminal for displaying different parts of an application interface on a plurality of devices including the terminal is provided, including a processor, a memory, and a display. The memory and the display are coupled to the processor, the memory is configured to store computer program code, the computer program code includes computer instructions, and when the processor reads the computer instructions from the memory, the terminal is enabled to perform the method according to any one of the foregoing aspects and the possible implementations of the foregoing aspects.

For technical effects that can be achieved by the distributed display terminal for an application interface provided in the eighth aspect, the apparatus provided in the ninth aspect, the computer-readable storage medium provided in the tenth aspect, the computer program product provided in the eleventh aspect, and the chip system provided in the twelfth aspect, refer to the technical effects achieved by the method according to any one of the foregoing aspects and the possible implementations of the foregoing aspects. Details are not described herein again.

### BRIEF DESCRIPTION OF DRAWINGS

FIG. 1 is a schematic diagram of a multi-terminal collaborative display scenario according to an embodiment of this application;
FIG. 2a is a schematic diagram of a structure of a terminal according to an embodiment of this application;
FIG. 2b-1 to FIG. 2b-14 are schematic diagrams of user interfaces related to a pre-authentication method according to an embodiment of this application;
FIG. 2c-1 to FIG. 2c-3 are schematic diagrams of a method for detecting that an associated device B approaches a terminal A according to an embodiment of this application;

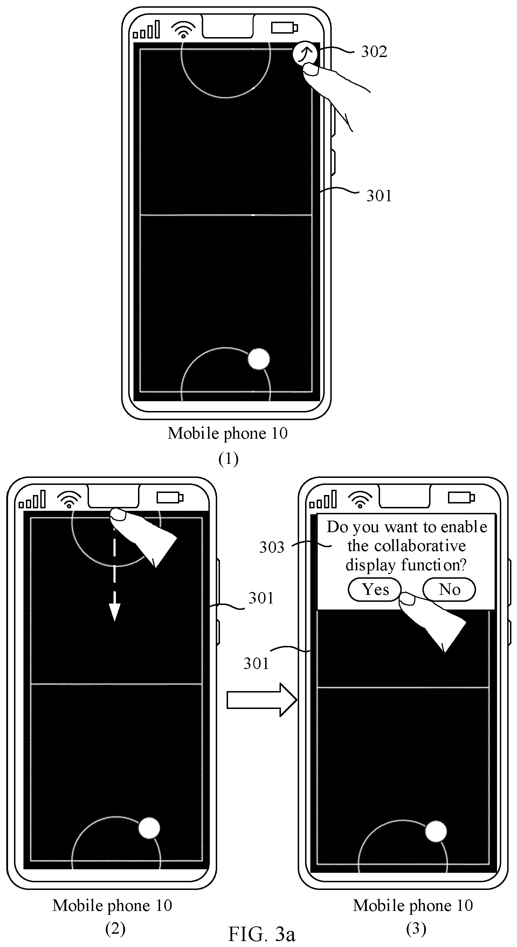

FIG. 3a to FIG. 3c are schematic diagrams of some user interfaces related to a multi-terminal collaborative display method according to an embodiment of this application;

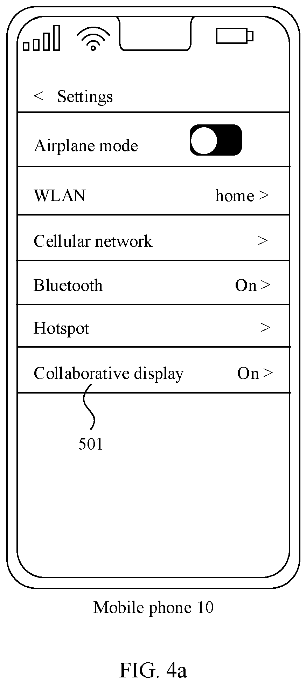

FIG. 4a to FIG. 4j are schematic diagrams of some other user interfaces related to a multi-terminal collaborative display method according to an embodiment of this application;

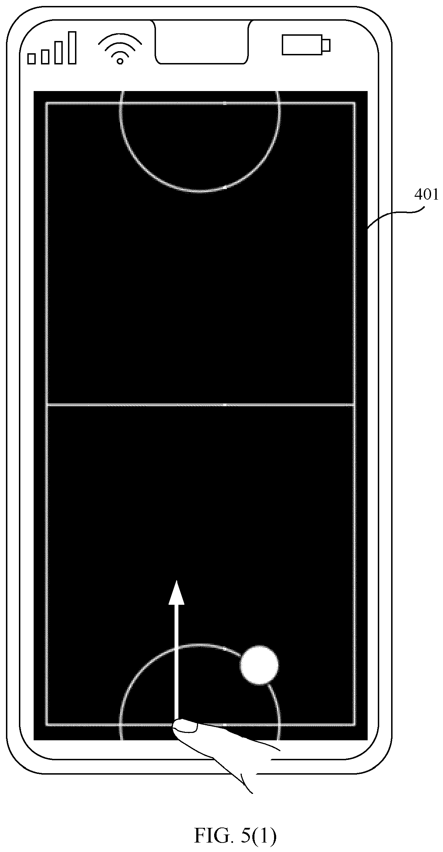

FIG. 5(1) to FIG. 5(6) are a schematic diagram of another user interface related to a multi-terminal collaborative display method according to an embodiment of this application;

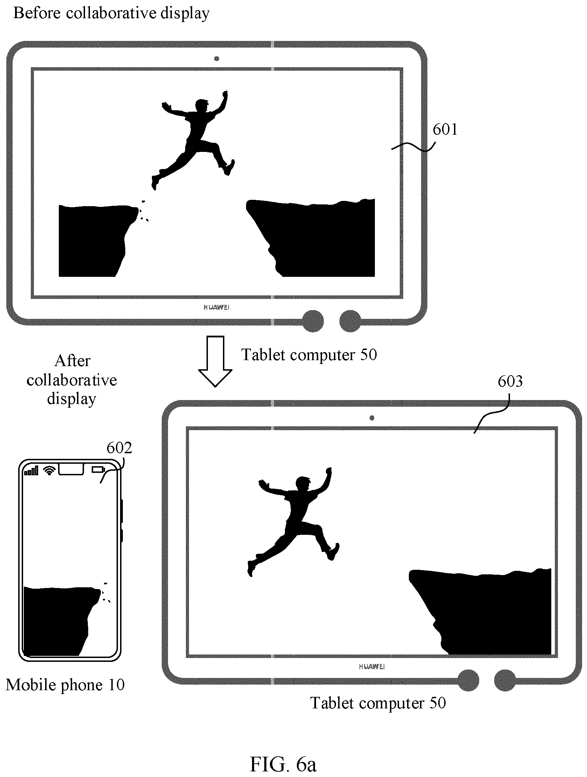

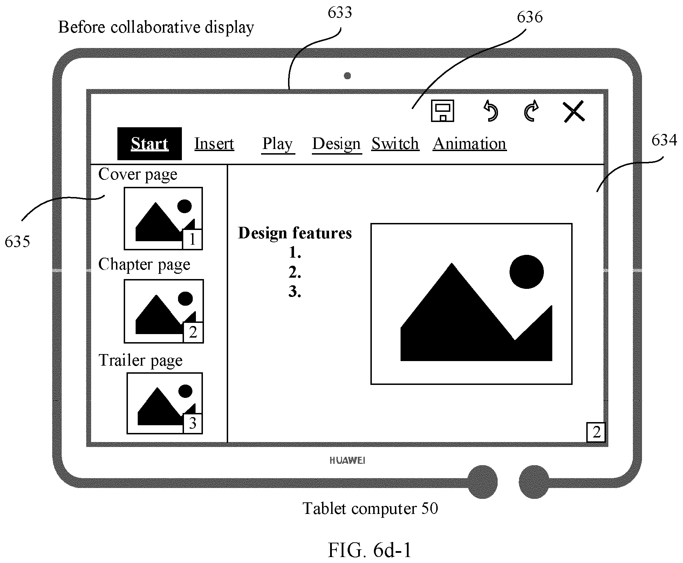

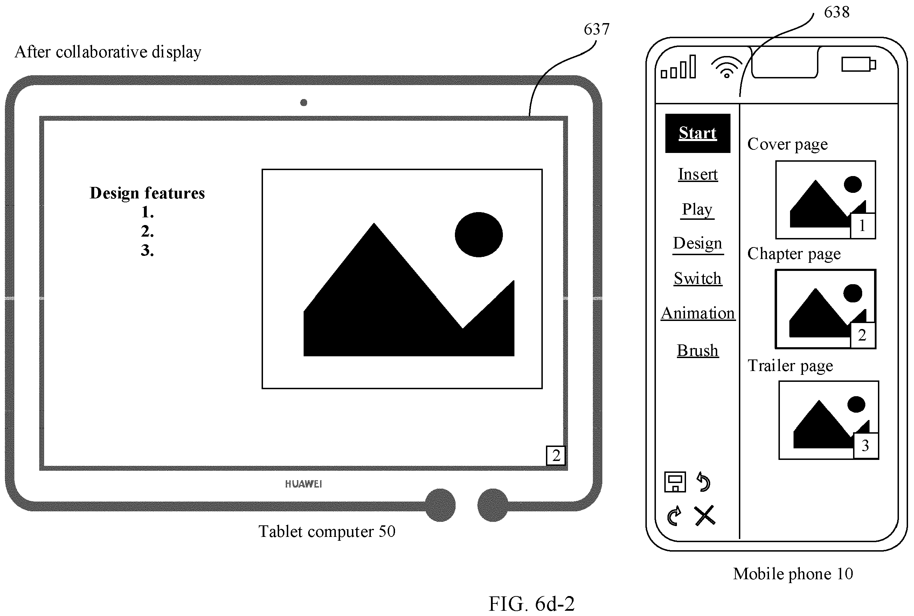

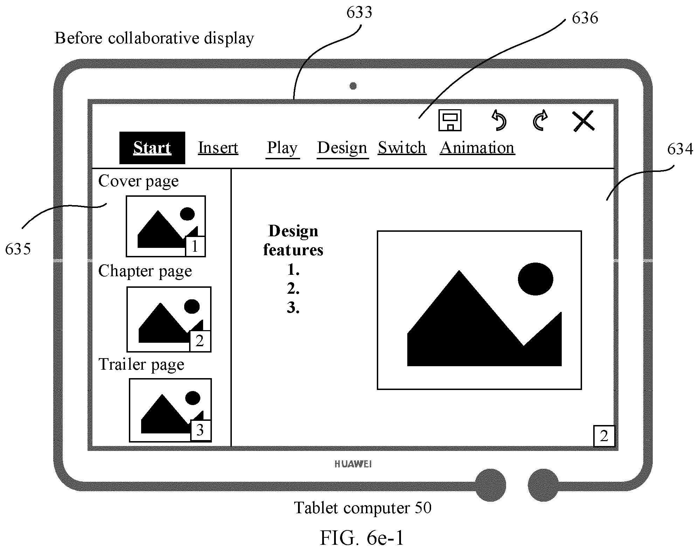

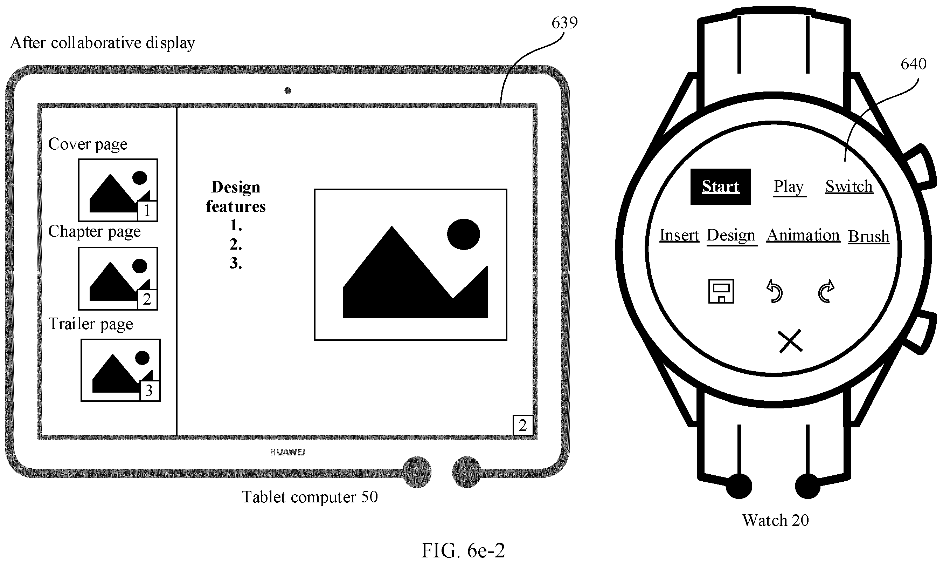

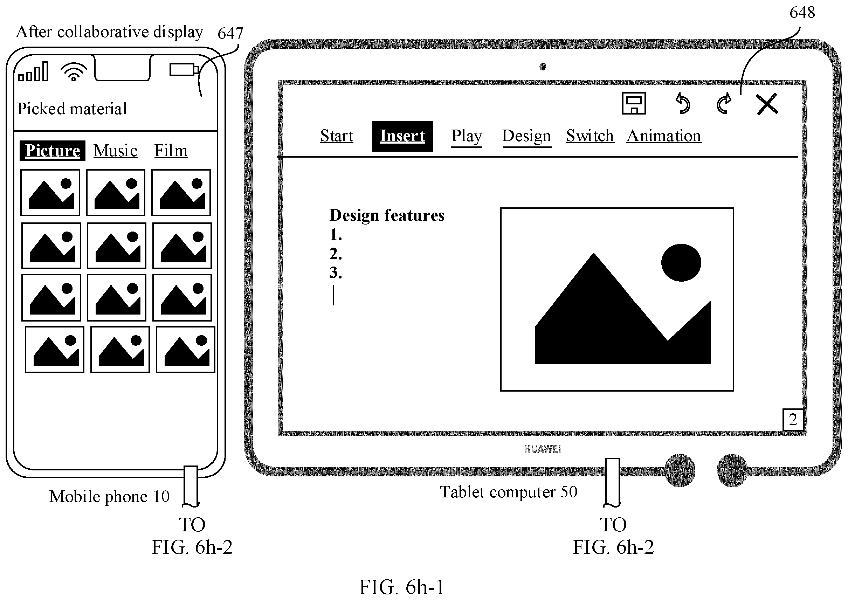

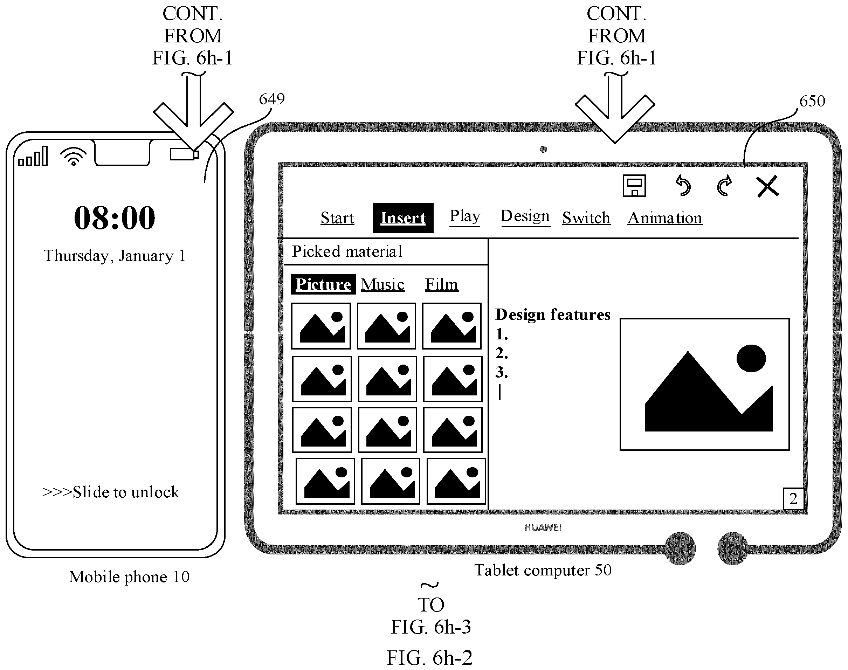

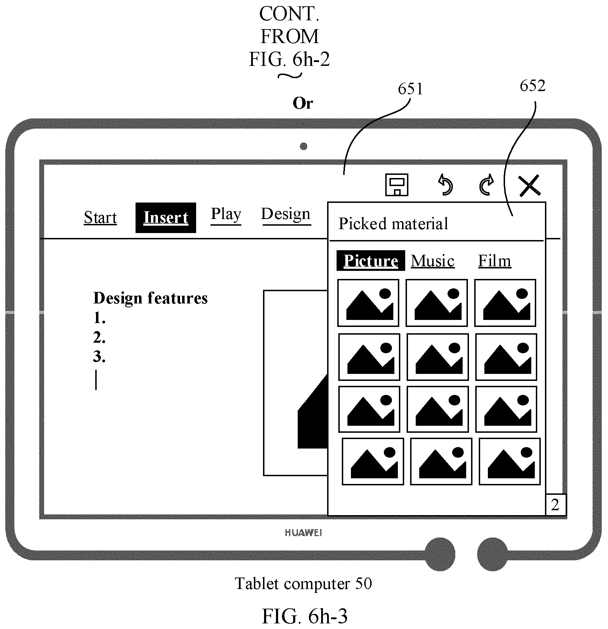

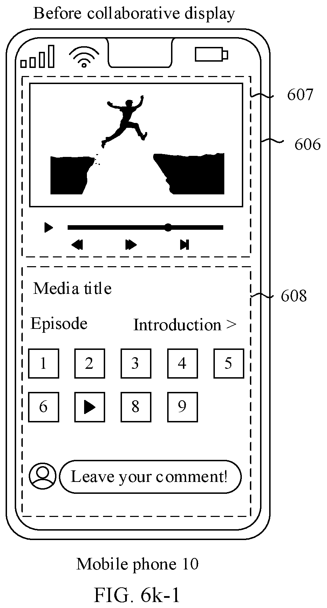

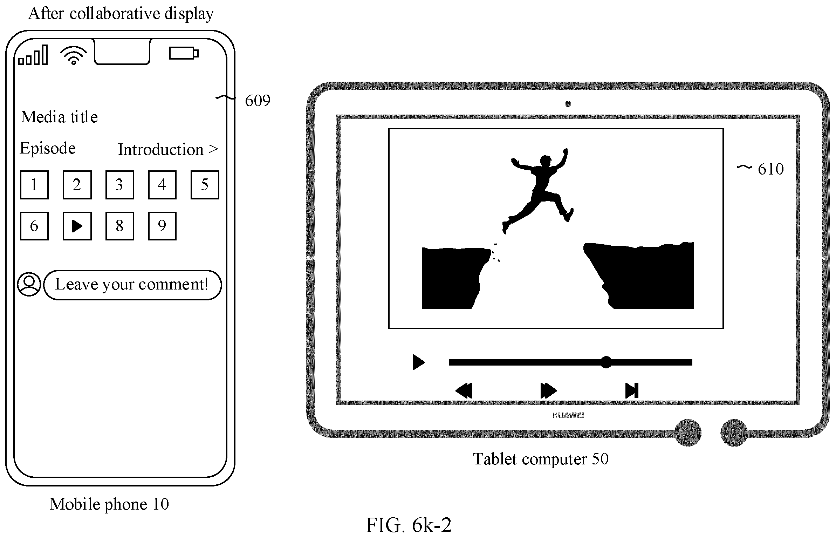

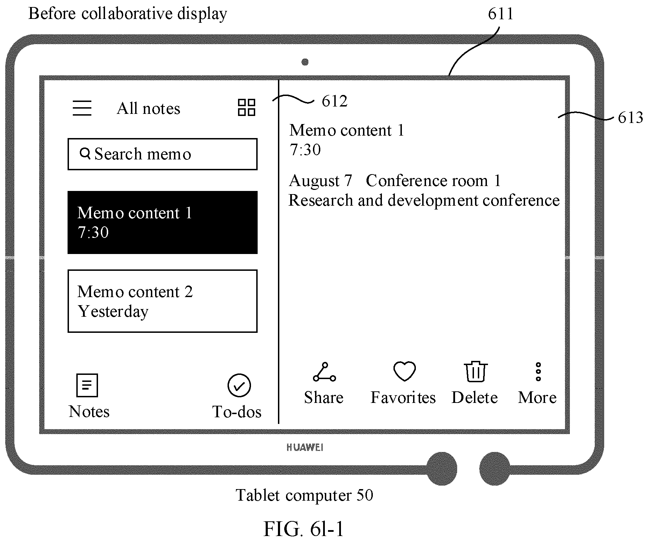

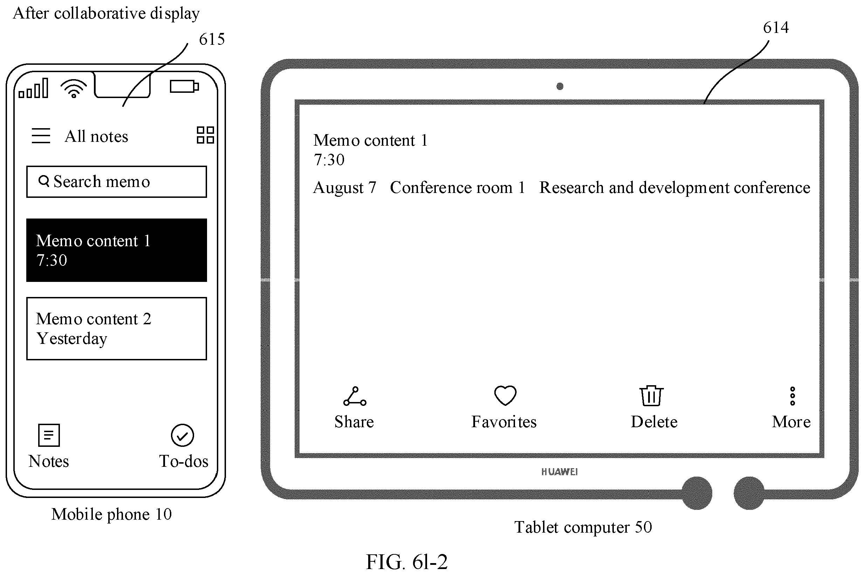

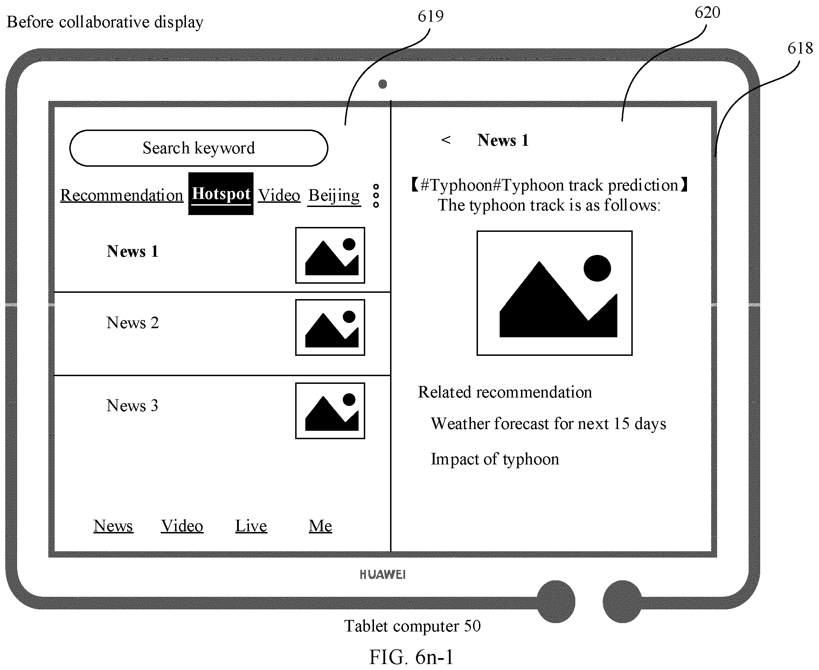

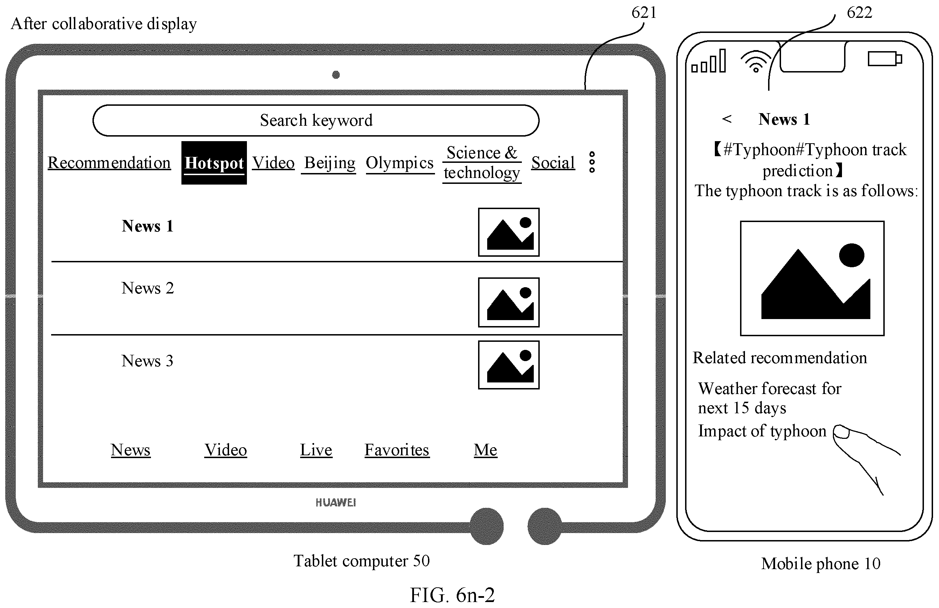

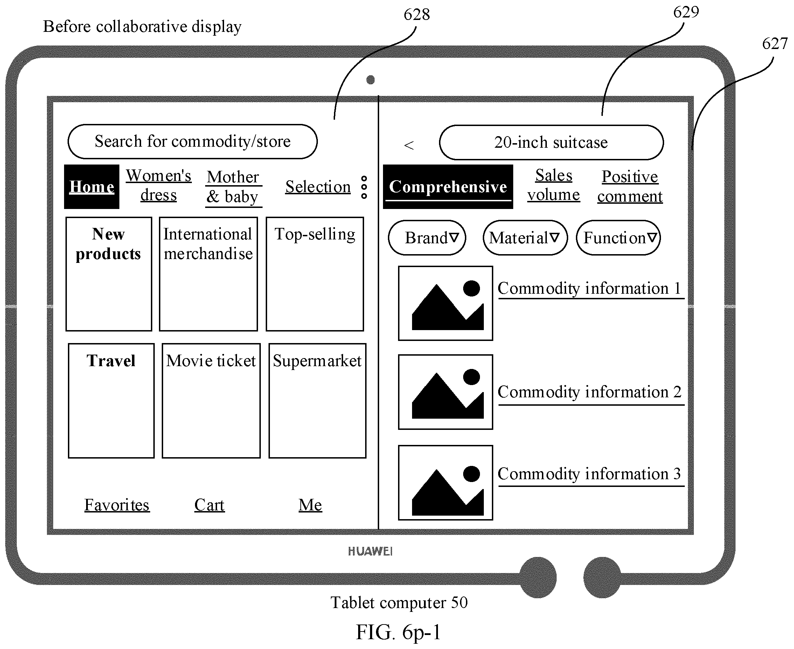

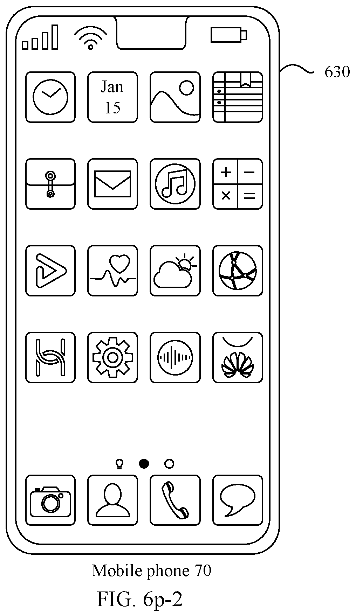

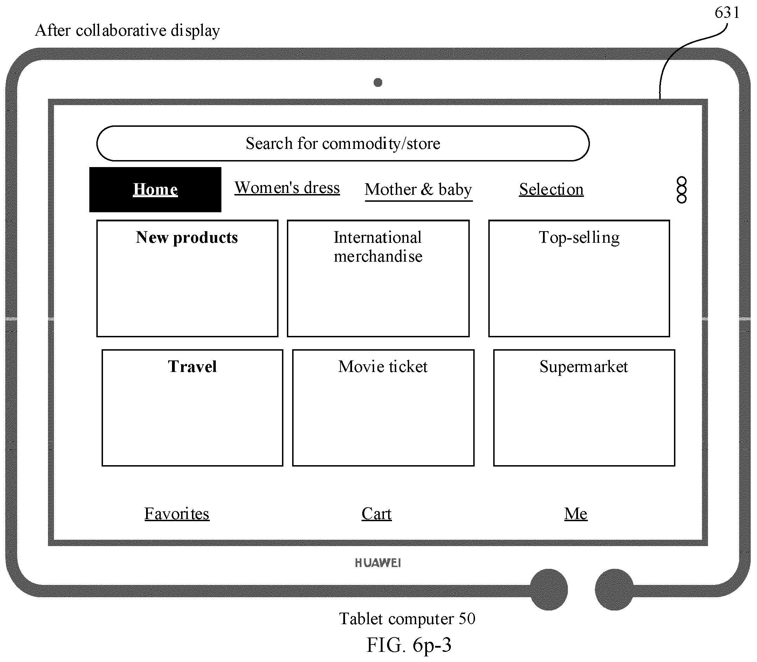

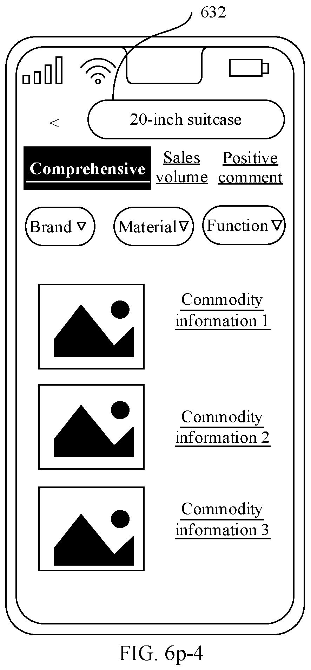

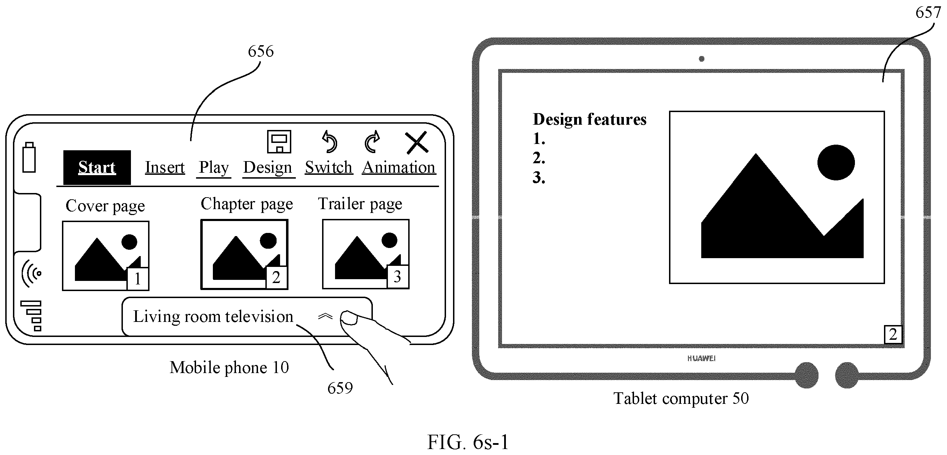

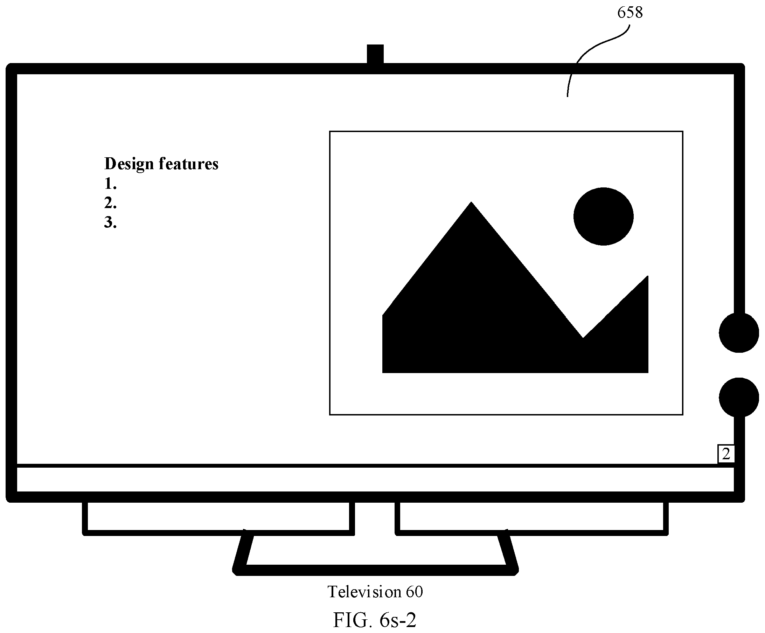

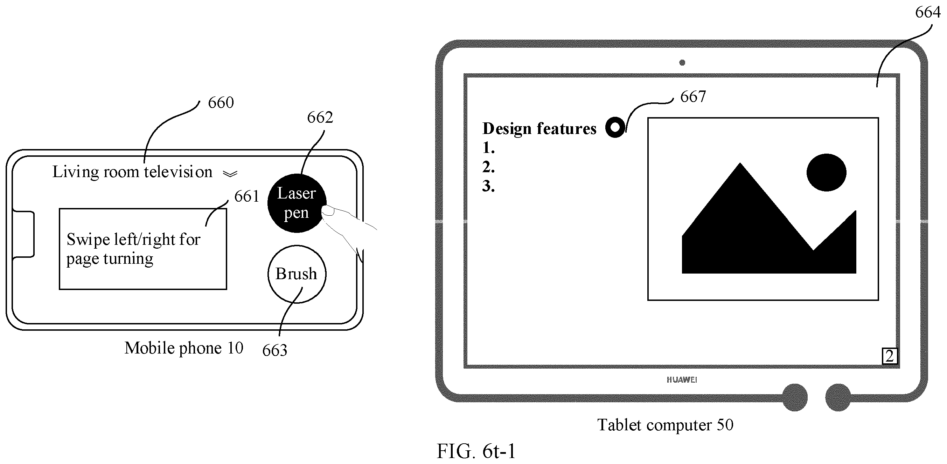

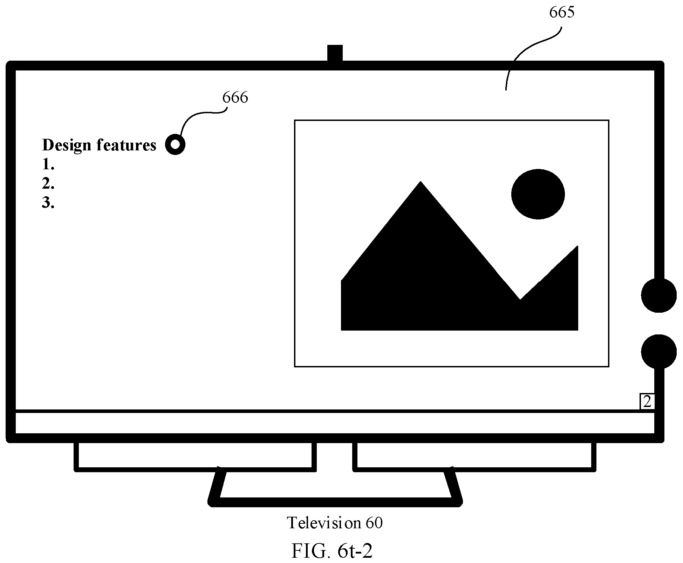

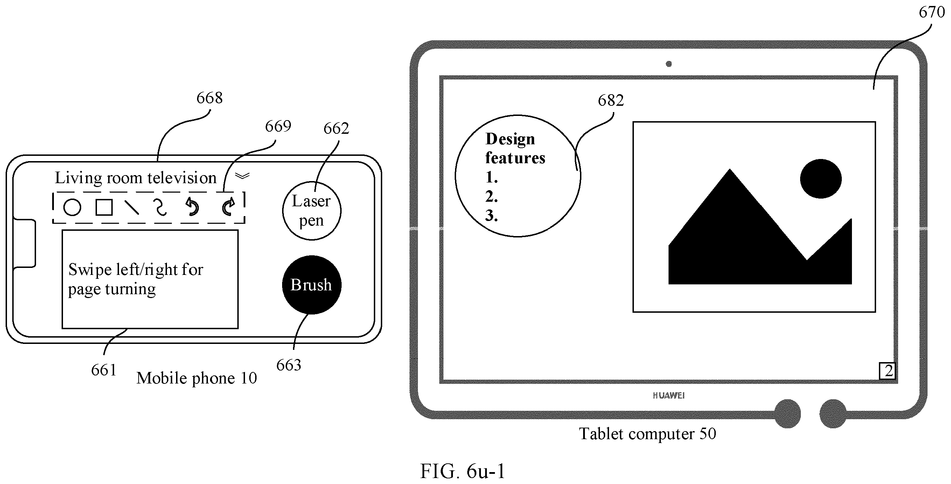

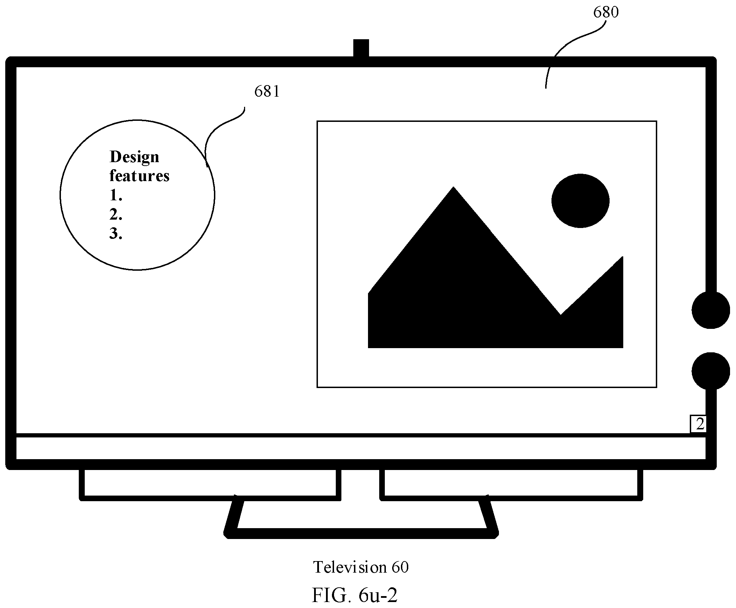

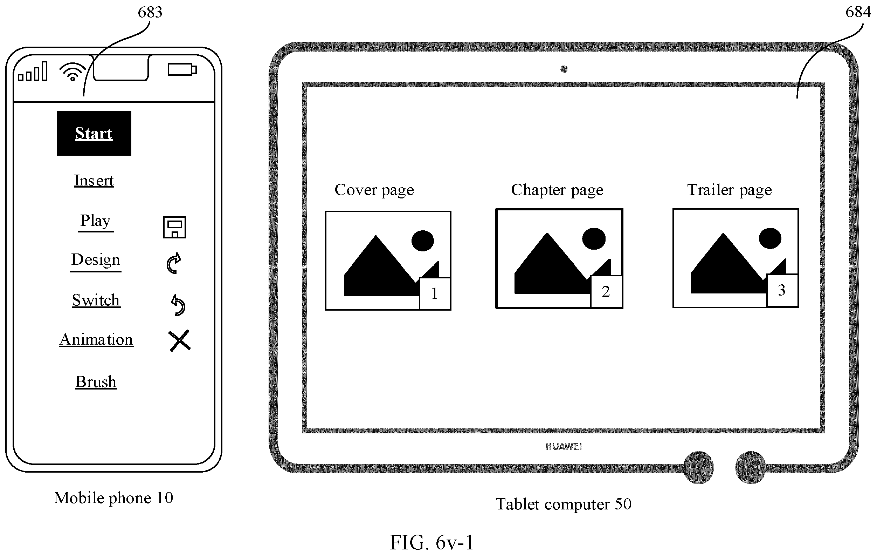

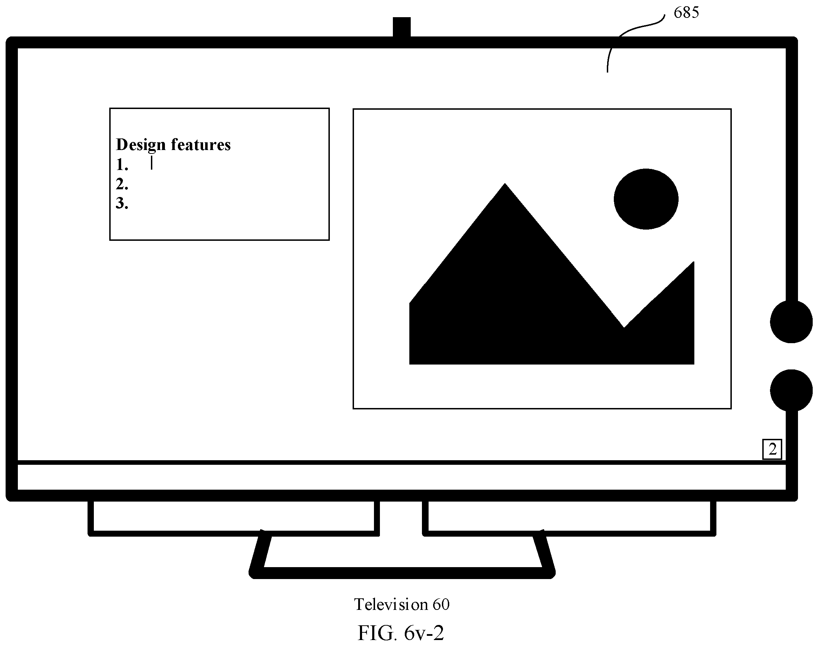

FIG. 6a to FIG. 6w are schematic diagrams of some other user interfaces related to a multi-terminal collaborative display method according to an embodiment of this application;

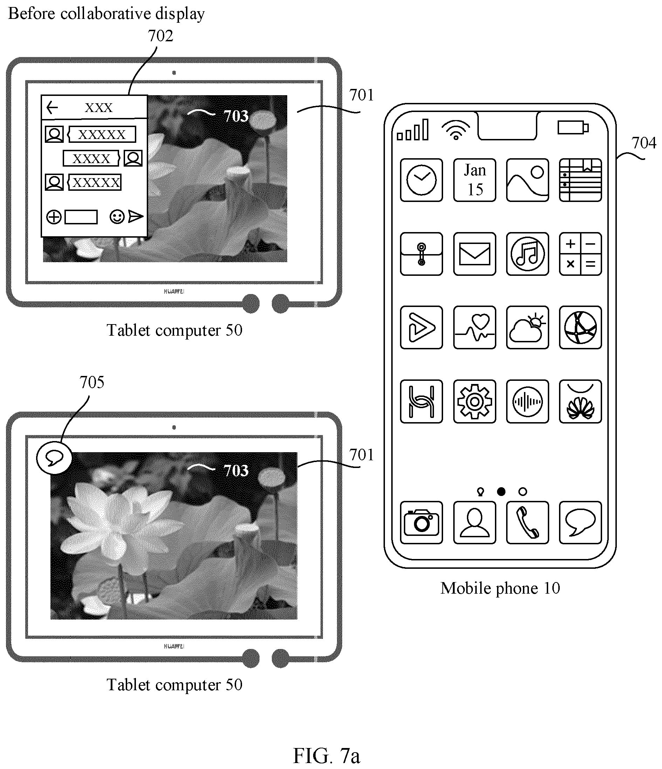

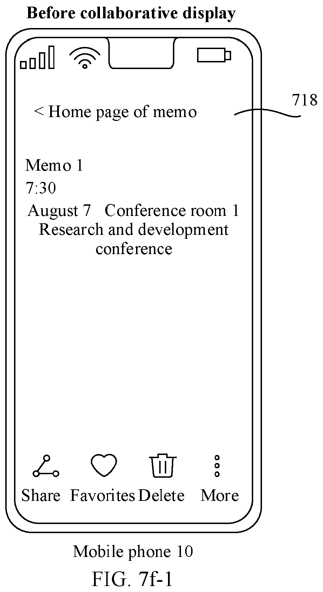

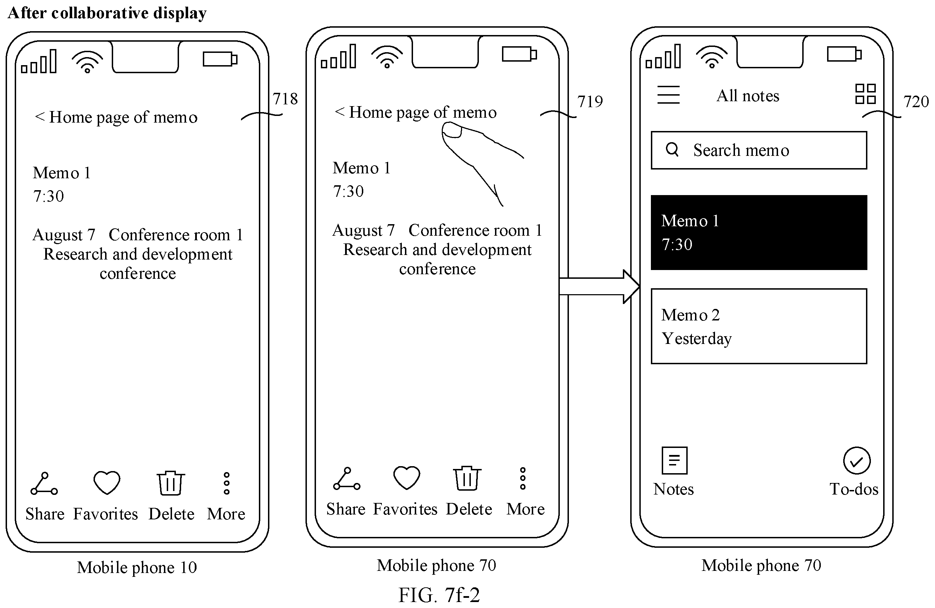

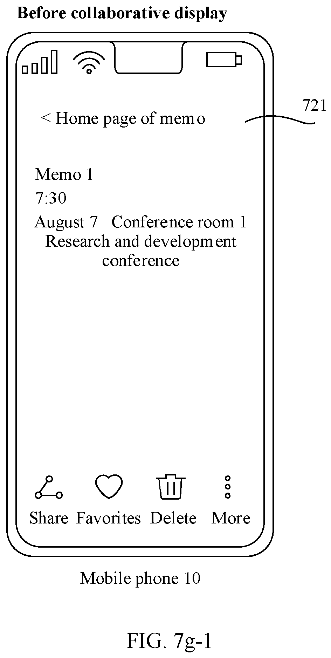

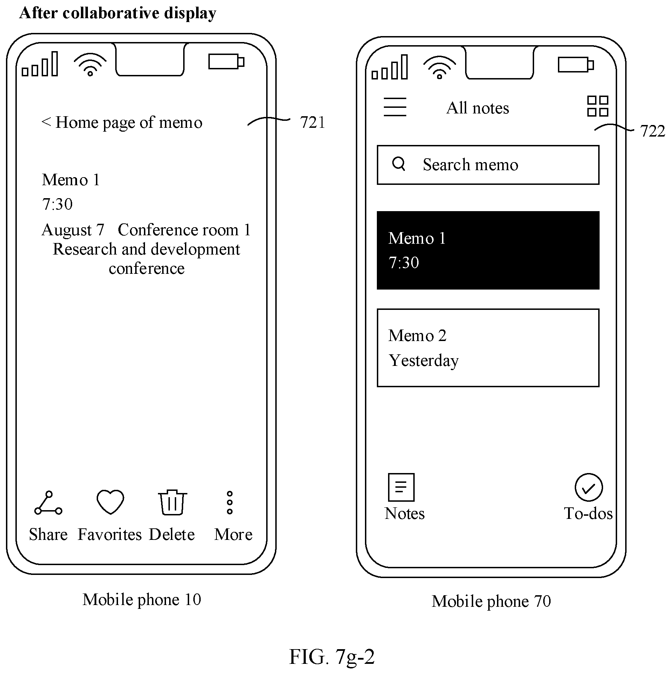

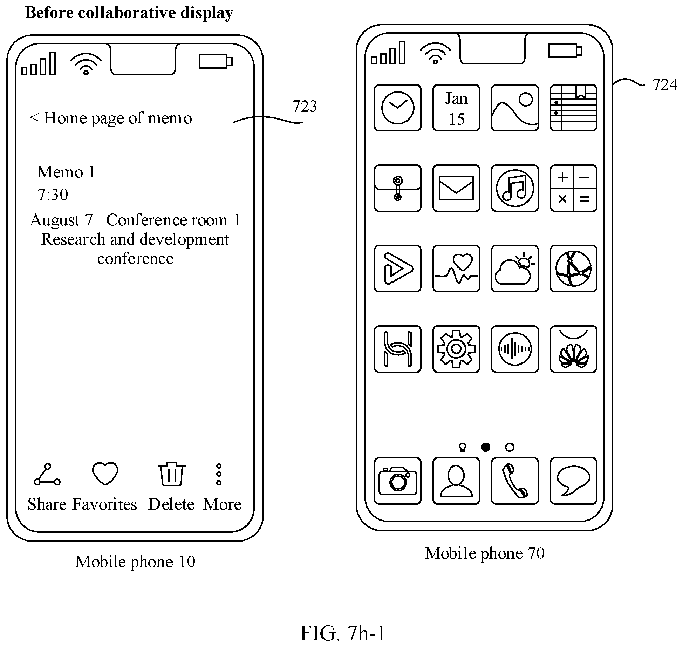

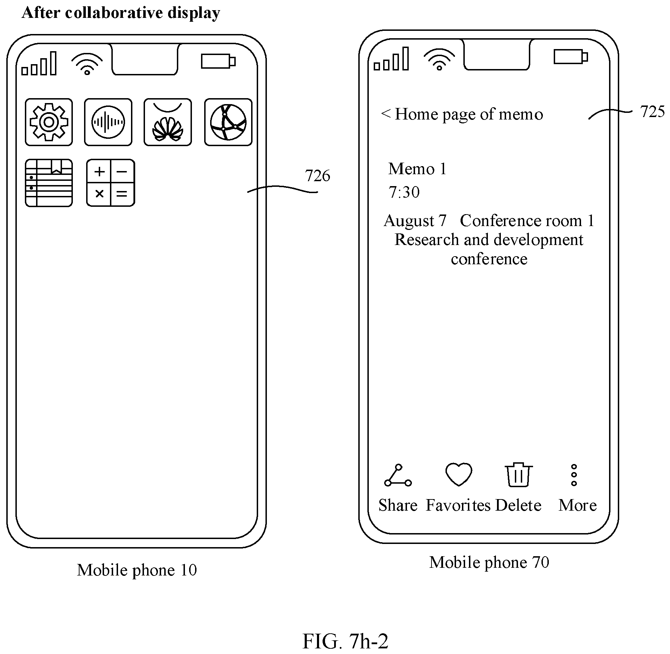

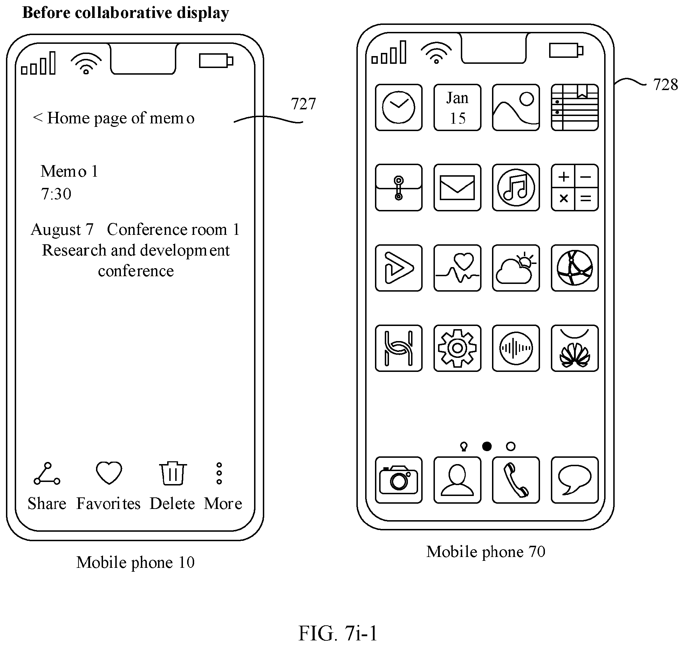

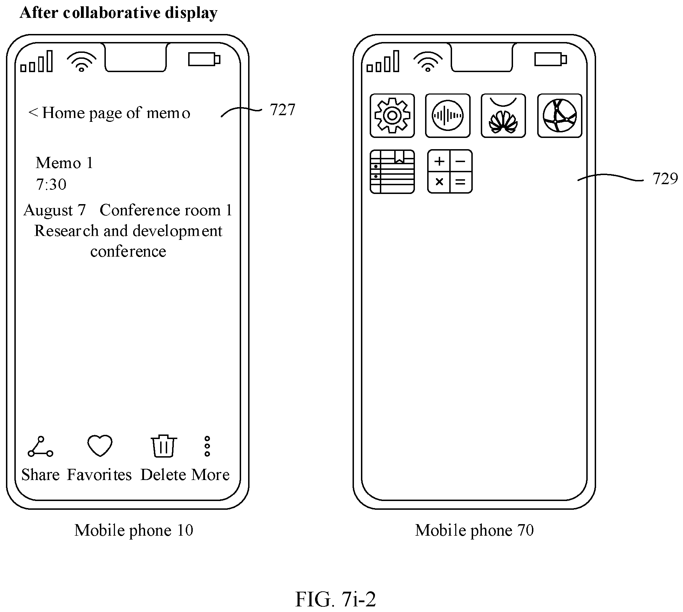

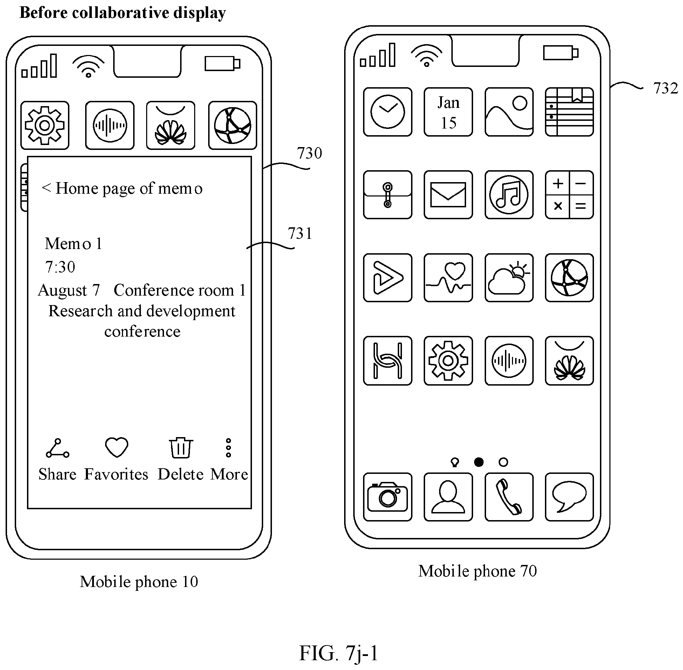

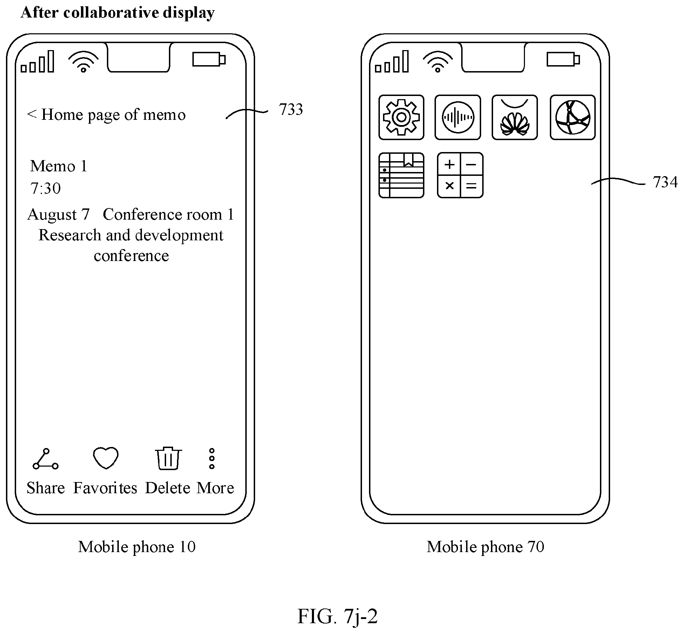

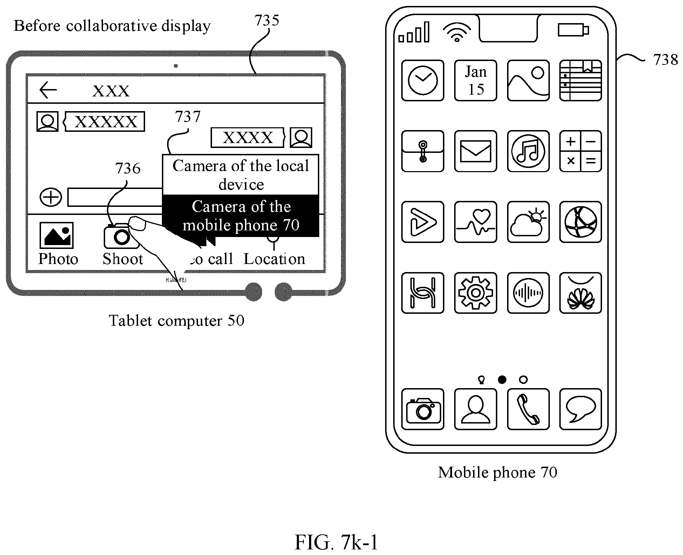

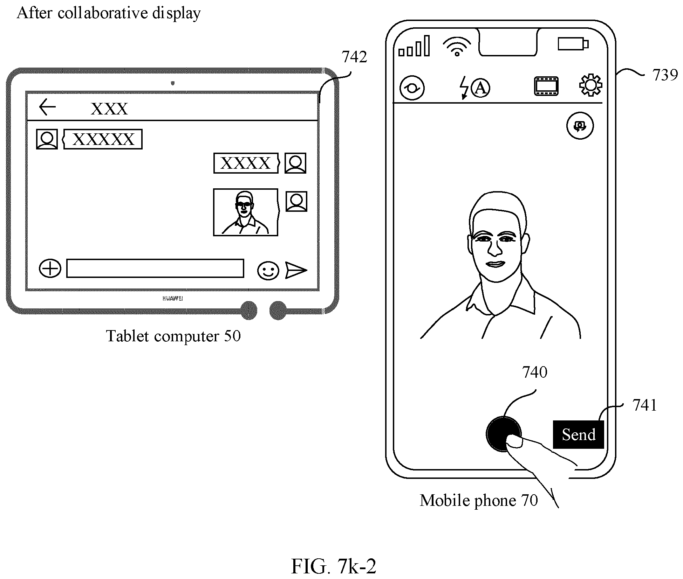

FIG. 7a to FIG. 7l-1 and FIG. 7l-2 are schematic diagrams of some other user interfaces related to a multi-terminal collaborative display method according to an embodiment of this application;
FIG. 8a-1 and FIG. 8a-2 to FIG. 8e are schematic diagrams of some user interfaces related to a method for suspending or exiting multi-terminal collaborative display according to an embodiment of this application;

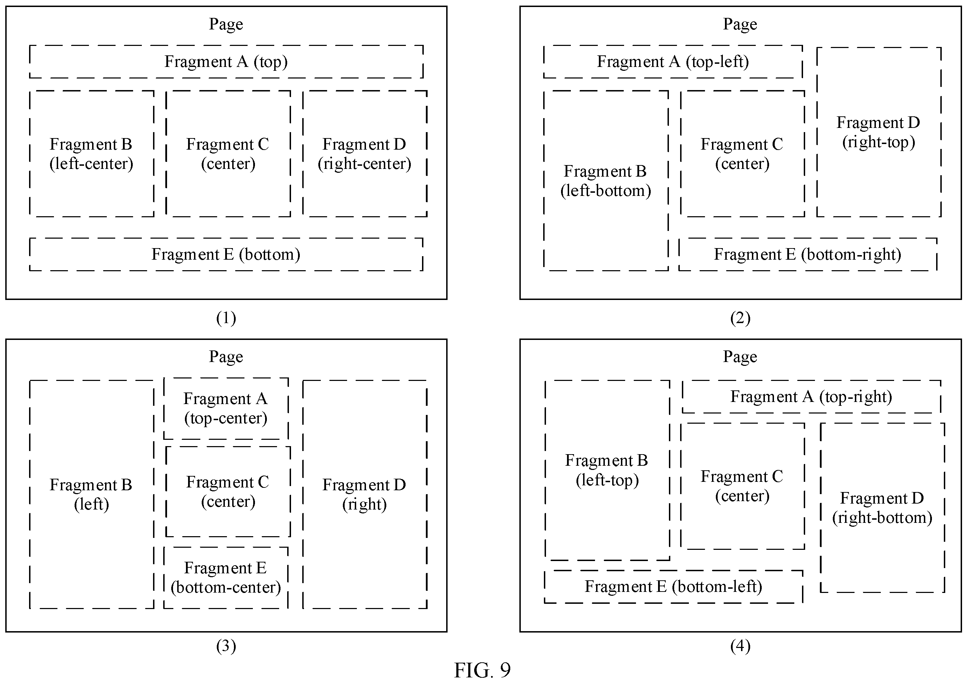

FIG. 9 is a schematic diagram of a structure of a page according to an embodiment of this application;

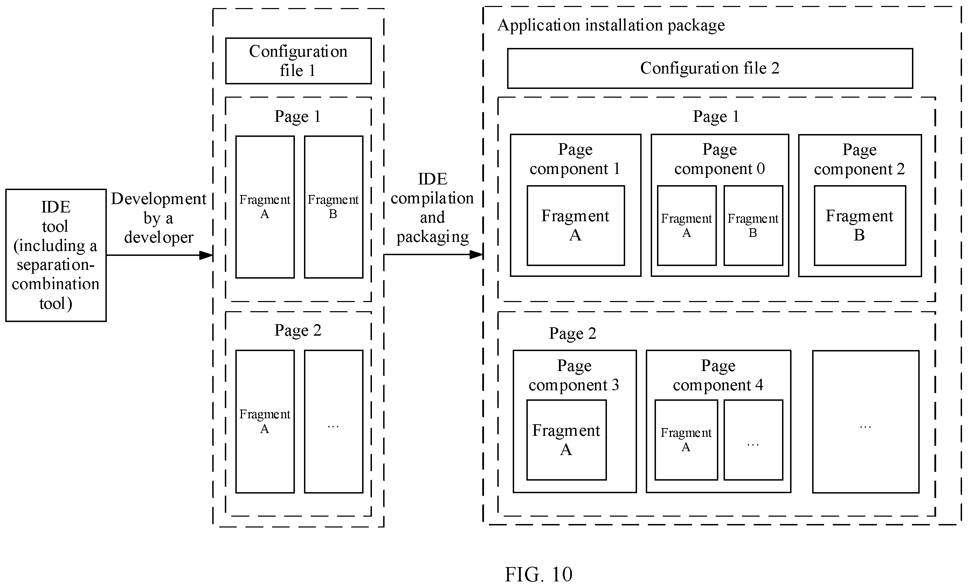

FIG. 10 is a schematic diagram of an application installation package development method according to an embodiment of this application;

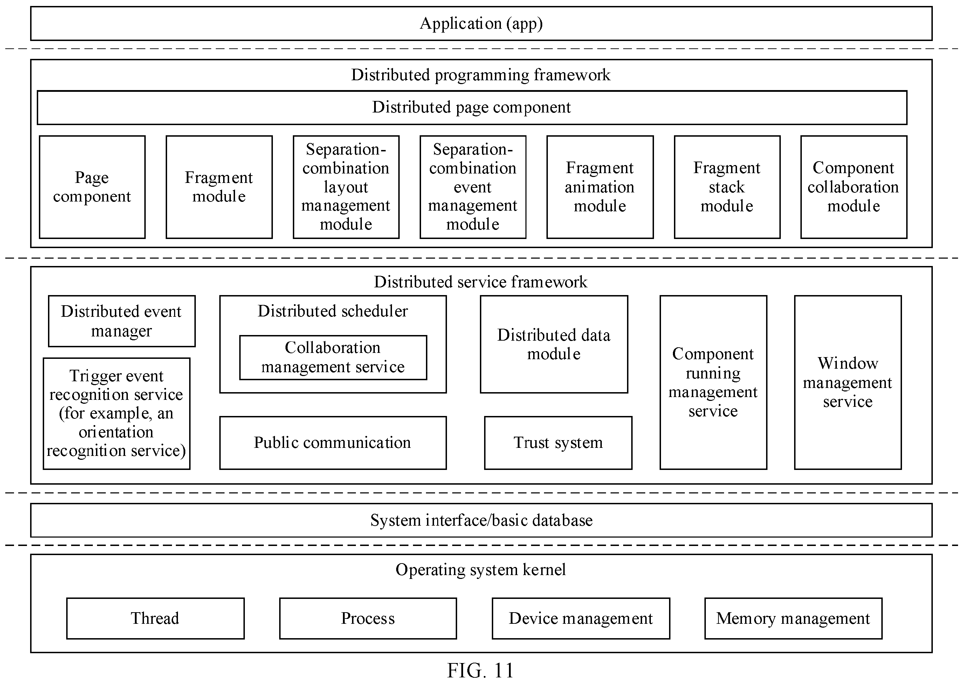

FIG. 11 is a schematic diagram of a structure of a terminal according to an embodiment of this application;

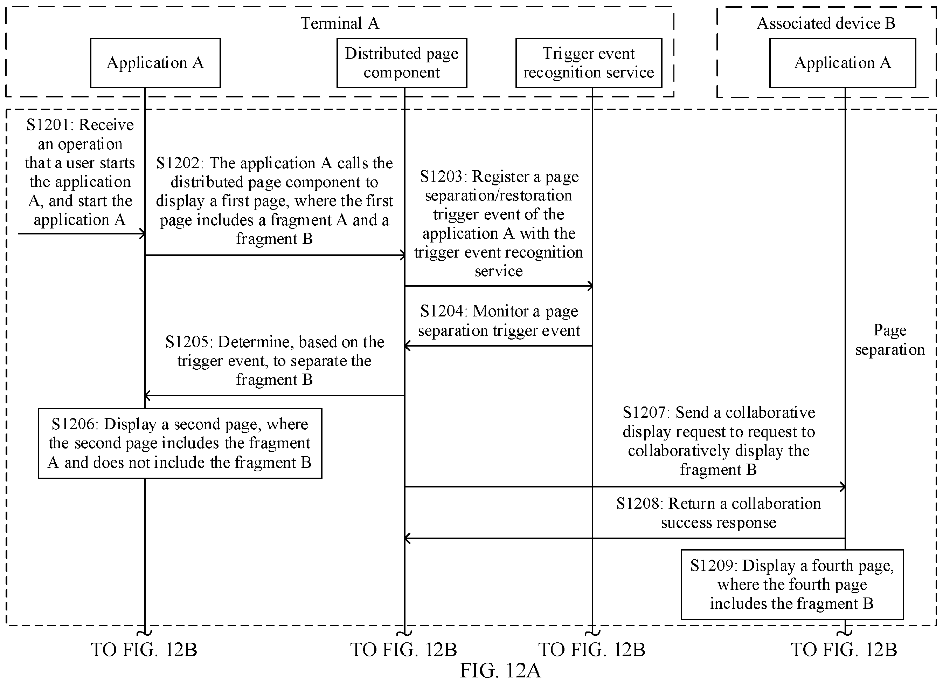

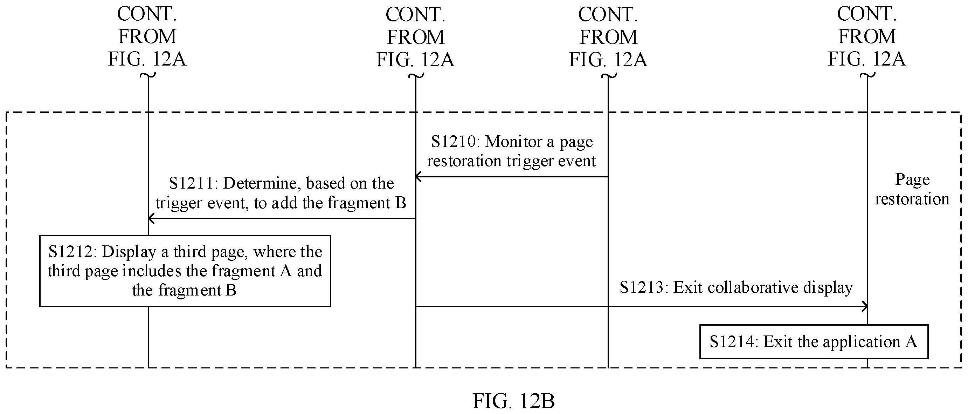

FIG. 12A and FIG. 12B are a schematic flowchart of a method for performing multi-terminal collaborative display and exiting collaborative display according to an embodiment of this application;

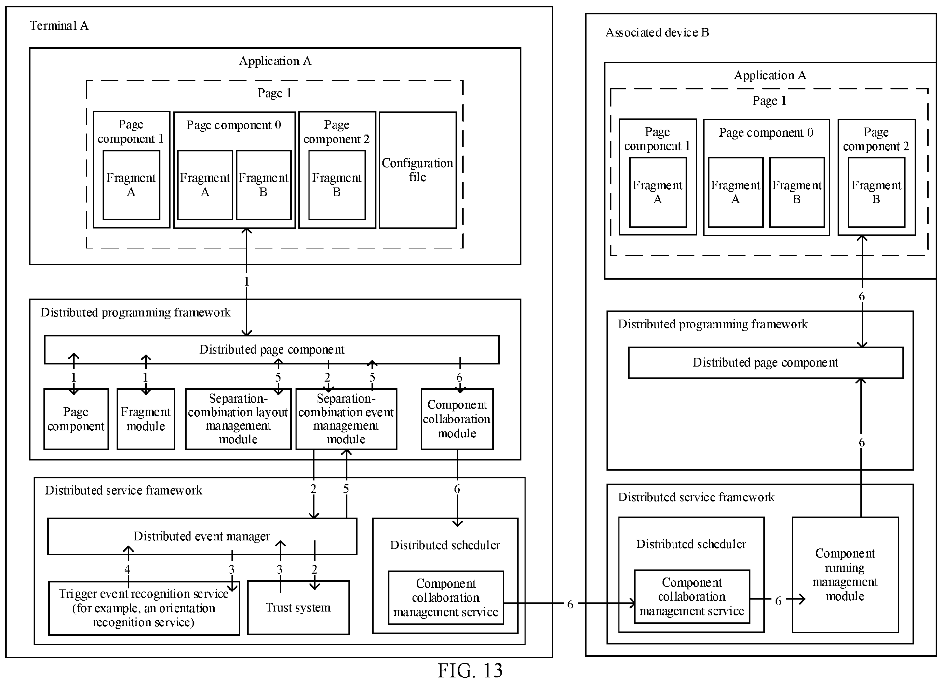

FIG. 13 is a schematic flowchart of a multi-terminal collaborative display method according to an embodiment of this application;

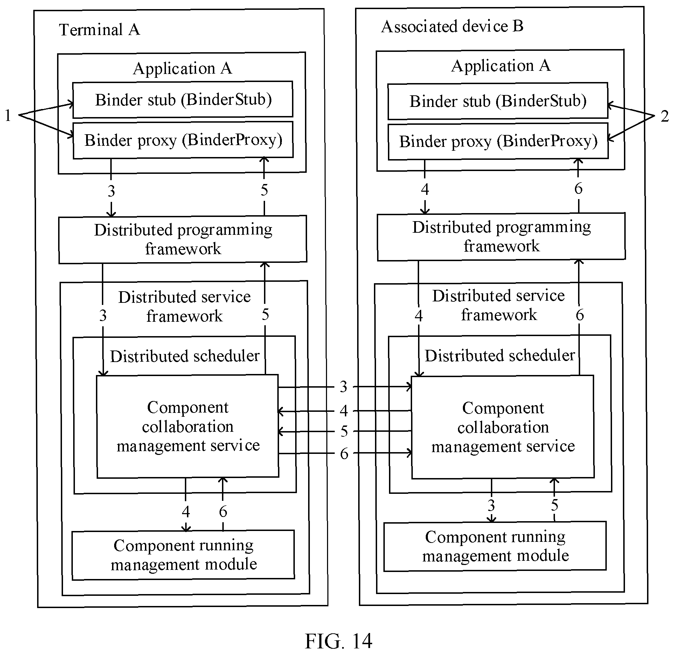

FIG. 14 is a schematic flowchart of a method for monitoring a life cycle of a terminal according to an embodiment of this application;

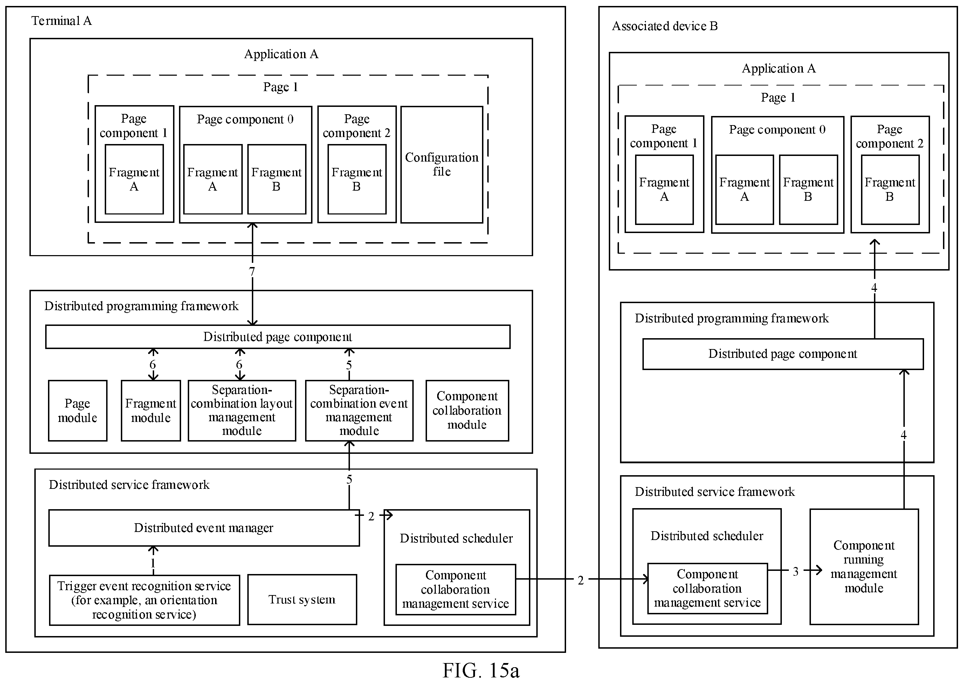

FIG. 15a is a schematic flowchart of a method for exiting multi-terminal collaborative display according to an embodiment of this application;

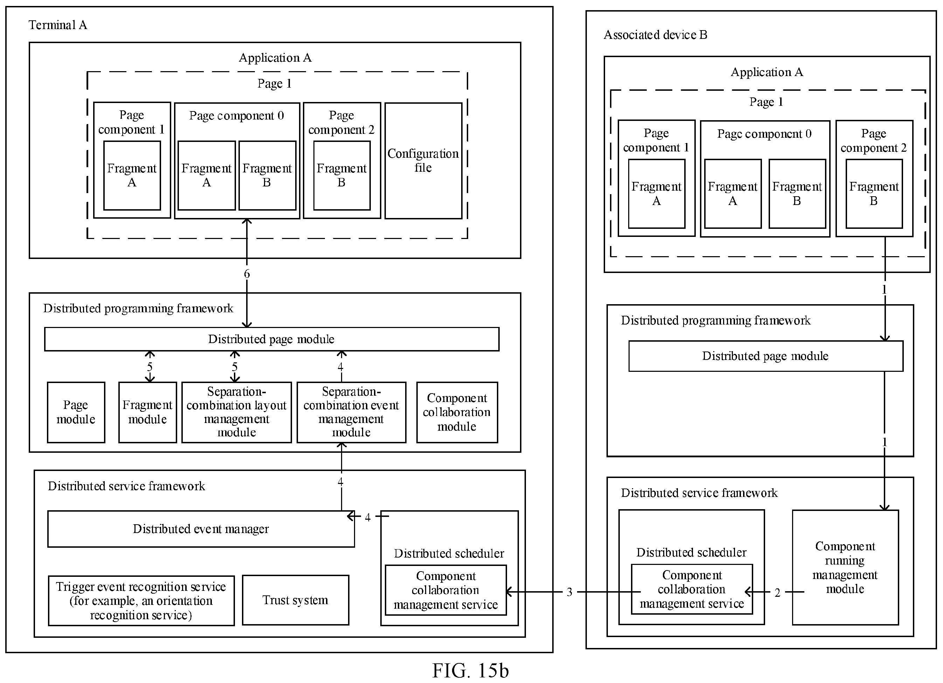

FIG. 15b is a schematic flowchart of another method for exiting multi-terminal collaborative display according to an embodiment of this application;

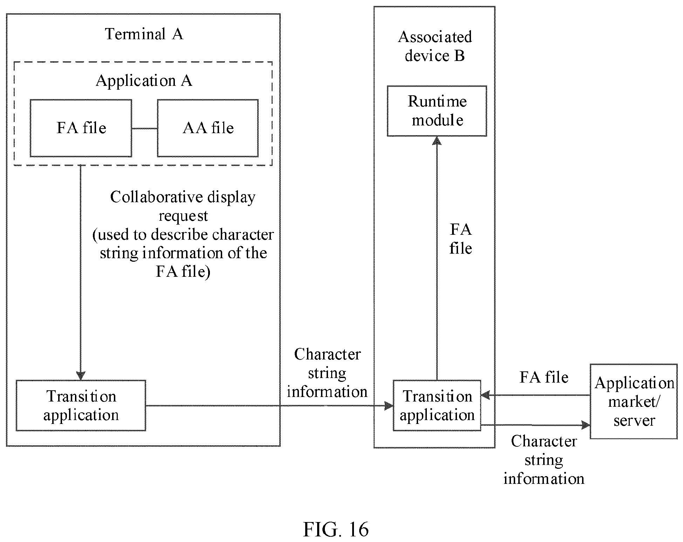

FIG. 16 is a schematic flowchart of an FA migration method according to an embodiment of this application;

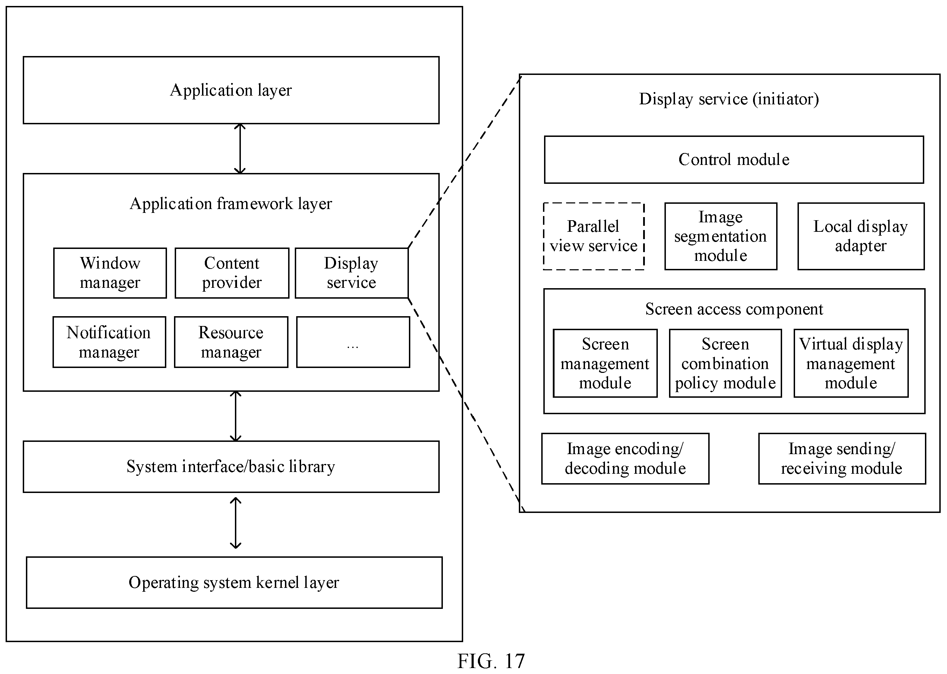

FIG. 17 is a schematic diagram of a structure of a collaborative display initiator terminal according to an embodiment of this application;

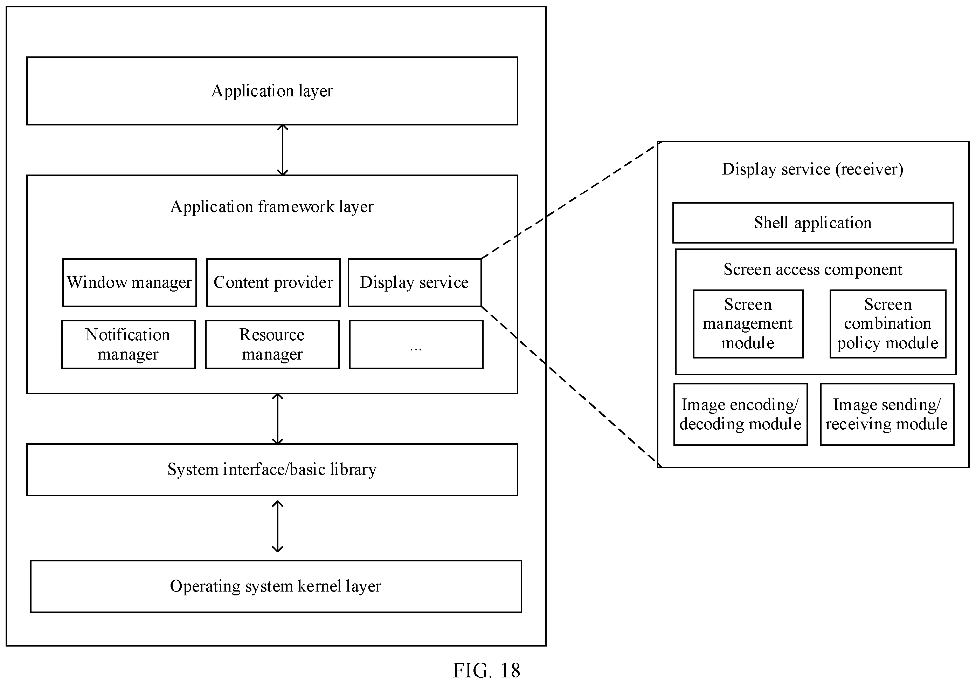

FIG. 18 is a schematic diagram of a structure of a collaborative display receiver terminal according to an embodiment of this application;

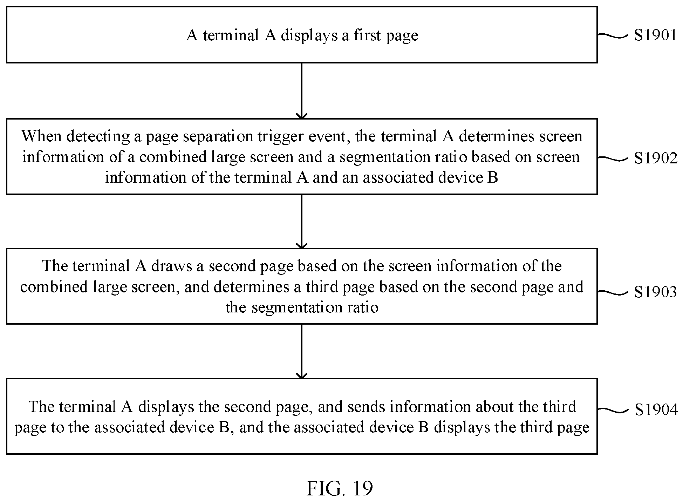

FIG. 19 is a schematic flowchart of another multi-terminal collaborative display method according to an embodiment of this application;

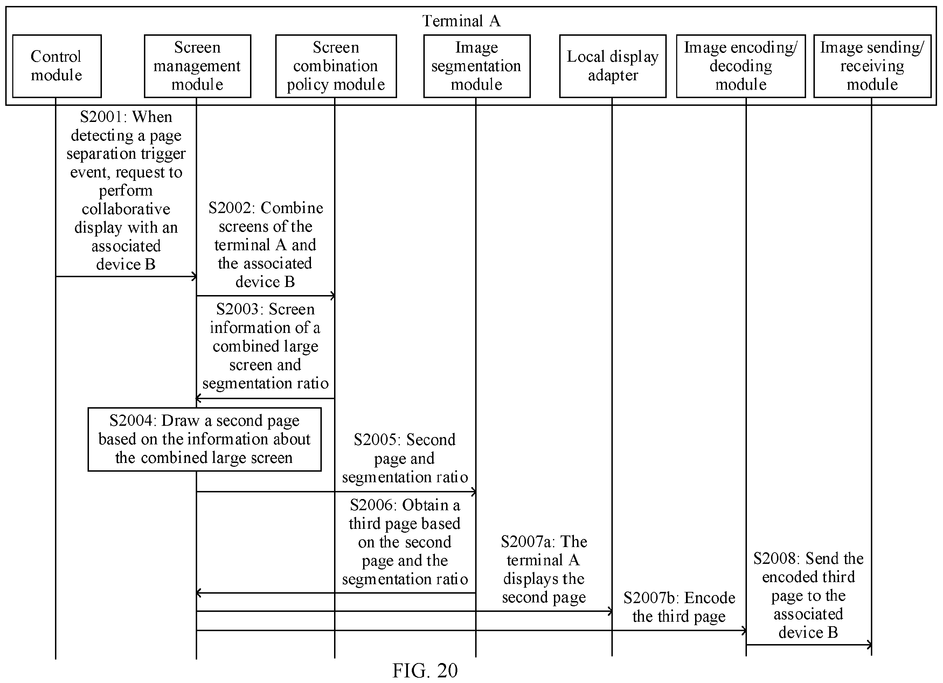

FIG. 20 is a schematic flowchart of another multi-terminal collaborative display method according to an embodiment of this application;

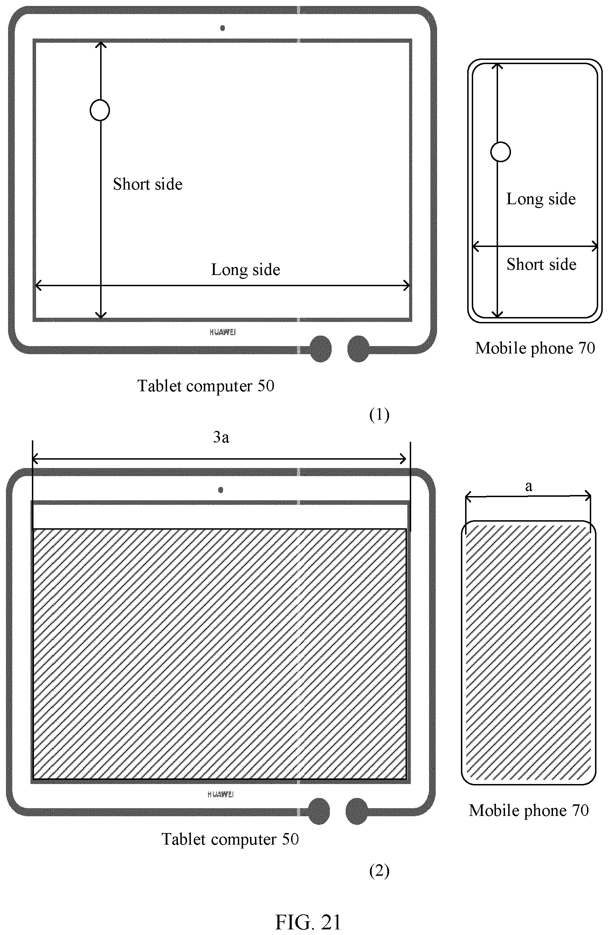

FIG. 21 is a schematic diagram of a screen splicing method according to an embodiment of this application;

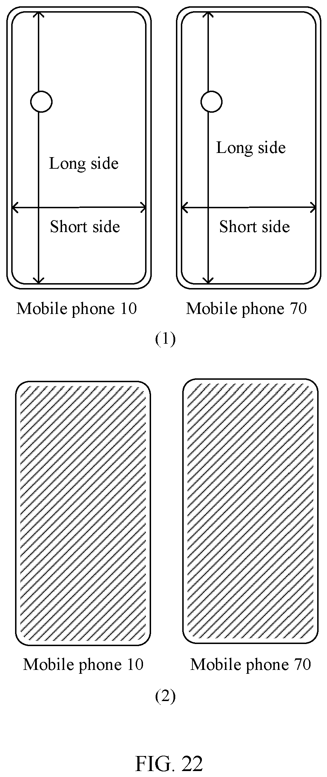

FIG. 22 is a schematic diagram of another screen splicing method according to an embodiment of this application;

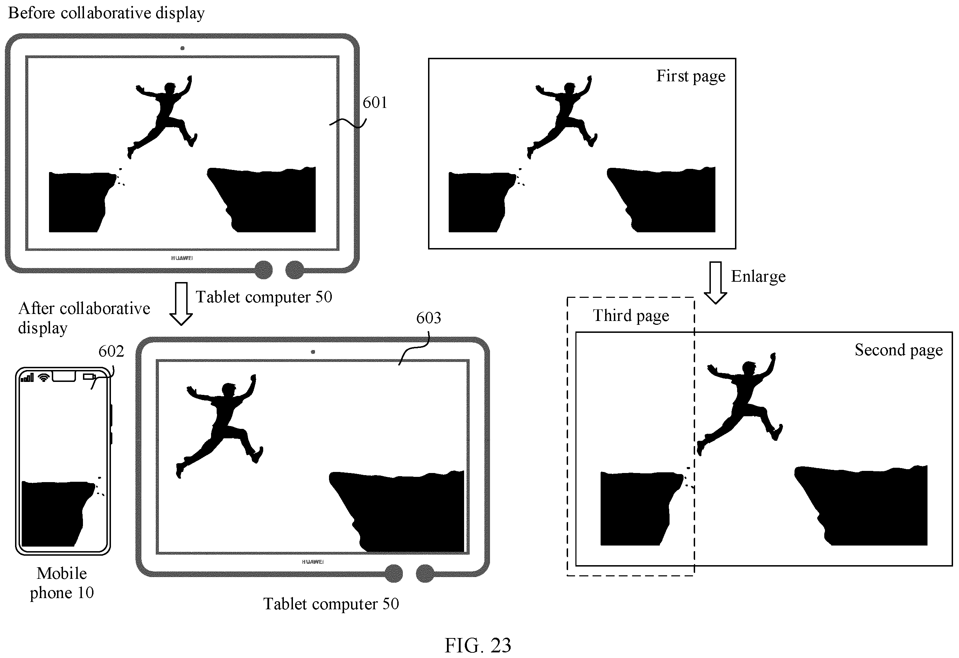

FIG. 23 to FIG. 25A to FIG. 25C are schematic diagrams of some multi-terminal screen splicing methods according to an embodiment of this application;

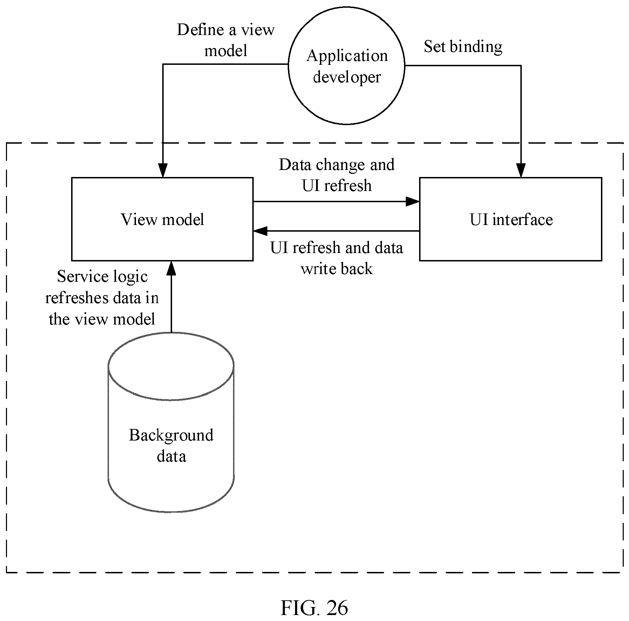

FIG. 26 is a schematic diagram of an MVVM architecture according to an embodiment of this application;

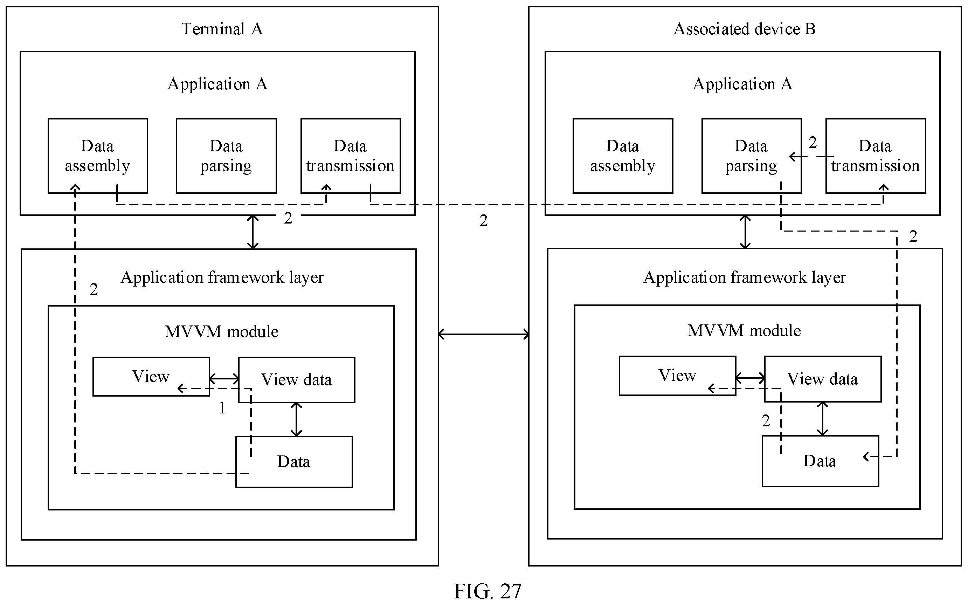

FIG. 27 is a schematic diagram of an interaction process between modules in a multi-terminal collaboration process according to an embodiment of this application;

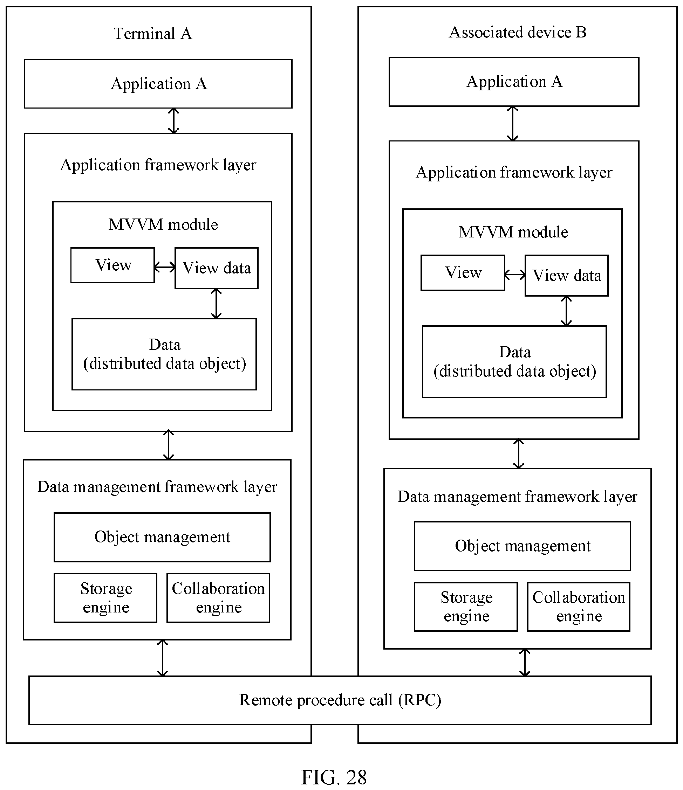

FIG. 28 is a schematic diagram of another multi-terminal collaborative display method according to an embodiment of this application; and

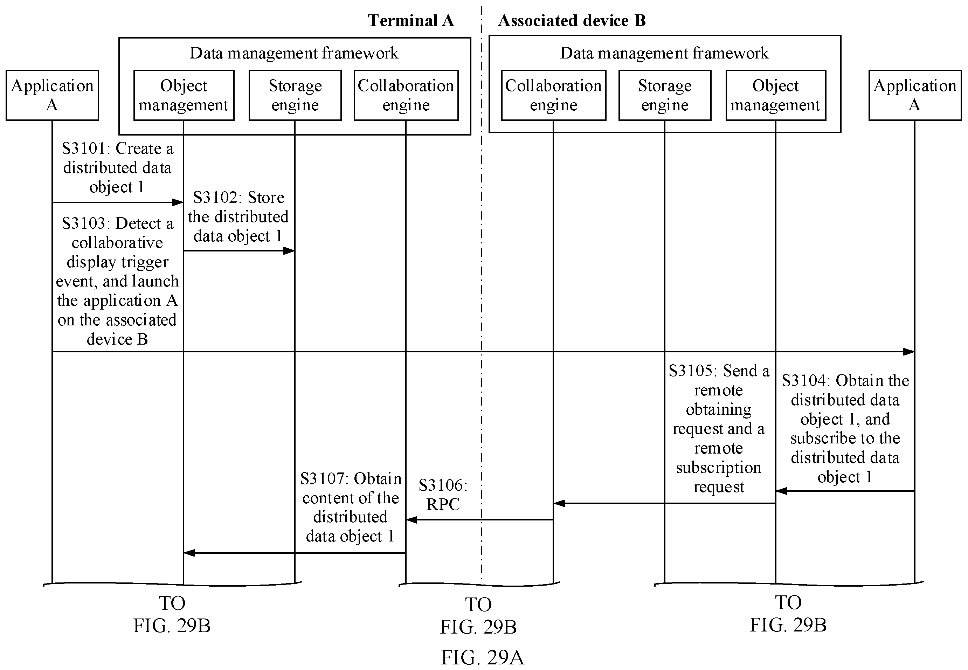

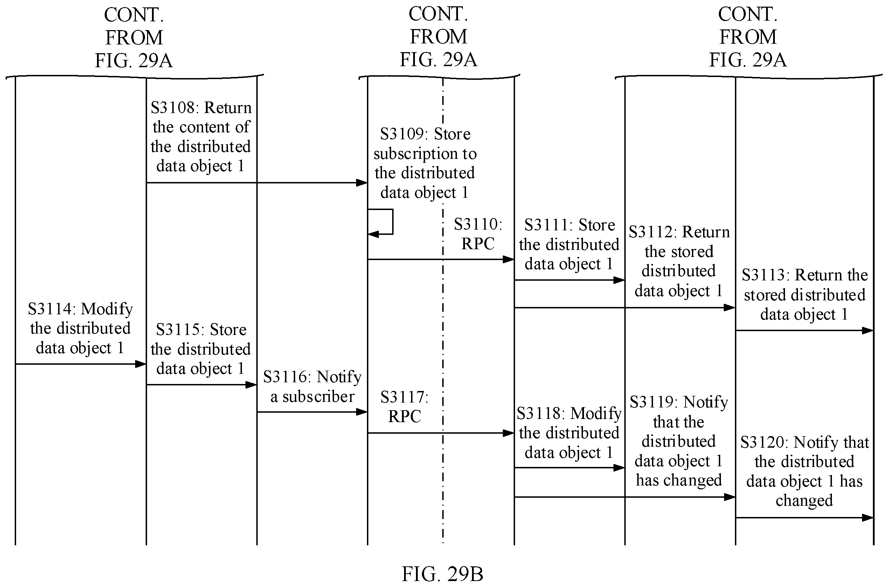

FIG. 29A and FIG. 29B are a schematic flowchart of a multi-terminal collaborative display method according to an embodiment of this application.

### DESCRIPTION OF EMBODIMENTS

In the descriptions of embodiments of this application, "/" means "or", unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present related concepts in a specific manner.

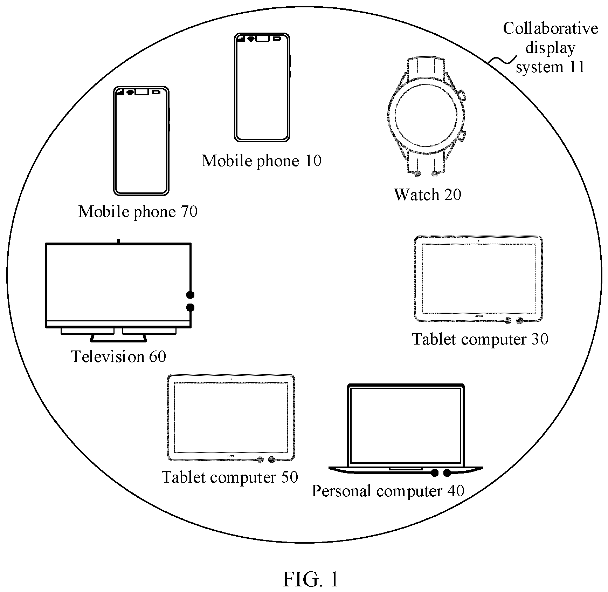

FIG. 1 is a schematic diagram of an architecture of a collaborative display system 11. The collaborative display system 11 includes two or more terminals. For example, the terminal in the collaborative display system 11 may be a mobile phone, a tablet computer, a personal computer (personal computer, PC), a personal digital assistant (personal digital assistant, PDA), a smartwatch, a netbook, a wearable terminal, an augmented reality (augmented reality, AR) device, a virtual reality (virtual reality, VR) device, a vehicle-mounted device, a smart screen, or a smart speaker. A specific form of the terminal is not specifically limited in this application. For example, the collaborative display system 11 includes a mobile phone 10, a watch 20, a tablet computer 30, a personal computer 40 (or referred to as a PC 40), a tablet computer 50, a television 60, and a mobile phone 70.

In some embodiments, the terminals in the collaborative display system 11 are interconnected by using a communication network. The communication network may be a wired network or a wireless network. For example, the communication network is a wireless network, and a wireless communication protocol used for the communication network may be, for example, a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), or infrared (infrared, IR).

The collaborative display solution provided in embodiments of this application may be applied to any two or more terminals in the system display system 11. Collaborative display means that two or more collaborative terminals jointly display an interface originally displayed on one terminal. Alternatively, compared with an interface originally displayed on one terminal, two or more collaborative terminals display more interface content. A specific collaborative display mode is described in detail below, and details are not described herein. It should be noted that "collaborative display" in embodiments of this application may also be expressed as other words such as "interface transfer", "screen sharing", "combined display", "screen collaboration", "component collaboration", "distributed display", "page separation", "collaborative interaction", and "screen splicing". In conclusion, a definition of "collaborative display" in embodiments of this application does not constitute a special limitation on the technical solutions provided in embodiments of this application.

Types of two or more terminals that implement collaborative display may be the same or may be different. For example, collaborative display is implemented between the mobile phone 10 and the mobile phone 70. Alternatively, collaborative display is implemented between the tablet computer 30 and the tablet computer 50. For another example, collaborative display is implemented between the mobile phone 10 and the television 60. Alternatively, collaborative display is implemented between the mobile phone 10 and the tablet computer 50. For another example, collaborative display is implemented between the mobile phone 10, the tablet computer 50, and the television 60. Alternatively, collaborative display is implemented between the mobile phone 10, the watch 20, and the mobile phone 70. Alternatively, collaborative display is implemented between the mobile phone 10, the tablet computer 50, and the personal computer 40.

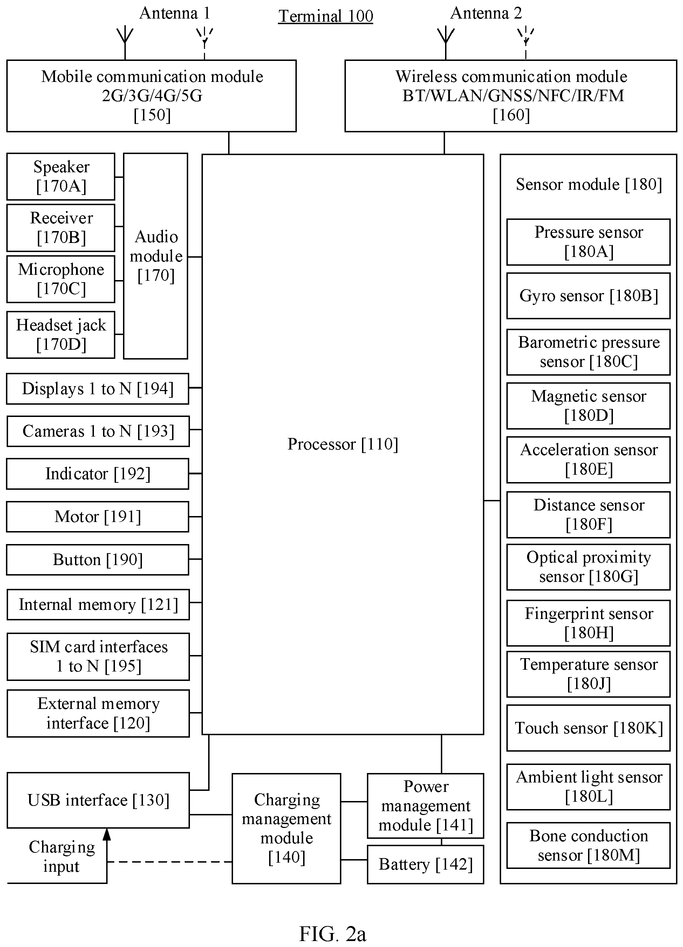

FIG. 2a is a schematic diagram of a structure of a terminal 100 according to an embodiment of this application. For a structure of any terminal in FIG. 1, refer to the structure of the terminal 100. Certainly, any terminal in FIG. 1 may include more or fewer components than the terminal 100, or combine some components, or split some components, or have different component arrangements. The components shown in the figure may be implemented by hardware, software, or a combination of software and hardware. A structure of any terminal in FIG. 1 is not limited in embodiments of this application.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

It may be understood that the structure shown in this embodiment of the present invention does not constitute a specific limitation on the terminal 100. In some other embodiments of this application, the terminal 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The internal memory 121 may be configured to store computer executable program code, where the executable program code includes instructions. The internal memory 121 may include a program storage area and a data storage area. The program storage area may store an operating system, an application program required by at least one function (for example, a sound play function or an image play function), and the like. The data storage area may store data (such as audio data or a phone book) created in a use process of the terminal 100. In addition, the internal memory 121 may include a high-speed random access memory, and may further include a nonvolatile memory, such as at least one magnetic disk storage component, a flash memory component, and a universal flash storage (universal flash storage, UFS). The processor 110 performs various function applications and data processing of the terminal 100 by running the instructions stored in the internal memory 121 and/or instructions stored in the memory disposed in the processor.

The charging management module 140 is configured to receive charging input from a charger. The charger may be a wireless charger, or may be a wired charger. In some wired charging embodiments, the charging management module 140 may receive charging input from a wired charger through the USB interface 130. In some wireless charging embodiments, the charging management module 140 may receive wireless charging input through a wireless charging coil of the terminal 100. When charging the battery 142, the charging management module 140 may further supply power to the terminal through the power management module 141.

The power management module 141 is configured to connect the battery 142, the charging management module 140, and the processor 110. The power management module 141 receives input of the battery 142 and/or the charging management module 140, and supplies power to the processor 110, the internal memory 121, the display 194, the camera 193, the wireless communication module 160, and the like.

A wireless communication function of the terminal 100 may be implemented by using the antenna 1, the antenna 2, the mobile communication module 150, the wireless communication module 160, the modem processor, the baseband processor, and the like.

The wireless communication module 160 may provide a solution for wireless communication that is applied to the terminal 100 and that includes a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), infrared (infrared, IR), and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the terminal 100, the antenna 1 is coupled to the mobile communication module 150, and the antenna 2 is coupled to the wireless communication module 160, so that the terminal 100 can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The terminal 100 implements a display function by using the GPU, the display 194, the application processor, and the like. The GPU is a microprocessor for image processing, and is connected to the display 194 and the application processor. The GPU is configured to perform mathematical and geometric calculation and render graphics. The processor 110 may include one or more GPUs that execute program instructions to generate or change display information.

The display 194 is configured to display an image, a video, and the like. The display 194 includes a display panel. The display panel may be made of a material like a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, or a quantum dot light-emitting diode (quantum dot light-emitting diodes, QLED). In some embodiments, the terminal 100 may include one or N displays 194, where N is a positive integer greater than 1.

The terminal 100 may implement a photographing function by using the ISP, the camera 193, the video codec, the GPU, the display 194, the application processor, and the like.

The external memory interface 120 may be configured to connect to an external memory card, such as a micro SD card, to extend a storage capability of the terminal 100. The external memory card communicates with the processor 110 by using the external memory interface 120, to implement a data storage function. For example, files such as music or videos are stored in the external memory card.

The terminal 100 may implement an audio function, for example, music playing and recording, by using the audio module 170, the speaker 170A, the receiver 170B, the microphone 170C, the headset jack 170D, the application processor, and the like.

With reference to specific embodiments, the following describes in detail the collaborative display solution provided in embodiments of this application.
(1) Trigger collaborative display functions of a terminal A and an associated device B.

### Solution 1:

In some embodiments of this application, a user may perform a preset operation 1 on the terminal A, to enable the collaborative display function of the terminal A. After the collaborative display function of the terminal A is enabled, the terminal A starts to broadcast a discovery request by using a wireless communication function, to search for a surrounding terminal. In some other embodiments, the terminal A performs trust verification on a found terminal. A terminal on which trust verification succeeds is an associated device of the terminal A, and may also be referred to as a trusted device of the terminal A. In some embodiments, the terminal A determines whether the found associated device meets a preset condition for collaborative display. After the terminal A determines that the associated device B meets the preset condition for collaborative display, the terminal A and the associated device B perform collaborative display.

The wireless communication function includes but is not limited to a wireless communication function implemented by using technologies such as a wireless local area network (wireless local area networks, WLAN) (for example, Wi-Fi), radio frequency identification (radio frequency identification, RFID), infrared, Bluetooth, ZigBee, and ultra-wideband (ultra-wideband, UWB).

In some embodiments, when the terminal found by the terminal A meets the following condition a, or meets the following condition b, or meets the following condition c, or meets the following condition a and condition b, or meets the following condition a and condition c, it may be determined that the terminal is an associated device of the terminal A.

Condition a: The terminal is a terminal located in a same communication network as the terminal A, for example, a terminal located in a same wireless fidelity (wireless fidelity, Wi-Fi) network. Optionally, terminals in a network are mutually trusted devices.

Condition b: The terminal is a terminal that logs in to a same account (for example, a Huawei account) as the terminal A, or a terminal that logs in to an account belonging to a same group (for example, belonging to a same family account) as an account that the terminal A logs in to.

Condition c: The terminal is a terminal that establishes a trust relationship with the terminal A in another manner. For example, the terminal has been connected to a hotspot shared by the terminal A, or the terminal A has been connected to a hotspot shared by the terminal, or the terminal A has established a Wi-Fi direct connection to the terminal, or the terminal A has scanned a QR code generated by the terminal. Alternatively, the associated device of the terminal A is a terminal that logs in to a different account or belongs to a different group (for example, a family account) from the terminal A but that is authenticated in advance (for an authentication process, refer to the following related description).

For ease of understanding, in FIG. 2b-1 to FIG. 2b-14, an example in which the terminal A is a mobile phone A is used to describe a user interface in a pre-authentication process provided in an embodiment of this application.

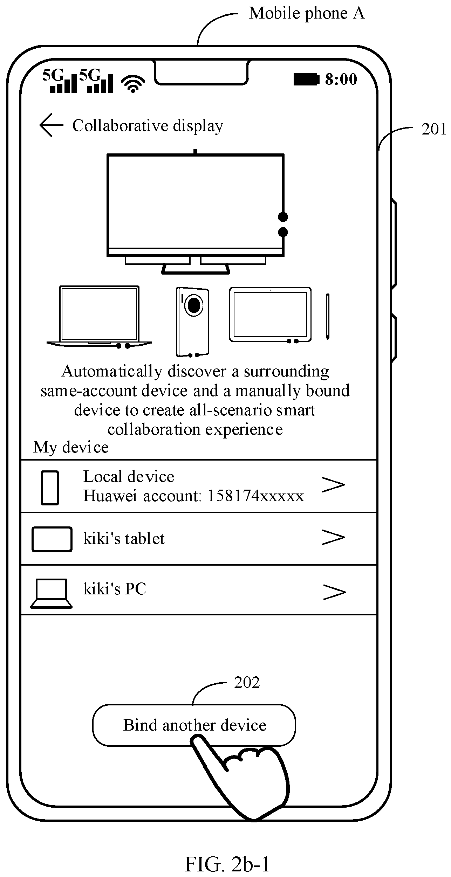

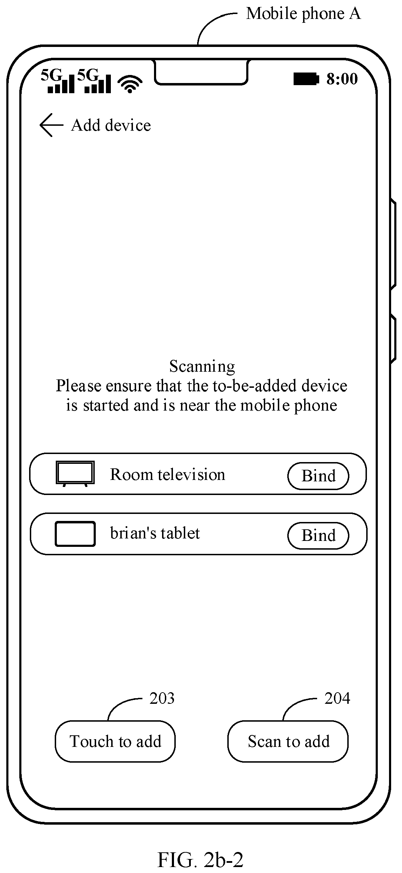

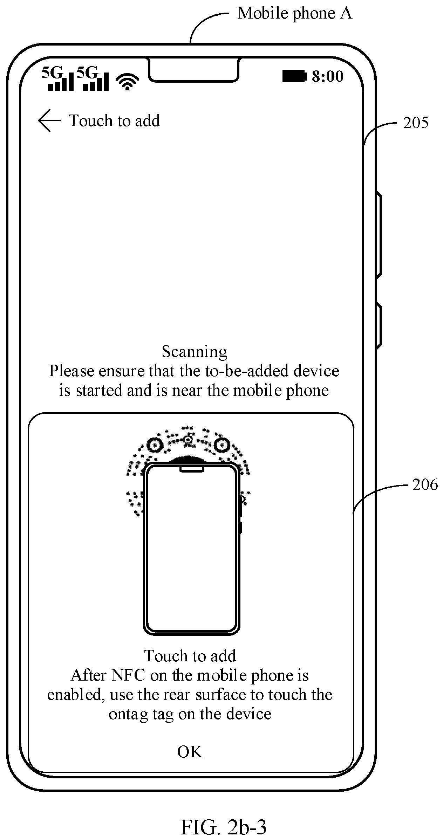

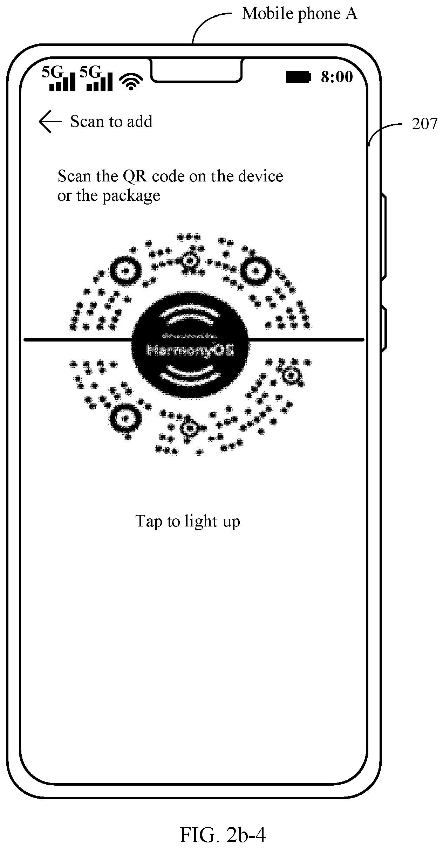

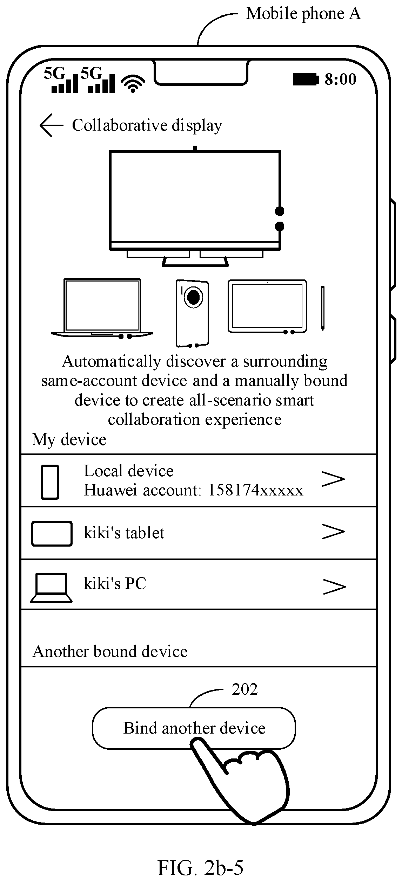

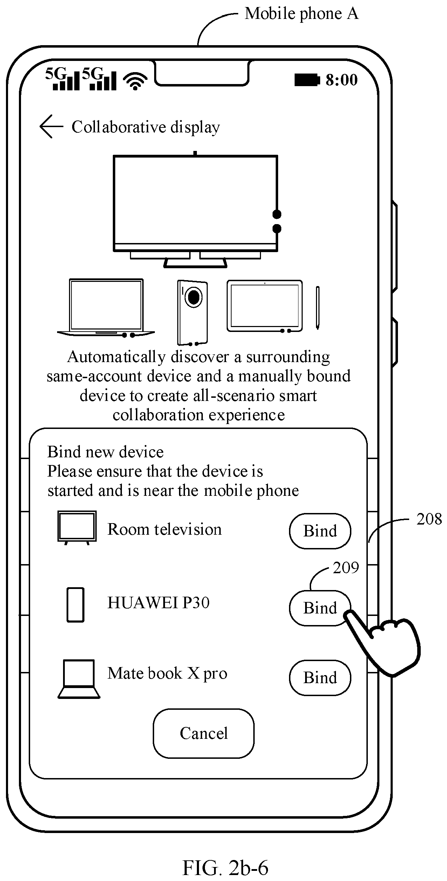

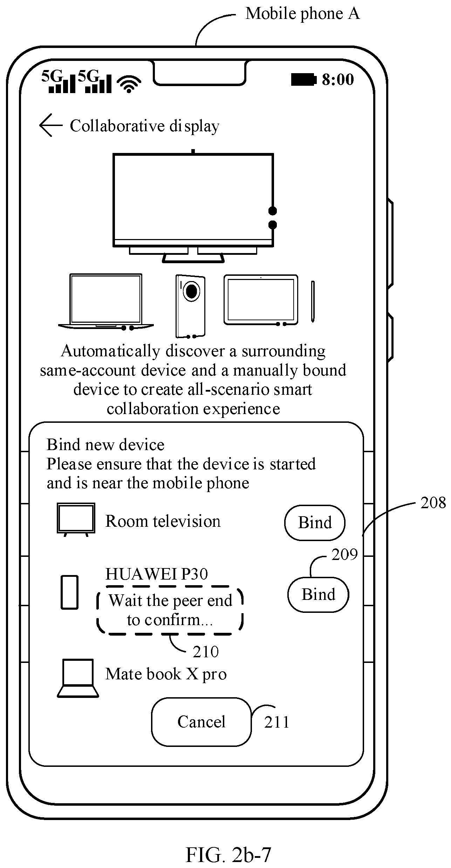

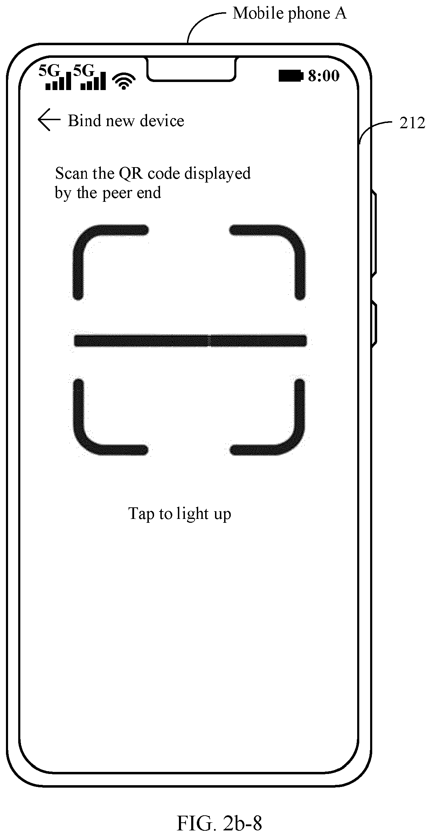

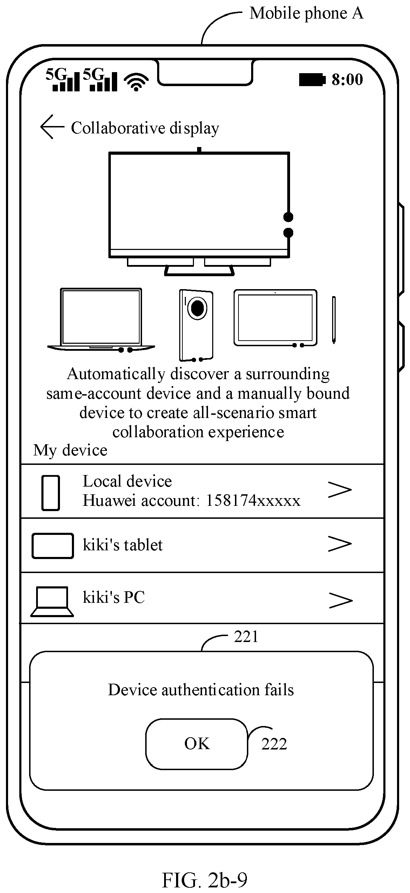

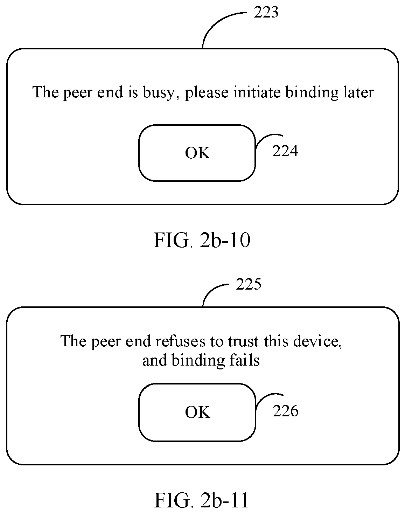

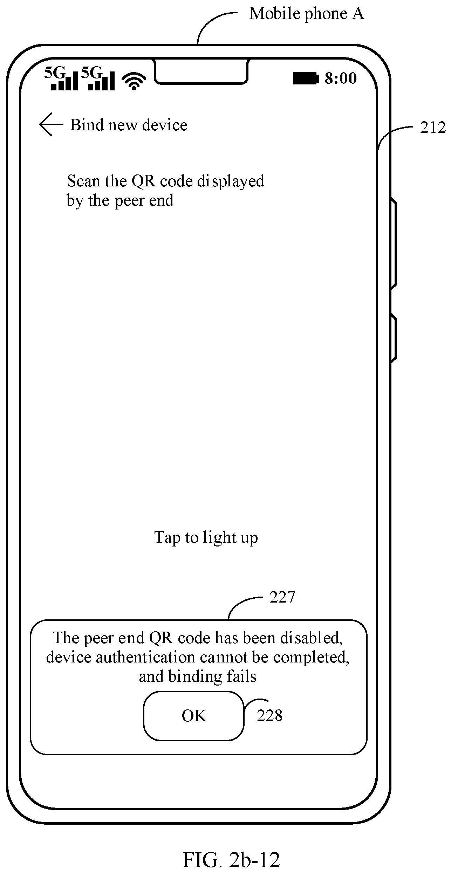

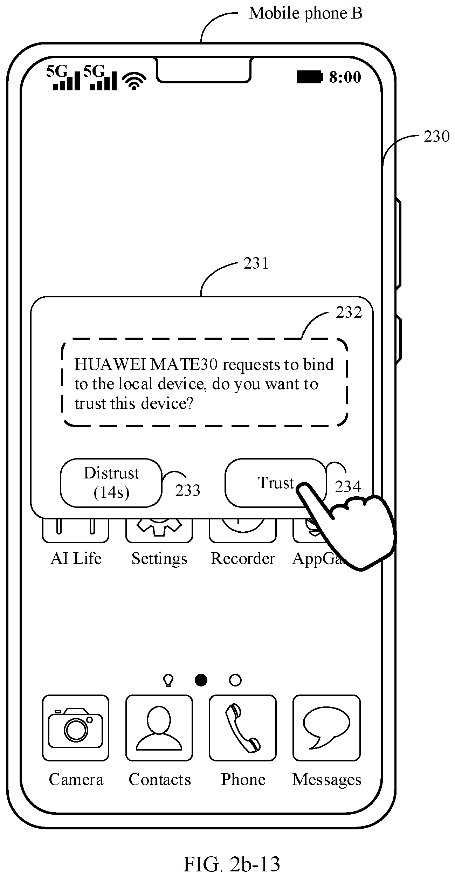

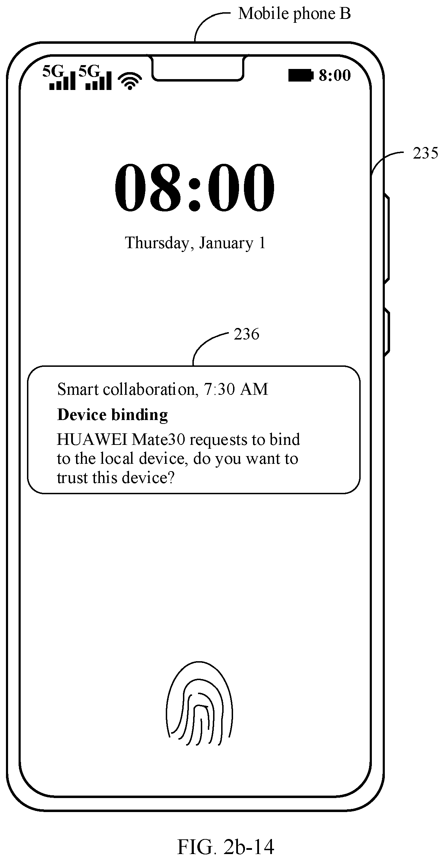

As shown in FIG. 2b-1, a user may enter a collaborative display interface 201 from a setting application, and the collaborative display interface 201 may include a list named "My device". "My device" includes a local device (that is, the mobile phone A), kiki's tablet, and kiki's PC. The local device, kiki's tablet, and kiki's PC may be devices having a same account (for example, sharing one Huawei account). Alternatively, the local device, kiki's tablet, and kiki's PC may be authenticated devices having different accounts (for an authentication process, refer to the following related description).

Optionally, the collaborative display interface 201 may include a "Bind another device" button 202. In embodiments of this application, binding means that a trust relationship is established between two devices, so that operations such as collaborative display between the devices can be performed. In response to an operation (for example, a tap operation) performed by the user on the "Bind another device" button 202, as shown in FIG. 2b-2, the mobile phone A may display a "Touch to add" button 703 and a "Scan to add" button 704. It should be understood that locations, names, shapes, and the like of elements (for example, a button, an icon, and a text) in UI interfaces corresponding to FIG. 2b-1 and FIG. 2b-2 are not fixed, and may be freely combined or designed based on a requirement. For example, the button 202 in FIG. 2b-1 may be replaced with the button 203 and the button 204 in FIG. 2b-2. For another example, FIG. 2b-2 may include only the button 203 or 204.

For example, in response to a tap operation performed by the user on the "Touch to add" button 203, as shown in FIG. 2b-3, the mobile phone A may display a "Touch to add" interface 205. In some embodiments, a pop-up box 206 may be displayed in the "Touch to add" interface 205. The pop-up box 206 includes a prompt picture and prompt information. The prompt information may be, for example, "Touch to add: After NFC on the mobile phone is enabled, use the rear surface to touch the ontag tag on the device". The user may perform an operation based on the prompt information, to add a new device in a touch manner. For another example, in response to a tap operation performed by the user on the "Scan to add" button 204, as shown in FIG. 2b-4, the mobile phone A may display a "Scan to add" interface 207. The "Scan to add" interface 207 may include a prompt picture and prompt information. The prompt information may be, for example, "Scan the QR code on the device or the package". The user may perform an operation based on the prompt information, to add a new device in a scan manner.

If the mobile phone A does not support adding a new device in the touch or scan manner, as shown in FIG. 2b-5, in response to an operation that the user taps the "Bind another device" button 202, as shown in FIG. 2b-6, the mobile phone A may display a pop-up box 208. The pop-up box 208 includes prompt information "Please ensure that the device is started and is near the mobile phone", and the pop-up box 208 may further include a device detected by the mobile phone A based on a short-range communication network (for example, a Wi-Fi network or a Bluetooth network), for example, devices such as a room television, HUAWEI P30, and Mate book X pro. Each device corresponds to one "Bind" button. In response to an operation performed by the user on a "Bind" button 209 corresponding to HUAWEI P30, as shown in FIG. 2b-7, prompt information 210 "Wait the peer end to confirm..." may be displayed below an identifier of HUAWEI P30. The pop-up box 208 may further include a "Cancel" button 211. In response to an operation of tapping the "Cancel" button 211 by the user, the mobile phone A may return to the interface shown in FIG. 2b-5.

If a peer device confirms (for example, a user of the peer device agrees to establish a trust relationship), in a possible implementation, in response to a confirmation instruction of the peer device, the peer device and the mobile phone A establish the trust relationship, so that the mobile phone A can perform collaborative display with the peer device. In another possible implementation, to further improve security and protect privacy, the mobile phone A further needs to scan a QR code displayed by the peer device, to complete establishment of the trust relationship. As shown in FIG. 2b-8, the mobile phone A may display an interface 212 for binding a new device. The interface 212 for binding a new device may include prompt information "Scan the QR code displayed by the peer end", and the user may perform an operation based on the prompt information, to add a new device. It should be understood that a jump relationship between different UI interfaces is not limited in this embodiment of this application. For example, as shown in FIG. 2b-6, in response to an operation of tapping the "Bind" button 209 by the user, as shown in FIG. 2b-7, the mobile phone A may directly display the scanning interface 212.

If the peer device does not confirm (for example, the peer device does not have a binding function, binding times out, the peer device is busy, or the user of the peer device does not agree binding), as shown in FIG. 2b-9, the mobile phone A may display a pop-up box 221, to prompt the user with "Device authentication fails". In response to an operation of tapping an "OK" button 222 by the user, the pop-up box 221 may be hidden. Alternatively, the pop-up box 221 may be hidden after a preset time period (for example, 3s). In another possible design, as shown in FIG. 2b-10, the mobile phone A may display a pop-up box 223, to prompt the user with "The peer end is busy, please initiate binding later". In response to an operation of tapping an "OK" button 224 by the user, the pop-up box 223 may be hidden. Alternatively, the pop-up box 223 may be hidden after a preset time period (for example, 3s). In another possible design, as shown in FIG. 2b-11, the mobile phone A may display a pop-up box 225, to prompt the user with "The peer end refuses to trust this device, and binding fails". In response to an operation of tapping an "OK" button 226 by the user, the pop-up box 225 may be hidden. Alternatively, the pop-up box 225 may be hidden after a preset time period (for example, 3s). Alternatively, as shown in FIG. 2b-12, the mobile phone A may display a pop-up box 227 in the interface 212, to prompt the user with "The peer end QR code has been disabled, device authentication cannot be completed, and binding fails". In response to an operation of tapping a button 228 by the user, the pop-up box 227 may be hidden.

It is assumed that the peer device is a mobile phone B (for example, HUAWEI P30). If the mobile phone B receives a binding request of the mobile phone A (for example, HUAWEI MATE30) when displaying a home screen 730, as shown in FIG. 2b-13, the mobile phone B may display a pop-up box 231. The pop-up box 231 may include prompt information 232 "HUAWEI MATE30 requests to bind to the local device, do you want to trust this device", and the pop-up box 231 may further include a "Distrust" button 233 and a "Trust" button 234. A countdown (for example, 14s) may be further displayed in the "Distrust" button. When the countdown ends, if the user does not tap any button, the pop-up box 231 may be automatically hidden. In response to an operation of tapping the "Trust" button 234 by the user, the mobile phone A may perform an authentication process with the mobile phone B, so that the mobile phone A can be bound to the mobile phone B.

If the mobile phone B receives, in a screen-off state or a screen-locked state, a binding request of the mobile phone A, as shown in FIG. 2b-14, the mobile phone B may display a pop-up box 236 in a lock-screen interface 235. The pop-up box 236 may prompt the user that a collaborative display application receives a device binding request at 7:30 AM. The prompt may be specifically "HUAWEI MATE30 (that is, the mobile phone A) requests to bind to the local device, do you want to trust this device?". In response to an operation (for example, entering a password or entering a fingerprint) of entering a home screen from a screen-locked state by the user, as shown in FIG. 2b-14, the pop-up box 236 may be changed to a form of the pop-up box 231, and the user may choose to trust or distrust HUAWEI MATE30 (that is, the mobile phone A).

Certainly, the mobile phone B may alternatively receive, in another state (for example, in a video play state or a game state), a binding request of the mobile phone A, and related UI interfaces are not described one by one.

In other words, a specific manner of associating the another terminal with the terminal A is not limited in this embodiment of this application. For example, after the terminal A initiates a binding request, a string of code may be generated and displayed, and the another terminal may be bound to the terminal A by entering the code.

The foregoing preset condition for collaborative display includes but is not limited to any one of the following condition 1 to condition 3.

Condition 1: A distance between the associated device and the terminal A is less than or equal to a threshold (for example, 20 cm).

Condition 2: A distance between the associated device and the terminal A is less than or equal to a threshold, and the distance between the associated device and the terminal A is decreasing. That is, the associated device approaches the terminal A.

Condition 3: The associated device collides with the terminal A.

Optionally, in some other examples, the preset condition for collaborative display may further include either of the following condition 4 and condition 5. That is, the preset condition for collaborative display may include the condition 4 and any one of the foregoing condition 1 to condition 3 or the condition 5 and any one of the foregoing condition 1 to condition 3.

Condition 4: Determine whether the associated device is idle. For example, when no application that is not a home screen runs in the foreground of the associated device, the associated device is idle. For example, the associated device displays the home screen, or the associated device is in a screen-locked state, or the associated device is in a screen-off state.

Condition 5: The associated device does not perform collaborative display with another terminal other than the mobile phone 10.

During specific implementation, signal strength of the terminal A and the associated device may be measured by using a wireless communication function (for example, Bluetooth, Wi-Fi, UWB, or NFC) configured for the terminal A and the associated device, to represent the distance between the terminal A and the associated device. Alternatively, whether the terminal A collides with the associated device may be detected by using acceleration sensors configured for the terminal A and the associated device. Alternatively, a relative location of the terminal A and the associated device may be determined by using a microphone configured for the terminal A and at least two speakers configured for the associated device. That is, whether the associated device approaches the terminal A is determined, and a direction of the approach is determined. Alternatively, the distance between the terminal A and the associated device or the like may be detected by using an ultrasonic sensor configured for the terminal A. In conclusion, a specific method used by the terminal A to detect whether the associated device meets the foregoing preset condition is not limited in embodiments of this application. In addition, it should be noted that the distance between the terminal A and the associated device may be a distance between specific components in the two terminals, a distance between the terminal A and the associated device that is calculated according to a distance measurement method, or the like. For example, if the distance between the terminal A and the associated device B is measured by using the wireless communication function configured in the terminal A and the associated device B, the distance between the terminal A and the associated device B may be, for example, a distance between a wireless communication module in the terminal A and a wireless communication module in the associated device B. For another example, if the distance to the associated device B is measured by using the ultrasonic sensor configured for the terminal A, the distance between the terminal A and the associated device B may be, for example, a distance between the ultrasonic sensor in the terminal A and an outer frame that is of the associated device B and that is closest to the terminal A.

Herein, the detection method is described by using an example in which the microphone configured for the terminal A and the speakers configured for the associated device are used to determine the distance and/or the relative location between the terminal A and the associated device.

In some embodiments, the terminal A is configured with at least one microphone, and the associated device is configured with at least two speakers (for example, two speakers are configured, which are respectively a speaker 1 and a speaker 2). The terminal A may send an orientation detection request to the surrounding associated device. After receiving the orientation detection request, the associated device may control the at least two speakers to send audio signals (for example, ultrasonic signals, which may be specifically linear or nonlinear chirp signals), where a sound emitting interval between the two speakers is T₁. The microphone of the terminal A receives the audio signals sent by the two speakers of the associated device B, and processes the received audio signals to obtain locations of the two speakers in the associated device.

In a specific implementation, the terminal A performs filtering processing on the received audio signal to obtain a filtered audio signal. Optionally, the received audio signal is input into a band-pass filter for processing to obtain the filtered audio signal. An objective of filtering is to filter out noise at a non-operating frequency in the received audio signal. Then, the received audio signal is segmented in a time sequence to obtain a plurality of audio clips. Then, whether energy of each of the plurality of audio clips exceeds a preset energy threshold is determined, and an audio clip whose energy does not exceed the preset energy threshold is deleted from the filtered audio signal, to obtain an energy-filtered audio signal. The energy of the audio clip is defined as a point of sound intensity of the audio clip in terms of time. Matching filtering is performed on the energy-filtered audio signal, to obtain a matching-filtered audio signal. Optionally, a matching filtering manner corresponding to a type of the audio signal may be used. For example, when the received audio signal is a modulated signal, a matching filtering manner corresponding to the modulated signal is used to perform filtering, to obtain the matching-filtered audio signal. Filtering is performed in this manner, so that signal strength of a non-modulated audio signal is attenuated, and signal strength of the modulated audio signal is enhanced. The matching-filtered audio signal is a first target audio signal.

Further, a location of a maximum value of the signal is found in the filtered audio signal, and the location corresponds to a signal sent by a speaker that first makes a sound in the associated device. A moment corresponding to the location is a first target moment.

A first time range is determined based on the first target moment, a distance between the speaker 1 and the speaker 2 of the associated device, and a sampling frequency of the microphone of the terminal A. A start moment of the first time range is ind_max-2*(d/v)*f, an end moment of the first time range is ind_max+2*(D/v)*f, ind_max is the first target moment, d is a first preset distance, D is the distance between the speaker 1 and the speaker 2 of the associated device, v is the velocity of sound, and f is the sampling frequency of the microphone of the terminal A. A first audio clip is determined from the first target audio signal based on the first time range, and the first audio clip is an audio clip corresponding to the first time range in the first target audio signal. Optionally, the first preset distance may be a preset value, and may be preset according to an application scenario. For example, in an open scenario, the preset distance is 10m. In a room scenario, the preset distance is 5m. Certainly, the preset distance is determined based on a product of preset duration and the velocity of sound.

A second time range is determined based on the first target moment, the distance between the speaker 1 and the speaker 2 of the associated device, the sound emitting time interval T₁ between the two speakers of the associated device, and the sampling frequency of the microphone of the terminal A. A start moment of the second time range is ind_max-2*(d/v)*f-T₁, an end moment of the second time range is ind_max+2*(D/v)*f-T₁, ind_max is the first target moment, d is the first preset distance, D is the distance between the speaker 1 and the speaker 2 of the associated device, v is the velocity of sound, f is the sampling frequency of the microphone of the terminal A, and T₁ is the sound emitting time interval between the two speakers of the associated device. A second audio clip is determined from the first target audio signal based on the second time range, and the second audio clip is an audio clip corresponding to the second time range in the second target audio signal.

The first audio clip and the second audio clip are separately searched to obtain a first arrival moment and a second arrival moment. Specifically, after the first audio clip is determined, a wave peak whose signal amplitude is greater than a first preset amplitude is searched for in the first audio clip, then a wave peak with the earliest receiving time is selected from the wave peak whose signal amplitude is greater than the first preset amplitude, and a moment corresponding to the wave peak is used as the first arrival moment. Similarly, a wave peak whose signal amplitude is greater than a second preset amplitude is searched for in the second audio signal, then a wave peak with the earliest receiving time is selected from the wave peak whose signal amplitude is greater than the second preset amplitude, and a moment corresponding to the wave peak is used as the second arrival moment.

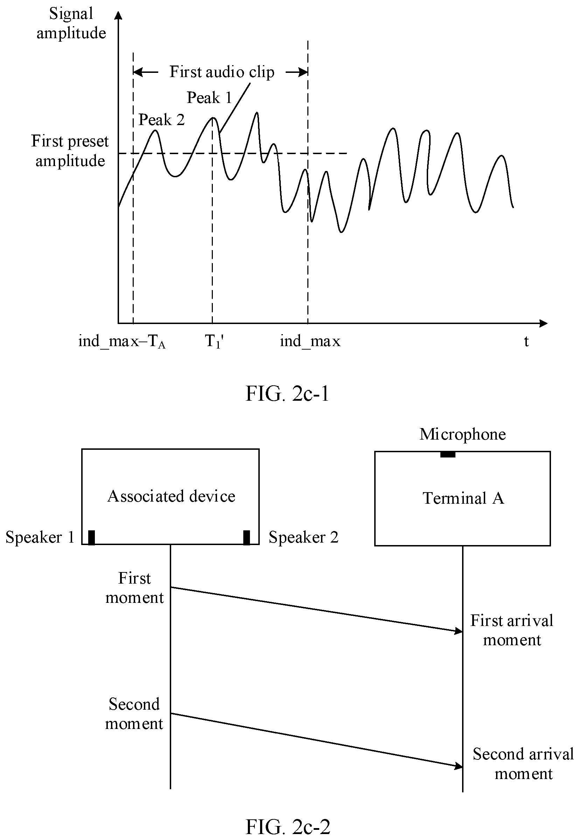

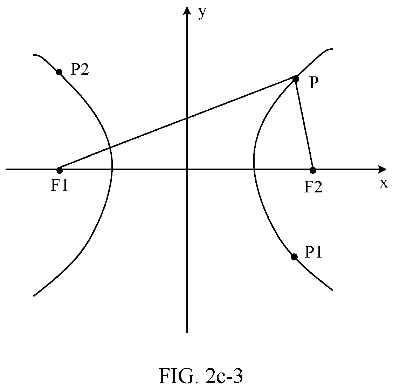

For example, the first audio clip is shown in FIG. 2c-1. A time range corresponding to the audio clip is [ind_max-T_{A}, ind_max]. In the first audio clip, wave peaks that exceed the first preset amplitude include a wave peak 1 and a wave peak 2, and a receiving time of the wave peak 2 is earlier than a receiving time of the wave peak 1. Therefore, a moment T₁' corresponding to the wave peak 2 is used as the first arrival moment. The second arrival moment may be determined based on the second audio clip in the foregoing manner.

The relative location between the terminal A and the associated device is determined based on the first arrival moment and the second arrival moment. Specifically, a first hyperbolic function is constructed based on the first arrival moment, the second arrival moment, a first moment, and a second moment, and the relative location between the terminal A and the associated device is determined based on the first hyperbolic function and the distance between the first speaker and the second speaker.

Optionally, the first moment may be a moment at which the first speaker generates a first audio signal, and the second moment may be a moment at which the second speaker generates a second audio signal. In this case, the first moment and the second moment are sent by the associated device to the terminal A in a wireless manner. The associated device may further send the distance between the speaker 1 and the speaker 2 to the terminal A in this manner. The wireless manner includes Bluetooth, Wi-Fi, or the like. The first moment may be an estimated value of the moment at which the speaker 1 generates the first audio signal, and the second moment may be an estimated value of the moment at which the speaker 2 generates the second audio signal.

As shown in FIG. 2c-2, a sound emitting moment of the speaker 1 or an estimated value of a sound emitting moment of the speaker 1 is the first moment, and a sound emitting moment of the speaker 2 or an estimated value of a sound emitting moment of the speaker 2 is the second moment. Based on a principle of sound propagation, a difference between the first arrival moment and the first moment is proportional to a distance between the speaker 1 of the associated device and the microphone of the terminal A, and a difference between the second arrival moment and the second moment is proportional to a distance between the speaker 2 of the associated device and the microphone of the terminal A. Therefore, a first hyperbola is constructed based on the following formula: (second arrival moment - second moment) - (first arrival moment - first moment) = fixed value. As shown in FIG. 2c-3, a point F1 and a point F2 respectively represent locations of the speaker 1 and the speaker 2 of the associated device. F1 and F2 are also focal points of the first hyperbola. A point on the first hyperbola is a location of the microphone of the terminal A. The first hyperbola may be considered as a location track of the microphone of the terminal A. The location of the associated device relative to the terminal A may be determined based on the location of the microphone of the terminal A and the locations of the speaker 1 and the speaker 2 of the associated device B. For example, it is determined that the associated device is located in front of, behind, on the left of, or on the right of the terminal A. Further, when two or more microphones are configured for the terminal A, more detailed location information of the associated device relative to the terminal A may be determined. Details are not described one by one.

With reference to the accompanying drawings, the following describes in detail a process of triggering the collaborative display function of the terminal A.

For example, an example in which a mobile phone 10 is used as the terminal A is used for description. As shown in (1) in FIG. 3a, the mobile phone 10 displays an interface 301 of an application A. In some embodiments, the interface 301 includes a control 302 for enabling a collaborative display function. That is, the application A supports the collaborative display function. In response to detecting that a user operates the control 302 (that is, the user performs a preset operation 1), the mobile phone 10 enables the collaborative display function of the mobile phone 10.

For another example, as shown in (2) in FIG. 3a, the mobile phone 10 displays an interface 301 of an application A. The application A supports a collaborative display function. In response to detecting an operation that a user pulls down from the top (which is usually a side on which an earpiece, a camera, and the like are configured) of a screen, the mobile phone 10 displays a notification window 303 shown in (3) in FIG. 3a. The notification window 303 is used to query the user whether to enable the collaborative display function. In response to detecting that the user taps a "Yes" control, the mobile phone 10 enables the collaborative display function of the mobile phone 10.

In this example, the preset operation 1 may be an operation that the user taps the "Yes" control in the notification window 303. Alternatively, the preset operation 1 may include an operation that the user pulls down from the top of the screen, and an operation that the user taps the "Yes" control in the notification window 303. In some other embodiments, the notification window 303 is displayed in response to an operation that the user slides upward from the bottom of the screen.

In some embodiments of this application, after the mobile phone 10 detects the preset operation 1 performed by the user, the mobile phone 10 starts to search for an associated device, and displays a found associated device. Then, the user selects, from the associated device found by the mobile phone 10, an associated device to be collaborated with. The mobile phone 10 determines whether the associated device selected by the user meets a preset condition (condition 4/condition 5 and at least one of the foregoing condition 1 to condition 3) for collaborative display, to determine whether the mobile phone 10 successfully collaborates with the associated device.

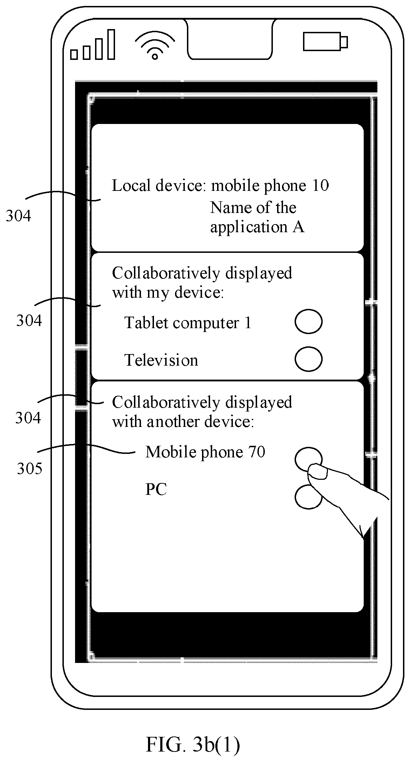

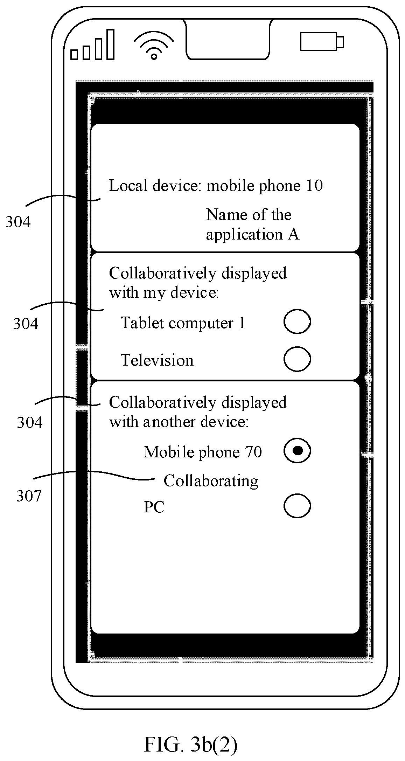

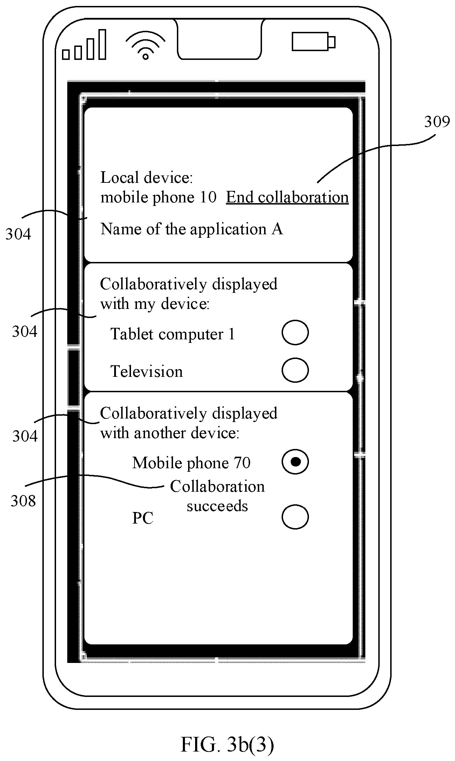

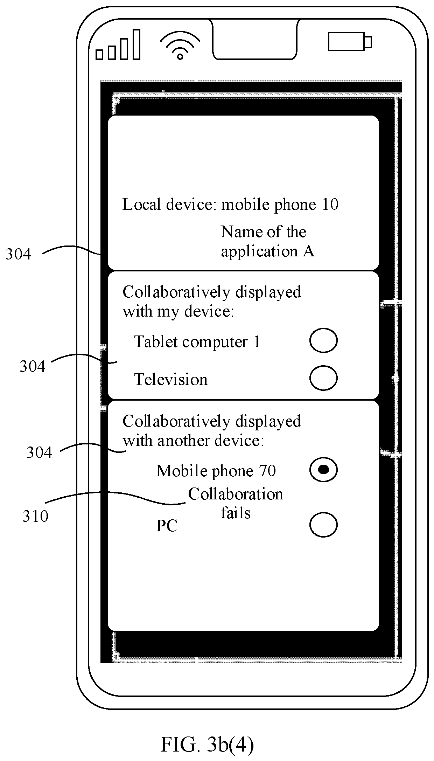

For example, as shown in FIG. 3b(1), the mobile phone 10 displays a device list 304. The device list 304 displays an identifier of an associated device found by the mobile phone 10. In an example, the device list 304 includes local information of the mobile phone 10, for example, a name of the mobile phone 10 or a name of an application A currently running in the foreground of the mobile phone 10. In some other embodiments, the device list 304 may further display an identifier of a found associated device (for example, a tablet computer 1 or a television) that logs in to a same account as the mobile phone 10. The device list 304 may further display an identifier of an associated device (for example, a mobile phone 70 and a PC) that logs in to another account. Certainly, in the device list 304, whether the associated device and the mobile phone 10 have a same account may not be distinguished.

In some embodiments, in response to detecting that the user selects an identifier 305 of the mobile phone 70 from the device list 304, the mobile phone 10 starts to detect whether the mobile phone 70 meets the foregoing preset condition. Optionally, the mobile phone 10 may display prompt information 307 in the device list 304, to prompt the user that the mobile phone 10 is collaborating with the mobile phone 70.

In some examples of this embodiment, if it is determined that the mobile phone 70 does not meet the foregoing preset condition, the mobile phone 10 fails to collaborate with the mobile phone 70. For example, the mobile phone 10 displays prompt information 310 shown in FIG. 3b(4).

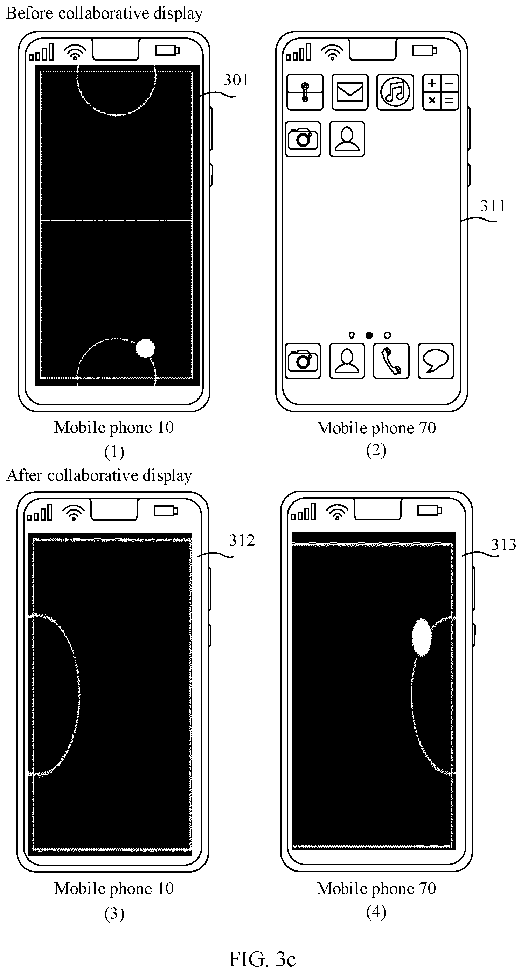

In some other examples of this embodiment, if it is determined that the mobile phone 70 meets the foregoing preset condition, the mobile phone 10 successfully collaborates with the mobile phone 70. For example, the mobile phone 10 displays prompt information 308 shown in FIG. 3b(3). Optionally, the local information in the device list 304 may further include a control 309 for exiting collaboration, and the control 309 for exiting collaboration may be used to exit current collaborative display between the mobile phone 10 and the mobile phone 70. In this case, the mobile phone 10 and the mobile phone 70 perform collaborative display. (1) in FIG. 3c shows an interface 301 of the application A displayed by the mobile phone 10 before collaborative display. (2) in FIG. 3c shows a home screen 311 displayed by the mobile phone 70 before collaborative display. (3) in FIG. 3c shows an interface 312 displayed by the mobile phone 10 after collaborative display, and the interface 312 is some content in the interface 301 of the application A. (4) in FIG. 3c shows an interface 313 displayed by the mobile phone 70 after collaborative display, and the interface 313 is some other content in the interface 301 of the application A.

It should be noted that, an example in which collaborative terminals (the mobile phone 10 and the mobile phone 70) jointly display an interface originally displayed by one terminal (that is, the mobile phone 10) is used for description herein. When collaborative display modes of the mobile phone 10 and the mobile phone 70 are different, interfaces displayed by the mobile phone 10 and the mobile phone 70 after collaborative display may be other content. The following describes in detail each mode for collaborative display between the mobile phone 10 and the mobile phone 70, and details are not described herein.

In some other embodiments, after the user performs the preset operation 1, in a process of successfully establishing collaborative display between the terminal A and the associated device B, the user may perform a specific operation to withdraw collaborative display between the terminal A and the associated device B, that is, terminate the process of establishing collaborative display between the terminal A and the associated device B. For example, a revoke control (not shown in the figure) is displayed in the interface shown in FIG. 3b(1) or FIG. 3b(2). When detecting that the user operates the revoke control, the mobile phone 10 terminates the process of establishing collaborative display with the associated device B. For another example, when the mobile phone 10 detects that the user enters a voice command "revoke collaborative display", the mobile phone 10 terminates the process of establishing collaborative display with the associated device B.

In addition, it should be further noted that some interfaces in the interfaces shown in FIG. 3b(1) to FIG. 3b(4) may not exist. For example, the mobile phone 10 may not display the interface shown in FIG. 3b(2). For another example, as shown in the figure, when the mobile phone 10 finds one associated device, the mobile phone 10 may automatically detect whether the associated device meets the foregoing preset condition. The mobile phone 10 may not display the interface shown in FIG. 3b(1).

Optionally, in some other examples in this embodiment, the device list 304 is automatically closed after a period of time after the collaboration succeeds or the collaboration fails, or the user may manually close the device list 304. For example, in response to that the user taps an area other than the device list in the interface shown in FIG. 3b(3), the mobile phone 10 closes the device list, and displays the interface 312 shown in (3) in FIG. 3c. Alternatively, in response to that the user taps an area other than the device list in the interface shown in FIG. 3b(4), the mobile phone 10 closes the device list, and continues to display the interface 301 shown in (1) in FIG. 3c.

It may be understood that, in this example, that the terminal A displays the device list 304 to display the found associated device is merely an example. The terminal A may alternatively present the found associated device in the following recommendation bubble manner, or present the found associated device in another manner. This is not specifically limited herein.

In some other embodiments of this application, after the associated device is found, the mobile phone 10 may traverse all found associated devices, to determine whether each associated device meets the foregoing preset condition. Then, the mobile phone 10 automatically performs collaborative display with an associated device that meets the preset condition.

In some examples, when there is one associated device that meets the preset condition, the mobile phone 10 performs collaborative display with the associated device. That is, there are two terminals (including the mobile phone 10) for collaborative display. In some other examples, when there are two or more associated devices that meet the preset condition, the mobile phone 10 may automatically perform collaborative display with the two or more associated devices. That is, there are at least two terminals (including the mobile phone 10) for collaborative display. Alternatively, the mobile phone 10 may automatically select one or more associated devices to perform collaborative display. Alternatively, the mobile phone 10 may prompt the user to select one or more associated devices, and the mobile phone 10 performs collaborative display with the associated device selected by the user.

In this embodiment, the mobile phone 10 may not display the device list 304 shown in FIG. 3b(1), or the mobile phone 10 displays the device list 304 shown in FIG. 3b(1). After the mobile phone 10 determines an associated device that meets the preset condition, the mobile phone 10 automatically displays, in the device list 304, the prompt information 307 shown in FIG. 3b(2), or the mobile phone 10 automatically displays the interface 309 shown in FIG. 3b(3). Then, for content displayed on the mobile phone 10 and the mobile phone 70, refer to descriptions of related content in the foregoing embodiments. Details are not described herein again.

In some other embodiments of this application, the user may enable the collaborative display function of the terminal A in advance by using a setting option in system settings of the terminal A or a setting option on a setting page of an application (for example, an application B) of the terminal A. Alternatively, the terminal A automatically enables the collaborative display function after a wireless communication function is enabled. In this case, after the wireless communication function is enabled, the terminal A keeps detecting whether there is a surrounding associated device that meets the foregoing preset condition. Alternatively, when running the application B, the terminal A keeps detecting whether there is a surrounding associated device that meets the foregoing preset condition. After detecting that there is an associated device (for example, the associated device B) that meets the preset condition, the terminal A queries (or recommends) the user whether to perform collaborative display with the associated device B.

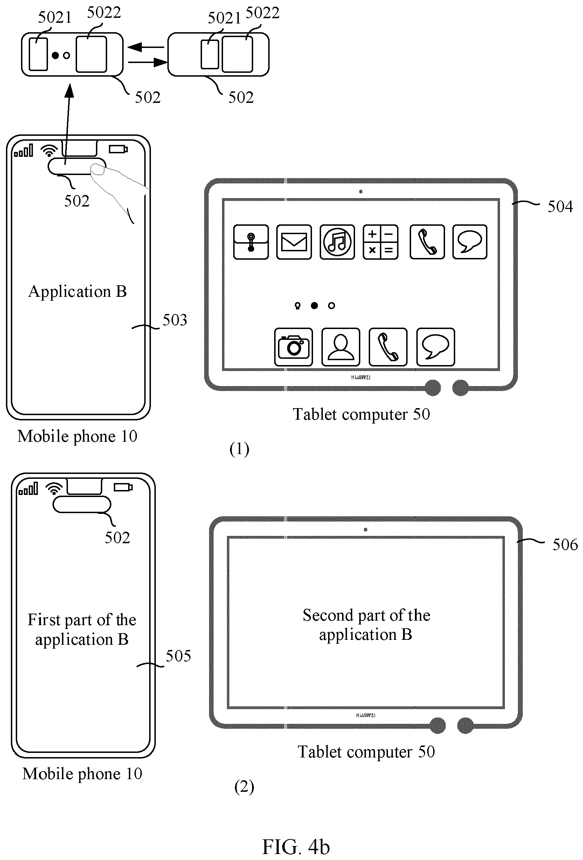

For example, an example in which a mobile phone 10 is used as the terminal A is still used for description. As shown in FIG. 4a, an interface of a setting application of the mobile phone 10 includes a setting option 501 of a "Collaborative display" function, and the user may enable a collaborative display function of the mobile phone 10 by using the setting option 501. In this case, the mobile phone 10 automatically enables a wireless communication function and starts to search for a surrounding associated device. After finding an associated device (for example, a tablet computer 50), the mobile phone 10 determines whether the found tablet computer 50 meets the foregoing preset condition (for example, the preset condition is any one of the foregoing condition 1 to condition 3). As shown in (1) in FIG. 4b, the mobile phone 10 displays an interface 503 of the application B. When the mobile phone 10 finds the tablet computer 50 and detects that the tablet computer 50 meets the foregoing preset condition, the mobile phone 10 sends a prompt to prompt the user whether to agree to perform collaborative display with the tablet computer 50. The mobile phone 10 may perform prompt in various manners such as displaying prompt information or playing a prompt voice. In an example, the mobile phone 10 may display a recommendation bubble 502 (which may also be referred to as a recommendation option 502, prompt information 502, a capsule 502, or the like), where the recommendation bubble 502 includes an icon 5021 of the mobile phone 10 and an icon 5022 of the tablet computer 50. That is, the recommendation bubble 502 is used to prompt the user that the mobile phone 10 and the tablet computer 502 can perform collaborative display. Optionally, the recommendation bubble 502 plays the following animation effect: The icon 5021 and the icon 5022 move close to each other, then move away from each other, then move close to each other, and then move away from each other.... It can be learned that the animation effect can more vividly prompt the user that the mobile phone 10 and the tablet computer 50 can perform collaborative display. Certainly, the recommendation bubble 502 may alternatively use another style. This is not limited in this embodiment of this application. Certainly, the mobile phone 10 may alternatively present the found associated device in another non-recommendation bubble manner, for example, the foregoing device list manner. The following uses the recommendation bubble manner as an example for description.

In some embodiments, in response to that the user performs a preset operation 2 for the recommendation bubble 502 in the interface 503 (for example, performs an operation such as tapping, double-tapping, or touching and holding for the recommendation bubble 502), the mobile phone 10 sends a collaboration request to the tablet computer 50, to request to perform collaborative display with the tablet computer 50. (1) in FIG. 4b shows the interface 503 of the application B displayed by the mobile phone 10 before collaborative display. The tablet computer 50 displays an interface 504 before collaborative display. (2) in FIG. 4b shows an interface 505 of a first part of the application B displayed by the mobile phone 10 after collaborative display. The tablet computer 50 displays an interface 506 of a second part of the application B after collaborative display. The interface of the first part of the application B and the interface of the second part of the application B may be different, or may be the same, or may be partially the same. For details, refer to the following descriptions of collaborative modes, and details are not described first herein.

Optionally, after the mobile phone 10 detects that the user performs the preset operation 2 for the recommendation bubble 502 in the interface 503, and sends the collaboration request to the tablet computer 50, the tablet computer 50 may display a query interface or play a voice to query whether to agree to perform collaborative display with the mobile phone 10. If an indication indicating that the user agrees is received, the tablet computer 50 performs collaborative display with the mobile phone 10. If an indication indicating that the user disagrees is received, the tablet computer 50 does not perform collaborative display with the mobile phone 10. Alternatively, the tablet computer 50 may automatically detect whether the mobile phone 10 is an associated device of the tablet computer 50. If the mobile phone 10 is an associated device, the tablet computer 50 automatically performs collaborative display with the mobile phone 10. If the mobile phone 10 is not an associated device, the tablet computer 50 queries the user whether to agree or refuse to perform collaborative display with the mobile phone 10.

It may be understood that each terminal in the collaborative display system 11 shown in FIG. 1 may pre-enable a collaborative display function, or automatically enable a collaborative display function. In this case, each terminal in the collaborative display system 11 searches for a surrounding associated device in real time, and determines whether a found associated device meets the foregoing preset condition (for example, any one of the foregoing condition 1 to condition 3). Therefore, for two or two terminals that are associated with each other, any one of the following rule 1 to rule 3 may be used to determine a specific terminal on which the foregoing recommendation bubble is to be displayed.

Rule 1: A main device displays a recommendation bubble.

The main device may be, for example, a terminal that runs a specific application (for example, a non-home screen application, a document application, a video application, or an application supporting a collaborative display function) in the foreground, or a terminal that receives a user operation within preset duration T1 before it is determined to display the recommendation bubble. An auxiliary device corresponds to the main device. In an example, after the main device is determined, another terminal other than the main device may be determined as the auxiliary device.

The auxiliary device may be, for example, an idle terminal. The idle terminal may be, for example, a terminal that displays a home screen application (that is, an application running in the foreground is a home screen), a terminal in a screen-locked state (and in a screen-on state), a terminal in a screen-off state, or a terminal that does not receive a user operation within preset duration T1 before it is determined to display the recommendation bubble. In another example, after the auxiliary device is determined, another terminal other than the auxiliary device is the main device.

In some other examples, the main device or the auxiliary device may be determined based on device information of a terminal (for example, a device type, running application information, and a relationship between the terminal and the user). For example, a mobile phone (device type) is determined as the main device, and a tablet computer (device type) is determined as the auxiliary device. Certainly, the mobile phone may alternatively be determined as the auxiliary device, and the tablet computer may be determined as the main device. For another example, a terminal that is running an application supporting the collaborative display function is determined as the main device. For another example, a terminal closest to the user is determined as the main device, or a terminal being held by the user is determined as the main device. In other words, definitions of the main device and the auxiliary device are not specially limited in embodiments of this application.

In specific implementation, each terminal may determine, based on device information (a device type, running application information, sensor data, and the like) of the terminal, whether the terminal is the main device or the auxiliary device. Alternatively, two or more terminals (meeting the foregoing preset condition) that are associated with each other may interact with each other by using a wireless connection, to determine the main device or the auxiliary device. In conclusion, a method for determining the main device and the auxiliary device is not limited in embodiments of this application.

For example, as shown in (1) in FIG. 4b, the application B runs on the mobile phone 10, and the tablet computer 50 displays a home screen. In this case, when the mobile phone 10 discovers the tablet computer 50 and determines that the tablet computer 50 meets the foregoing preset condition (any one of the condition 1 to the condition 3), because the mobile phone 10 runs the non-home screen application B, or the mobile phone 10 runs the application B that supports the collaborative display function, the mobile phone 10 is determined as the main device and displays the recommendation bubble 502. When the tablet computer 50 discovers the mobile phone 10 and determines that the mobile phone 10 meets the foregoing preset condition (any one of the condition 1 to the condition 3), because the tablet computer 50 displays the home screen, the tablet computer 50 is determined as the auxiliary device, and does not display a recommendation bubble.

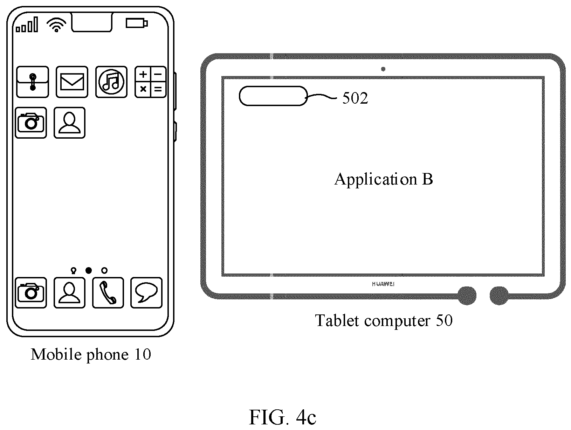

For another example, as shown in FIG. 4c, the mobile phone 10 displays a home screen, and the tablet computer 50 displays an interface of the application B. In this case, when the mobile phone 10 discovers the tablet computer 50 and determines that the tablet computer 50 meets the foregoing preset condition (any one of the condition 1 to the condition 3), because the mobile phone 10 displays the home screen, the mobile phone 10 is determined as the auxiliary device, and does not display a recommendation bubble. When the tablet computer 50 discovers the mobile phone 10 and determines that the mobile phone 10 meets the foregoing preset condition (any one of the condition 1 to the condition 3), the tablet computer 50 is determined as the main device, and displays the recommendation bubble 502.

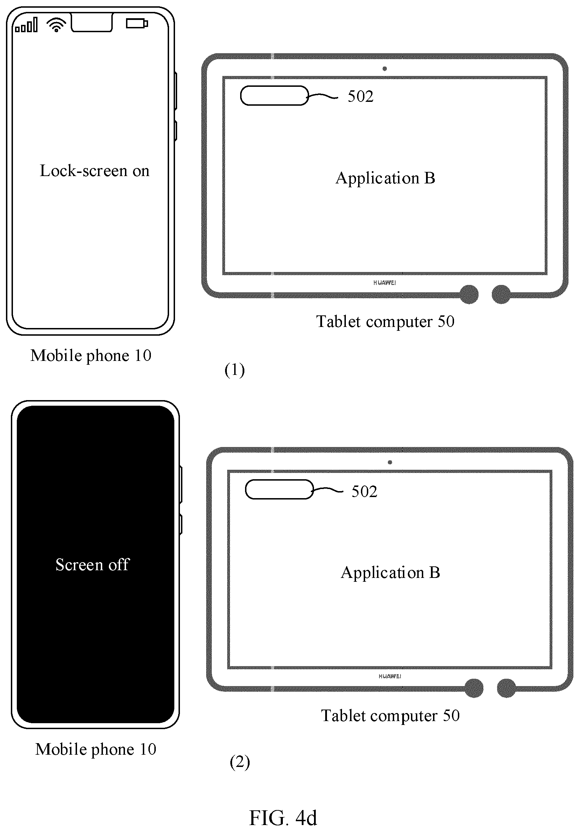

For another example, as shown in (1) in FIG. 4d, the mobile phone 10 is in a screen-locked state and a screen-on state. An interface (non-home screen) of the application B runs in the foreground of the tablet computer 50. In this case, when the tablet computer 50 discovers the mobile phone 10 and determines that the mobile phone 10 meets the foregoing preset condition (any one of the condition 1 to the condition 3), the tablet computer 50 is the main device, and displays the recommendation bubble 502.

For another example, as shown in (2) in FIG. 4d, the mobile phone 10 is in a screen-off state. An interface (non-home screen) of the application B runs in the foreground of the tablet computer 50. In this case, when the tablet computer 50 discovers the mobile phone 10 and determines that the mobile phone 10 meets the foregoing preset condition (any one of the condition 1 to the condition 3), the tablet computer 50 is the main device, and displays the recommendation bubble 502.

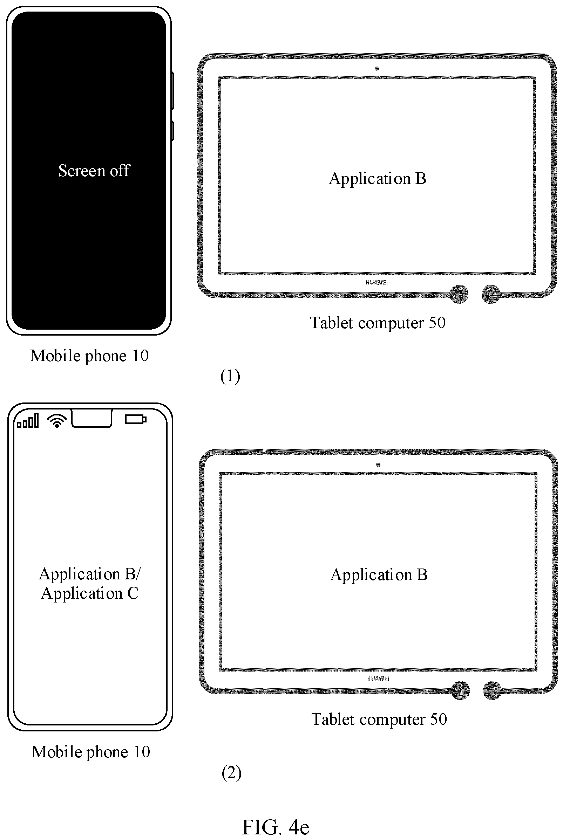

In some other embodiments, when any one of terminals associated with each other is in a screen-off state or a screen-locked state, the terminal does not support a discovery function (for example, a wireless communication module is disabled). For example, as shown in (1) in FIG. 4e, the mobile phone 10 is in a screen-off state. If a wireless communication module of the mobile phone 10 is disabled in the screen-off state, the tablet computer 50 cannot discover the mobile phone 10, and the tablet computer 50 does not display the recommendation bubble 502.

Alternatively, when one of the terminals is in a screen-off state or a screen-locked state, the collaborative display function is not supported. For example, the mobile phone 10 is in a screen-off state. Even if the tablet computer 50 discovers the mobile phone 10 and determines that the mobile phone 10 meets the foregoing preset condition (any one of the condition 1 to the condition 3), because the tablet computer 50 learns that the mobile phone 10 is in the screen-off state, the tablet computer 50 does not display the recommendation bubble 502.

In some other embodiments, when two or more terminals in devices associated with each other are in a busy state, the recommendation bubble 502 is not displayed either. When a terminal runs another non-home screen application in the foreground, the terminal is in a busy state. Alternatively, when a terminal is performing collaborative display with another terminal, the terminal is in a busy state.

For example, as shown in (2) in FIG. 4e, the mobile phone 10 runs a non-home screen application (for example, the application B), and the tablet computer 50 runs the application B. In this case, when the mobile phone 10 discovers the tablet computer 50 and determines that the tablet computer 50 meets the foregoing preset condition (any one of the condition 1 to the condition 3), but the mobile phone 10 learns that both the tablet computer 50 and the mobile phone 10 are in a busy state, the mobile phone 10 does not display the recommendation bubble 502. Similarly, the tablet computer 50 does not display the recommendation bubble 502 either.

Rule 2: Display a recommendation bubble on a terminal that is easy to interact.

The terminal that is easy to interact means that interaction between the user and the terminal is quick and convenient, interaction between the user and the terminal is frequent, or the like. For example, devices arranged in ascending order of difficulty of user-terminal interaction manners are as follows: mobile phone >= watch > tablet computer >= PC > IoT device (such as a smart speaker) > head unit > television.

For example, after the mobile phone 10 discovers the tablet computer 50 and determines that the tablet computer 50 meets the foregoing preset condition (for example, any one of the condition 1 to the condition 3), if it is determined that a priority of the mobile phone 10 is higher than a priority of the tablet computer 50, the mobile phone 10 displays the recommendation bubble. Correspondingly, after the tablet computer 50 discovers the mobile phone 10 and determines that the mobile phone 10 meets the foregoing preset condition (for example, any one of the condition 1 to the condition 3), if it is determined that a priority of the mobile phone 10 is higher than a priority of the tablet computer 50, the tablet computer does not display the recommendation bubble.

Rule 3: Display a recommendation bubble on two or more terminals that are associated with each other.

In other words, after detecting an associated device that meets the foregoing preset condition, any terminal in the two or more terminals that are associated with each other may display a recommendation bubble. After the user operates a recommendation bubble on any terminal, a recommendation bubble on another terminal may automatically disappear or be hidden.

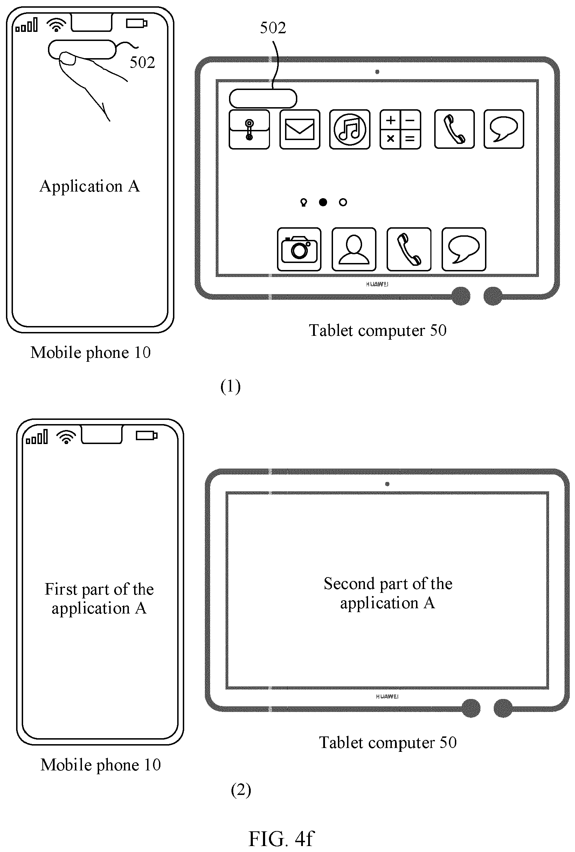

For example, as shown in (1) in FIG. 4f, the mobile phone 10 displays an application A, and displays a recommendation bubble 502. The tablet computer 50 displays a home screen, and also displays the recommendation bubble 502. When the mobile phone 10 detects that the user operates the recommendation bubble 502, the mobile phone 10 performs collaborative display with the tablet computer 50. As shown in (2) inFIG. 4f, the mobile phone 10 displays an interface of a first part of the application A, and the tablet computer 50 displays an interface of a second part of the application A. It can be learned that the recommendation bubble 502 on the mobile phone 10 disappears, and the recommendation bubble 502 on the tablet computer 50 disappears.

In some embodiments of this application, the recommendation bubble 502 may be displayed at a specific location on the terminal, for example, displayed at a left location at the top of the terminal, or at a right location at the top of the terminal, or at a middle location at the top of the terminal, or at a left location at the bottom of the terminal, or at a right location at the bottom of the terminal, or at a middle location at the bottom of the terminal.

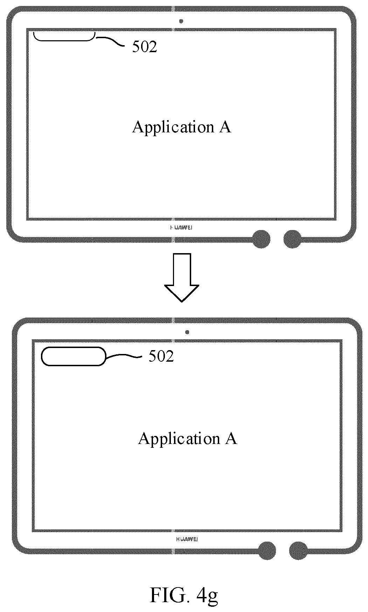

Optionally, when starting to display (that is, enter) the recommendation bubble 502, a terminal may display the recommendation bubble 502 by using an animation effect. For example, as shown in FIG. 4g, the tablet computer 50 starts to display the recommendation bubble 502 from the upper left corner of a screen. In this case, the tablet computer 50 displays only lower content of the recommendation bubble 502. As time goes by, the tablet computer 50 gradually displays more content of the recommendation bubble 502 until all content of the recommendation bubble 502 is displayed. Visually, the user can see that the recommendation bubble 502 gradually moves downward from the upper left corner of the screen until all content is displayed. Certainly, another animation effect may alternatively be used as an entry manner of the recommendation bubble 502. Similarly, when the recommendation bubble 502 disappears (that is, exits), a specific animation effect may also be used. In this way, visual experience of the user is improved. Certainly, in this embodiment of this application, all animation effects of the recommendation bubble 502 in a process from being displayed to disappearing are not limited.

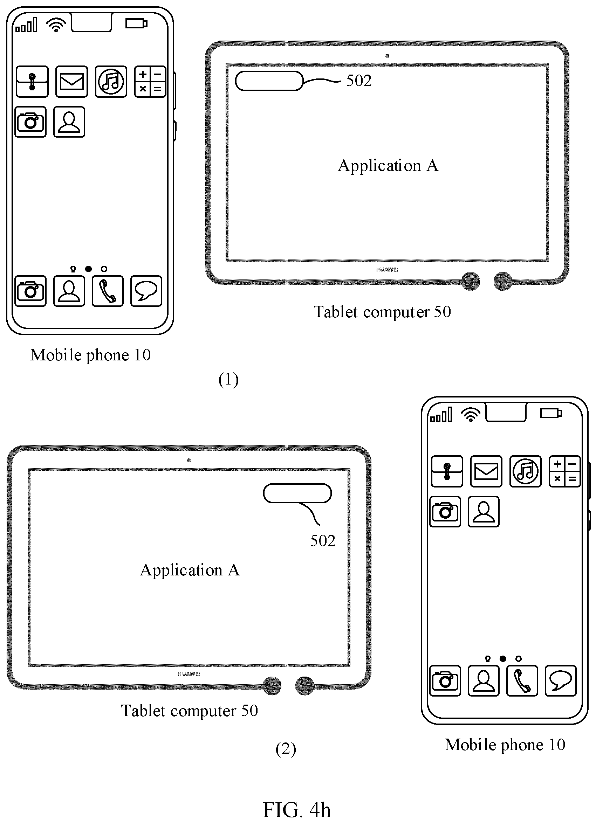

In some other embodiments of this application, as described above, when a terminal can detect a location of an associated device relative to the terminal (that is, an orientation of the associated device), the terminal may display the recommendation bubble 502 at a location that is on a screen of the terminal and that is close to the associated device, so that the user can more visually learn of the orientation of the associated device. In some examples, the tablet computer 50 may distinguish that the mobile phone 10 is located on the left/right of the tablet computer 50, and display the recommendation bubble 502 on the left/right side at the top of the screen. For example, as shown in (1) in FIG. 4h, if the tablet computer 50 detects that the mobile phone 10 is located on the left of the tablet computer 50, the tablet computer 50 displays the recommendation bubble 502 on the left side at the top of the screen. As shown in (2) in FIG. 4h, if the tablet computer 50 detects that the mobile phone 10 is located on the right of the tablet computer 50, the tablet computer 50 displays the recommendation bubble 502 on the right side at the top of the screen. In some other examples, the tablet computer 50 may distinguish that the mobile phone 10 is located on the front-left/left/rear-left/front-right/right/rear-right of the tablet computer 50, and display the recommendation bubble 502 on the upper-left/left/lower-left/upper-right/right/lower-right of the screen. A specific rule of how the tablet computer 50 displays the recommendation bubble 502 based on the detected orientation of the mobile phone 10 is not limited in this embodiment of this application.

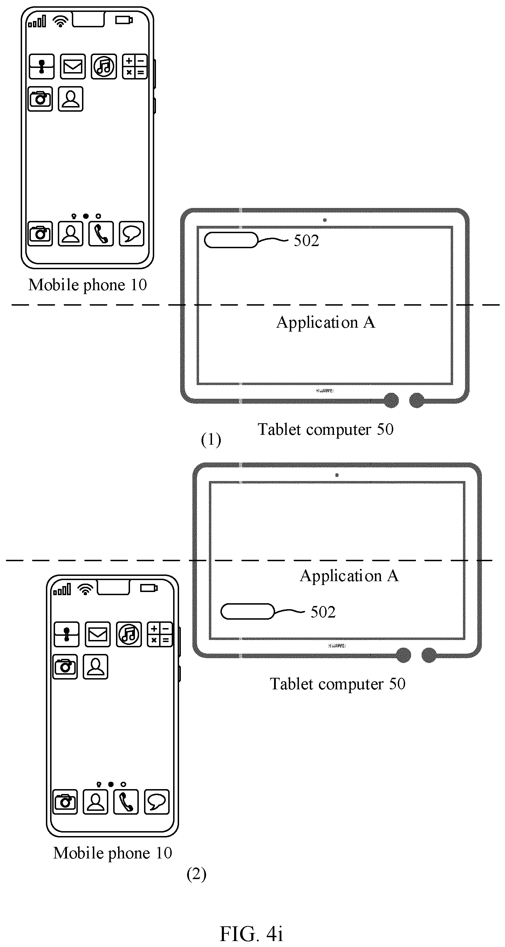

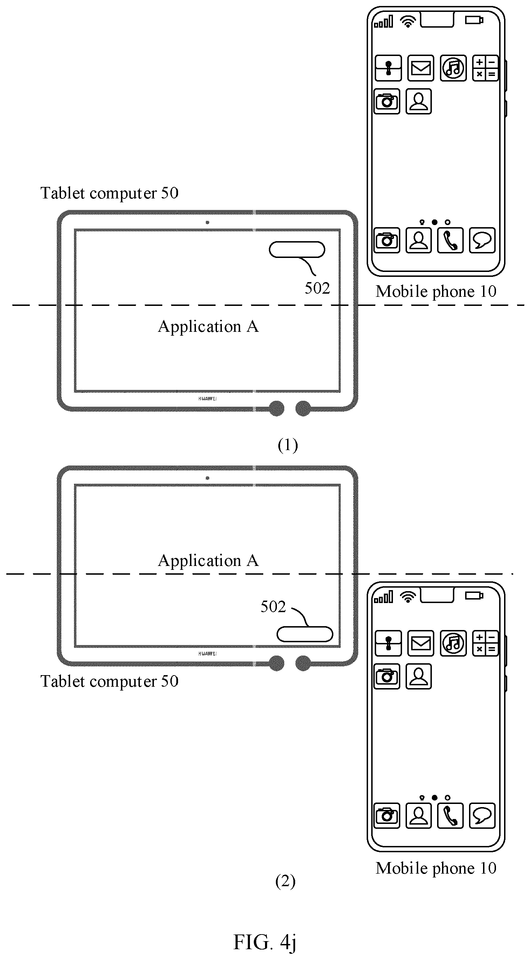

Optionally, when the orientation of the associated device changes, the location of the recommendation bubble displayed by the terminal also changes accordingly. In an example, the terminal displays the recommendation bubble at the top of the screen by default. As the orientation of the associated device changes, the recommendation bubble displayed by the terminal moves horizontally (that is, moves left and right) on the screen, and does not move vertically (that is, does not move up and down), so that the recommendation bubble 502 is always kept at the top of the screen. As shown in (1) inFIG. 4h, if the tablet computer 50 detects that the mobile phone 10 is located on the left of the tablet computer 50, the tablet computer 50 displays the recommendation bubble 502 on the left side at the top of the screen. As shown in (2) in FIG. 4h, when it is detected that a location of the mobile phone 10 changes and the mobile phone 10 moves to the right side of the tablet computer 50, the recommendation bubble 502 moves horizontally to the right side at the top of the screen of the tablet computer 50. In another example, as the orientation of the associated device changes, the recommendation bubble displayed on the terminal moves horizontally and/or vertically on the screen. For example, as shown in (1) in FIG. 4i, when the tablet computer 50 detects that the mobile phone 10 is located on the front-left, the tablet computer 50 displays the recommendation bubble 502 on the left side at the top of the screen. As shown in (2) in FIG. 4i, when the tablet computer 50 detects that the mobile phone 10 moves from the front-left to the rear-left, the recommendation bubble 502 displayed by the tablet computer 50 moves downward to the left side at the bottom of the screen. As shown in (1) in FIG. 4j, when the tablet computer 50 detects that the mobile phone 10 moves from the front-left to the front-right, the recommendation bubble 502 displayed by the tablet computer 50 moves rightward to the left side at the top of the screen. As shown in (2) in FIG. 4j, when the tablet computer 50 detects that the mobile phone 10 moves from the front-left to the rear-right, the recommendation bubble 502 displayed by the tablet computer 50 moves leftward and downward to the right side at the bottom of the screen.

The foregoing describes the following case: After it is detected that the user performs the preset operation 2 for the recommendation bubble 502 displayed by the terminal A (for example, the mobile phone 10) (for example, performs an operation such as tapping, double-tapping, or touching and holding for the recommendation bubble 502), the terminal A is triggered to perform collaborative display with the tablet computer 50 (that is, the associated device B) indicated in the recommendation bubble 502. Optionally, the terminal hides/closes the recommendation bubble 502. Optionally, the terminal stops searching for a surrounding associated device, or the terminal stops detecting whether another associated device meets the foregoing preset condition.

In some other scenarios, when it is detected that the user performs a preset operation 3 for the recommendation bubble 502 displayed by the terminal A (for example, the mobile phone 10) (for example, performs a slide-up operation for the recommendation bubble 502), or no operation performed by the user for the recommendation bubble 502 is detected within preset duration T2, the mobile phone 10 determines not to perform collaborative display with the tablet computer 50 (that is, the associated device B) indicated in the recommendation bubble 502, and the terminal hides/closes the recommendation bubble 502.

In addition, in the current interaction process, the mobile phone 10 no longer recommends the tablet computer 50 to participate in collaborative display. For example, when the mobile phone 10 displays the recommendation bubble 502, if an application running in the foreground is switched to running in the background, or the mobile phone 10 closes an application currently running in the foreground, it may be considered that the current interaction process ends.

Optionally, in the current interaction process, the mobile phone 10 may continue to search for a surrounding associated device, and detect whether a found associated device meets the foregoing preset condition. When another associated device (for example, a television 60) that meets the foregoing preset condition is found, the mobile phone 10 displays a new recommendation bubble, where an associated device indicated in the recommendation bubble is the television 60.

It should be further noted that, if the mobile phone 10 finds a plurality of associated devices that meet the foregoing preset condition, a plurality of recommendation bubbles may be displayed at the same time. Alternatively, the mobile phone 10 displays one recommendation bubble, but the recommendation bubble includes options of a plurality of associated devices. Alternatively, the mobile phone 10 may select, based on priorities (or referred to as confidence) of the plurality of associated devices, one of the associated devices for recommendation to the user. That is, the mobile phone 10 still displays one recommendation bubble, the recommendation bubble indicates one associated device, and the associated device is a terminal with a highest priority in the associated devices found by the mobile phone 10. The priority of the associated device may be related to intimacy with the user (or a use frequency of the user), signal strength of the associated device, and the like based on a device type of the associated device. The priority of the associated device is not limited in embodiments of this application. Certainly, in some other examples, when the associated device found by the mobile phone 10 changes, for example, the associated device is powered on or off, or a location of the associated device changes, the mobile phone 10 changes a recommended associated device based on a newly found associated device and a priority of the associated device. That is, the associated device in the recommendation bubble changes accordingly.

It should be noted that the execution process of the mobile phone 10 and the interface displayed by the mobile phone 10 provided in the foregoing solution 1 are merely used to describe a process in which two or more terminals perform collaborative display in embodiments of this application. Neither the execution process of the mobile phone 10 nor the interface displayed by the mobile phone 10 is limited in embodiments of this application. For example, in solution 1, after triggering the collaborative display function, the mobile phone 10 starts to search for an associated device, and then determines whether the associated device meets the preset condition, that is, whether the mobile phone 10 can establish the collaborative display function with the associated device. In some other embodiments, for example, in solution 2, the mobile phone 10 may first search for an associated device. Then, the user triggers a collaborative display function between the mobile phone 10 and a found associated device, and the mobile phone 10 determines whether the associated device meets the preset condition, that is, whether the mobile phone 10 can perform the collaborative display function with the associated device.

### Solution 2:

For example, the user may manually enable a function of searching for a surrounding associated device by the terminal A, or the terminal A automatically enables a function of searching for a surrounding associated device when detecting a specific scenario (for example, a preset time period, a conference scenario, or an entertainment scenario). Then, the user triggers, in a list of associated devices displayed by the terminal A, collaborative display functions of the terminal A and one or more associated devices. In this case, the terminal A determines whether the associated device selected by the user meets the foregoing preset condition, and further determines whether to perform collaborative display with the associated device.

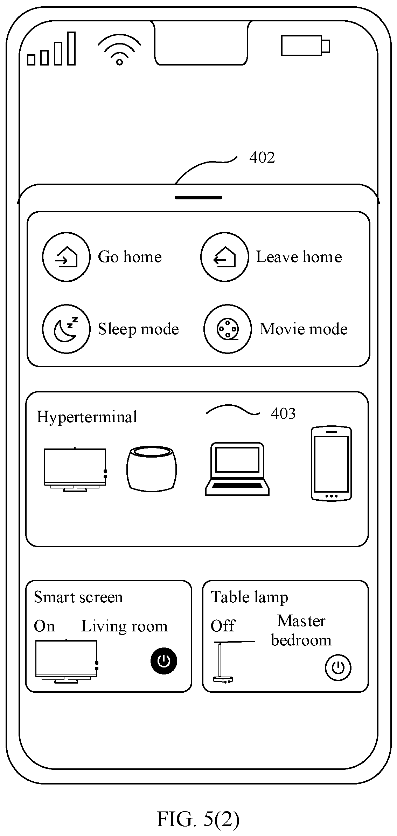

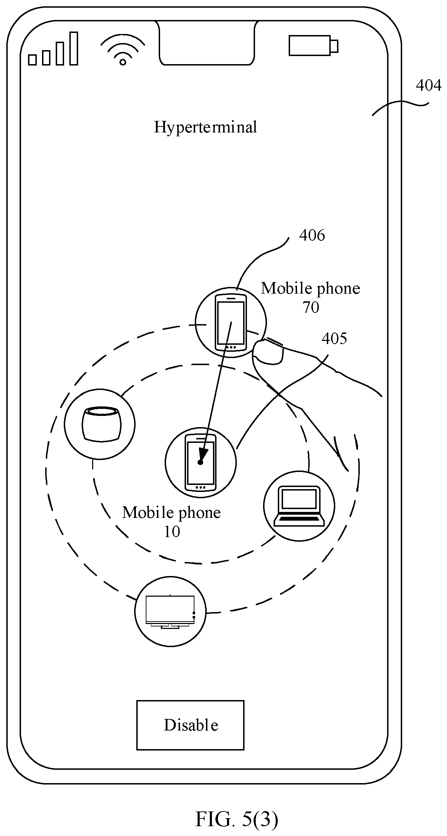

For example, an example in which a mobile phone 10 is used as the terminal A is still used for description. As shown in FIG. 5(1), the mobile phone 10 displays an interface 401 of an application A. The application A supports a collaborative display function. In response to detecting an operation that the user pulls up from the bottom (which is usually a side on which a microphone, a charging port, and the like are configured) of a screen, the mobile phone 10 displays a control center 402 shown in FIG. 5(2). The control center 402 includes a "Hyperterminal" card 403. In response to tapping the "Hyperterminal" card 403 by the user, the mobile phone 10 starts to broadcast a discovery request by using a wireless communication function, to search for a surrounding device associated with the mobile phone 10. In some embodiments, the mobile phone 10 displays a "Hyperterminal" interface 404 shown in FIG. 5(3). The interface 404 includes an icon 405 of the mobile phone 10 and an icon of an associated device of the mobile phone 10 (for example, an icon 406 of a mobile phone 70). It should be noted that, in the accompanying drawings of this application, "Hyperterminal" is used to collectively refer to the mobile phone 10 and an associated device that has an association relationship with the mobile phone 10. In other words, a terminal corresponding to each icon displayed in the interface 404 is an associated device of the mobile phone 10. In other words, "Hyperterminal" is used to represent a set of terminals having the foregoing association relationship. It may be understood that "Hyperterminal" may also be expressed as another term, and does not constitute a specific limitation on the terminal in embodiments of this application.

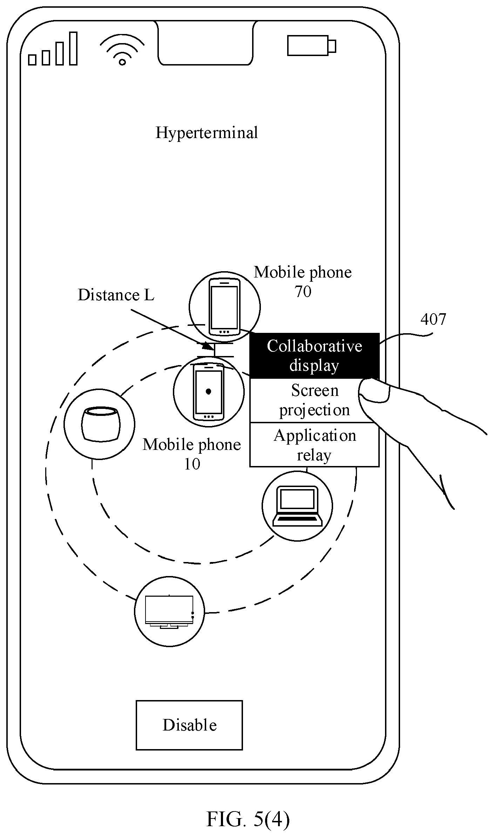

In some other embodiments, in response to that the user presses the icon 406 in the interface 404 and drags the icon 406 in a direction toward the icon 405, when a distance L between the two icons is less than or equal to a threshold B, the user releases the icon 406, and the mobile phone 10 displays an option menu 407 shown in FIG. 5(4). The option menu 407 includes a collaboration function (for example, "Collaborative display", "Screen projection", and "Application relay") supported by the mobile phone 10 and the mobile phone 70. In some other examples, in response to that the user presses the icon 405 in the interface 404 and drags the icon 405 in a direction toward the icon 406, when a distance L between the two icons is less than or equal to a threshold B, the user releases the icon 405, and the mobile phone 10 displays an option menu 407 shown in FIG. 5(4).

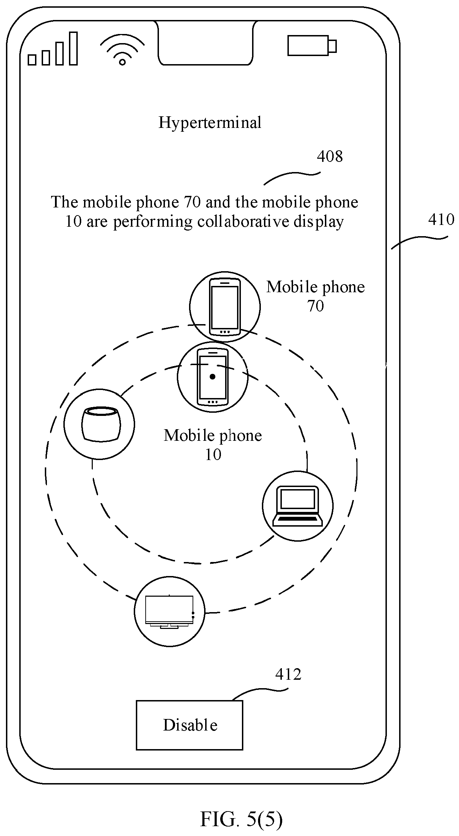

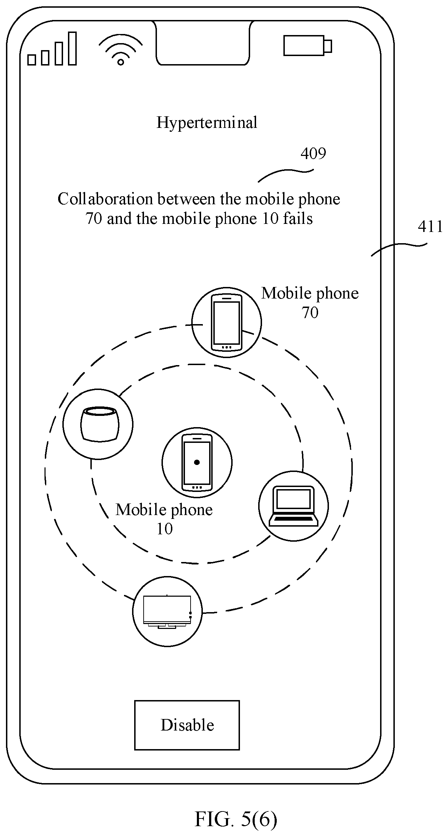

Further, in response to detecting that the user selects the "collaborative display" function, the mobile phone 10 determines whether the mobile phone 70 meets the foregoing preset condition. If it is determined that the mobile phone 70 meets the foregoing preset condition, the mobile phone 10 displays an interface 410 shown in FIG. 5(5). In the interface 410, the icon 405 of the mobile phone 10 and the icon 406 of the mobile phone 70 are adsorbed together (that is, edges of the icon 405 and the icon 406 are in contact or partially overlap). Optionally, the interface 410 may further include prompt information 408, to indicate that the mobile phone 10 and the mobile phone 70 are performing collaborative display. After it is detected that the user performs an operation of exiting "Hyperterminal" on the mobile phone 10 (for example, it is detected that the user taps a "Disable" control 412), the mobile phone 10 displays the interface 312 shown in (3) in FIG. 3c. In this case, the mobile phone 70 displays the interface 313 shown in (4) in FIG. 3c. If it is determined that the mobile phone 70 does not meet the foregoing preset condition, the mobile phone 10 displays an interface 411 shown in FIG. 5(6). In the interface 411, the icon 405 of the mobile phone 10 returns to a location used before dragging by the user. Optionally, the interface 411 may further include prompt information 409, to indicate that the mobile phone 10 and the mobile phone 70 fail to collaborate.

For other content of this solution, refer to descriptions of related content in solution 1. Details are not described again.

### (2) Collaborative display mode

After it is determined that the terminal A and the associated device B can perform collaborative display, the terminal A and the associated device B may perform collaborative display in a preset mode. Alternatively, the terminal A and the associated device B perform collaborative display in a mode selected by the user. In an example, after the terminal A and the associated device B determine to perform collaborative display, the terminal A and/or the associated device B display/displays a mode selection option for the user to select. In another example, after the terminal A and the associated device B determine to perform collaborative display, the terminal A and/or the associated device B may further display a mode switching control for the user to switch a mode. Alternatively, the terminal A and the associated device B may automatically select a corresponding mode for collaborative display based on a device type, a device feature (such as a screen size), a relative location, a running application, and the like of the terminal A and/or those of the associated device B.

In some embodiments, even if a same mode is used, when the terminal A and the associated device B have different device types, device features (such as screen sizes), relative locations, running applications, or the like, interfaces displayed on the terminal A and the associated device B may still be different, that is, display solutions are different. The following describes in detail various modes for collaborative display and different display solutions in each mode with reference to specific embodiments.

### Mode 1: enlarged mode

Before collaborative display, the terminal A displays an interface A. When the terminal A and the associated device B perform collaborative display, the terminal A and the associated device B jointly display the interface A. It may be understood that a screen including both the terminal A and the associated device B is larger than a screen of the terminal A, and therefore, it is equivalent to enlarging the interface A for display. For example, in a scenario of playing a video, displaying a document, or making a video call, an interface displayed on a single terminal is enlarged, to improve visual experience of a user. For another example, in a scenario such as a game, different users may operate different terminals, to improve operation experience of the users.
(1) Collaborative display terminals have screens with a same size or similar sizes. Alternatively, collaborative display terminals have a same device type (terminals of a same device type usually have screens with a same size or similar sizes).

In some embodiments, an interface 301 displayed by the terminal A is evenly or roughly evenly divided into N1 parts based on a quantity N1 of collaborative display terminals (including the terminal A). During collaborative display, the N1 terminals each display a part of the interface 301. For example, if the quantity of collaborative display terminals is 2, the interface 301 is evenly or roughly evenly divided into at least two parts (denoted as a first part and a second part of the interface 301), and the collaborative display terminals each display a part of the interface. For example, the terminal A displays the first part, and the associated device B displays the second part.

For example, as shown in (1) in FIG. 3c, the mobile phone 10 (namely, the terminal A) displays the interface 301 of the application A, and the interface 301 includes at least a first part and a second part. For example, the first part is an interface of an upper area of the interface 301, and the second part is an interface of a lower area of the interface 301. Certainly, in another example, the first part may alternatively be an interface of a lower area of the interface 301, and the second part is an interface of an upper area of the interface 301. After the mobile phone 10 and the mobile phone 70 (that is, the associated device B) perform collaborative display, the mobile phone 10 displays the interface 312 of the application A shown in (3) in FIG. 3c, which is an interface of an upper area of the interface 301. The mobile phone 70 displays the interface 313 of the application A shown in (4) in FIG. 3c, which is an interface of a lower area of the interface 301. The interface 312 and the interface 313 are equivalent to an enlarged version of the interface 301. Operations performed by the user on the interface 301 are the same as operations separately performed by the user on the interface 312 and the interface 313. In other words, when the user performs an operation in the interface 312, the interface 313 may be correspondingly changed. Similarly, when the user performs an operation in the interface 313, the interface 312 may be correspondingly changed. For example, when the user slides a sphere strongly in the interface of the mobile phone 70, the sphere on the mobile phone 70 slides to the left and disappears, and the sphere gradually appears in the interface 312 of the mobile phone 10 from the right side and scrolls to a corresponding location. Visually, the sphere on the mobile phone 70 scrolls to the mobile phone 10 for display.

In some other embodiments, when locations of the mobile phone 70 relative to the mobile phone 10 are different, interfaces displayed on the mobile phone 10 and the mobile phone 70 may be different. For example, when the mobile phone 70 is located on the right of the mobile phone 10, and the mobile phone 10 and the mobile phone 70 perform collaborative display, the mobile phone 70 displays an interface corresponding to the lower area in the interface 301. The mobile phone 10 displays an interface corresponding to the upper area in the interface 301. When the mobile phone 70 is located on the left of the mobile phone 10, and the mobile phone 10 and the mobile phone 70 perform collaborative display, the mobile phone 70 displays an interface corresponding to the upper area in the interface 301. The mobile phone 10 displays an interface corresponding to the lower area in the interface 301.

(2) Collaborative display terminals have screens with different sizes. Alternatively, collaborative display terminals have different device types.

In some embodiments, the interface 301 displayed on the terminal A is divided into N1 parts based on a quantity N1 of collaborative display terminals (including the terminal A) and/or a ratio of screen sizes of the terminals. During collaborative display, the N1 terminals each display a part of the interface 301.

For example, as shown in FIG. 6a, before collaborative display, the terminal A displays an interface 601 of an application B. After the tablet computer 50 and the mobile phone 10 (that is, the associated device B) perform collaborative display, the mobile phone 10 displays an interface 602 of the application B, and the tablet computer 50 displays an interface 603 of the application B. The interface 602 corresponds to approximately one third of interface content in the interface 601. The interface 603 corresponds to approximately two thirds of the interface content in the interface 601. The interface 602 and the interface 603 are equivalent to an enlarged version of the interface 601. Optionally, resolution of the mobile phone 10 may be different from resolution of the tablet computer 50. Similarly, operations performed by the user on the interface 601 are the same as operations separately performed by the user on the interface 602 and the interface 603. For details, refer to the description in (1).

### Mode 2: replicated mode

Before collaborative display, the terminal A displays an interface A. When the terminal A and the associated device B perform collaborative display, the terminal A continues to display the interface A, and the associated device B displays an interface B. Content of the interface B is the same as that of the interface A, and sizes of the interface B and the interface A may be the same or different. It may be understood that the interface B displayed by the associated device B may be considered as a replication version of the interface A displayed by the terminal A. When different users have different terminals, the terminal A may share, in the replicated mode, the interface A displayed by the terminal A with more associated devices B. For example, in scenarios such as sharing a video and a photo or making a video call with family members and friends, it is beneficial for a plurality of users to simultaneously view same content by using respective terminals. For another example, in an office scenario, a user can view a same document, PPT, video, or the like with a colleague or a customer to facilitate solution presentation.
(1) Collaborative display terminals have screens with a same size or similar sizes. Alternatively, collaborative display terminals have a same device type.

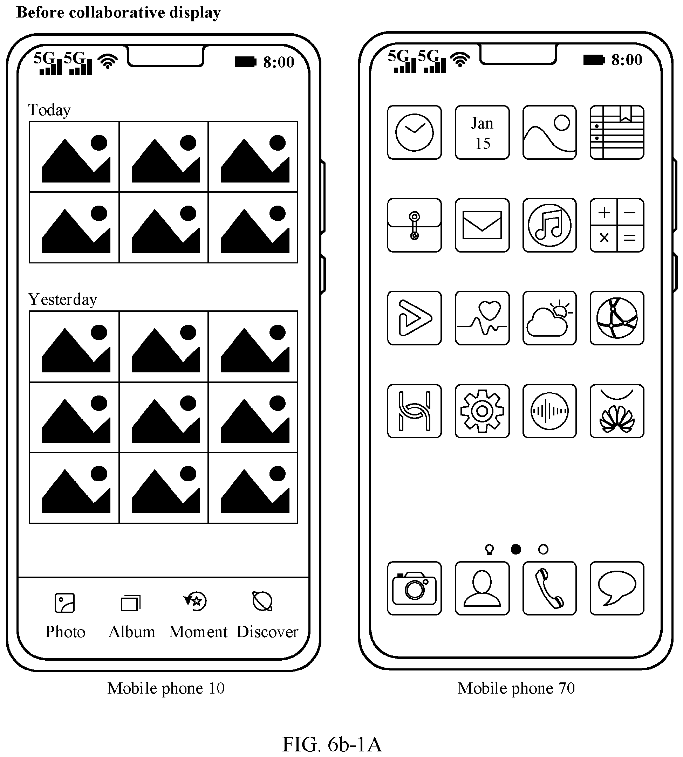

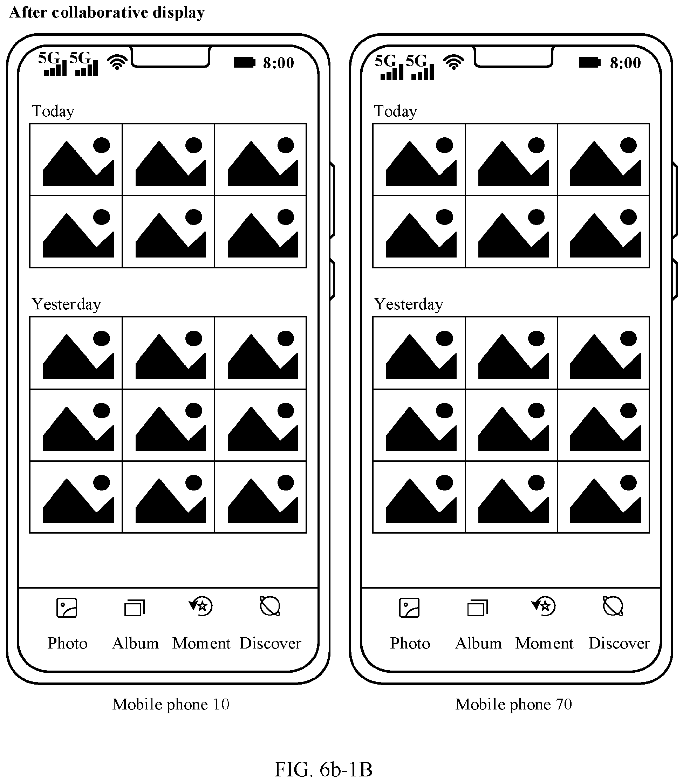

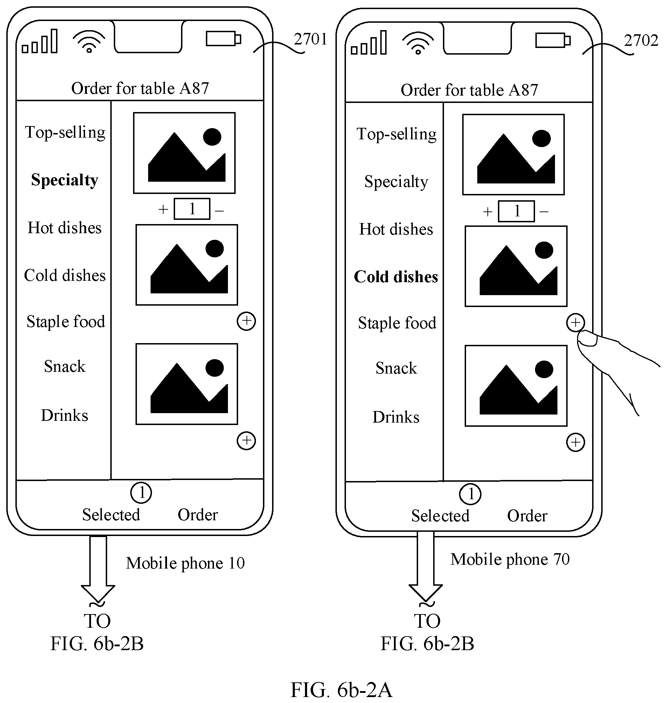

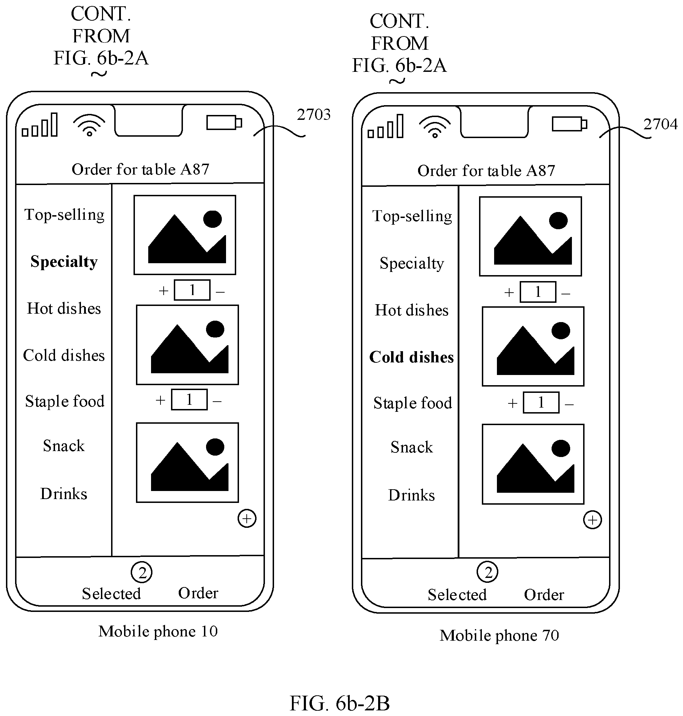

For example, as shown in FIG. 6b-1A and FIG. 6b-1B, before collaborative display, the mobile phone 10 (that is, the terminal A) displays an interface of a gallery application. The mobile phone 70 (that is, the associated device B) displays a home screen. After the mobile phone 10 and the mobile phone 70 perform collaborative display, the mobile phone 10 displays the interface of the gallery application, and the mobile phone 70 also displays an interface of the gallery application that is the same as that displayed by the mobile phone 10. It should be noted that the mobile phone 70 displays the interface of the gallery application on the mobile phone 10. In other words, a user of the mobile phone 10 may share a photo or a video in the gallery application on the mobile phone 10 with a user of the mobile phone 70. In an example, the mobile phone 70 is configured to display only an interface displayed by the mobile phone 10. In other words, the user may perform an operation on the mobile phone 10. When an interface of the mobile phone 10 changes, an interface of the mobile phone 70 also changes accordingly. However, the user cannot perform an operation on the mobile phone 70. In another example, the user may also perform an operation on an interface displayed by the mobile phone 70. The mobile phone 70 sends operation information of the user to the mobile phone 10, and the mobile phone 10 displays a corresponding interface based on the operation information of the user. In addition, the interface displayed by the mobile phone 70 changes with the interface of the mobile phone 10. Certainly, the user may alternatively perform an operation on the mobile phone 10.

For another example, different users may perform ordering at the same time, and may trigger collaborative display functions of respective terminals. As shown in FIG. 6b-2A and FIG. 6b-2B, the mobile phone 10 starts an ordering application. When the mobile phone 10 and the mobile phone 70 are triggered to perform collaborative display, the ordering application on the mobile phone 10 launches an ordering application on the mobile phone 70. It may be understood that an ordered dish on the mobile phone 10 is associated with an ordered dish displayed by the mobile phone 70. For example, the mobile phone 10 displays an ordering interface 2701. When the user selects a dish 1 by using the mobile phone 10, a quantity of ordered dishes on the mobile phone 10 is increased by 1. Correspondingly, a quantity of ordered dishes displayed on the mobile phone 70 is also increased by 1, that is, the mobile phone 70 displays an interface 2702. Correspondingly, when the user selects a dish 2 by using the mobile phone 70, the quantity of ordered dishes displayed on the mobile phone 70 is increased by 1 again, that is, the mobile phone 70 displays an interface 2704. Correspondingly, the quantity of ordered dishes displayed on the mobile phone 10 is also increased by 1, that is, the mobile phone 10 displays an interface 2703.

(2) Collaborative display terminals have screens with different sizes. For example, collaborative display terminals have different device types.

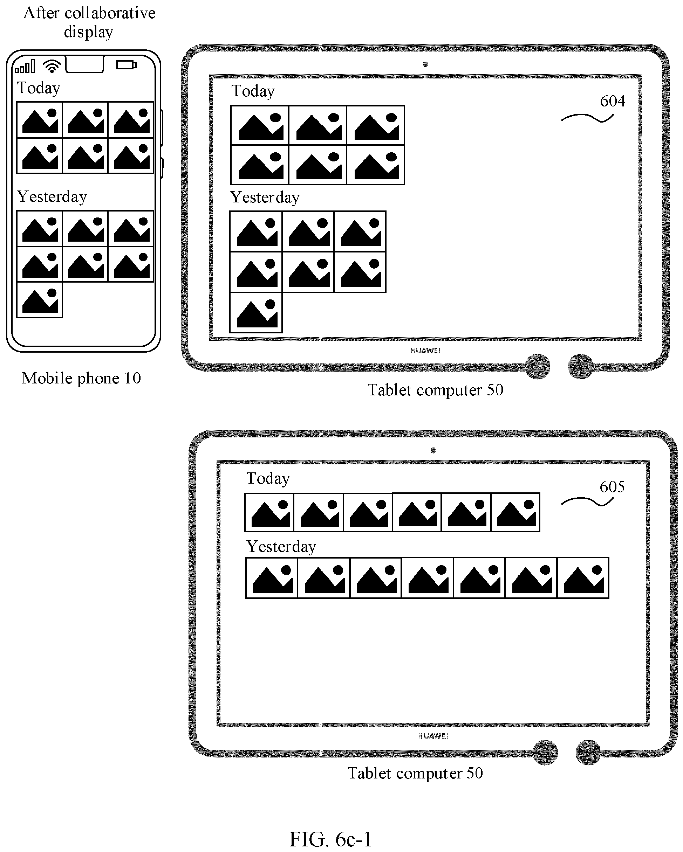

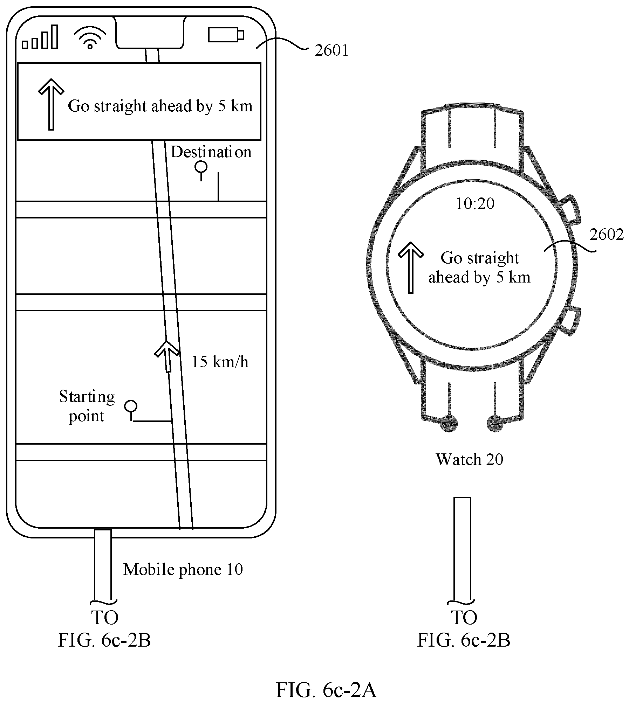

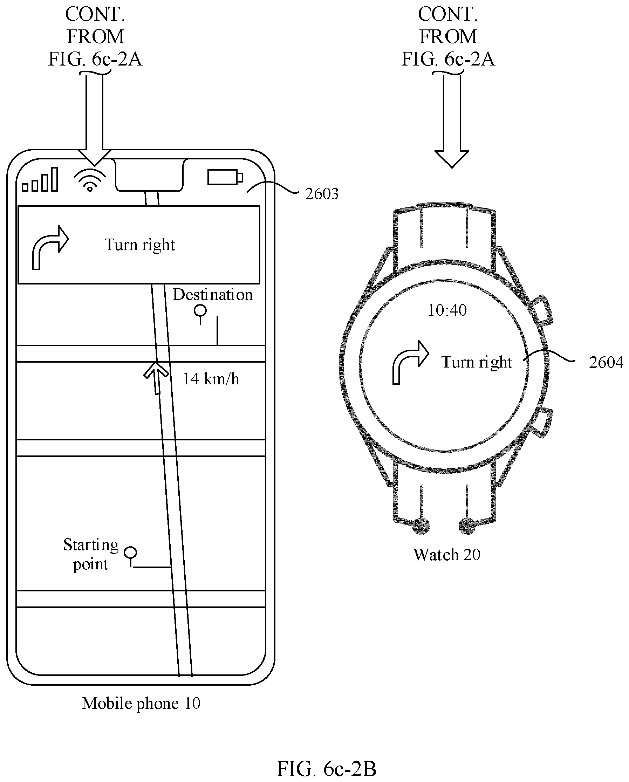

For example, as shown in FIG. 6c-1, before collaborative display, the mobile phone 10 (that is, the terminal A) displays an interface of a gallery application. (Not shown in the figure), the tablet computer 50 (that is, the associated device B) displays a home screen (not shown in the figure). After the mobile phone 10 and the tablet computer 50 perform collaborative display, the mobile phone 10 displays the interface of the gallery application, and the tablet computer 50 displays an interface 604. Content and a format of the interface 604 are the same as those of the interface of the gallery application displayed on the mobile phone 10. In some other examples, the tablet computer 50 may alternatively display an interface 605. Content of the interface 605 is the same as that of the interface of the gallery application displayed on the mobile phone 10, but typesetting of the interface 605 is different from typesetting on the mobile phone 10. In other words, the tablet computer 50 adjusts the interface of the gallery application based on a screen size of the tablet computer 50.

For another example, in a cycling or running scenario, when it is inconvenient for the user to frequently take out a mobile phone to view navigation information, collaborative display between the mobile phone and a watch may be triggered. In this way, the user may view the navigation information on the watch by raising the hand. As shown in FIG. 6c-2A and FIG. 6c-2B, the mobile phone 10 runs a map application, and displays a navigation interface 2601 that includes navigation information. When the mobile phone 10 and the watch 20 perform collaborative display, the mobile phone 10 launches a map application on the watch 20, so that the watch 20 displays navigation information 2602 that includes navigation information. It may be understood that the navigation information displayed on the mobile phone 10 is associated with the navigation information displayed on the watch 20. For example, when the mobile phone 10 detects that a current location of the user changes, the mobile phone 10 automatically updates the navigation information, that is, the mobile phone 10 displays a navigation interface 2603. Correspondingly, the watch 20 also automatically updates the navigation information based on the current location of the user, and the watch 20 displays a navigation interface 2604.

### Mode 3: collaborative mode

Before collaborative display, the terminal A displays an interface A, where the interface A includes at least a first part and a second part. For example, the first part is interaction-type content, and the second part is display-type content. Certainly, in some other examples, the first part may alternatively be display-type content, and the second part is interaction-type content. The interaction-type content includes but is not limited to: a button, a menu, a catalog, a tool bar, a remark, a keyboard, a tag, a tab (Tab), and the like. The display-type content includes but is not limited to: document content, web page content, video content, main body content of an application, and the like. When the terminal A and the associated device B perform collaborative display, a terminal on which interaction-type content is to be displayed and a terminal on which display-type content is to be displayed are determined based on device types, device features (for example, screen sizes), relative locations, device statuses (for example, landscape/portrait modes), and the like of collaborative display terminals (for example, the terminal A and the associated device B).
(1) Display interaction-type content or display-type content based on a device type or a device feature of a collaborative display terminal.

For example, display-type content is displayed on a terminal with a large screen, and interaction-type content is displayed on a terminal with a small screen, a terminal carried by a user, or a terminal that is easy to interact. In this way, displaying the display-type content on the large screen improves visual experience of the user, and displaying the interaction-type content on the terminal carried by the user improves operation experience of the user.

For example, as shown in FIG. 6d-1 and FIG. 6d-2, before collaborative display, the tablet computer 50 (that is, the terminal A) displays a document presentation interface 633. The interface 633 includes a document editing page 634, a catalog 635, and a menu 636. The mobile phone 10 displays a home screen (not shown in the figure). After the tablet computer 50 and the mobile phone 10 perform collaborative display, because the tablet computer 50 has a larger screen, an interface 637 (corresponding to the document editing page 634) of document content is displayed on the tablet computer 50. The mobile phone 10 displays an interface 638, where the interface 638 includes the catalog 635 and the menu 636. The interface 638 re-arranges the catalog 635 and the menu 636 based on a screen feature of the mobile phone 10. Optionally, the display interface 638 of the mobile phone 10 includes only the catalog 635 or the menu 636, and the other one is still displayed on the tablet computer 50.

For another example, as shown in FIG. 6e-1 and FIG. 6e-2, before collaborative display, the tablet computer 50 (that is, the terminal A) displays a document presentation interface 633. The interface 633 includes a document editing page 634, a catalog 635, and a menu 636. The watch 10 displays a home screen (not shown in the figure). After the tablet computer 50 and the watch 20 (that is, the associated device B) perform collaborative display, because a screen of the watch 20 is small, some interaction-type content may be displayed. In addition to displaying display-type content, the tablet computer 50 further needs to display some interaction-type content. Therefore, the tablet computer 50 displays an interface 639, and the interface 639 includes the document editing page 634 and the catalog 635. The watch 20 displays an interface 640, and the interface 640 includes content of the menu 636.

(2) Display different content based on different relative locations of collaborative display terminals.

For example, content displayed on the associated device B when the user holds the associated device B approaching the terminal A from the right of the terminal A is different from content displayed on the associated device B when the user holds the associated device B approaching the terminal A from the left of the terminal A, or content displayed on the associated device B is different from that displayed on the terminal A. Therefore, the user may control display content of the terminal A and the associated device B by controlling a relative location between the associated device B and the terminal A. This extends a collaboration scenario of the terminal A and the associated device B, and a collaboration manner is more flexible.

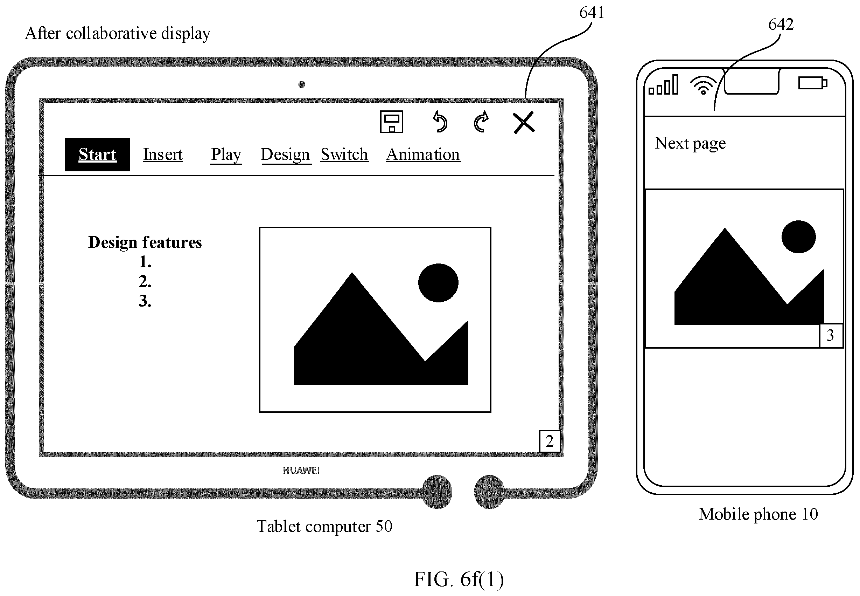

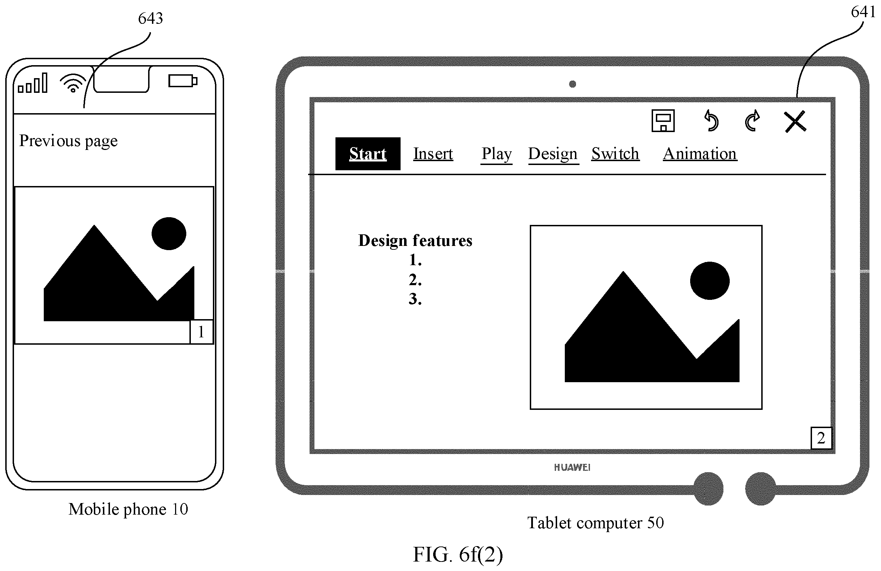

For example, as shown in FIG. 6f(1), when the mobile phone 10 (that is, the associated device B) approaches from the right of the tablet computer 50 (that is, the terminal A), the tablet computer 50 displays an interface 641, including a currently presented document page and a menu bar; and the mobile phone 10 displays an interface 642, where the interface 642 includes a next page of the currently presented document.

For another example, as shown in FIG. 6f(2), when the mobile phone 10 (that is, the associated device B) approaches from the left of the tablet computer 50 (that is, the terminal A), the tablet computer 50 displays an interface 641, including a currently presented document page and a menu bar; and the mobile phone 10 displays an interface 643, where the interface 643 includes a previous page of the currently presented document.

(3) Display different content based on a device status (for example, a landscape/portrait mode) of a collaborative display terminal.

For example, the user may control a device status, for example, a landscape/portrait mode, of the associated device B (and/or the terminal A), so that the associated device B and the terminal A display different content. This extends a collaboration scenario. Optionally, a layout of a page displayed on the associated device B may be adaptively adjusted based on a screen size or a screen status of the associated device according to a preset algorithm or rule.

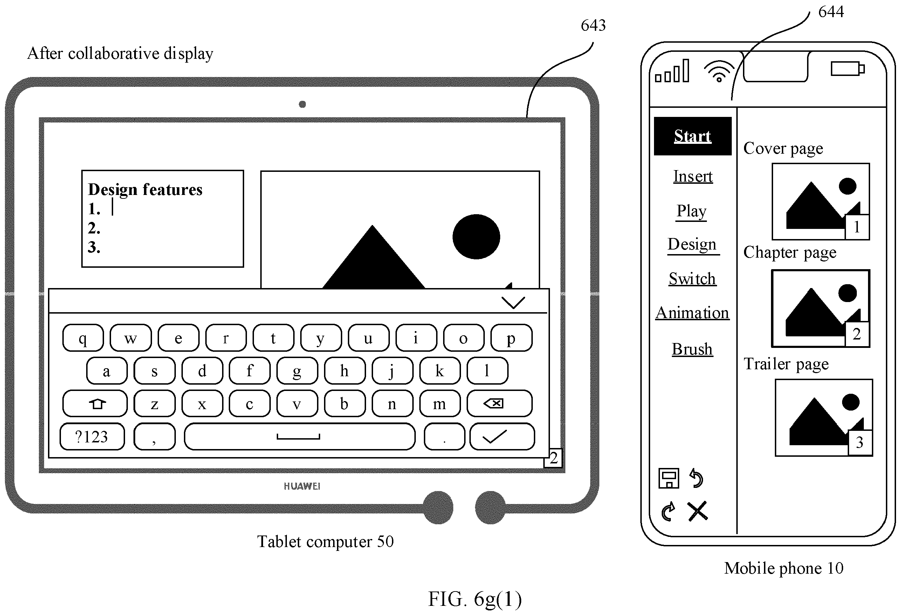

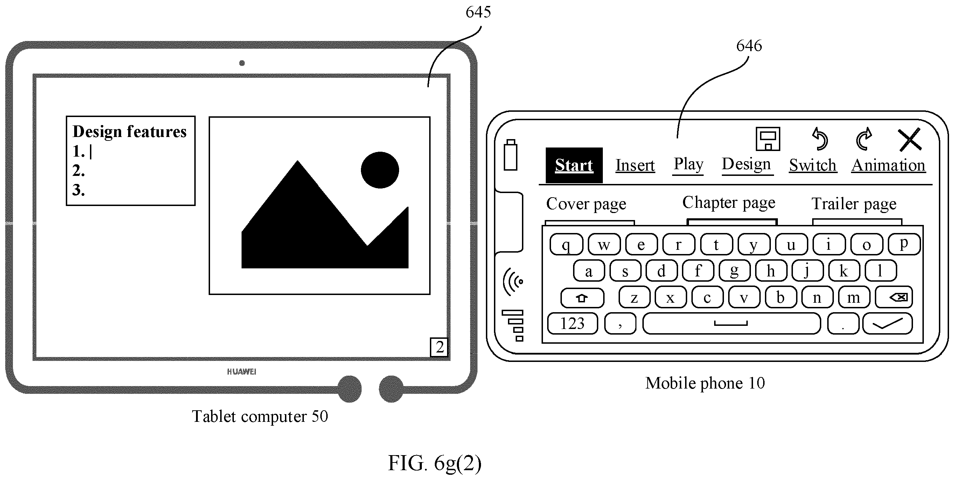

For example, as shown in FIG. 6g(1), when the mobile phone 10 (that is, the associated device B) is in a portrait mode, and the mobile phone 10 and the tablet computer 50 (that is, the terminal A) perform collaborative display, the tablet computer 50 displays an interface 643, including a currently edited document page and a keyboard. The mobile phone 10 displays an interface 644, including a menu bar and a catalog.

For another example, as shown in FIG. 6g(2), when the mobile phone 10 (that is, the associated device B) is in a landscape mode, and the mobile phone 10 and the tablet computer 50 (that is, the terminal A) perform collaborative display, the tablet computer 50 displays an interface 645, including a currently edited document page. The mobile phone 10 displays an interface 646, including a menu bar, a catalog, and a keyboard.

It should be further noted that, in some other embodiments, according to specific collaboration features of the interaction-type content and the display-type content in the terminal A and the associated device B, collaborative modes further specifically include an adaptive collaborative mode, a loose mode, and a synchronous collaborative mode.

The adaptive collaborative mode means that when both the terminal A and the associated device B are available, the terminal A and the associated device B collaborate to complete a related task. When one terminal (for example, the associated device B) is unavailable, the other terminal (for example, the terminal A) restores an interface displayed before collaborative display, so that a related task continues to be completed on the terminal (for example, the terminal A). Alternatively, an interface on the unavailable terminal (the associated device B) is displayed on the other end (for example, the terminal A), and a related task may continue to be completed on the terminal (for example, the terminal A).

For example, as shown in FIG. 6h-1 to FIG. 6h-3, when the tablet computer 50 (that is, the terminal A) and the mobile phone 10 (that is, the associated device B) perform collaborative display, the tablet computer 50 displays an interface 648. The interface 648 includes main content of an application, for example, includes a document editing interface and a menu bar. The mobile phone 10 displays an interface 647, which is a material browsing interface. When both the mobile phone 10 and the tablet computer 50 are available, the two terminals collaborate with each other to complete a document editing task. If the mobile phone 10 is unavailable, for example, when the mobile phone 10 is screen-locked (that is, a lock-screen interface 647 is displayed), or is screen-off, or is automatically powered off, the tablet computer 50 independently displays all content of a current application. For example, the tablet computer 60 displays an interface 650, where the interface 650 includes a document editing interface, a menu bar, and a material browsing interface. It may be understood that, if the tablet computer 50 does not perform collaborative display with the mobile phone 10, when the tablet computer 50 displays the application, an interface 650 is displayed. Alternatively, after determining that the mobile phone 10 is unavailable, the tablet computer 50 displays, above a current interface in a form of, for example, a floating window, content originally displayed on the mobile phone 10, that is, the tablet computer 50 displays an interface 651, where the interface 651 is an additional floating window 652 displayed above an originally displayed interface 648, and the floating window 652 is an interface displayed before the mobile phone 10 is unavailable.

The loose mode means that when both the terminal A and the associated device B are available, the terminal A and the associated device B collaborate to complete a related task. In addition, collaborative interfaces on the terminal A and the associated device B may be separately used. That is, when one terminal (for example, the associated device B) is unavailable (for example, is screen-locked or screen-off), the other terminal (for example, the terminal A) may keep running independently.

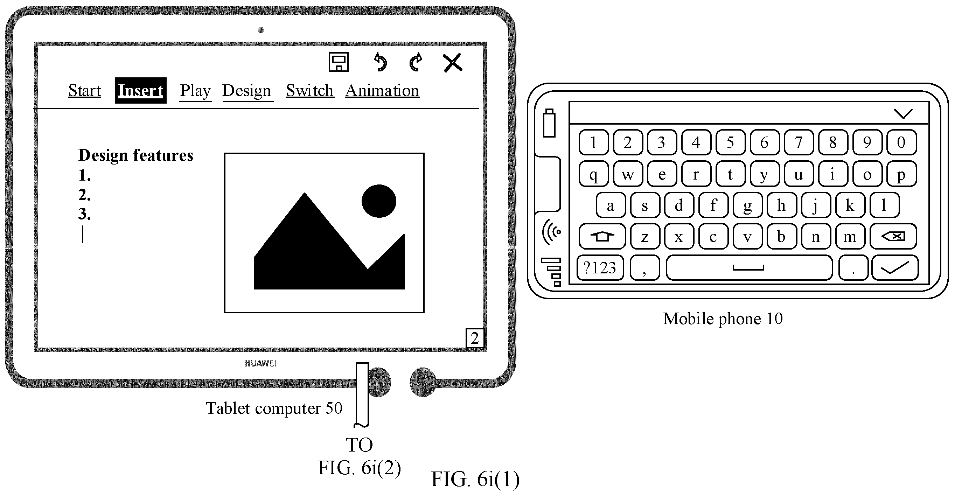

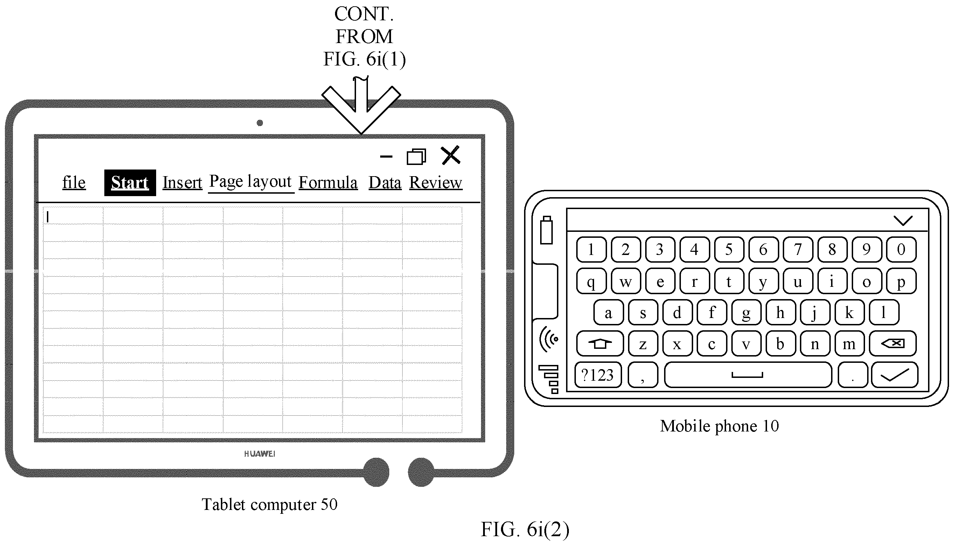

For example, as shown in FIG. 6i(1), when the tablet computer 50 (that is, the terminal A) and the mobile phone 10 (that is, the associated device B) perform collaborative display, the tablet computer 50 runs a document application, and the document application is in an input state, the mobile phone 10 may be woken up to display a keyboard by activating an input method. In this case, the user may enter a text or the like in the document application of the tablet computer 50 by using the keyboard of the mobile phone 10. As shown in FIG. 6i(2), when the document application on the tablet computer 50 is switched to another application, for example, switched to a table application, the mobile phone 10 may display the keyboard. In other words, after the application on the tablet computer 50 is switched, the keyboard displayed on the mobile phone 10 is not affected. When the table application on the tablet computer 50 is in an input state, the user may still use the keyboard on the mobile phone 10 to enter a text or the like in the table application on the tablet computer 50.

For another example, a game application runs on the tablet computer 50, and a game interface (including a video image and a control interface) is displayed. When the tablet computer 50 and the mobile phone 10 perform collaborative display, the tablet computer 50 may display the video image in the game application, and the mobile phone 10 displays the control interface in the game. In other words, the mobile phone 10 may be used as a handle of the game. Because the mobile phone 10 is portable and easy to operate, game experience of the user is improved.

The synchronous mode means that when both the terminal A and the associated device B are available, the terminal A and the associated device B collaborate to complete a related task. When one terminal is unavailable, an interface in which the other terminal collaborates with the terminal is also unavailable. In this case, the other terminal waits the terminal to restore the collaborative interface, or the other terminal actively activates an interface of another task, to start to perform the another task.

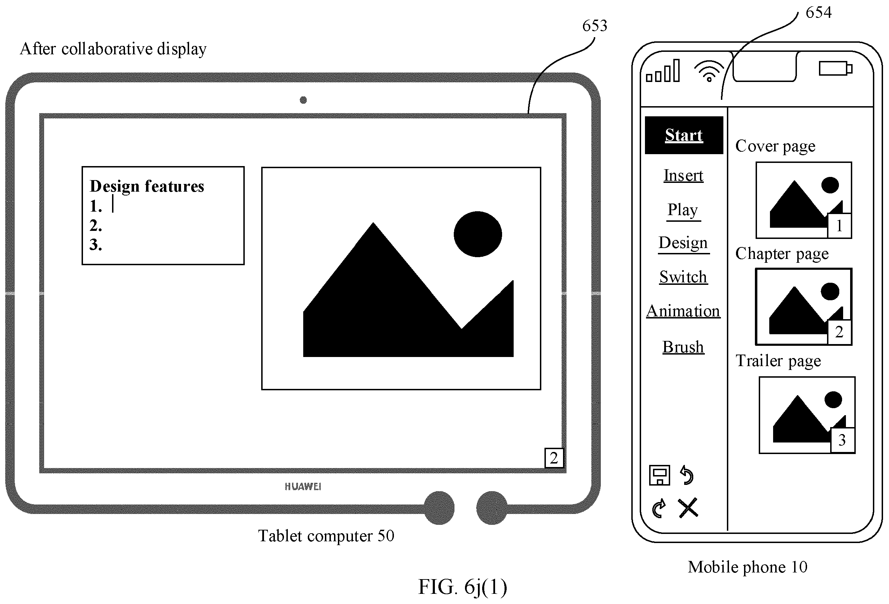

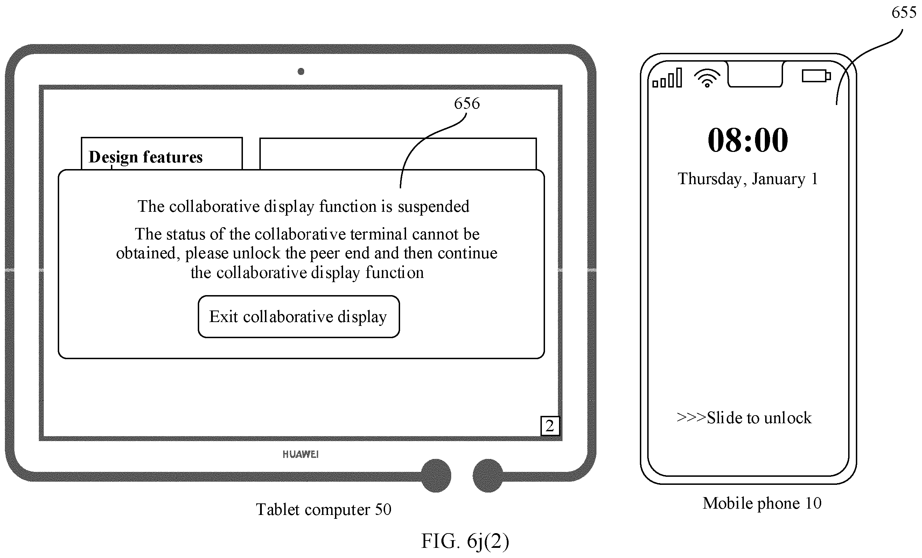

For example, as shown in FIG. 6j(1), when the tablet computer 50 (that is, the terminal A) and the mobile phone 10 (that is, the associated device B) perform collaborative display, the tablet computer 50 runs a document application, the tablet computer 50 displays an interface 653, and the interface 653 includes a document editing page. The mobile phone 10 displays an interface 654, where the interface 654 includes a menu bar and a catalog. As shown in FIG. 6j(2), when the mobile phone 10 is unavailable, for example, is screen-locked (for example, displays an interface 655), screen-off, or powered-off, the interface 653 originally displayed by the tablet computer 50 is unavailable, and the tablet computer 50 displays a prompt interface 656, to indicate that a collaborative display function is unavailable currently, and prompt the user to unlock the mobile phone 10 for collaborative display. Optionally, the prompt interface 656 may further include a control for exiting the collaborative display function, used to indicate the tablet computer 50 to quickly exit the collaborative display function. Alternatively, the prompt interface 656 may further include a switching control (not shown in the figure), used to indicate the tablet computer to quickly switch to another application to perform another task.

### Mode 4: separated mode

Before collaborative display, the terminal A displays an interface A. The interface A includes at least a first part and a second part. The first part and the second part are, for example, different function modules, different display content, or different pages. For example, the first part is a video play module, and the second part is an episode selection control group. When the terminal A and the associated device B perform collaborative display, the terminal A and the associated device B jointly display content of the interface A that is previously displayed by the terminal A. For example, the terminal A displays the first part, and the associated device B displays the second part. In an optional implementation, the terminal A displays the first part, and does not display the second part. In another optional implementation, the associated device B displays the second part, and does not display the first part.
(1) Separated display is performed based on different function modules of the interface A.

For example, as shown in FIG. 6k-1 and FIG. 6k-2, before collaborative display, the mobile phone 10 (namely, the terminal A) displays a video details interface 606. The video details interface 606 includes at least a first part and a second part. For example, the first part is a video play module 607, and the second part is a details content module 608. The video play module 607 includes, for example, a video play control, a play control group, and a progress control. The details content module 608 includes, for example, a video name control, an episode selection control group, and a comment control group. After the mobile phone 10 and the tablet computer 50 (that is, the associated device B) perform collaborative display, the mobile phone 10 displays an interface 609, and the interface 609 corresponds to content of the details content module 608. The tablet computer 50 displays an interface 610, and the interface 610 corresponds to content of the video play module 607. It may be noted that the tablet computer 50 may play a video in full screen, to improve viewing experience of the user. In addition, the user may control played video content on the mobile phone 10, for example, switch an episode of the played video. The user may further perform a slide-up operation in the interface 609, to view more comments and the like. When the user slides up and down in the interface 609, video play on the tablet computer 50 is not affected. This greatly improves video watching experience of the user.

It should be noted that, in some other embodiments, when locations of the tablet computer 50 relative to the mobile phone 10 are different, interfaces displayed by the mobile phone 10 and the tablet computer 50 may be different. For example, when the tablet computer 50 is located on the right of the mobile phone 10, and the mobile phone 10 and the tablet computer 50 perform collaborative display, as shown in FIG. 6k-1 and FIG. 6k-2, the mobile phone 10 displays the interface 609 (that is, content corresponding to the video play module 607), and the tablet computer 50 displays the interface 610 (that is, content corresponding to the details content module 608). When the tablet computer 50 is located on the left of the mobile phone 10, the mobile phone 10 displays content corresponding to the details content module 608, and the tablet computer 50 displays content corresponding to the video play module 607.

In some other embodiments, when device types of associated devices found by the mobile phone 10 are different, interfaces displayed by the mobile phone 10 and the associated devices are different. For example, when the mobile phone 10 finds the associated device 50, and the mobile phone 10 and the tablet computer 50 perform collaborative display, as shown in FIG. 6k-1 and FIG. 6k-2, the mobile phone 10 displays the interface 609 (that is, content corresponding to the details content module 608), and the tablet computer 50 displays the interface 610 (that is, content corresponding to the video play module 607). When the mobile phone 10 finds the watch 20, and the mobile phone 10 and the watch 20 perform collaborative display, the mobile phone 10 displays content corresponding to the video play module 607, and the watch 20 displays content corresponding to the details content module 608.

(2) Separated display is performed based on a column structure of the interface A.

For example, as shown in FIG. 6l-1 and FIG. 6l-2, before collaborative display, the tablet computer 50 (that is, the terminal A) displays a memo interface 611. The interface 611 includes at least a first part and a second part. For example, the first part is a page 612, and the second part is a page 613. After the tablet computer 50 and the mobile phone 10 (that is, the associated device B) perform collaborative display, the tablet computer 50 displays an interface 614, and the interface 614 corresponds to content of the page 613. The mobile phone 10 displays an interface 615, and the page 615 corresponds to content of the page 612.

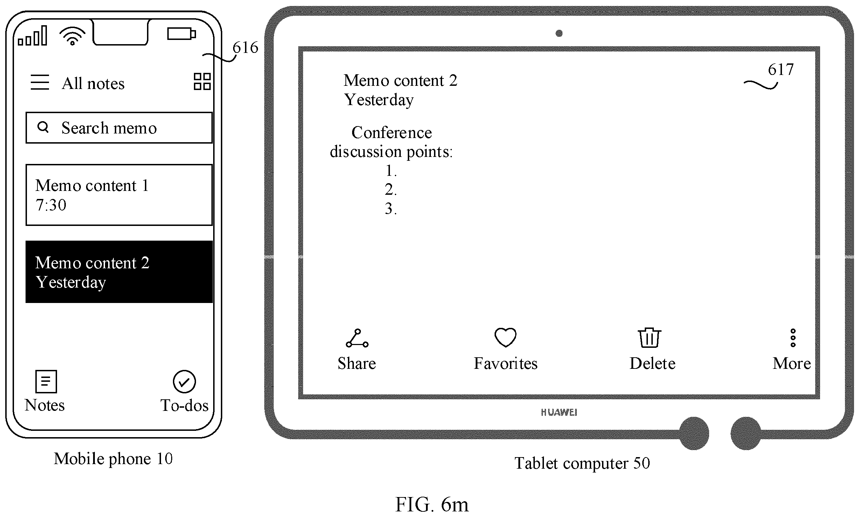

Further, as shown in FIG. 6m, in response to an operation that the user selects "memo content 2" in the interface 615, the mobile phone 10 displays an interface 616, where the "memo content 2" is selected. Correspondingly, the tablet computer 50 displays an interface 617, that is, specific content of the "memo content 2".

It should be noted that, in some other embodiments, when locations of the mobile phone 10 relative to the tablet computer 50 are different, interfaces displayed by the mobile phone 10 and the tablet computer 50 may be different. For details, refer to the foregoing related descriptions. Details are not described herein again.

Separate display is performed based on different pages of the interface A.

In some embodiments, the terminal A supports a parallel view function, or an application (for example, an application C) in the terminal A supports a parallel view function. The parallel view function means that two or more pages of an application may be simultaneously displayed on a screen of the terminal A. The two or more pages may be pages at different levels. It may be understood that when an interface of the application C is displayed on a terminal that does not support the parallel view function, the screen of the terminal can display only one page of the application C at a time. Alternatively, when the application C does not support the parallel view function, and the terminal A displays an interface of the application C, the screen can display only one page of the application C at a time.

For example, as shown in FIG. 6n-1 and FIG. 6n-2, the tablet computer 50 (that is, the terminal A) displays an interface 618 of a news application (that is, the application C). The interface 618 includes at least a first part and a second part. For example, the first part is a page 619 of the news application, and the second part is a next-level page 620 of the page 619 of the news application. When the tablet computer 50 and the mobile phone 10 (that is, the associated device B) perform collaborative display, the tablet computer 50 displays an interface 621, and the interface 621 corresponds to content of the page 619. The mobile phone 10 displays an interface 622, and the page 622 corresponds to content of the page 620.

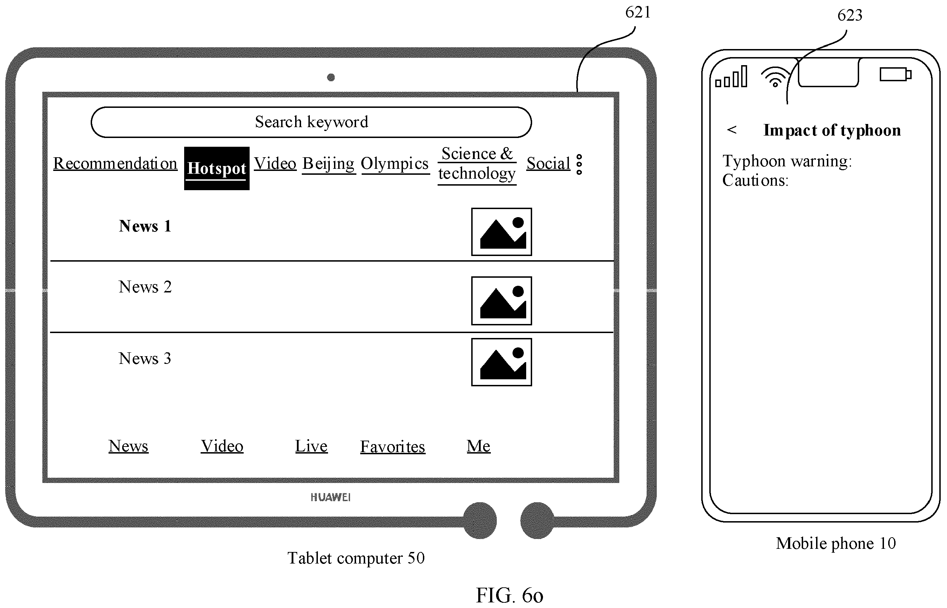

Further, when the mobile phone 10 detects an operation that the user taps an "Impact of typhoon" link in the interface 622, the mobile phone 10 displays an interface 623 shown in FIG. 6o. It may be noted that, in this case, the interface of the tablet computer 50 is not affected by the operation performed by the user in the interface 622, and the interface 621 continues to be displayed.

When the tablet computer 50 detects that the user taps another control in the interface 621, for example, a control corresponding to "news 2", the mobile phone 10 jumps to a page corresponding to the "news 2".

It should be noted that, in some other embodiments, when locations of the mobile phone 10 relative to the tablet computer 50 are different, interfaces displayed by the mobile phone 10 and the tablet computer 50 may be different. For details, refer to the foregoing related descriptions. Details are not described herein again.

For another example, as shown in FIG. 6p-1 to FIG. 6p-4, before collaborative display, the tablet computer 50 (that is, the terminal A) displays an interface 627 of a shopping application (that is, the application C). The interface 627 includes at least a first part and a second part. For example, the first part is a page 628 of the shopping application, and the second part is a next-level page 629 of the page 628 of the shopping application. The mobile phone 70 displays a home screen 630. When the tablet computer 50 and the mobile phone 70 (that is, the associated device B) perform collaborative display, the tablet computer 50 displays an interface 631, and the interface 631 corresponds to content of the page 628. The mobile phone 10 displays an interface 632, and the page 632 corresponds to content of the page 627.

It should be noted that, in some other embodiments, when locations of the mobile phone 70 relative to the tablet computer 50 are different, interfaces displayed by the mobile phone 70 and the tablet computer 50 may be different. For details, refer to the foregoing related descriptions. Details are not described herein again.

### Mode 5: value-added mode

Before collaborative display, the terminal A displays an interface A. When the terminal A and the associated device B perform collaborative display, the terminal A still displays the interface A, and the associated device B displays other content related to the interface A. That is, the associated device B is equivalent to supplementary display of the interface A displayed on the terminal A.

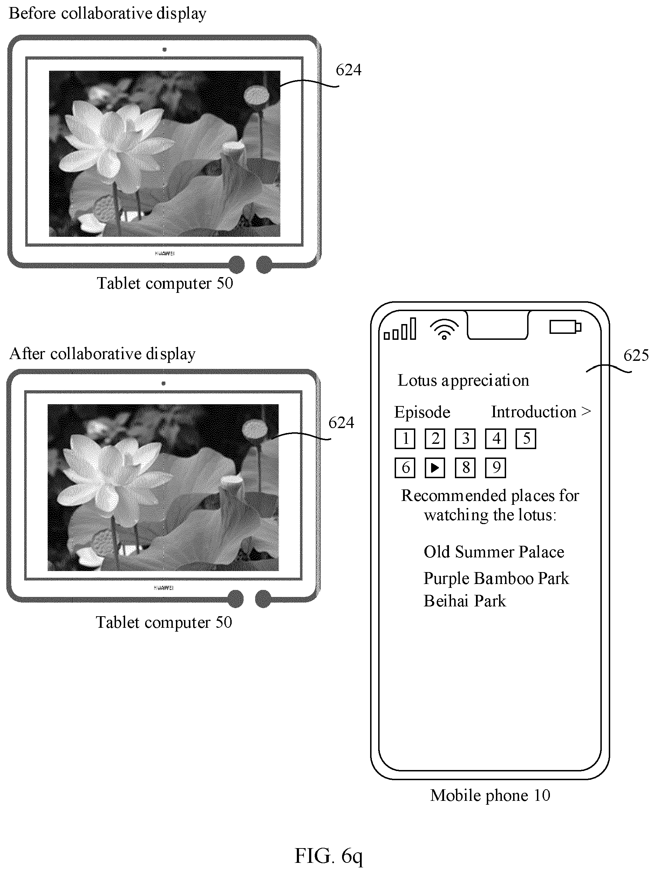

For example, as shown in FIG. 6q, the tablet computer 50 (that is, the terminal A) displays a video play interface 624 (that is, the interface A). When the tablet computer 50 and the mobile phone 10 (that is, the associated device B) perform collaborative display, the tablet computer 50 continues to display the video play interface 624. The mobile phone 10 displays an interface 625, where the interface 625 is content related to content played in the video play interface 624. For example, the tablet computer 50 plays a lotus video. The mobile phone 10 displays a name of the video, an episode, and related recommendation information (for example, a recommendation of a lotus watching place).

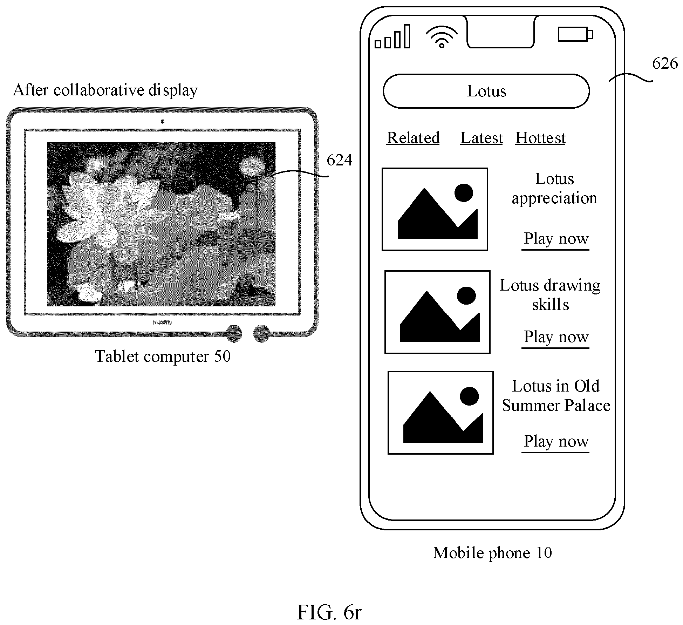

In some other examples, as shown in FIG. 6r, when the tablet computer 50 and the mobile phone 10 perform collaborative display, the tablet computer 50 continues to display the video play interface 624. The mobile phone 10 displays an interface 626, where the page 626 is an upper-level page of the video play interface 624. In conclusion, after collaborative display, specific content that is related to the interface A and that is displayed by the associated device B is not limited in this embodiment of this application.

It should be noted that, in some other embodiments, when locations of the mobile phone 10 relative to the tablet computer 50 are different, interfaces displayed by the mobile phone 10 and the tablet computer 50 may be different. For example, when the mobile phone 10 is located on the right of the tablet computer 50, and the mobile phone 10 and the tablet computer 50 perform collaborative display, as shown in FIG. 6q, the tablet computer 50 displays the video play interface 624. The mobile phone 10 displays an interface 625, including a name of the video, an episode, and related recommendation information (for example, a recommendation of a lotus watching place). When the mobile phone 10 is located on the left of the tablet computer 50, and the mobile phone 10 and the tablet computer 50 perform collaborative display, as shown in FIG. 6r, the tablet computer 50 displays the video play interface 624. The mobile phone 10 displays an interface 626, where the page 626 is an upper-level page of the video play interface 624.

For another example, if the user plays a game on the mobile phone 10, the mobile phone 10 displays a game interface. When the mobile phone 10 discovers the mobile phone 70 and determines that the mobile phone 70 meets the foregoing preset condition, the mobile phone 10 performs collaborative display with the mobile phone 70, the mobile phone 10 continues to display the game interface, and the mobile phone 70 displays other content related to the game, for example, peripherals of the game, a strategy, a friend chat, a map, equipment details, a package, and a task attribute.

### Mode 6: extended mode

Scenario 1: An interface A displayed by the terminal A includes an interface of an application A and a floating window or a floating bubble.

After it is determined that the terminal A and the associated device B perform collaborative display, the associated device B may display a blank page. Then, the associated device B may display, on the associated device B according to an indication of the user, an application interface (for example, an interface of an application B) corresponding to the floating window or the floating bubble on the terminal A, or the interface of the application A.

For example, as shown in FIG. 7a, the tablet computer 50 (that is, the terminal A) displays an interface 701. The interface 701 includes at least a first part and a second part. For example, the first part is a video play interface 703 (that is, the interface of the application A), and the second part is a floating window 702 (which is corresponding to the application B, for example, is a chat interface). Alternatively, the interface 701 displayed by the tablet computer 50 includes a video play interface 703 and a floating bubble 705 (which is corresponding to the application B, for example, corresponding to a chat interface). The mobile phone 10 (that is, the associated device B) displays a home screen 704.

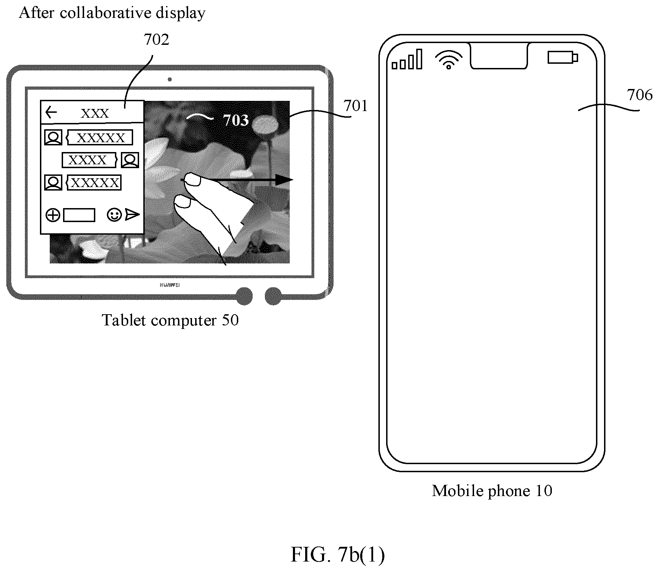

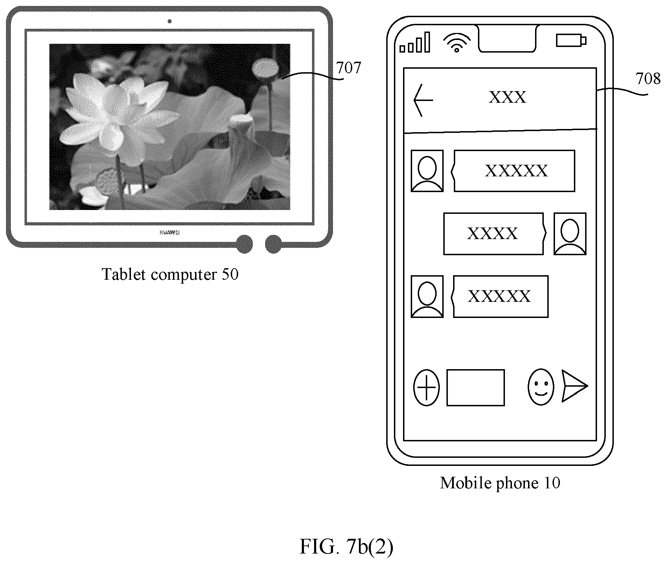

When the tablet computer 50 and the mobile phone 10 perform collaborative display, as shown in FIG. 7b(1), the mobile phone 10 first displays a blank interface 706. Then, when detecting that the user performs a preset operation 4 on the tablet computer 50, the tablet computer 50 indicates the mobile phone 10 to display corresponding content in the interface 701. In an example, it is detected that the user performs an operation of side sliding with two fingers or side sliding with three fingers in the interface 701 (that is, the preset operation 4), and the tablet computer 50 indicates the mobile phone 10 to display an interface corresponding to the floating window 702 (or the floating bubble 703), that is, a chat interface. That is, as shown in FIG. 7b(2), the mobile phone 10 displays an interface 708, which is a chat interface. The tablet computer 50 displays an interface 707, where the interface 707 does not include the floating window 702 (or the floating bubble 703), and includes only the video play interface 703.

Certainly, the user may alternatively perform a preset operation 5 (for example, side sliding with two fingers or side sliding with three fingers) on the mobile phone 10, to indicate the mobile phone 10 to switch the chat interface back to the tablet computer 50. That is, the tablet computer 50 displays the chat interface. The preset operation 4 and the preset operation 5 may be the same, or may be different. For example, the preset operation 4 is an operation of sliding right with two fingers or three fingers, and the preset operation 5 is an operation of sliding left with two fingers or three fingers.

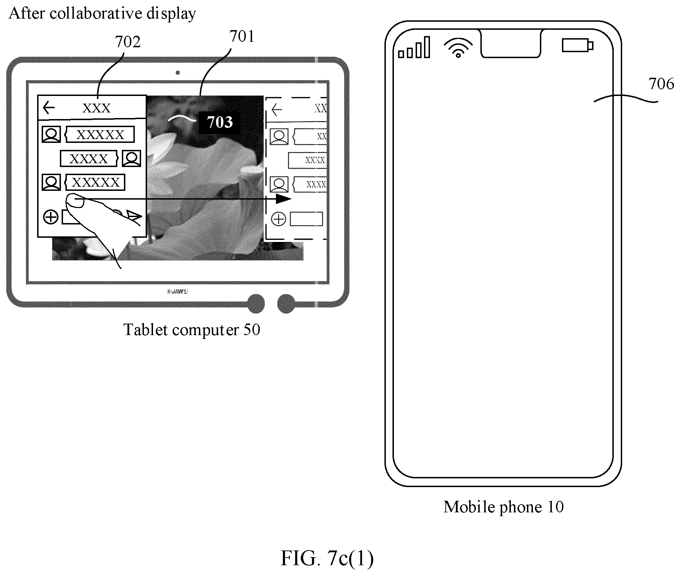

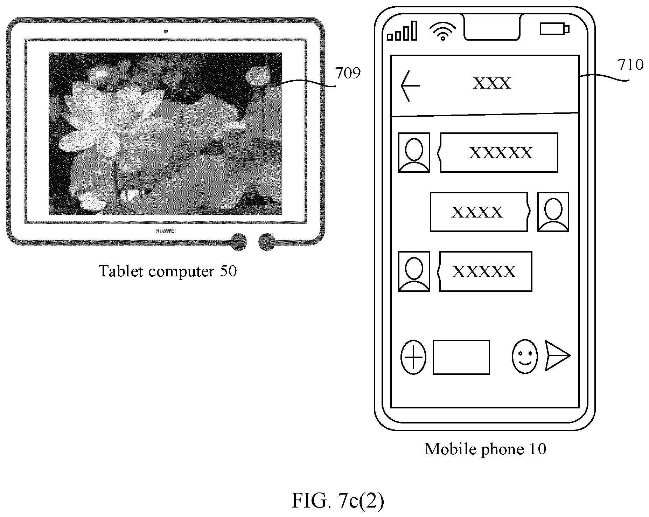

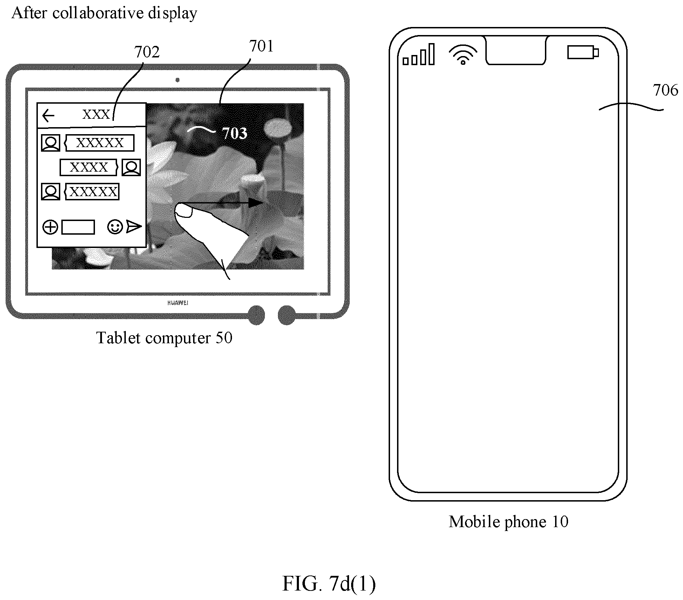

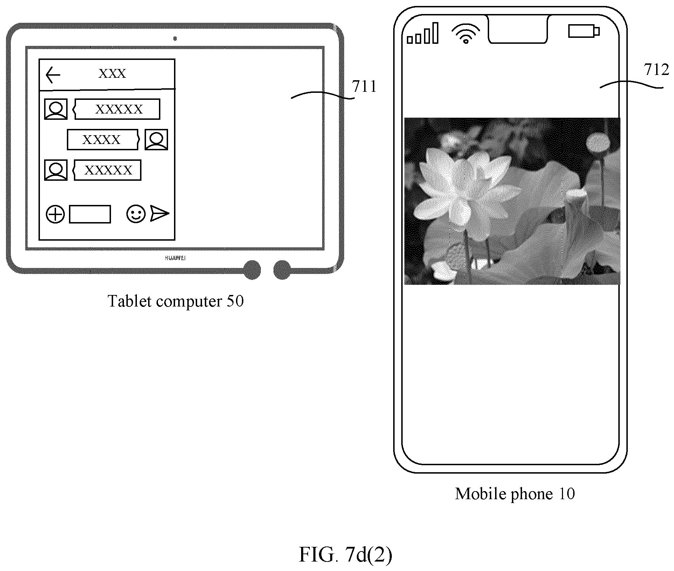

In some other examples, when the user drags different subjects in the interface 701, the tablet computer 50 indicates the mobile phone 10 to display different content. For example, as shown in FIG. 7c(1), when it is detected that the user performs the preset operation 4 for the floating window 702 (or the floating bubble), the tablet computer 50 indicates the mobile phone 10 to display an interface corresponding to the floating window 702 (or the floating bubble 703), that is, a chat interface. That is, as shown in FIG. 7c(2), the mobile phone 10 displays an interface 710, which is a chat interface. The tablet computer 50 displays an interface 709, where the interface 709 does not include the floating window 702 (or the floating bubble 703), and includes only the video play interface 703. For another example, as shown in FIG. 7d(1), when it is detected that the user performs the preset operation 4 for the video play interface 703, the tablet computer 50 indicates the mobile phone 10 to display the video play interface 703. That is, as shown in FIG. 7d(2), the mobile phone 10 displays an interface 712, including the video play interface 703. The tablet computer 50 displays an interface 711. The interface 711 includes an interface of the floating window 702 (or an interface corresponding to the floating bubble 703), that is, a chat interface.

In some other embodiments, after determining that the terminal A and the associated device B perform collaborative display, the terminal A may directly indicate the associated device B to display an interface of an application corresponding to the floating window or the floating bubble on the terminal A, and the terminal A displays the interface of the application displayed in full screen.

Scenario 2: An interface A displayed by the terminal A includes an interface of an application A and an interface of an application C.

For example, the terminal Ais in a split-screen state, and displays two or more windows, where one window is used to display the interface of the application A, and another window is used to display the interface of the application C.

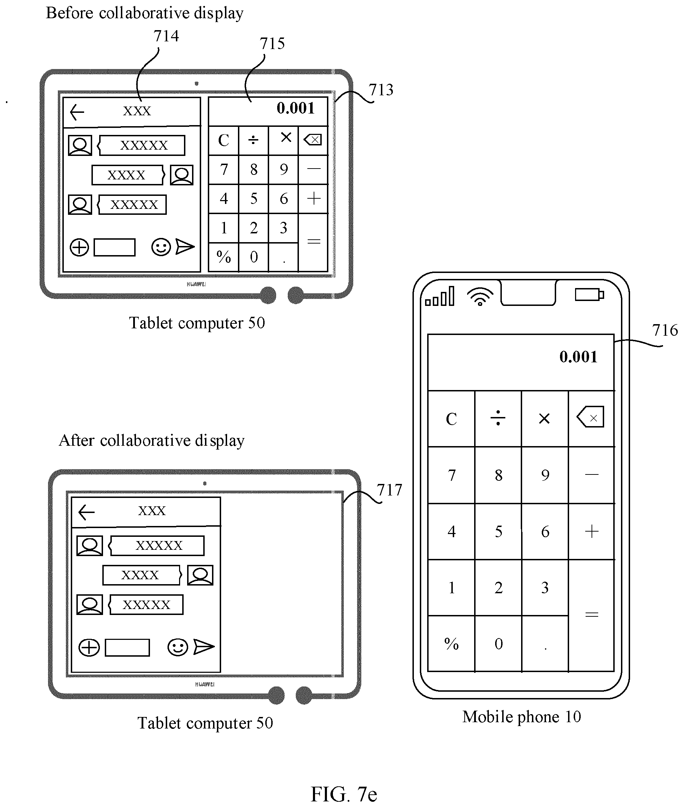

As shown in FIG. 7e, the tablet computer 50 (that is, the terminal A) displays an interface 713. The interface 713 includes at least a first part and a second part. For example, the first part is a chat interface 714 of a chat application, and the second part is a computing interface 715 of a computer application. When the tablet computer 50 and the mobile phone 10 (that is, the associated device B) perform collaborative display, the tablet computer 50 displays an interface 717. The interface 717 includes the chat interface 714, and does not include the computing interface 715. The mobile phone 10 displays an interface 716, including the computing interface 715. Optionally, in some other examples, the tablet computer 50 may display more chat content than the chat interface 714 when displaying the interface 717. For example, the interface 717 includes more chat records than the chat interface 714. Similarly, when the mobile phone 10 displays the interface 716, more content may be displayed than that of the computing interface 715. For example, the computing interface 715 is a basic operation interface (including only basic operations such as addition, subtraction, multiplication, and division). The interface 716 is a professional computing interface (further including operations such as a square number, a square root, accumulation, and a logarithm).

It should be noted that, in some other embodiments, when locations of the mobile phone 10 relative to the tablet computer 50 are different, interfaces displayed by the mobile phone 10 and the tablet computer 50 may be different. For details, refer to the foregoing related descriptions. Details are not described herein again.

Scenario 3: An interface A displayed on the terminal A is an interface of an application A, and the application A is an application that supports a plurality of instances.

Before collaborative display, the terminal A displays the interface A, which is the interface of the application A. In other words, the terminal A runs an instance of the application A. When the terminal A and the associated device B perform collaborative display, the terminal A still displays the interface A, corresponding to an instance of the application A originally run by the terminal A. The associated device B displays an interface of another instance of the application A.

For example, as shown in FIG. 7f-1 and FIG. 7f-2, before collaborative display, the mobile phone 10 (that is, the terminal A) displays an interface 718 of a memo application. The interface 718 is, for example, a content interface of a memo 1. When the mobile phone 10 and the mobile phone 70 (that is, the associated device B) perform collaborative display, the mobile phone 1 still displays the interface 718, which is the content interface of the memo 1. The mobile phone 70 displays an interface 719, which is also a content interface of the memo 1. It should be noted that the interface 718 displayed on the mobile phone 10 and the interface 719 displayed on the mobile phone 70 are respectively corresponding to different instances of the memo application. For example, the interface 718 displayed on the mobile phone 10 is corresponding to one instance of the memo application running on the mobile phone 10, and the interface 719 displayed on the mobile phone 70 is corresponding to another instance of the memo application running on the mobile phone 10 (or the mobile phone 70). In other words, when the user operates the interface 718 on the mobile phone 10, an interface change of the interface 719 on the mobile phone 70 is not caused. Similarly, when the user operates the interface 719 on the mobile phone 70, an interface change of the interface 718 on the mobile phone 10 is not caused.

When the mobile phone 70 detects that the user operates, in the interface 719, a control for returning to a home page of the memo application, the mobile phone 10 displays an interface 720 shown in FIG. 7f-1 and FIG. 7f-2, that is, the mobile phone 70 displays the home page of the memo application. In this case, the interface 718 on the mobile phone 10 does not change.

For another example, as shown in FIG. 7g-1 and FIG. 7g-2, before collaborative display, the mobile phone 10 (that is, the terminal A) displays an interface 721 of a memo application. The interface 721 is, for example, a content interface of a memo 1. When the mobile phone 10 and the mobile phone 70 (that is, the associated device B) perform collaborative display, the mobile phone 10 still displays the interface 721, which is the content interface of the memo 1. The mobile phone 70 displays an interface 722, where the interface 722 is an upper-level interface of the content interface of the memo 1, or a lower-level interface of the content interface of the memo 1, or the home page of the memo application. It should be noted that the interface 721 displayed on the mobile phone 10 and the interface 722 displayed on the mobile phone 70 are respectively corresponding to different instances of the memo application. In other words, when the user operates the interface 718 on the mobile phone 10, an interface change of the interface 719 on the mobile phone 70 is not caused. Similarly, when the user operates the interface 722 on the mobile phone 70, an interface change of the interface 721 on the mobile phone 10 is not caused. Similarly, when the user operates the interface 721 on the mobile phone 10, an interface change of the interface 722 on the mobile phone 70 is not caused.

Scenario 4: An interface A displayed by the terminal A is an interface of an application A. When the terminal A and the associated device B perform collaborative display, the terminal A displays a home screen, and the associated device B displays the interface of the application A. Alternatively, the terminal A continues to display the interface of the application A, and the associated device B displays a home screen of the terminal A.

For example, as shown in FIG. 7h-1 and FIG. 7h-2, before collaborative display, the mobile phone 10 (that is, the terminal A) displays an interface 723 of a memo application. The mobile phone 70 displays a home screen 724 of the mobile phone 70. When the mobile phone 10 and the mobile phone 70 (that is, the associated device B) perform collaborative display, the mobile phone 10 displays a home screen 726 of the mobile phone 10. The mobile phone 70 displays an interface 725, which is also an interface of the memo application running on the mobile phone 10.

For another example, as shown in FIG. 7i-1 and FIG. 7i-2, before collaborative display, the mobile phone 10 (that is, the terminal A) displays an interface 727 of a memo application. The mobile phone 70 displays a home screen 728 of the mobile phone 70. When the mobile phone 10 and the mobile phone 70 (that is, the associated device B) perform collaborative display, the mobile phone 10 continues to display the interface 727. The mobile phone 70 displays a home screen 729 of the mobile phone 10. It should be noted that, after the mobile phone 70 detects an operation that the user starts the application A (for example, a browser application) on the home screen 729, the mobile phone 70 sends operation information of the user to the mobile phone 10. The mobile phone 10 starts the application A in the background, and sends related interface information of the application A to the mobile phone 70. The mobile phone 70 displays the related interface information.

For another example, as shown in FIG. 7j-1 and FIG. 7j-2, before collaborative display, the mobile phone 10 (that is, the terminal A) displays an interface 730, where the interface 730 includes a home screen displayed in full screen and a floating window 731 located on the home screen. The mobile phone 70 displays a home screen 732 of the mobile phone 70. When the mobile phone 10 and the mobile phone 70 (that is, the associated device B) perform collaborative display, the mobile phone 10 displays, in full screen, an application interface 733 corresponding to the floating window 731. The mobile phone 70 displays a home screen 734 of the mobile phone 10. It should be noted that, after the mobile phone 70 detects an operation that the user starts the application A (for example, a browser application) on the home screen 734, the mobile phone 70 sends operation information of the user to the mobile phone 10. The mobile phone 10 starts the application A in the background, and sends related interface information of the application A to the mobile phone 70. The mobile phone 70 displays the related interface information.

Certainly, when the mobile phone 10 and the mobile phone 70 (that is, the associated device B) perform collaborative display, the mobile phone 10 may alternatively display a home screen of the mobile phone 10, and the mobile phone 70 displays, in full screen, an application interface 733 corresponding to the floating window 731. The mobile phone 70 displays a home screen 734 of the mobile phone 10.

Scenario 5: An interface A displayed by the terminal A is an interface of an application A. When the terminal A and the associated device B perform collaborative display, the terminal A may use a software capability or a hardware capability of the associated device B.

For example, as shown in FIG. 7k-1 and FIG. 7k-2, before collaborative display, the tablet computer 50 (that is, the terminal A) displays a chat interface 735, and the mobile phone 70 displays a home screen 738. After the tablet computer 50 determines that the mobile phone 70 is an associated device that is of the tablet computer 50 and that meets the foregoing preset condition, the tablet computer 50 may use software and hardware capabilities of the mobile phone 70. For example, when the tablet computer 50 detects that the user operates a "Shoot" control 736 in the chat interface 735, the tablet computer 500 may display an option menu 737, to prompt the user to choose to use a local camera or a camera of the mobile phone 70. After the user selects the camera of the mobile phone 70, the tablet computer 50 indicates the mobile phone 70 to start a camera application, that is, the mobile phone 70 displays a photographing interface 739. When the mobile phone 70 detects that the user taps a "Shoot" control 740, the mobile phone 70 takes a photo, and displays a "Send" control 741. When the mobile phone 70 detects that the user taps the "Send" control 741, the mobile phone 70 sends the photo taken this time to the tablet computer 50. The tablet computer 50 sends the photo received from the mobile phone 70, that is, the tablet computer 50 displays a chat interface 742, and the chat interface 742 displays the photo that is taken by the mobile phone 70 and that has been sent by the tablet computer 50.

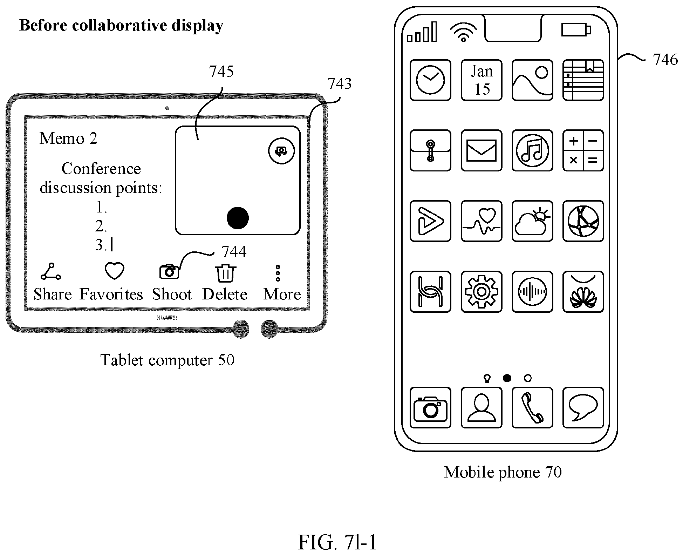

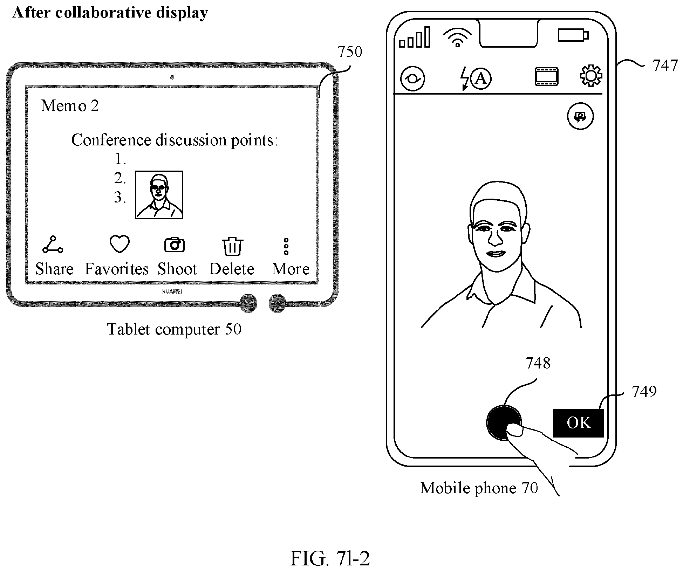

For another example, as shown in FIG. 7l-1 and FIG. 71-2, before collaborative display, the tablet computer 50 (that is, the terminal A) displays an interface 743 of a memo application. In response to detecting that the user operates a "Shoot" control 744 in the interface 743 of the memo application, the tablet computer 50 displays a photographing window 743. In this case, the mobile phone 70 displays a home screen 746. After the tablet computer 50 determines that the mobile phone 70 is an associated device that is of the tablet computer 50 and that meets the foregoing preset condition, the tablet computer 50 automatically uses the camera of the mobile phone 70. That is, the tablet computer 50 indicates the mobile phone 70 to start a camera application, that is, the mobile phone 70 displays a photographing interface 747. When the mobile phone 70 detects that the user taps a "Shoot" control 748, the mobile phone 70 takes a photo, and displays an "OK" control 749. When the mobile phone 70 detects that the user taps the "Send" control 749, the mobile phone 70 sends the photo taken this time to the tablet computer 50. The tablet computer 50 sends the photo received from the mobile phone 70, that is, the tablet computer 50 displays an interface 750, where the interface 750 displays the photo that is taken by the mobile phone 70 and that has been inserted into a memo 2.

### Mode 7: combined mode

(1) When three or more terminals perform a collaborative display function together, every two of the terminals are combined, that is, a collaboration mode of the two terminals is any one of the foregoing collaborative display modes.

For example, as shown in FIG. 6s-1 and FIG. 6s-2, the mobile phone 10 first performs collaborative display with the tablet computer 50, and then the tablet computer 50 performs collaborative display with the television 60.

When the mobile phone 10 and the tablet computer 50 perform collaborative display, the foregoing collaborative mode may be used. The mobile phone 10 displays an interface 656, and the interface 656 includes a menu and a catalog. The tablet computer 50 displays an interface 657, which is a document editing/reading interface. In this case, the mobile phone 10 and the tablet computer 50 collaborate to jointly perform a task related to a document application. When the tablet computer 50 and the television 60 perform collaborative display, the foregoing replicated mode may be used. In this case, the television 60 displays an interface 658, and interface content and a layout of the interface 658 are the same as those of the interface 657 displayed on the tablet computer 50.

In some other examples, the mobile phone 10, the tablet computer 50, and the television 50 start to perform collaborative display together. In other words, a method for triggering three or more terminals to perform the collaborative display function is not limited in this embodiment of this application.

When the mobile phone 10, the tablet computer 50, and the television 50 perform collaborative display together, the mobile phone 10 and the tablet computer 50 use the foregoing collaborative mode. The mobile phone 10 displays an interface 656, and the interface 656 includes a menu and a catalog. The tablet computer 50 displays an interface 657, which is a document editing/reading interface. The user may operate the menu and the catalog on the mobile phone 10, and the tablet computer 50 displays a corresponding interface in response to the operation of the user. If the tablet computer 50 and the television 60 use the foregoing replicated mode, the television 60 displays an interface 658, which is also a document editing/reading interface.

Optionally, the interface 656 displayed by the mobile phone 10 may further include a control 659, which may be configured to enable a function of controlling the television 50 by the mobile phone 10. For example, in response to that the mobile phone 10 detects that the user operates the control 659, the mobile phone 10 displays a control interface 660 of the television 50 shown in FIG. 6t-1 and FIG. 6t-2. The control interface 660 includes a touch control area 661, a "Laser pen" control 662, and a "Brush" control 663. The user may control the television 50 to turn pages up and down by sliding left and right in the touch control area 661. In response to that the user operates the "Laser pen" control 662, the mobile phone 10 enables a laser pen function, and the television 60 displays an interface 665 shown in FIG. 6t-1 and FIG. 6t-2, where a laser pointer 666 is displayed in the interface 665. The user may move a location of the laser pointer on the television 60 by operating the mobile phone 10. Similarly, the tablet computer 50 and the television 60 use the replicated mode, the tablet computer 50 displays an interface 664, and the interface 664 also displays a laser pointer 667 at a corresponding location. Certainly, the laser pointer 667 may not be displayed on the tablet computer 50.

As shown in FIG. 6u-1 and FIG. 6u-2, the mobile phone 10 enables a brush function in response to that the user operates the "Brush" control 663 in the interface 668 displayed on the mobile phone 10. When the user operates the mobile phone 10 to draw a graphic, the television 60 displays an interface 680, and a graphic 681 drawn by the mobile phone 10 is displayed in the interface 680. Similarly, the tablet computer 50 and the television 60 use the replicated mode, the tablet computer 50 displays an interface 670, and the interface 670 also displays a drawn graphic 682 at a corresponding location. Certainly, the drawn graphic 682 may not be displayed on the tablet computer 50.

(2) When three or more terminals perform a collaborative display function together, the three or more terminals may use any one of the foregoing collaborative display modes.

For example, as shown in FIG. 6v-1 and FIG. 6v-2, when the mobile phone 10, the tablet computer 50, and the television 50 perform collaborative display together, the mobile phone 10, the tablet computer 50, and the television 50 perform collaborative display in the collaborative mode. For example, the mobile phone 10 displays a menu interface 683, the tablet computer 50 displays a catalog interface 684, and the television 60 displays a document editing/reading page 685.

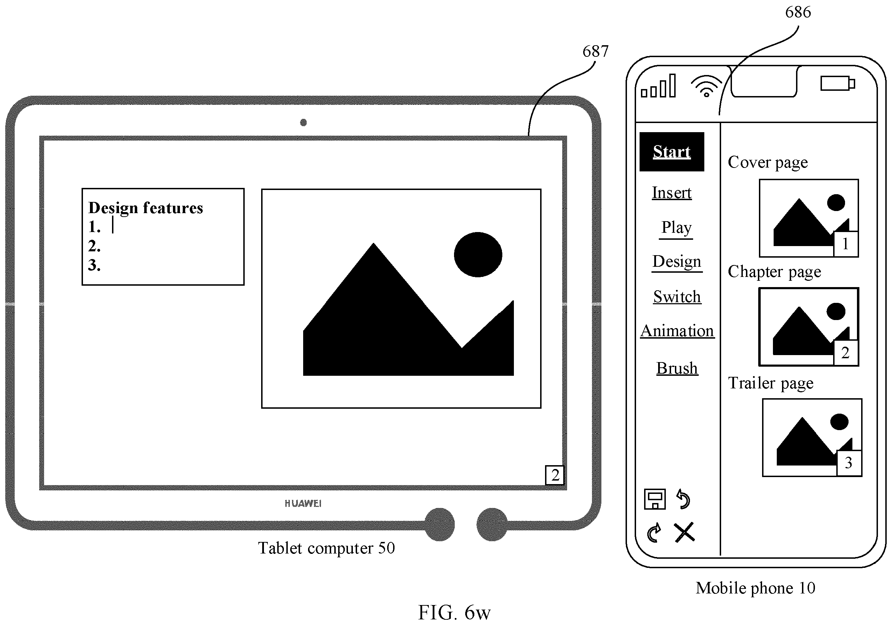

For another example, if the mobile phone 10 first performs collaborative display with the tablet computer 50, the mobile phone 10 first performs collaborative display with the tablet computer 50 in the collaborative mode. As shown in FIG. 6w, the mobile phone 10 displays an interface 686, including a menu bar and a catalog. The tablet computer 50 displays an interface 687, which is a document editing/reading page. When the mobile phone 10 performs collaborative display with the television 60 again, the mobile phone 10 displays a menu interface 683 shown in FIG. 6v-1 and FIG. 6v-2, and the television 60 displays a target interface 684 shown in FIG. 6v-1 and FIG. 6v-2.

(3) Exit the collaborative display mode of the terminal A and the associated device B.

For example, the user may perform an operation on the terminal A to indicate to exit the collaborative display mode of the terminal A and the associated device B, or the user may perform an operation on the associated device B to indicate to exit the collaborative display mode of the terminal A and the associated device B, or the terminal A and/or the associated device B detect/detects in real time whether a peer end meets a collaborative display condition (for example, whether a distance between the associated device B and the terminal A is less than or equal to a threshold). When it is detected that the peer end does not meet the collaborative display condition (for example, the distance between the terminal A and the associated device B is greater than the threshold), the collaborative display mode of the terminal A and the associated device B is automatically exited. The following provides examples of several methods for exiting the collaborative display mode of the terminal A and the associated device B.

Method 1: Exit the collaborative display mode of the terminal A and the associated device B by operating a control in a pull-down notification window or a control center of the terminal A (or the associated device B).

For example, as shown in FIG. 8a-1 and FIG. 8a-2, when the mobile phone 10 (that is, the terminal A) and the mobile phone 70 (that is, the associated device B) perform collaborative display in the mode 1 (that is, the enlarged mode), the mobile phone 10 displays an interface 801 (for example, a part of an interface A of an application A), and the mobile phone 70 displays an interface 802 (the other part of the interface A of the application A). When the mobile phone 10 detects that the user performs an operation of pulling down the notification window in the interface 801, the mobile phone 10 displays the notification window 803. The notification window 803 includes a collaborative display control 806, configured to exit the collaborative display mode of the mobile phone 10. When it is detected that the user operates the collaborative display control 806, the mobile phone 10 exits the collaborative display mode with the mobile phone 70. In this case, the mobile phone 10 displays an interface 804, and the interface 804 includes content of the interface 801 and the interface 802 (that is, includes all content of the interface A of the application A). The mobile phone 70 displays a home screen 805, or the mobile phone 70 displays an interface displayed by the mobile phone 70 before collaborative display. In some other examples, the user may alternatively exit the collaborative display mode of the mobile phone 10 and the mobile phone 70 by using a collaborative display control in a pull-down notification window on the mobile phone 70.

Method 2: Exit the collaborative display mode of the terminal A and the associated device B in a manner of switching back to a home screen by the associated device B (or the terminal A).

For example, as shown in FIG. 8b-1 and FIG. 8b-2, when the mobile phone 10 (that is, the terminal A) and the mobile phone 70 (that is, the associated device B) perform collaborative display in the mode 2 (that is, the replicated mode), the mobile phone 10 displays an interface 807 (for example, a photo browsing interface of a gallery application), and the mobile phone 70 displays an interface 808 (for example, the photo browsing interface of the gallery application of the mobile phone 10). When the mobile phone 10 detects that the user performs an operation of sliding up from the bottom of a screen, the mobile phone 10 displays a home screen 809. In this case, the mobile phone 10 exits the collaborative display mode of the mobile phone 10 and the mobile phone 70, and the mobile phone 70 displays a home screen 810 of the mobile phone 70, or the mobile phone 70 displays an interface displayed before collaborative display.

For another example, as shown in FIG. 8c-1 and FIG. 8c-2, when the mobile phone 10 (that is, the terminal A) and the mobile phone 70 (that is, the associated device B) perform collaborative display in the mode 2 (that is, the replicated mode), the mobile phone 10 displays an interface 807 (for example, a photo browsing interface of a gallery application), and the mobile phone 70 displays an interface 808 (for example, the photo browsing interface of the gallery application of the mobile phone 10). When the mobile phone 70 detects that the user performs an operation of sliding up from the bottom of a screen, the mobile phone 70 displays a home screen 811. In this case, the mobile phone 70 notifies the mobile phone 10 to exit the collaborative display mode, and the mobile phone 10 still displays the interface 809.

Method 3: Suspend the collaborative display mode of the terminal A and the associated device B in a manner of switching back to a home screen by the associated device B (or the terminal A). A capsule is displayed on the associated device B (or the terminal A), and the collaborative display mode of the terminal A and the associated device B may be restored by using the capsule.

For example, as shown in FIG. 8d-1 and FIG. 8d-2, when the mobile phone 10 (that is, the terminal A) and the tablet computer 50 (that is, the associated device B) perform collaborative display in the mode 4 (that is, the separated mode), the mobile phone 10 displays an interface 812 (for example, a video play details interface), and the tablet computer 50 displays an interface 813 (for example, a video play interface). When the tablet computer 50 detects that the user performs an operation of sliding up from the bottom of a screen, the tablet computer 50 suspends the collaborative display mode with the mobile phone 10, and displays a home screen 814, where the home screen 814 includes a status capsule 815. When the tablet computer 50 detects that the user operates the status capsule 815, the tablet computer 50 restores the collaborative display mode with the mobile phone 10, and continues to display the video play interface 813.

Certainly, when the mobile phone 10 detects that the user performs an operation of sliding up from the bottom of a screen, the mobile phone 10 suspends the collaborative display mode with the tablet computer 50, and displays a status capsule in the interface. Subsequently, the user may restore the collaborative display mode of the mobile phone 10 and the tablet computer 50 by using the status capsule.

Method 4: Suspend the collaborative display mode of the terminal A and the associated device B in a manner of switching back to a home screen by the associated device B (or the terminal A). The collaborative display mode of the terminal A and the associated device B may be restored by using a historical task card (or referred to as a recent task card). Alternatively, the collaborative display mode of the terminal A and the associated device B may be exited by using a historical task card.

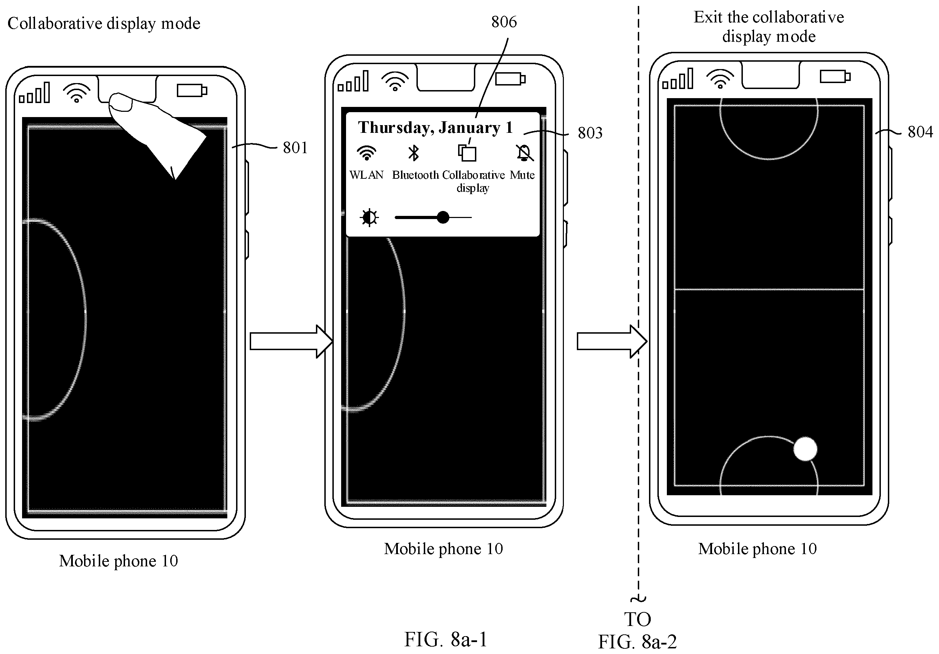

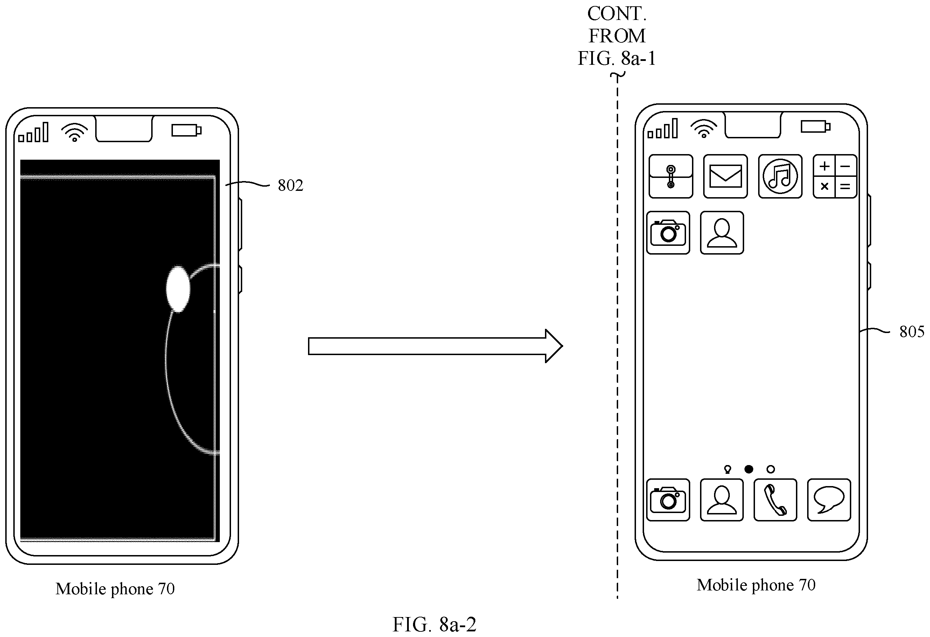

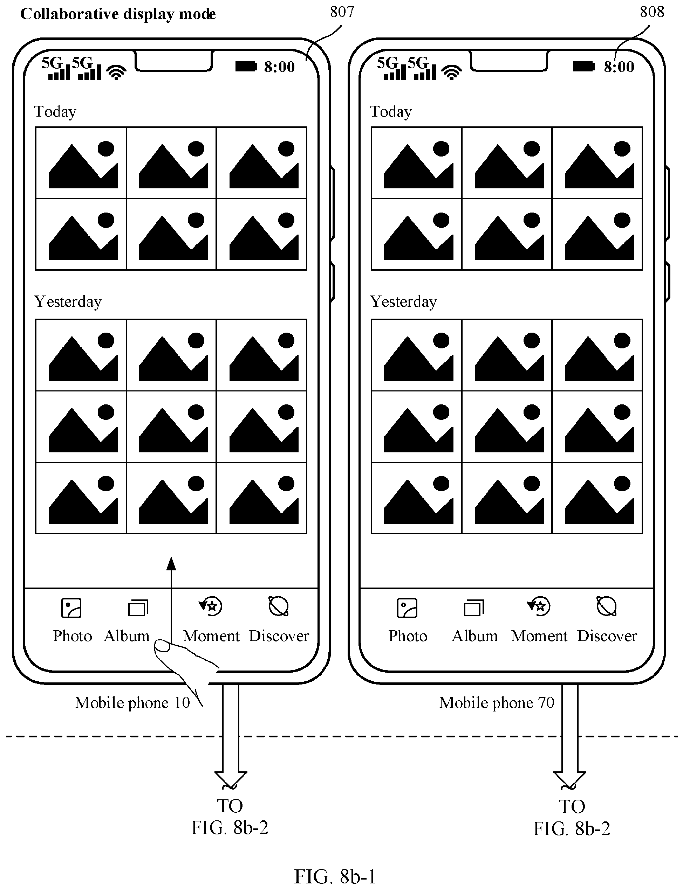

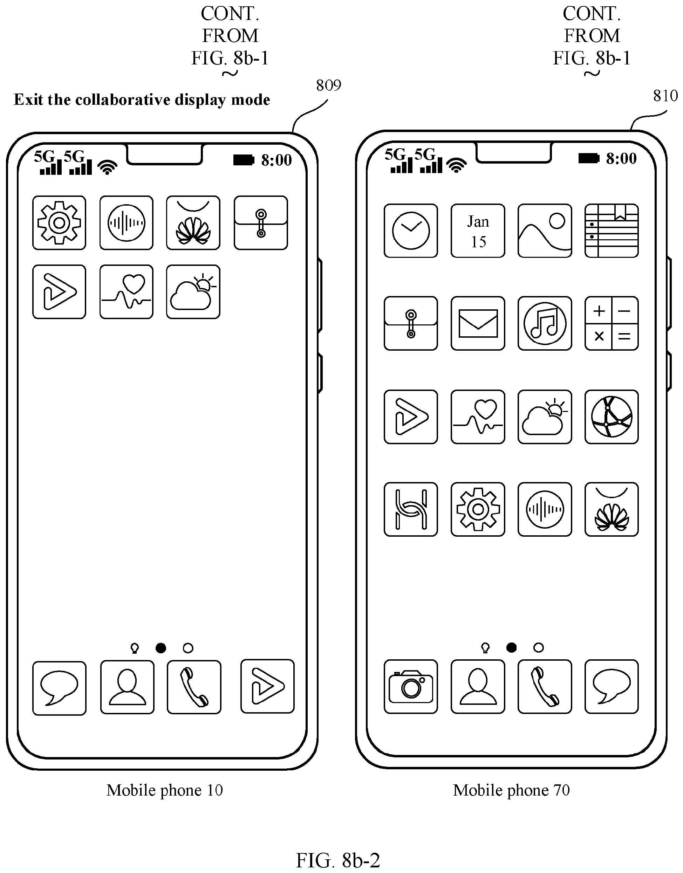

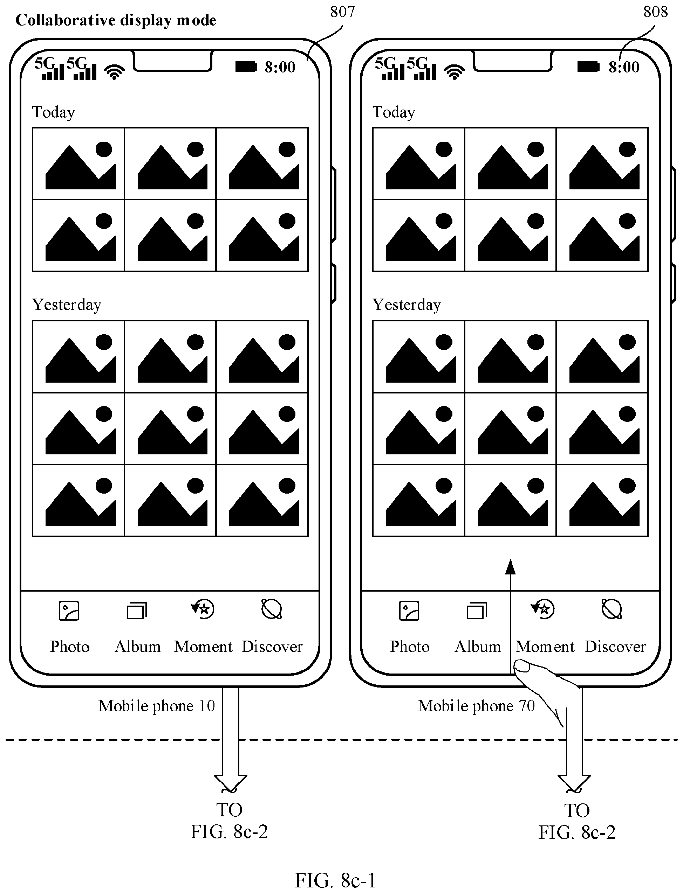

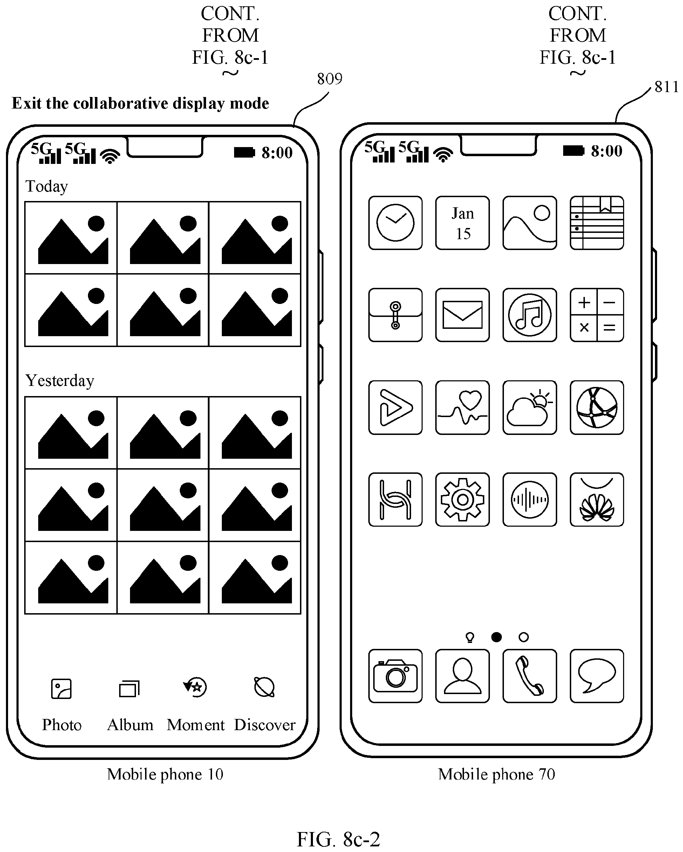

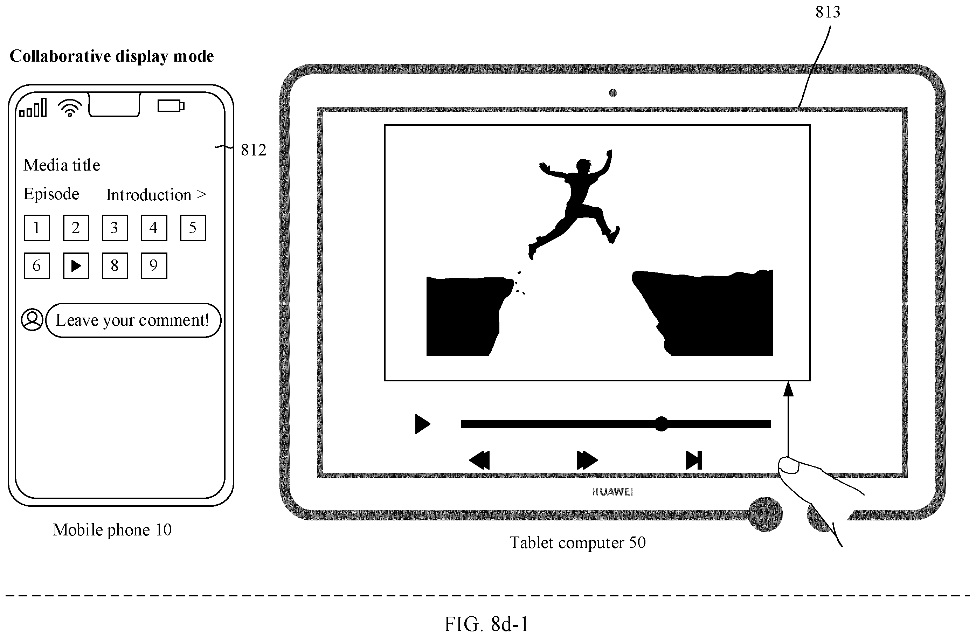

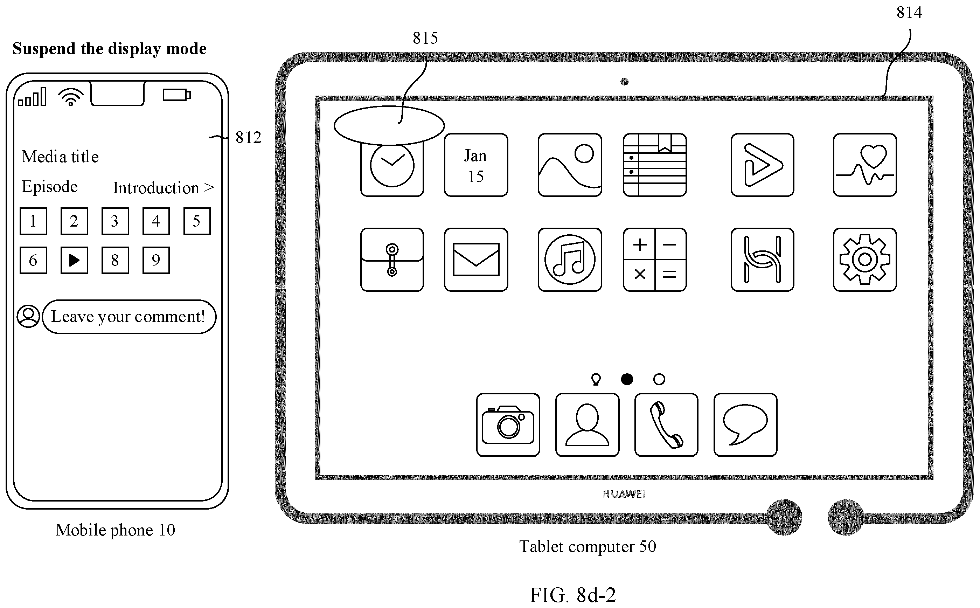

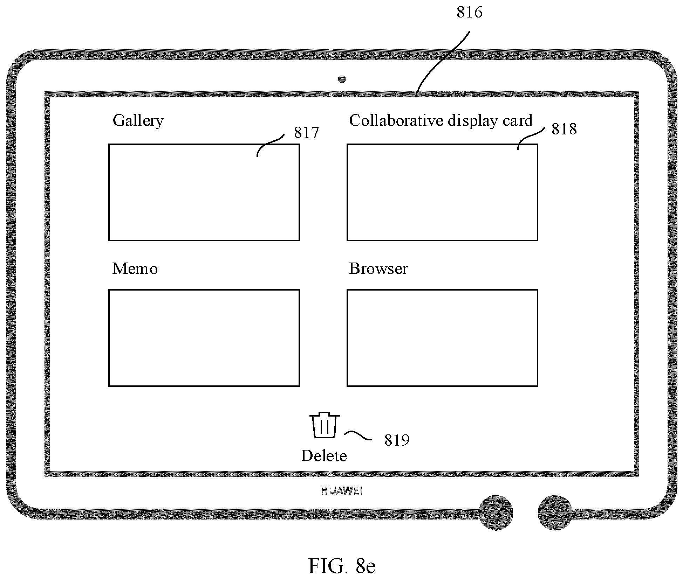

For example, the example shown in FIG. 8d-1 and FIG. 8d-2 continues to be used. In some examples, when displaying the home screen 814, the tablet computer 50 may not display the status capsule 815. Then, the user runs an application on the tablet computer 50 on the home screen 814 according to a requirement. When the tablet computer 50 detects that the user performs an operation of entering the historical task card (for example, sliding up from the bottom of the screen and floating for a period of time), the tablet computer 50 displays a historical task card 816 shown in FIG. 8e. The historical task card 816 includes a card of an application running on the tablet computer 50, for example, a gallery application card 817, a memo application card, a browser card, and a collaborative display card 818. In response to detecting that the user taps the collaborative display card 818, the tablet computer 50 restores the collaborative display mode with the mobile phone 10. In some other embodiments, an operation of closing the collaborative display card 818 by the user is detected, and the tablet computer 50 exits the collaborative display mode with the mobile phone 10. The operation of closing the collaborative display card 818 by the user is that, for example, the user slides the collaborative display card 818 up, or the user taps a "Delete" control 819 after selecting the collaborative display card 818. In a process in which the tablet computer 50 suspends and restores the collaborative display mode with the mobile phone 10, the interface 812 displayed by the mobile phone 10 is not affected by the operation performed by the user on the tablet computer 50.

Similarly, after the collaborative display mode is suspended on the mobile phone 10, the collaborative display mode with the tablet computer 50 may also be restored by using a historical task card on the mobile phone 10.

Method 5: The terminal A keeps detecting whether the associated device B meets the foregoing preset condition. When detecting that the associated device B does not meet the foregoing preset condition, the terminal A automatically exits the collaborative display mode, or the terminal A prompts the user whether to switch to another terminal to continue collaborative display when the associated device B does not meet the foregoing preset condition.

In some embodiments, a distance between the terminal A and the associated device B needs to meet a specific condition, for example, needs to be less than or equal to a threshold. In this case, the collaborative display mode of the terminal A and the associated device B may be exited by controlling the distance between the terminal A and the associated device B to be greater than the threshold. Optionally, when the terminal A detects that the distance between the terminal A and the associated device B is not less than or equal to the threshold, the terminal A automatically exits the collaborative display mode. Optionally, the terminal A may also display prompt information, to prompt the user that the distance between the terminal A and the device B does not meet a distance requirement. If the user expects that the terminal A and the associated device B continue to perform collaborative display, the distance between the associated device B and the terminal A may be controlled, so that the distance between the associated device B and the terminal A meets the distance requirement. Optionally, the terminal A may also prompt the user whether to switch to another terminal to perform collaborative display with the terminal A.

In some other embodiments, when the terminal A successfully establishes collaborative display with the associated device B, after the terminal A displays a first part of the interface A, and the associated device B displays a second part of the interface A, the terminal A and/or the associated device B may further monitor a battery level of the terminal A and/or a battery level of the associated device B. In an example, when the terminal A detects that the battery level of the terminal A is less than a battery level threshold 1, and the battery level of the associated device B meets a specific condition (for example, the battery level of the associated device B is greater than the battery level of the terminal A, or the battery level of the associated device B is greater than or equal to the battery level threshold 2), the terminal A may indicate the associated device B to display the first part and the second part of the interface A. This avoids that the user cannot see content of the interface A because power of the terminal A is exhausted. Further, power consumption of the terminal A is reduced, and standby duration of the terminal A is prolonged. In another example, when the terminal A receives that the battery level of the associated device B is lower than the battery level threshold 2, the terminal A may suspend or terminate, automatically or according to an indication of the user, collaborative display with the associated device B, and the terminal A displays the first part and the second part of the interface A. This avoids that the user cannot see content of the interface A because power of the associated device B is exhausted. Further, power consumption of the associated device B is reduced, and standby duration of the associated device B is prolonged. In some other examples, when detecting that the battery level of the associated device B is less than the battery level threshold 2, the associated device B may alternatively request the terminal A to suspend or terminate collaborative display. After receiving the request, the terminal A may suspend or terminate, automatically or according to an indication of the user, collaborative display with the associated device B, and the terminal A displays the first part and the second part of the interface A.

The following describes in detail internal implementation of application page separation and combination in a collaborative display process between the terminal A and the associated device B.

### Technical solution 1: fragment separation solution

A page (for example, referred to as PageAbility) of an application includes a plurality of fragments (for example, referred to as Fraction). Page separation means that a plurality of fragments on a page are distributed to two or more terminals for display. Page combination means that all fragments on a page are displayed on one terminal.

The following separately describes an application development phase and an application running phase.

### (1) Application development phase

A developer develops an application by using an integrated development environment (integrated development environment, IDE) tool on a development device. The IDE tool usually includes tools such as a code editor, a compiler, a debugger, and a graphical user interface, and is a development software service suite that integrates a code writing function, an analysis function, a compilation function, a debugging function, and the like. For example, typical IDE tools of an Android system include Android Studio, DevEco Studio, and the like. For example, the development device in embodiments of this application may be, for example, a computer, a mobile phone, a tablet computer, or a server. A specific form of the development device is not specially limited in this application. For a structure of the development device, refer to the description of the terminal 100 in FIG. 2a. Details are not described in this specification again. It may be understood that the development device may include more or fewer components than the terminal 100, or combine some components, or split some components, or have different component arrangements. The components shown in the figure may be implemented by hardware, software, or a combination of software and hardware.

In some examples, an embodiment of this application provides a page separation and combination implementation tool (which is briefly referred to as a separation-combination tool below). For example, the separation-combination tool may be integrated into an IDE tool in a form of a Lib library. Alternatively, a developer imports the separation-combination tool provided in this embodiment of this application into an IDE tool by adding a dependency library. Then, the developer may call a capability provided by the separation-combination tool, to develop an application. It should be noted that the separation-combination tool provided in this embodiment of this application includes a module used on a development device, and the module used on the development device is also referred to as a separation-combination tool on a development device side.

Step (1): The developer develops each page of an application A (app A for short) in an IDE tool, and sets a configuration file of the application A.

Specifically, the application A includes a plurality of pages, and each page includes a plurality of fragments. In this case, for each page in the application A, the developer develops, in the IDE tool, each fragment included in each page, including developing service logic code of each fragment, a layout of a UI control, and the like. The UI control includes but is not limited to a text control, an editing control, a picture control, a button control, a dialog box, a navigation bar, a date selector, a switch control, a paging control, or the like. Then, for each page in the application A, the developer sets a layout of each fragment on each page in the IDE tool.

Table 1 shows an example of setting code of a page in the configuration file below.

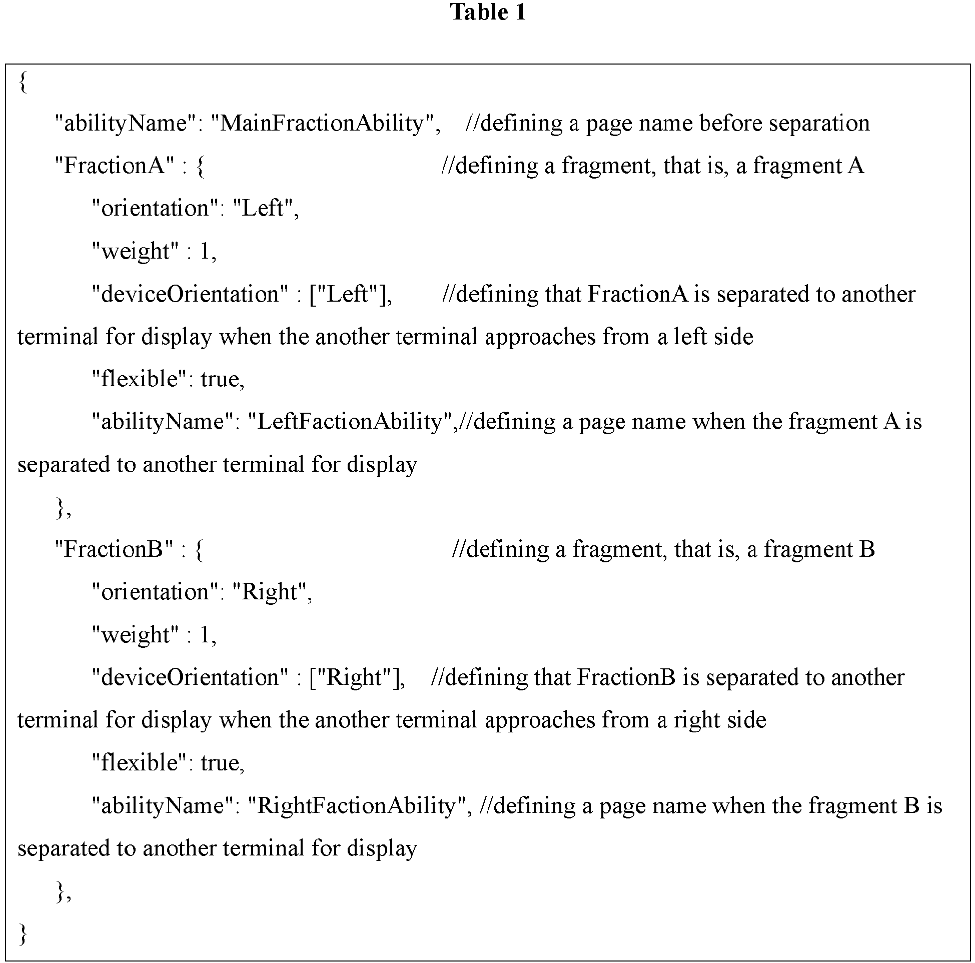

Meanings of the fields are as follows.
1. "abilityName" defines a page name. It should be noted that "abilityName" outside a fraction is used to define a page name after an application is started and before the page is separated. "abilityName" inside the fraction is used to define a name of a page that corresponds to the fraction and that is displayed on another terminal after page separation. For example, "abilityName" inside a fraction A is defined as "LeftFactionAbility". In this case, after page separation, a name of a page that corresponds to the fraction A and that is displayed on another terminal is "LeftFactionAbility".
2. "orientation" is used to define a location of a fraction on a page, which is specifically a location on a page after an application is started and before the page is separated. For example, the location of the fraction on the page includes: top (top), top-center (top-center), top-left (top-left), top-right (top-right), bottom (bottom), bottom-center (bottom-center), bottom-left (bottom-left), bottom-right (bottom-right), right (right), right-top (right-top), right-bottom (right-bottom), right-center (right-center), left (left), left-top (left-top), left-bottom (left-bottom), left-center (left-center), and center (center). In other words, the developer may select any of the foregoing according to a time layout requirement, to lay out the fraction on the page. For example, FIG. 9 shows some examples of layout styles of a fraction on a page according to an embodiment of this application.
3. "weight" is used to define a proportion of a fraction on a page. For example, in the configuration file, the page (MainFractionAbility) includes two fractions: FractionA and FractionB. In addition, a proportion of each fraction is the same, and is 1. That is, a ratio of FractionA to FractionB on the page is 1:1. For another example, if a proportion of FractionA is 1 and a proportion of FractionB is 2, the ratio of FractionA to FractionB on the page is 1:2.
4. "deviceOrientation" is used to define an approaching orientation (for example, top, bottom, left, and right) of another terminal. That is, when another terminal approaches the local terminal from the defined orientation, the fraction may be separated to the another terminal for display. "deviceOrientation" may be of an array type, that is, define a plurality of orientations. For example, "deviceOrientation" is defined as ["Right", "Left"], that is, regardless of whether the another terminal approaches from the left side or the right side of the terminal, the fraction may be displayed on the another terminal.
5. "flexible" is used to define whether a location left after the fraction is separated is filled with another fraction. For example, when "flexible" is "true", it indicates that the location left after the fraction is separated is filled with the another fraction. When "flexible" is "false", it indicates that the location left after the fraction is separated is not filled with the another fraction.

For example, as shown in FIG. 10, the developer develops a fragment on each page (for example, a page 1, a page 2, ...) in an application A by using the IDE tool, and sets a configuration file 1 of the application A. For example, the developer develops fragments, for example, a fragment A and a fragment B, included in the page 1, and sets, in the configuration file 1, layouts of fragments on the page 1 before and after separation, as shown by code in Table 1. The page 2 of the application A and another page are similar, and details are not described again.

Step (2): The developer compiles, by using the IDE tool, the fragment in each page developed by the developer and the configuration file set by the developer, to generate an installation package of the application A.

During compilation, the IDE automatically generates, based on the configuration file of the application A set by the developer and the fragment included in each page, corresponding pages obtained when each page is displayed on different terminals before and after separation. For example, still as shown in FIG. 10, the IDE generates code of three page components based on the configuration file 1 (for example, "sogo.config") and the fragment A and the fragment B of the page 1 that are developed by the developer. The three page components are a page component 0 (for example, "MainFractionAbility"), a page component 1 (for example, "LeftFactionAbility"), and a page component 2 (for example, "RightFactionAbility"). The page component 0 includes the fragment A and the fragment B, and is used to display a page existing before the page 1 is separated. The page component 1 includes only the fragment A, and is used to display a page obtained after the fragment A in the page 1 is separated. The page component 2 includes only the fragment B, and is used to display a page obtained after the fragment B in the page 1 is separated. The page 2 of the application A and another page are similar, and details are not described again.

In addition, the IDE establishes an association between the corresponding pages obtained when each page is displayed on different terminals before and after separation and an event that triggers page separation/combination (which is briefly referred to as a trigger event below), and adds a class name to a configuration file 2 (for example, "config.json") created by the IDE during project initialization. The foregoing event that triggers page separation is, for example, detecting that an associated device meets the foregoing preset condition, and the foregoing event that triggers page combination is, for example, detecting an operation that a user indicates to exit collaborative display. For example, an association is established between the page component 1 and an event of detecting that an associated device approaches the local device from the left side, and an association is established between the page component 2 and an event of detecting that an associated device approaches the local device from the right side.

Subsequently, the IDE packages each page component automatically generated by the IDE, the configuration file 2, and service logic code and a resource of each fragment developed by the developer into an installation package, that is, generates the installation package of the application A, and releases the installation package to an application market.

It can be learned from the foregoing that according to the application development method provided in this embodiment of this application, the developer only needs to develop code of each fragment in an application, configure a correspondence between a page separation/combination event and a fragment, and configure a layout of each fragment in a page before and after page separation, to implement a function of collaborative display of a page of an application on different terminals. The developer does not need to develop code related to page separation/combination. This greatly reduces development workload of the developer, and reduces development costs of the developer.

### (2) Application running phase

A running device (that is, a terminal that runs the application A, for example, a terminal A or an associated device B) downloads the installation package of the application A from the application market and installs the installation package. Then, when running the application A, the terminal A may separate and combine different fragments in an interface 1 by using the separation-combination tool provided in embodiments of this application. In an example, the installation package of the application A further carries related program code of the separation-combination tool. After decompressing and installing the installation package of the application A, the terminal A obtains the related program code of the separation-combination tool, thereby implementing separation and combination of the interface 1. In another example, the installation package of the application A may alternatively not carry related program code of the separation-combination tool. In this case, before the terminal A runs the application A, a related program code module of the separation-combination tool needs to be pre-installed. For example, an operating system pre-installed in the terminal A includes the related program code module of the separation-combination tool, or the terminal A may download the related program code module of the separation-combination tool from a server (for example, a server that provides the separation-combination tool, or a server of the terminal A) and install the related program code module. It should be noted that the separation-combination tool provided in this embodiment of this application further includes a module used on the terminal A, and the module used on the terminal A is also referred to as a separation-combination tool on a terminal A side.

An example in which the operating system pre-installed in the terminal A includes the related program code module of the separation-combination tool is used below for description. For example, a software system of the terminal A in embodiments of this application may use a layered architecture, an event-driven architecture, a microkernel architecture, a micro-service architecture, a cloud architecture, or the like. In embodiments of the present invention, the layered architecture is used as an example to illustrate the software structure of the terminal A.

FIG. 11 is a block diagram of a software structure of a terminal A according to an embodiment of this application.

The layered architecture divides the software system into several layers, and the layers communicate with each other through a software interface. In some embodiments, the software system of the terminal A is divided into five layers: an application layer, a distributed programming framework layer, a distributed service framework layer, a system interface/basic library layer, and an operating system kernel layer from top to bottom.

The application layer may include a series of application packages. For example, the application packages may include a gallery application, a document application, a browser application, a video application, a game application, a system setting application, a shopping application, a news application, an instant messaging application, a camera application, a memo application, a computer application, and the like.

It should be noted that an application package developed by using the foregoing development method can support functions of page separation and page combination.

The distributed programming framework layer includes a distributed page component, a page component, a fragment module, a separation-combination layout management module, a trigger event management module, a fragment animation module, and a component collaboration module.

The distributed page component (which may also be referred to as a DistributedAbility component) is configured to add or delete a fragment in a page, or the like. The page component (which may also be referred to as an Ability component) is configured to provide basic capabilities of a page, such as interaction with a user, page jumping, and UI interface refresh. The fragment module (which may also be referred to as a fraction module) is configured to build an application. Generally, the application includes a plurality of pages, and each page includes a plurality of fragments. The fragment is a basic unit of page separation and has its own life cycle. The fragment includes one or more visual controls, for example, a text display control and a picture display control. The separation-combination layout management module defines a layout style of a fragment and manages a layout style of each page before and after page separation. The separation-combination event management module is configured to register a separation-combination event, for example, an orientation event, and trigger page separation and combination based on the separation-combination event. The fragment animation module is configured to provide an animation effect of each fragment in the page during display start or exit. The fragment stack module is configured to manage display of the fragment during coverage. The component collaboration module is configured to sense a change of a life cycle of a page at a peer end, and the like.

The distributed service framework includes: a distributed event manager, a distributed scheduler, a distributed data module, a trigger event recognition service (for example, an orientation recognition service), public communication, a trust system, a component running management service, a window management service, and the like.

The distributed event manager is configured to register a trigger event of separation/combination of an application, and the like. The distributed scheduler is configured to implement cross-device service scheduling based on the distributed data module, and monitor a life cycle of a page at a peer end (for example, an associated device B) for collaborative display. The component running management service is configured to manage a life cycle of the page on the terminal A. The distributed data module is configured to implement cross-device communication, for example, communication between an application A running on the terminal A and an application A running on the associated device B. The public communication is used to provide data communication between a terminal and another terminal, for example, information exchange between the terminal A and the associated device B, to implement a collaborative display function. The trust system is used to determine a trusted device of the terminal, that is, the foregoing associated device, and monitor whether an optional device goes online. The window management service is configured to manage a window program. For example, the window management service may obtain a display size, determine whether there is a status bar, lock a screen, take a screenshot, and the like.

The operating system kernel is configured to provide basic functions such as resource management (for example, memory management) and device management (for example, discovering a surrounding terminal) of the terminal, and provide basic capabilities such as a thread and a process for an application.

It may be understood that the block diagram of the software structure of the terminal A shown in FIG. 11 is merely an example. The terminal A may have more or fewer software modules, or combine some software modules, or split some software modules. This is not limited in this embodiment of this application.

The following describes a page separation and page combination method provided in embodiments of this application by using an example in which a page 1 in an application A includes a fragment A and a fragment B.

FIG. 12A and FIG. 12B are a flowchart of a page separation and page restoration (also referred to as page combination) method according to an embodiment of this application. The method includes the following steps.

S1201: A terminal A receives an operation that a user starts an application A, and the terminal A starts the application A.

S1202: The application A of the terminal A calls a distributed page component to display a first page, where the first page includes a fragment A and a fragment B.

For example, the application A calls the distributed page component to create the fragment A and the fragment B, determines layout styles of the fragment A and the fragment B in the first page based on a layout, a weight, and the like of each fragment that are set in a configuration file, and displays the first page. The first page is a page 1 that is not separated. The fragment A is a first part of the first page, and the fragment B is a second part of the first page. For example, the fragment A is an interface of an upper area of the first page, and the fragment B is an interface of a lower area of the first page. In an example, the first page may be the interface 301 shown in (1) in FIG. 3c. In the interface 312 shown in (3) in FIG. 3c, the fragment A may be an interface of an upper area of the interface 301. In the interface 313 shown in (4) in FIG. 3c, the fragment B is an interface of a lower area of the interface 301. For another example, the fragment A is an interface of a left area of the first page, and the fragment B is an interface of a right area of the first page. In an example, as shown in FIG. 6a, the first page may be the interface 601, the fragment A may be an interface of a left area, and the fragment B may be an interface of a right area. For another example, the fragment A is display-type content, and the fragment B is interaction-type content. In an example, as shown in FIG. 6d-1 and FIG. 6d-2, the first page may be the interface 633, the fragment A may be the document editing page 634, and the fragment B may be the catalog 635 and the menu 636. For other examples of the first part and the second part of the first page, refer to the foregoing descriptions of the content of the first part and the second part of the interface A.

For example, the application A includes the configuration file shown in Table 1. After the application A receives the operation that the user starts the application A, the application A creates a page component MainFractionAbility, adds the fragment A FractionA and the fragment B FractionB to the page component MainFractionAbility, sets FractionA on the left of MainFractionAbility, and sets FractionB on the right of MainFractionAbility. In addition, FractionA and FractionB each occupy 50% of entire space occupied by MainFractionAbility.

In the foregoing steps, because the first page displayed by the terminal A may be divided into a plurality of fragments, different fragments may be subsequently migrated to an associated device B for display based on an actual requirement of the user or a feature (for example, a device type or a screen size) of the associated device B, so that different parts of an application interface are collaboratively displayed on a plurality of terminals, and manners for collaborative display between the plurality of terminals are more flexible and richer.

In a possible implementation, this embodiment may further include the following step.

S1203: The distributed page component registers a page separation/restoration trigger event of the application A with a trigger event recognition module.

The page separation trigger event of the application A includes: An associated device of the terminal A is detected, and the associated device meets the foregoing preset condition for collaborative display. Alternatively, it is detected that the user performs, on the terminal A, an operation of triggering a collaborative display function of the terminal A.

The preset condition for collaborative display includes but is not limited to any one of the following condition 1 to condition 3. Condition 1: A distance between the associated device and the terminal A is less than or equal to a threshold (for example, 20 cm). Condition 2: A distance between the associated device and the terminal A is less than or equal to a threshold, and the distance between the associated device and the terminal A is decreasing, that is, the associated device approaches the terminal A. Condition 3: The associated device collides with the terminal A. Further, the page separation trigger event may alternatively be detecting that the associated device approaches the terminal A in a specific direction (for example, from the left side of the terminal A, from the right side of the terminal A, from the top of the terminal A, or from the bottom of the terminal A). For other content, refer to the related content in the solution 1 in the foregoing (1). Details are not described herein again.

For the operation performed by the user on the terminal A for triggering the collaborative display function of the terminal A, refer to the descriptions of the related content in the solution 1 and the solution 2 in the foregoing (1). Details are not described herein again.

The page restoration (also referred to as page combination) trigger event of the application A includes: detecting that the user performs an operation of exiting the collaborative display function on the terminal A, or detecting that the associated device B does not meet the preset condition for collaborative display, or detecting that the associated device B has exited the application A, or the like. For specific content, refer to the related content in the method 1 to the method 5 in the foregoing (3). Details are not described herein again.

In other words, the page separation/restoration trigger event may be determined based on an actual requirement of the user or a specific application scenario. Specific content of the page separation/restoration trigger event is not specifically limited in this embodiment of this application.

For example, the example in step S1202 continues to be used. The distributed page component of the application A registers information about the application A with the trigger event recognition module (which is, for example, specifically an orientation recognition service). For example, when a trigger condition is detecting that an associated device on the left of the terminal A approaches the terminal A, FractionA in MainFractionAbility is separated. When a trigger condition is detecting that an associated device on the right of the terminal A approaches the terminal A, FractionB in MainFractionAbility is separated.

In some other embodiments, this step is optional.

In this case, the terminal A completes a process of displaying the first page of the application A, and registers to monitor the trigger event.

In some other embodiments, the technical solution provided in this embodiment of this application may further include the following steps.

S1204: When monitoring the page separation trigger event, the trigger event recognition service notifies the distributed page component.

It should be noted that an example in which the application A monitors the page separation trigger event when displaying the first page is used for description herein. In another embodiment, the page separation trigger event may alternatively be monitored when the application A displays another page. In this case, a fragment in the another page is separated.

S1205: The distributed page component determines, based on the page separation trigger event, to separate the fragment B, and notifies the application A.

In some embodiments, the distributed page component determines a collaborative display mode (for example, an enlarged mode, a replicated mode, a collaborative mode, a separated mode, an extended mode, and a combined mode) based on the page separation trigger event, to determine a page separation solution, that is, determine to separate specific fragments in the first page, for example, determine to separate the fragment B.

In some other embodiments, the distributed page component may alternatively determine a separation solution based on an orientation of the associated device B relative to the terminal A. For example, if the associated device B approaches the terminal A from the right side, it is determined to separate a right fragment in the first page. If the associated device B approaches the terminal A from the left side, it is determined to separate a left fragment in the first page.

In some other embodiments, the distributed page component may alternatively determine a separation solution based on a device type and a device feature (for example, a screen size) of the associated device B, an application type of the application A, and the like.

In conclusion, for how the distributed page component specifically determines the separation solution based on the page separation trigger data, refer to the description of the related content in the foregoing (2). Details are not described herein again.

S1206: The application A of the terminal A displays a second page, where the second page includes the fragment A and does not include the fragment B.

The application A calls the distributed page component to delete the fragment B from the first page. In some examples, the distributed page component adjusts a layout of the first page after deleting the fragment B. For example, the fragment A reserved in the first page is enlarged and displayed in the middle, to obtain the second page. The second page is a page displayed on the original terminal A after the fragment B is separated from the page 1.

For example, the example in step S1203 continues to be used. When the trigger event detected by the terminal A is that the associated device B approaches the terminal A from the right side of the terminal A, the distributed page component finds that the trigger event corresponds to FractionB, and determines to separate FractionB located on the right side from MainFractionAbility. In this case, the distributed page component of the terminal A removes or hides FractionB from MainFractionAbility, and fills, with another fraction (that is, FractionA) based on a setting of the configuration file, a location left after FractionB is removed. In addition, if the distributed page component determines corresponding RightFractionBAbility based on the detected trigger event, the distributed page component sends a collaborative display request to the associated device B, to request the associated device B to start RightFractionBAbility (that is, performs step S1207).

In some other embodiments, the second page displayed by the terminal A may alternatively include the fragment A and the fragment B.

S1207: The distributed page component of the terminal A sends the collaborative display request to the associated device B, to request collaborative display of the fragment B of the application A.

This step may alternatively be performed before step S1206, or may be performed together with step S1206. This is not limited in this embodiment of this application.

S1208: An application A of the associated device B returns a collaboration success response to the terminal A.

In some examples, the collaboration success response carries a collaboration identifier of the associated device B and the terminal A, and the collaboration identifier is used to identify a correspondence between the associated device B and the fragment B. Subsequently, when performing page restoration, the terminal A may determine a to-be-restored fragment based on the collaboration identifier. For example, the example in step S1206 continues to be used. The collaboration identifier carried in the collaboration success response is used to identify a correspondence between FractionB in the terminal A and RightFractionBAbility of the associated device B.

It should be noted that step S1208 is optional.

S 1209: The application A of the associated device B displays a fourth page, where the fourth page includes the fragment B.

In some examples not according to the invention, the application A is pre-installed on the associated device B. In this case, the application A is directly started based on the collaborative display request of the terminal A, and the fourth page including only the fragment B is displayed. The fourth page is a page displayed on another terminal after the fragment B is separated from the page 1 in the application A. For example, the example in step S1206 continues to be used. After receiving the collaborative display request, the associated device B starts RightFractionBAbility, and displays a page including FractionB. According to the invention, the application A may not be pre-installed on the associated device B. In this case, after receiving the collaboration request sent by the terminal A, the associated device B automatically downloads an installation package (for example, a lightweight installation package) of the application A from an application market and installs the installation package, then starts the application A, and displays the fourth page including only the fragment B.

This step may alternatively be performed before step S1208, or may be performed together with step S1208. This is not limited in this embodiment of this application.

It should be further noted that, after page separation, the fragment A in the application A on the terminal A and the fragment B in the application A on the associated device B maintain data communication between the fragment A and the fragment B performed before page separation. It should be noted that before page separation, communication between the fragment A and the fragment B in the application A is data communication in a same process of a same device. After page separation, the fragment A in the application A on the terminal A and the fragment B in the application A on the associated device B belong to cross-device data communication.

Specifically, the application A of the terminal A creates a distributed data object, for example, a memory data object 1, in a distributed data module in a distributed service framework. Before the page of the application A is separated, the fragment A and the fragment B in the page communicate with each other by using the memory data object 1. After page separation, the terminal A sends an identifier of the memory data object 1 to the associated device B, and the associated device B may read content in the memory data object 1 by using the identifier of the memory data object 1. Therefore, after page separation, when the application A on the terminal A modifies the content of the memory data object 1, the application A on the associated device B may receive a data change notification, and update, based on changed content of the memory data object 1, a page displayed by the associated device B. On the contrary, when the application A of the associated device B modifies the content of the memory data object 1, the application A on the terminal A may receive a data change notification, and update, based on changed content of the memory data object 1, a page displayed by the associated device. In other words, in this embodiment of this application, cross-device communication is implemented in a form of directly operating a memory data object, so that a developer does not need to process complex serialization, deserialization, and remote procedure call (remote procedure call, RPC) of a data object. It can be learned that the cross-device communication solution provided in this embodiment of this application helps improve application development efficiency, and also helps the developer focus on application service development.

Certainly, cross-device communication between the terminal A and the associated device B may alternatively be implemented by using another method. This is not limited in this embodiment of this application.

In this way, the terminal A and the associated device B collaboratively display the page of the application A. In some other embodiments, this embodiment of this application further includes a page restoration method, that is, includes the following step S1210 to step S1214. It should be noted that step S1210 to step S1214 may be performed after step S1201 to step S1209. Alternatively, the following step S1210 to step S1214 and the foregoing step S1201 to step S1209 are independent of each other.

S1210: After monitoring the page restoration trigger event, the trigger event recognition service of the terminal A notifies the distributed page component.

In some embodiments, that the trigger event recognition service of the terminal A monitors the page restoration trigger event includes: The terminal A detects that the user performs an operation of exiting collaborative display on the terminal A, or the terminal A detects that the associated device B does not meet the preset condition for collaborative display, for example, the associated device B moves away from the terminal A.

S1211: The distributed page component determines, based on the page restoration trigger event, to add the fragment B.

For example, the distributed page component finds the correspondence between the associated device B and the fragment B based on the collaboration identifier, and determines to add the fragment B.

For example, the example in step S1209 continues to be used. When the trigger event recognition service of the terminal A detects that the associated device B moves away from the terminal A, and a distance is greater than a threshold, the distributed page component determines, based on the collaboration identifier of the terminal A and the associated device B, to add FractionB to MainFractionAbility. In addition, FractionA is restored based on a predefined layout style (including a size and a location) of FractionA before separation, and FractionB is presented based on a predefined layout style (including a size and a location) of FractionB.

S1212: The application A displays a third page, where the third page includes the fragment A and the fragment B.

The application A calls the distributed page component to add the fragment B to the second page, that is, the third page includes the fragment A and the fragment B. It should be noted that, in this case, a page state of the third page may change compared with that of the first page.

S1213: The distributed page component indicates the associated device B to exit collaborative display.

S1214: The associated device B exits the application A.

For example, the example in step S1211 continues to be used. An indication message for exiting collaborative display that is sent by the distributed page component to the associated device B carries the collaboration identifier of the terminal A and the associated device B. If the associated device B determines RightFractionBAbility based on the collaboration identifier, the associated device B destroys RightFractionBAbility, that is, exits the application A.

In some other embodiments, in a process in which the terminal A performs collaborative display with the associated device B, the terminal A also detects a life cycle of the application A on the associated device B. In some scenarios, after the user performs an operation of exiting the collaborative display function on the associated device B, or the user performs an operation of exiting the application A on the associated device B, or the application A is exited because the associated device B is powered off or the like, the terminal A may sense that the life cycle of the application A on the associated device B is destroyed. In this case, the terminal A may automatically restore a page, that is, automatically display a page including the fragment A and the fragment B. In this case, the terminal A does not need to indicate the associated device B to exit collaborative display.

The following describes the technical solutions in embodiments of this application by using an example in which the terminal A and the associated device B each have the internal structure shown in FIG. 11. FIG. 13 is a schematic flowchart of another page separation method according to an embodiment of this application. The method includes the following steps.

As shown above, the page 1 in the installation package of the application A corresponds to three page components: a page component 0 (for example, "MainFractionAbility"), a page component 1 (for example, "LeftFactionAbility"), and a page component 2 (for example, "RightFactionAbility"). The page component 0 includes the fragment A and the fragment B, and is used to display a page existing before the page 1 is separated. The page component 1 includes only the fragment A, and is used to display a page obtained after the fragment A in the page 1 is separated. The page component 2 includes only the fragment B, and is used to display a page obtained after the fragment B in the page 1 is separated. The page 2 of the application A and another page are similar, and details are not described again.

Step 1: After the terminal A detects an indication for starting the application A, the application starts the page component 0 (for example, "MainFractionAbility"). The page component 0 calls capabilities of a page component and a fragment module by using a distributed page component in a distributed programming framework to generate a page, and adds the fragment A and the fragment B to the page. The fragment A and the fragment B are arranged based on a configuration file of the application A.

Step 2: The application A registers information (for example, including a device type and an application version number) about the application A with a separation-combination event management module by using the distributed page component. Then, the separation-combination event management module registers the information about the application A with a distributed event manager in a distributed service framework, to monitor a page separation/combination trigger event of the application A. The distributed event manager registers the information about the application A with a trust system, to monitor online and offline of a trusted device (that is, an associated device).

Step 3: When detecting that the associated device B goes online, the trust system sends information (for example, a device identifier and a device type) about the associated device B to the distributed event manager. The distributed event manager registers the information about the associated device B with a trigger event recognition service.

Step 4: The trigger event recognition service detects whether the associated device B meets the foregoing preset condition, and returns a detection result to the distributed event manager. For example, if the trigger event recognition service is an orientation recognition service, the orientation recognition service, for example, an ultrasonic sensor, detects whether the associated device B approaches the terminal A, and detects an orientation of the associated device B relative to the terminal A.

Step 5: The distributed event manager reports the received detection result to the distributed page component in the distributed programming framework. The distributed page component determines a to-be-separated fragment (for example, the fragment B is to be separated) based on the detection result, and the distributed page component calls the separation-combination layout management module to delete the corresponding fragment B from the page, and adaptively adjusts a layout of a remaining fragment.

Step 6: The distributed page component of the terminal A further launches a page component 2 of the associated device B by using a component collaboration module, a distributed scheduler (which may be specifically a component collaboration management service) in the distributed service framework, a distributed scheduler in a distributed service framework of the associated device B, a component running management module, and the distributed page component in the distributed programming framework, where the page component 2 includes only the fragment B. It should be noted that the associated device B installs the application A or install a lightweight application A after receiving a collaboration request of the terminal A.

In conclusion, in this case, a page displayed by the terminal A includes the fragment A but does not include the fragment B, and a page displayed by the associated device B includes only the fragment B, that is, page separation of the page (including the fragment A and the fragment B) is implemented.

It should be noted that the foregoing step 1 to step 6 are merely used to describe a process of implementing page separation, but do not limit a specific execution module, a specific operation, an execution sequence, and the like in the foregoing step 1 to step 6.

In addition, in a process in which the terminal A and the associated device B perform collaborative display, the terminal A and the associated device B further need to monitor a life cycle of an application A at a peer end. For example, when the terminal A detects that the associated device B closes the application A (that is, detects that a life cycle of a page corresponding to the application A ends), the terminal A needs to restore the page, that is, display, on the page, a fragment that is previously separated to the associated device B (this is also referred to as page combination). When the associated device B detects that the terminal A closes the application A (that is, detects that a life cycle of a page corresponding to the application A ends), the associated device B also exits the application A.

FIG. 14 is a schematic flowchart of a method in which a terminal A and an associated device B mutually monitor a life cycle of an application A. The method includes the following steps.

Step 1: After the terminal A starts the application A, the application A (which is, for example, specifically a page component 0) creates a binder stub (BinderStub) and a binder proxy (BinderProxy). In this case, the application A running on the terminal A implements cross-device communication by using BinderProxy and a distributed scheduler (which is, for example, specifically a component collaboration management service) in a distributed service framework.

Step 2: When the terminal A and the associated device B perform collaborative display, the associated device B starts the application A, and the application A (which is, for example, specifically a page component 2) also creates BinderStub and BindProxy. In this case, the application A running on the associated device B implements cross-device communication by using BindProxy and a distributed scheduler (which is, for example, specifically a component collaboration management service) in a distributed service framework.

It should be noted that an execution sequence of step 1 and step 2 is not limited in this embodiment of this application.

Step 3: The application A running on the terminal A registers with the associated device B to monitor a life cycle of the application A on the associated device B. Specifically, the application A running on the terminal A registers, by using BinderProxy, a distributed programming framework, the distributed scheduler (which is, for example, specifically the component collaboration management service) in the distributed service framework, and the distributed scheduler in the distributed service framework of the associated device B, with a component running management module of the associated device B, to monitor the life cycle of the application A on the associated device B.

Step 4: Similarly, the application A running on the associated device B registers with the terminal A to monitor a life cycle of the application A on the terminal A. Specifically, the application A running on the associated device B registers, by using BinderProxy, a distributed programming framework, the distributed scheduler (which is, for example, specifically the component collaboration management service) in the distributed service framework, and the distributed scheduler in the distributed service framework of the terminal A, with a component running management module of the terminal A, to monitor the life cycle of the application A on the terminal A.

It should be noted that an execution sequence of step 3 and step 4 is not limited in this embodiment of this application.

Step 5: When the life cycle of the application A on the associated device B changes, the component running management module of the associated device B sends change information to the distributed scheduler of the terminal A, the distributed programming framework of the terminal A, and BinderProxy of the application A of the terminal A by using the distributed scheduler. In this case, the application A of the terminal A performs a corresponding operation based on the change information of the application A on the associated device B. For example, when the associated device B exits the application A, the terminal A adds, to a displayed interface of the application A, a fragment previously displayed on the associated device B, for example, the fragment B.

Step 6: When the life cycle of the application A on the terminal A changes, the component running management module of the terminal A sends change information to the distributed scheduler of the associated device B, the distributed programming framework of the associated device B, and BinderProxy of the application A of the associated device B by using the distributed scheduler. In this case, the application A of the associated device B performs a corresponding operation based on the change information of the application A on the terminal A. For example, when the terminal A exits the application A, the associated device B also exits the application A.

It should be noted that the foregoing step 1 to step 6 are merely used to describe a process in which the terminal A and the associated device B mutually monitor the life cycle of the application A, but do not limit a specific execution module, a specific operation, an execution sequence, and the like in the foregoing step 1 to step 6.

In addition, it should be further noted that the foregoing monitoring method is merely an example, and another monitoring method may alternatively be used to monitor a life cycle of an application A at a peer end. This is not limited in this embodiment of this application.

FIG. 15a is a schematic flowchart of another page restoration (also referred to as page combination) method according to an embodiment of this application. The method includes the following steps.

Step 1: After detecting a page restoration trigger event, a trigger event recognition service of a terminal A notifies a distributed event manager.

Then, an associated device B exits and closes a fragment B, and exits an application A, that is, performs step 2 to step 4. In addition, the terminal A needs to add the fragment B to a current page, that is, perform step 5 to step 7. Details are as follows.

Step 2: The distributed event manager of the terminal A notifies, by using a distributed scheduler (which is, for example, specifically a component collaboration management service), a distributed scheduler (which is, for example, specifically a component collaboration management service) of the associated device B to close the fragment B.

Step 3: The distributed scheduler of the associated device B notifies a component running management module to close the fragment B.

Step 4: The component running management module notifies a page component 2 by using a distributed page component, to destroy the page component 2, that is, exit the application A.

Step 5: The distributed event manager of the terminal A notifies a distributed page component by using a separation-combination event management module in a distributed programming framework.

Step 6: The distributed page component restores the fragment B by calling a fragment module, and re-arranges a fragment of a page component 0 by using a separation-combination layout management module.

Step 7: The page component 0 displays a fragment A and the fragment B.

FIG. 15b is a schematic flowchart of another page restoration method according to an embodiment of this application. The method includes the following steps.

Step 1: When an associated device B receives an operation performed by a user for exiting an application A, the associated device B exits the application A. Alternatively, the associated device B automatically exits application A due to power-off or the like.

Step 2: A component running management module notifies a distributed scheduler of information indicating that the application A is exited.

Step 3: The distributed scheduler of the associated device B notifies a distributed scheduler of a terminal A.

Step 4: The distributed scheduler of the terminal A notifies a distributed page component by using a distributed event manager and a separation-combination event management module in a distributed programming framework.

Step 5: The distributed page component restores a fragment B by calling a fragment module, and re-arranges a fragment of a page component 0 by using a separation-combination layout management module.

Step 6: The page component 0 displays a fragment A and the fragment B.

It can be learned from the foregoing that, according to the page separation/combination method provided in embodiments of this application, different collaborative display modes can be used based on different orientations of the associated device B relative to the terminal A, a device type of the associated device B, a device feature of the associated device B, and different operations of the user. In other words, a method for collaborative display between a plurality of terminals is flexible and variable, and can meet different display requirements of the user in different scenarios.

The following provides description with reference to a specific scenario in which the terminal A and the associated device B perform collaborative display.

For example, as shown in (1) in FIG. 3c, the interface 301 displayed by the mobile phone 10 may include two fragments: an upper fragment and a lower fragment (for example, a ratio of the upper fragment to the lower fragment is 1:1). When the mobile phone 10 and the mobile phone 70 perform collaborative display, the mobile phone 10 notifies the mobile phone 70 to start a page component corresponding to the lower fragment, and the mobile phone 70 displays the interface 313 corresponding to the lower fragment. In addition, the mobile phone 10 enlarges the upper fragment according to a layout style setting of page separation, to fill a location left after the lower fragment is migrated, and the mobile phone 10 displays the interface 312. In addition, data synchronization is performed, by using a distributed data object, on the interface 312 of the upper fragment displayed by the mobile phone 10 and the interface 313 corresponding to the lower fragment displayed by the mobile phone 70. For detailed content, refer to the foregoing description of the related content. Subsequently, when the terminal A and the associated device B exit collaborative display, the terminal A may restore, based on a layout style before page separation, an interface that simultaneously displays the upper fragment and the lower fragment. For other content, refer to the description of the foregoing related content. Details are not described herein again.

For another example, as shown in FIG. 6a, the interface 601 displayed by the tablet computer 50 may include two fragments: a left fragment and a right fragment (for example, a ratio of the left fragment to the right fragment is 1:3). When the mobile phone 10 approaches from the left side of the tablet computer 50, the tablet computer 50 notifies the mobile phone 10 to start a page component corresponding to the left fragment, and the mobile phone 70 displays the interface 602 corresponding to the left fragment. In addition, the tablet computer 50 enlarges the right fragment according to a layout style setting of page separation, to fill a location left after the left fragment is migrated, and the tablet computer 50 displays the interface 603. For other content, refer to the description of the foregoing related content. Details are not described herein again.

It should be noted that another scenario in the foregoing enlarged mode may also be implemented by using a fragment separation solution, or some functions thereof are implemented by using a fragment separation solution. Details are not described herein.

For another example, as shown in FIG. 6b-1A and FIG. 6b-1B, the mobile phone 10 displays an interface of a gallery application. When the mobile phone 10 and the mobile phone 70 perform collaborative display, the mobile phone 10 may notify the mobile phone 70 to start a page component corresponding to the gallery application. It should be noted that, in this case, the mobile phone 70 starts an unseparated page component, and therefore an interface displayed by the mobile phone 70 is the same as the interface displayed by the mobile phone 10. In addition, the gallery application running on the mobile phone 10 and a gallery application running on the mobile phone 70 perform data synchronization by using a distributed data object. For detailed content, refer to the foregoing description of related content. For other content, refer to the description of the foregoing related content. Details are not described herein again.

For another example, as shown in FIG. 6c-2A and FIG. 6c-2B, the mobile phone 10 displays a navigation interface of a map application. When the mobile phone 10 and the watch 20 perform collaborative display, the mobile phone 10 may notify the watch 20 to start a page component corresponding to the map application. It should be noted that the watch 20 selects, based on a device type, a page component of a map application corresponding to a watch type. Therefore, the watch 20 may display a layout interface different from the navigation interface of the mobile phone 10. In addition, the gallery application running on the mobile phone 10 and a gallery application running on the mobile phone 70 perform data synchronization by using a distributed data object. For detailed content, refer to the foregoing description of related content. Alternatively, the following distributed MVVM architecture may be used to implement data synchronization. For other content, refer to the description of the foregoing related content. Details are not described herein again.

It should be noted that another scenario in the foregoing replicated mode may also be implemented by using a fragment separation solution, or some functions thereof are implemented by using a fragment separation solution. Details are not described herein.

For another example, as shown in FIG. 6d-1 and FIG. 6d-2, the tablet computer 50 displays the interface 633 of a document application. The document application may include two fragments. A fragment 1 is used to display the document editing page 634, and a fragment 2 is used to display the catalog 635 and the menu 636. When the tablet computer 50 and the mobile phone 10 perform collaborative display, the tablet computer 50 determines to separate the fragment 2, and then notifies the mobile phone 10 to start a page component corresponding to the fragment 2, and the mobile phone 10 may display the interface 638 based on a layout style obtained after the fragment 2 is separated. The tablet computer 50 displays the interface 637. Data synchronization is performed on the interface 637 and the interface 638 by using a distributed data object. For other content, refer to the description of the foregoing related content. Details are not described herein again.

Alternatively, the tablet computer 50 displays the interface 633 of a document application. The document application may include three fragments. A fragment 1 is used to display the document editing page 634, a fragment 2 is used to display the catalog 635, and a fragment 3 is used to display the menu 636. When the tablet computer 50 and the mobile phone 10 perform collaborative display, the tablet computer 50 may determine to separate the fragment 2 and the fragment 3 based on a type of a collaborative terminal (for example, the mobile phone 10), and then notify the mobile phone 10 to start page components corresponding to the fragment 2 and the fragment 3, that is, the mobile phone 10 displays the interface 638. The tablet computer 50 displays the interface 637.

As shown in FIG. 6e-1 and FIG. 6e-2, the tablet computer 50 displays the interface 633 of a document application. The document application may include three fragments. A fragment 1 is used to display the document editing page 634, a fragment 2 is used to display the catalog 635, and a fragment 3 is used to display the menu 636. When the tablet computer 50 and the watch 20 perform collaborative display, the tablet computer 50 may determine to separate the fragment 3 based on a type of a collaborative terminal (for example, the watch 20), and then notify the watch 20 to start a page component corresponding to the fragment 3, that is, the watch 20 displays the interface 640. The tablet computer 50 displays the interface 639.

It should be noted that another scenario in the foregoing collaborative mode may also be implemented by using a fragment separation solution, or some functions thereof are implemented by using a fragment separation solution. Details are not described herein.

For another example, as shown in FIG. 6k-1 and FIG. 6k-2, the mobile phone 10 displays the video details interface 606. The interface 606 may include two fragments: an upper fragment and a lower fragment, which are respectively a fragment 1 and a fragment 2. The fragment 1 is used to display the video play module 607, and the fragment 2 is used to display the details content module 608. When the mobile phone 10 and the tablet computer 50 perform collaborative display, the mobile phone 10 determines to separate the upper fragment, and notifies the tablet computer 50 to start a page component corresponding to the fragment 1, to display the interface 610. The mobile phone 10 displays the interface 609.

It should be noted that another scenario in the foregoing separated mode may also be implemented by using a fragment separation solution, or some functions thereof are implemented by using a fragment separation solution. Details are not described herein.

For another example, as shown in FIG. 7f-1 and FIG. 7f-2, the mobile phone 10 displays the home page 718 of a memo application. When the mobile phone 10 and the mobile phone 70 perform collaborative display, the mobile phone 10 notifies the mobile phone 70 to start a page component corresponding to the memo application, and the mobile phone 70 displays the interface 719. In some examples, a memo application running on the mobile phone 70 may be independent of the memo application on the mobile phone 10. In other words, an operation performed by the user on the mobile phone 10 is not synchronized to the memo application on the mobile phone 70, and an operation performed by the user on the mobile phone 70 is not synchronized to the memo application on the mobile phone 10. After the mobile phone 10 and the mobile phone 70 end collaborative display, the mobile phone 10 and the mobile phone 70 may perform data synchronization by using distributed data, that is, a final status of the user in the memo of the mobile phone 70 is synchronized to the memo application of the mobile phone 10.

It should be noted that another scenario in the foregoing extended mode may also be implemented by using a fragment separation solution, or some functions thereof are implemented by using a fragment separation solution. Details are not described herein.

It should be further noted that the fragment separation solution may independently implement collaborative display of two or more terminals, or may be combined with another technical solution to implement collaborative display of two or more terminals. For example, the fragment separation solution is combined with the following distributed MVVM solution, the fragment separation solution is combined with a screen projection solution, and the fragment separation solution is combined with an FA migration solution.

In some other embodiments, some solutions in the foregoing scenarios may alternatively be implemented by using a screen projection solution.

For example, as shown in FIG. 6i(1) and FIG. 6i(2), when the tablet computer 50 and the mobile phone 10 perform collaborative display, the tablet computer 50 runs a document application, and displays an editing interface of the document application. When the user taps a text input box, the tablet computer 50 starts a process of a keyboard, and projects an interface of the keyboard onto the mobile phone 10 for display. In other words, a process is also started on the mobile phone 10, to display the interface of the keyboard that is projected by the tablet computer 50. It should be noted that the tablet computer 50 may use a heterogeneous screen projection manner, and the tablet computer 50 does not display the interface of the keyboard. In this way, when the user enters a letter or a text on the mobile phone 10, the mobile phone 10 synchronizes an operation of the user to the tablet computer 50, and the tablet computer 50 may display corresponding content in the text input box. In some examples, after the tablet computer 50 exits the document application, the tablet computer 50 closes a process of the document application, and keeps the process of the keyboard alive. In this case, the tablet computer 50 may continue to project the interface of the keyboard onto the mobile phone 10 for display. Subsequently, when the user starts a new application on the tablet computer 50, and the new application needs to call the keyboard, the tablet computer 50 may bind the previous keyboard process to a process of the new application. In this case, the user may continue to enter a letter, a text, or the like on the mobile phone 10, the mobile phone 10 synchronizes an operation of the user to the tablet computer 50, and the tablet computer 50 displays corresponding content in an editing box in the new application. In this way, a mode in which collaborative content on the mobile phone 10 is independent of an application running on the tablet computer 50, that is, a loose mode, is implemented.

It should be noted that another scenario in the foregoing collaborative mode may also be implemented by using a screen projection solution, or some functions thereof are implemented by using a screen projection solution. Details are not described herein.

For another example, as shown in FIG. 6q, the tablet computer 50 displays the video play interface 624. When the tablet computer 50 and the mobile phone 10 perform collaborative display, the tablet computer 50 may further draw more interfaces related to played content in the video play interface 624, and project these interfaces onto the mobile phone 10 for display. That is, the mobile phone 10 displays the interface 625. Alternatively, the tablet computer 50 may further draw an upper-level page of the video play interface 624, and project the upper-level page onto the mobile phone 10 for display, that is, the mobile phone 10 displays the interface 626 shown in FIG. 6r.

It should be noted that another scenario in the foregoing value-added mode may also be implemented by using a screen projection solution, or some functions thereof are implemented by using a screen projection solution. Details are not described herein.

For another example, as shown in FIG. 7a, the tablet computer 50 displays the interface 701. The interface 701 includes the video play interface 703 and the floating window 702 (or the floating bubble 705). When the tablet computer 50 and the mobile phone 10 perform collaborative display, the tablet computer 50 may notify the mobile phone 10 to start a process, and the tablet computer 50 projects an application interface in the floating window 702 or an application interface corresponding to the floating bubble 705 onto the mobile phone 10 for display. It should be noted that the tablet computer 50 may use a heterogeneous screen projection manner, and the tablet computer 50 no longer displays the application interface in the floating window 702 or the application interface corresponding to the floating bubble 705. As shown in FIG. 7b(1) and FIG. 7b(2), the tablet computer 50 displays the interface 707, and the mobile phone 10 displays the interface 708. For other content, refer to the foregoing content descriptions about FIG. 7a and FIG. 7b(1) and FIG. 7b(2). Details are not described herein again.

It should be noted that, for other implementations of the floating window in this specification, refer to the description herein, and no further description is provided.

In addition, another scenario in the foregoing extended mode and a scenario in another mode may also be implemented by using a screen projection solution, or some functions thereof are implemented by using a screen projection solution. Details are not described herein again.

It should be further noted that the screen projection solution may independently implement collaborative display of two or more terminals, or may be combined with another technical solution (for example, a fragment separation solution or an FA migration solution) to implement collaborative display of two or more terminals, or the like.

In some other embodiments, some solutions in the foregoing scenarios may alternatively be implemented by using an FA migration solution.

For example, in embodiments of this application, a page file of an application may include one or more feature ability (feature ability, FA) files. When the terminal A and the associated device B perform collaborative display, page element information and a page resource corresponding to a page to be separated to the associated device B for display may be sent to the associated device B in a form of an FA file.

FIG. 16 is a schematic diagram of a structure of a system according to another embodiment of this application. As shown in FIG. 16, an application A on the terminal A sends a collaborative display request to a transition application, and the transition application sends character string information, where the character string information is used to describe the FA file that includes the page element information and the page resource of the to-be-separated page. After receiving the character string information, the transition application on the associated device B downloads the FA file from an application market or an application server based on the character string information, and runs the FA file by using a runtime module on the associated device B, to implement page separation of the application A. The FA file may include only the page element information and the page resource.

In this embodiment of this application, optionally, one FA file may have a corresponding AA file, or may not have a corresponding AA file. This is not limited in this embodiment of this application.

The FA file may be packaged and released independently. The FA file usually has one or more of the following capabilities: installation-free, independent running without an application, cross-device UI migration, and cross-device binary migration.

The AA file is usually used to support running of the FA file. The AA file has features of multi-end deployment and distributed execution, and depends on only a system service. There is no dependency relationship between AA files.

In this embodiment, optionally, when the runtime module of the associated device B runs the FA file, more and more complex functions in the application A may be implemented by sharing the AA file on the terminal A.

For example, as shown in FIG. 6n-1 and FIG. 6n-2, the tablet computer 50 displays the interface 620 of a news application, and the document application may include two FAs: FA1 and FA2. FA1 corresponds to the interface 619, and FA2 corresponds to the interface 618. After the tablet computer 50 and the mobile phone 10 perform collaborative display, the transition application on the tablet computer 50 sends character string information to the transition application on the mobile phone 10. The character string information is used to describe an FA file that includes page element information and a page resource of the interface 618. After receiving the character string information, the transition application on the mobile phone 10 downloads the FA file from an application market or an application server based on the character string information, and runs the FA file by using the runtime module on the mobile phone 10. The mobile phone 10 displays the interface 622. The tablet computer 50 may adjust a layout of the FA, and display the interface 621.

It should be noted that, another scenario in the foregoing extended mode and a scenario in another mode may also be implemented by using an FA migration solution, or some functions thereof are implemented by using a migration solution. Details are not described herein again.

It should be further noted that the migration solution may independently implement collaborative display of two or more terminals, or may be combined with another technical solution (for example, a fragment separation solution, a screen projection solution, or the following distributed MVVM framework) to implement collaborative display of two or more terminals, or the like.

### Technical solution 2: screen splicing solution

Before collaborative display, the terminal A displays an interface A. When the terminal A and the associated device B perform collaborative display, the terminal A and the associated device B jointly display the interface A. When the terminal A and the associated device B perform collaborative display, it may be understood that a screen of the terminal A and a screen of the associated device B form a virtual large screen, used to display the interface A originally displayed by the terminal A.

The following describes in detail a process of determining the virtual large screen including the terminal A and the associated device B, performing image segmentation on the interface A, and separately displaying segmented images on the screens of the terminal A and the associated device B.

FIG. 17 is a block diagram of another software structure of a terminal A according to an embodiment of this application. For example, the software system of the terminal A is divided into four layers: an application layer, an application framework layer, a system interface/basic library layer, and an operating system kernel layer from top to bottom.

The application layer may include a series of application packages. For example, the application packages may include a gallery application, a document application, a browser application, a video application, a game application, a system setting application, a shopping application, a news application, an instant messaging application, a camera application, a memo application, a computer application, and the like.

The application framework layer (also referred to as a framework layer for short) may include a display service, a window manager, a content provider, a view system, a resource manager, a notification manager, and the like.

The display service includes a control module, an image segmentation module, a local display adapter, a screen access component, an image encoding/decoding module, and an image sending/receiving module. The screen access component includes a screen management module, a screen combination policy module, and a virtual display management module. Optionally, the display service may further include a parallel view service.

The control module is configured to implement an entrance of a collaborative display function. For example, an operation interface for enabling the collaborative display function is provided, and whether a condition for automatically enabling the collaborative display function is met is automatically detected. The image segmentation module is configured to implement image segmentation. The local display adapter is configured to enlarge a size of the local device. The screen access component is configured to implement screen information management and screen combination, and manage the image encoding/decoding module and the image sending/receiving module. The virtual display management module is configured to manage a mapping association between the virtual large screen and each terminal screen, that is, a correspondence between an identifier of collaborative display and an identifier of a screen (or a terminal) for collaborative display. Specific functions of the modules in the display service are described in detail below with reference to the embodiments, and are not described herein.

The window manager is configured to manage a window program. The window manager may obtain a screen size, determine whether there is a status bar, lock a screen, take a screenshot, and the like. The content provider is configured to store and obtain data and make the data accessible to the application. The data may include videos, images, audio, calls that are made and received, browsing history and bookmarks, a phone book, and the like. The notification manager enables the application to display notification information in a status bar, and may be configured to transfer a message of a notification type. The information may automatically disappear after a short stay without user interaction. For example, the notification manager may be a notification that appears in a form of a graph or a scroll bar text in a status bar at the top of the system, for example, a notification of an application running in the background, or may be a notification that appears in a form of a dialog window on a screen. For example, the status bar shows text information, a prompt tone is made, the electronic device vibrates, and an indicator flickers.

The operating system kernel is configured to provide basic functions such as resource management (for example, memory management) and device management (for example, discovering a surrounding terminal) of the terminal, and provide basic capabilities such as a thread and a process for an application.

It may be understood that the block diagram of the software structure of the terminal A shown in FIG. 17 is merely an example. The terminal A may have more or fewer software modules, or combine some software modules, or split some software modules. This is not limited in this embodiment of this application.

FIG. 18 is a block diagram of another software structure of an associated device B according to an embodiment of this application. For example, the software system of the associated device B is divided into four layers: an application layer, an application framework layer, a system interface/basic library layer, and an operating system kernel layer from top to bottom.

The application layer may include a series of application packages. For example, the application packages may include a gallery application, a document application, a browser application, a video application, a game application, a system setting application, a shopping application, a news application, an instant messaging application, a camera application, a memo application, a computer application, and the like.

The application framework layer (also referred to as a framework layer for short) may include a display service, a window manager, a content provider, a view system, a resource manager, a notification manager, and the like.

The display service includes a shell application, a screen access component, an image encoding/decoding module, and an image sending/receiving module. The screen access component includes a screen management module and a screen combination policy module. Specific functions of the modules in the display service are described in detail below with reference to the embodiments, and are not described herein.

The operating system kernel is configured to provide basic functions such as resource management (for example, memory management) and device management (for example, discovering a surrounding terminal) of the terminal, and provide basic capabilities such as a thread and a process for an application.

It should be noted that for content of other modules in FIG. 18, refer to descriptions of related content in FIG. 17. Details are not described herein again.

It may be understood that the block diagram of the software structure of the associated device B shown in FIG. 18 is merely an example. The associated device B may have more or fewer software modules, or combine some software modules, or split some software modules. This is not limited in this embodiment of this application.

It should be further noted that, in FIG. 17, the module included in the display service of the terminal A is described by using the terminal A as an initiator of collaborative display. In some other examples, the terminal A may alternatively be used as a receiver of collaborative display. In this case, the display service in the terminal A further includes the module in the display service in FIG. 18, or is combined with the module in the display service in FIG. 18.

Similarly, in FIG. 18, the module included in the display service of the associated device B is described by using the associated device B as a receiver of collaborative display. In some other examples, the associated device B may alternatively be used as an initiator for collaborative display. In this case, the display service in the associated device B further includes the module in the display service in FIG. 17, or is combined with the module in the display service in FIG. 17.

FIG. 19 is a flowchart of a method for collaborative display between a terminal A and an associated device B according to an embodiment of this application. The method includes the following steps.

S1901: The terminal A displays a first page.

The first page is an interface displayed by the terminal A before collaborative display. The interface displayed by the terminal A before collaborative display may be one page of one application, or may be a plurality of pages of one application, or may be a plurality of pages of a plurality of applications.

For example, the terminal A displays the interface 301 of the game application shown in (1) in FIG. 3a, or displays the interface 601 of the video application shown in FIG. 6a, or displays the interface 633 of the document application shown in FIG. 6d-1 and FIG. 6d-2, or displays the interface 611 of the memo application shown in FIG. 6l-1 and FIG. 6l-2.

For another example, when the terminal A supports a parallel view function, the terminal A may simultaneously display two or more pages of one application. For example, the terminal A displays the interface 618 shown in FIG. 6n-1 and FIG. 6n-2, or displays the interface 627 shown in FIG. 6p-1 to FIG. 6p-4.

For another example, when the terminal A supports display of a floating window, the terminal A may simultaneously display a full-screen application interface and a floating window. For example, the terminal A displays the interface 701 shown in FIG. 7a.

For another example, when the terminal A supports a split-screen function, the terminal A may simultaneously display a plurality of pages of a plurality of applications. For example, the terminal A displays the interface 713 shown in FIG. 7e. The interface 713 includes a chat interface of an instant messaging application and a computing interface of a calculator application.

S1902: When detecting a page separation trigger event, the terminal A determines screen information of a combined large screen and a segmentation ratio based on screen information of the terminal A and the associated device B.

The page separation trigger event includes: An associated device of the terminal A is detected, and the associated device meets the foregoing preset condition for collaborative display. Alternatively, it is detected that the user performs, on the terminal A, an operation of triggering a collaborative display function of the terminal A.

The preset condition for collaborative display includes but is not limited to any one of the following condition 1 to condition 3. Condition 1: A distance between the associated device and the terminal A is less than or equal to a threshold (for example, 20 cm). Condition 2: A distance between the associated device and the terminal A is less than or equal to a threshold, and the distance between the associated device and the terminal A is decreasing, that is, the associated device approaches the terminal A. Condition 3: The associated device collides with the terminal A. Further, the page separation trigger event may alternatively be detecting that the associated device approaches the terminal A in a specific direction (for example, from the left side of the terminal A, from the right side of the terminal A, from the top of the terminal A, or from the bottom of the terminal A). For other content, refer to the related content in the solution 1 in the foregoing (1). Details are not described herein again.

For the operation performed by the user on the terminal A for triggering the collaborative display function of the terminal A, refer to the descriptions of the related content in the solution 1 and the solution 2 in the foregoing (1). Details are not described herein again.

The segmentation ratio includes, for example, a part that is of the associated device B and that participates in forming the combined large screen, and includes a proportion of a width and a proportion of a height relative to a proportion of the combined large screen. The segmentation ratio also reflects a ratio of a size of an image displayed by the associated device B after collaborative display to a size of an image displayed on the large screen after combination. Therefore, the image displayed by the associated device B may be subsequently determined based on the segmentation ratio and the image displayed on the combined large screen. The segmentation ratio may also include a part that is of the terminal A and that participates in forming the combined large screen, and includes a proportion of a width and a proportion of a height relative to the proportion of the combined large screen.

For example, description is provided herein with reference to the software module of the terminal A shown in FIG. 17. The display service at the application framework layer of the terminal A is specifically configured to control content displayed by the terminal A, and implement a collaborative display function of the terminal A and another terminal. As shown in FIG. 20, in a possible implementation, step S1902 may include the following steps S2001 to S2003.

S2001: After detecting a page separation trigger event, a control module in the display service requests a screen management module for performing a collaborative display function between the terminal A and the associated device B.

The request carries an identifier of the terminal A and an identifier of the associated device B. For example, the control module calls a function of bindscreen (displayID, screen[screen1, screen2, ...]). This function indicates to combine screens such as screen1 and screen2 into a large screen, and indicates an identifier displayID of the current collaborative display. In other words, displayID has a mapping relationship with screen1, screen2, and the like.

S2002: The screen management module queries the screen information of the terminal A and the associated device B, and sends the screen information to a screen combination policy module, so that the screen combination policy module combines the screen of the terminal A and the screen of the associated device B.

Specifically, the screen management module separately queries the screen information of the terminal A and the screen information of the associated device B based on the identifier of the terminal A and the identifier of the associated device B that are carried in the request. The screen information includes but is not limited to a physical size of the screen, display resolution of the screen, and pixel density of the screen, that is, pixels per inch (pixels per inch, PPI).

For example, the screen combination policy module may combine the screens of the terminal A and the associated device B with reference to the following policy, to obtain screen information of the combined large screen.

Policy 1: A terminal (for example, the terminal A) that detects the page separation trigger event is a left screen (or a right screen, or an upper screen, or a lower screen) in the combined large screen. Alternatively, a left screen (or a right screen, or an upper screen, or a lower screen) in the combined large screen is determined based on a relative location between collaborative display terminals. For example, if the terminal A is located on the left of the associated device, it is determined that the terminal A is the left screen in the combined large screen, and the associated device B is the right screen in the combined large screen.

Policy 2: Splicing is performed based on two closest sides of screens in the collaborative display terminals. If sizes of the collaborative display terminals are the same or roughly the same, long sides of the collaborative display terminals are spliced.

Policy 3: A shortest side in spliced sides is used as a size of one side of the combined large screen. A sum of non-spliced sides is used as a size of another side of the combined large screen.

Policy 4: A smallest PPI in the collaborative display terminals is used as a PPI of the combined large screen.

For example, as shown in (1) in FIG. 21, the tablet computer 50 (that is, the terminal A) and the mobile phone 70 (that is, the associated device B) perform collaborative display, and the tablet computer 50 is located on the left of the mobile phone 70. In this case, the screen of the tablet computer 50 is the left screen in the combined large screen, and the mobile phone 70 is the right screen in the combined large screen. In addition, because a short side of the tablet computer 50 (for example, a height of the tablet computer 50) is close to a long side of the mobile phone 70 (for example, a height of the mobile phone 70), the short side of the tablet computer 50 is selected to be spliced with the long side of the mobile phone 70. Then, a shortest side (for example, the long side of the mobile phone 70) in the short side of the tablet computer 50 and the long side of the mobile phone 70 is used as a size of a side of the combined large screen. A sum of the long side of the tablet computer 50 and the short side of the mobile phone 70 is used as a size of another side of the combined large screen. As shown in (2) in FIG. 21, filling parts in the screen of the tablet computer 50 and the screen of the mobile phone 70 form a display area of the combined large screen.

For another example, as shown in (1) in FIG. 22, the user triggers, on the mobile phone 10, the mobile phone 10 (that is, the terminal A) and the mobile phone 70 (that is, the associated device B) to perform collaborative display. In this case, the screen of the mobile phone 10 is the left screen of the combined large screen, and the mobile phone 70 is the right screen of the combined large screen. In addition, because widths and heights of the mobile phone 10 and the mobile phone 70 are the same or roughly the same, the long sides of the mobile phone 10 and the mobile phone 70 are selected for splicing. Then, the height of the mobile phone 10 is used as the height of the combined large screen, and a sum of the width of the mobile phone 10 and the width of the mobile phone 70 is used as the width of the combined large screen. As shown in (2) in FIG. 22, filling parts in the screen of the mobile phone 10 and the screen of the mobile phone 70 form a display area of the combined large screen.

It should be noted that the policy 1 to the policy 4 are an example of determining the screen information of the combined large screen. In another example, another policy may be used to determine the screen information of the combined large screen. A specific policy for screen combination is not specifically limited in this embodiment of this application.

Further, the screen combination policy module determines the segmentation ratio based on a ratio of a size of a part that is of the associated device B and that forms the combined large screen to a size of the combined large screen. For example, in the foregoing example of the tablet computer 50 and the mobile phone 70, the width of the mobile phone 70 for forming the combined large screen is a, and the width of the combined large screen is 4a. In this case, it is determined that a segmentation ratio of the width corresponding to the mobile phone 70 is one quarter. If the height of the mobile phone 70 for forming the combined large screen is the same as the height of the combined large screen, it is determined that a segmentation ratio of the height corresponding to the mobile phone 70 is 100%. For another example, in the foregoing example of the mobile phone 10 and the mobile phone 70, it is determined that a segmentation ratio of the width corresponding to the mobile phone 70 is one half, and a segmentation ratio of the height corresponding to the mobile phone 70 is 100%.

S2003: The screen combination policy module returns the screen information of the combined large screen and the segmentation ratio to the screen management module.

The screen information of the combined large screen includes but is not limited to a size of the screen, a PPI of the screen, resolution of the screen, and the like.

S1903: The terminal A draws a second page based on the screen information of the combined large screen, and determines a third page based on the second page and the segmentation ratio.

The second page is a page currently displayed by the terminal A and drawn based on the screen information of the combined large screen (the size of the screen, the PPI of the screen, and the like). The second page is an enlarged first page. Then, the third page is determined based on the second page and the segmentation ratio, that is, the third page is the image displayed by the associated device B.

It should be noted that the second page is the enlarged first page. When the terminal A displays the second page, the user can view some content of the second page on the terminal A, and the some content displayed on the terminal A may be considered as a first part of the first page. Content that is of the second page and that is not displayed on the terminal A may be considered as a second part of the first page.

For example, description continues to be provided with reference to the software module of the terminal A shown in FIG. 17. Still as shown in FIG. 20, in a possible implementation, step S1903 may include the following step S2004 to step S2006.

S2004: The screen management module draws the second page based on the screen information of the combined large screen.

For example, the screen management module calls a createVirtualDisplay() method to create a new VirtualDisplay (virtual display), where screen information of the VirtualDisplay is the screen information of the combined large screen. The screen management module draws the second page by using VirtualDisplay. It can be learned that a size of the second page is the size of the combined large screen, and resolution of the second page corresponds to the PPI of the large screen. In other words, it is equivalent to enlarging a page originally displayed by the terminal A.

S2005: The screen management module sends the second page and the segmentation ratio to the image segmentation module.

S2006: The image segmentation module obtains the third page based on the second page and the segmentation ratio.

In a specific implementation, the image segmentation module may implement image segmentation based on the segmentation ratio by controlling an area that is in the second page and that participates in combination, to obtain the third page generated after segmentation. In other words, content displayed in the third page is some content in the first page, that is, the second part of the first page.

S1904: The terminal A displays the second page, and sends information about the third page to the associated device B, and the associated device B displays the third page.

For example, description continues to be provided with reference to the software module of the terminal A shown in FIG. 17. Still as shown in FIG. 20, step S1903 specifically includes the following step S2007a, step S2007b, and step S2007.

S2007a: The screen management module adjusts a local display size by using a local display adapter, and displays the second page.

It should be noted that when displaying the second page, the terminal A needs to call a local display (Localdisplay) size. The size of the second page herein is the size of the combined large screen, and is greater than a display size of the terminal A. Therefore, to enable the terminal A to display the second page, the local display size of the terminal A first needs to be adjusted to the size of the combined large screen. Then, the terminal A displays the second page. It should be noted that the size of the second page is greater than the actual screen of the terminal A. Therefore, the terminal A can display some content in the second page. Content of the other part of the second page (that is, content of the third page) is displayed on the associated device B. In this way, the first page originally displayed by the terminal A is separated into the second page and the third page.

S2007b: The screen management module encodes the third page by using the image encoding/decoding module.

S2008: The image encoding/decoding module sends the encoded third page to the associated device B by using the image sending/receiving module.

It should be noted that step S2007b may be performed before or simultaneously with step S2007a. In other words, an execution sequence of step S2007a and step S2007b is not limited in this embodiment of this application.

It should be further noted that, after detecting the page separation trigger event, the control module further notifies the associated device B to perform collaborative display, and the associated device B starts the shell application, to display a page displayed on the associated device B when the page is separated subsequently. Subsequently, after the associated device B receives the encoded third page sent by the terminal A, the shell application of the associated device B calls the image encoding/decoding module to perform decoding, and displays the third page.

The following provides description with reference to a specific scenario.

For example, collaborative display performed by the tablet computer 50 and the mobile phone 10 shown in FIG. 6a is used for description. As shown in FIG. 23, before collaborative display, the tablet computer 50 displays an interface 601, and the interface 601 is the first page. When the tablet computer 50 and the mobile phone 10 perform collaborative display, the tablet computer 50 enlarges the first page to the second page, and the tablet computer 50 displays the second page. As shown in FIG. 23, the tablet computer 50 displays an interface 603. It can be learned that because a size of the second page is greater than a screen size of the tablet computer 50, the tablet computer 50 cannot completely display the second page, that is, content on the left side of the second page is not displayed. The tablet computer 50 obtains the third page (that is, content that is not displayed by the tablet computer 50) from the second page through segmentation, and sends the third page to the mobile phone 10. The mobile phone 10 displays the third page, that is, the mobile phone 10 displays an interface 602.

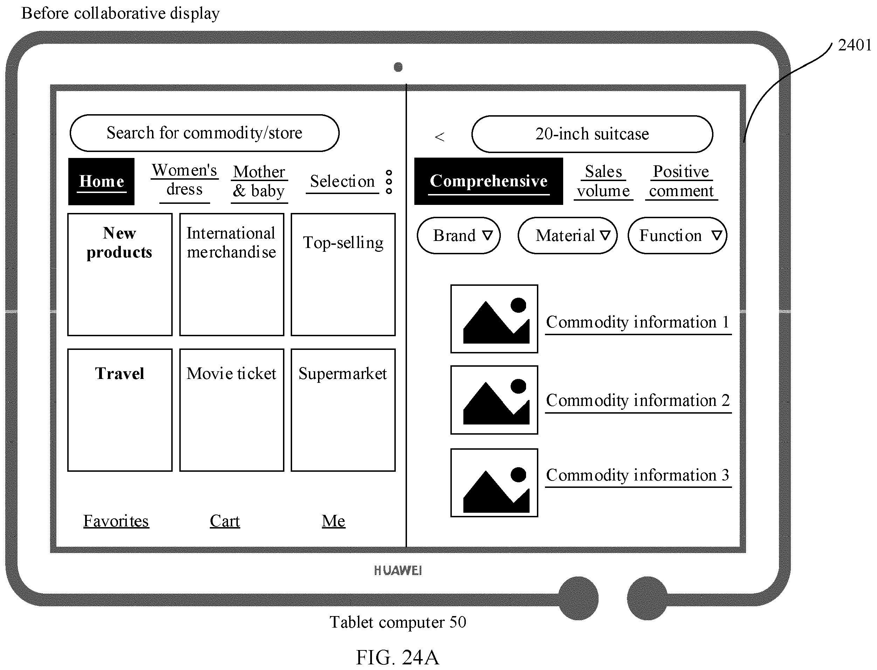

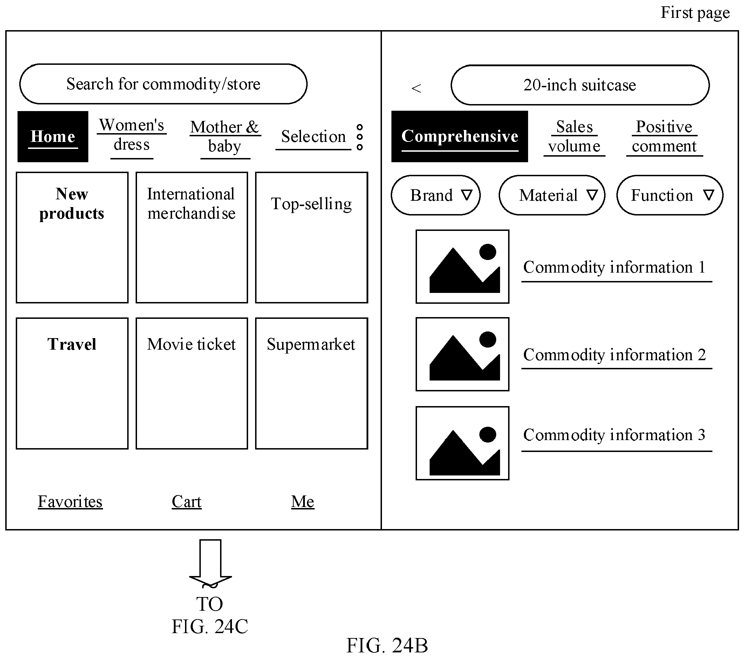

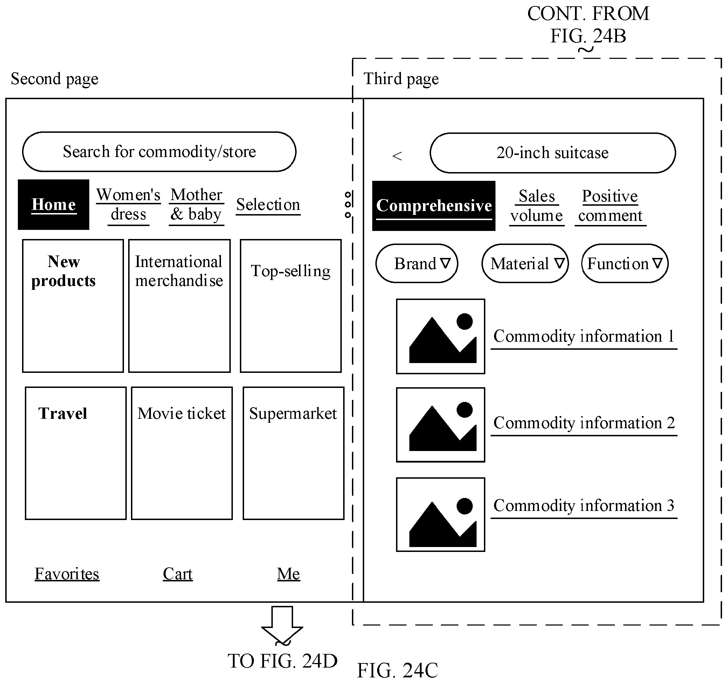

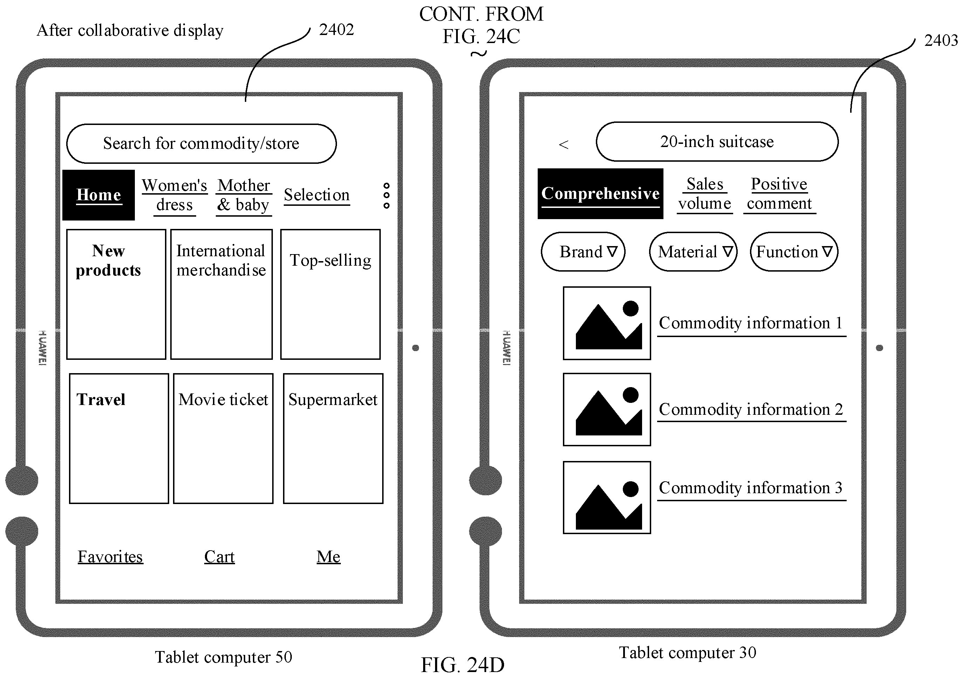

For another example, if the terminal A supports a parallel view function, the terminal A can simultaneously display two or more pages of one application on the screen. Alternatively, if the terminal A supports a split-screen function, the terminal A can simultaneously display pages of two or more applications on the screen. In this case, when the terminal A performs collaborative display with another terminal, each terminal may display one of the pages. As shown in FIG. 24A to FIG. 24D, before collaborative display, the tablet computer 50 supports a parallel view, that is, can simultaneously display two or more pages of one application on the screen, for example, display an interface 2401, where the interface 2401 is the first page. When the tablet computer 50 and the tablet computer 30 perform collaborative display, the tablet computer 50 enlarges the first page to the second page, and the tablet computer 50 displays the second page. The tablet computer 50 displays an interface 2402. It can be learned that because a size of the second page is greater than a screen size of the tablet computer 50, the tablet computer 50 cannot completely display the second page, that is, content on the left side of the second page is not displayed. The tablet computer 50 obtains the third page (that is, content that is not displayed by the tablet computer 50) from the second page through segmentation, and sends the third page to the tablet computer 30. The tablet computer 30 displays the third page, that is, the tablet computer 30 displays an interface 2403.

In some other embodiments of this application, after it is determined that the collaborative display terminals are combined into the large screen, the terminal A may display two or more pages of the application on the combined large screen based on the size of the combined large screen. In an example, an application running on the terminal A enters a parallel view, and displays two or more pages that are of the application and that have a hierarchical relationship.

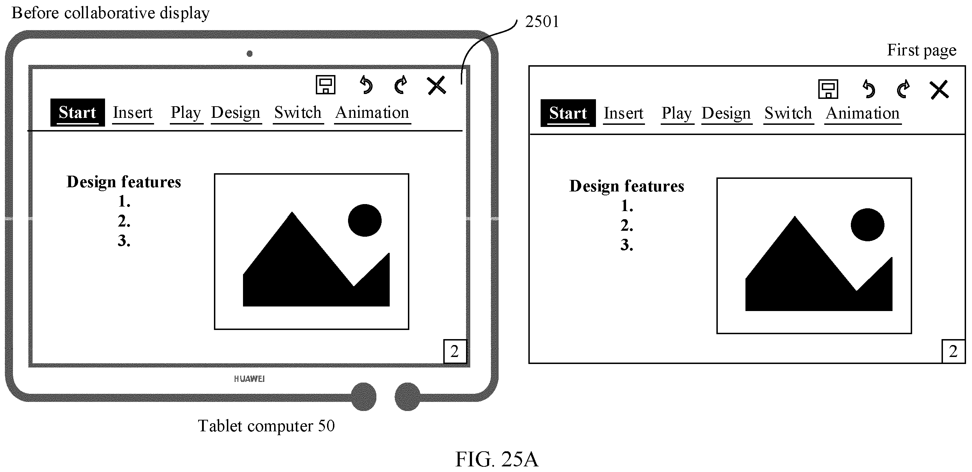

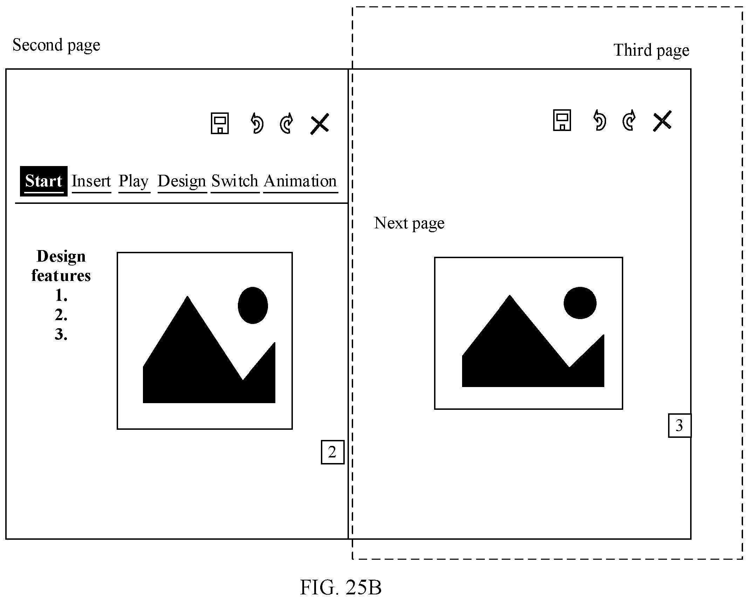

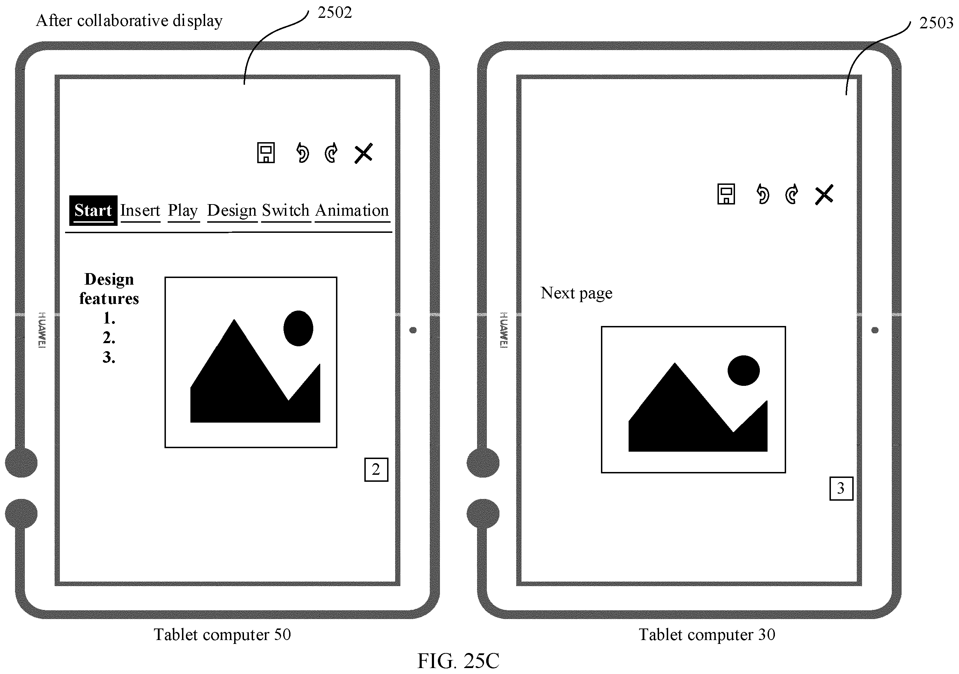

For example, as shown in FIG. 25A to FIG. 25C, before collaborative display, the tablet computer 50 displays an editing interface 2501 of a document application. When the tablet computer 50 and the tablet computer 30 perform collaborative display, the tablet computer 30 is located on the right of the tablet computer 50. In this case, the tablet computer 50 determines that the screen of the tablet computer 50 is located on the left side of the combined large screen, and the screen of the tablet computer 30 is located on the right side of the combined large screen. When the document application supports the parallel view function, because the size of the combined large screen is increased to meet a size requirement for entering the parallel view, the document application automatically enters the parallel view function, that is, the second page drawn by the tablet computer 50 by using the combined large screen includes two pages of the document application, for example, the editing interface 2501 of the document application currently displayed by the tablet computer 50 and a next-level page of the current page. Then, the tablet computer 50 displays the second page, and the tablet computer 50 displays an interface 2502. It can be learned that because a size of the second page is greater than a screen size of the tablet computer 50, the tablet computer 50 cannot completely display the second page, that is, a page on the right side of the second page is not displayed. The tablet computer 50 obtains the third page (that is, content that is not displayed by the tablet computer 50) from the second page through segmentation, and sends the third page to the tablet computer 30. The tablet computer 30 displays the third page, that is, the tablet computer 30 displays an interface 2403, that is, displays the page on the right side of the second page.

In some other embodiments of this application, an interface of an application is displayed in full screen on the terminal A, and one or more floating windows (or floating bubbles) are displayed. When the terminal A and the associated device B perform collaborative display, the terminal A displays the full-screen interface of the application, and the associated device B displays a full-screen interface of an application corresponding to the one or more floating windows (or floating bubbles).

For example, as shown in FIG. 7a, the tablet computer 50 (that is, the terminal A) displays the play interface 701 of a video application, and a floating window or a floating bubble corresponding to a chat interface of an instant messaging application, that is, a first page. In this case, after the tablet computer 50 and the mobile phone 10 perform collaborative display, the screens of the tablet computer 50 and the mobile phone 10 are combined into a large screen, and the second page may be drawn based on a size of the combined large screen. The second page is a split-screen interface, that is, includes the play interface 701 of the video application and the chat interface of the instant messaging application. Then, the terminal A displays the second page. Because a size of the second page is greater than a screen size of the tablet computer 50, the tablet computer 50 cannot completely display the second page, and displays only the video play interface of the video application. The chat interface (that is, the third page) of the instant messaging application is sent to the mobile phone 10, and is displayed on the mobile phone 10. For example, as shown in FIG. 7b(1) and FIG. 7b(2), the tablet computer 50 displays the interface 707, and the mobile phone 10 displays the interface 708.

Similar methods may be used for the foregoing collaborative display modes (such as the enlarged mode, the replicated mode, the collaborative mode, the separated mode, the extended mode, and the combined mode), and details are not described one by one.

In some other embodiments, when the terminal A detects a page combination trigger condition, the terminal A stops collaborative display with the associated device B. The page restoration (also referred to as page combination) trigger event includes: detecting that the user performs an operation of exiting the collaborative display function on the terminal A, or detecting that the associated device B does not meet the preset condition for collaborative display, or the like. For specific content, refer to the related content in the method 1 to the method 5 in the foregoing (3). Details are not described herein again.

For example, description is still provided with reference to the software block diagram of the terminal A shown in FIG. 17. After detecting the page combination trigger condition, the control module calls an unbind (displayID) function to notify the screen management module to terminate the current collaborative display of the terminal A and the associated device B. The screen management module terminates the current collaborative display, and notifies the local display adapter to restore the local display size to an original size, that is, the terminal A independently displays a corresponding interface. Optionally, after receiving a notification for terminating the current collaborative display of the terminal A and the associated device B, the screen management module queries, based on displayID, an identifier of the associated device B for collaborative display, and sends an indication for terminating the current collaborative display to the associated device B. After receiving the indication sent by the terminal A for terminating the current collaborative display, the associated device B closes the shell application corresponding to the current collaborative display, and terminates the current collaborative display. In another example, the terminal A may not need to send an indication for terminating the current collaborative display to the associated device B. In this case, when the associated device B does not receive, within preset duration, collaborative display interface information sent by the terminal A, the collaborative display may be automatically terminated.

In some other examples, when detecting that the user indicates to exit the collaborative display condition, or detecting that the associated device B does not meet the collaborative display condition, the associated device B may also automatically close the shell application of the current collaborative display, and notify the terminal A to disable the current collaborative display function. After receiving the notification of disabling the current collaborative display function, the terminal A restores the local display size to an original size, that is, the terminal A independently displays a corresponding interface.

Technical solution 3: distributed model-view-view model (Model-View-ViewModel, MVVM) framework

An embodiment of this application further provides a distributed MVVM framework, which is applied to a scenario in which a plurality of terminals (for example, a terminal A and an associated device B) perform collaborative display. According to the distributed MVVM framework, after application data on any one of a plurality of terminals that perform collaborative display changes, data related to the application data on another terminal can be automatically updated, and interface content associated with the application data can be automatically refreshed.

For example, when a user presents a solution, and needs to present a document on a terminal of the user on a public terminal or a terminal of another user, the user may trigger a collaborative display function of the terminal of the user and the public terminal or the terminal of the another user. As shown in FIG. 6s-1 and FIG. 6s-2, when the user triggers a tablet computer 50 and a television 60 to perform collaborative display, a document application running on the tablet computer 50 launches a document application on the television 60, and the television 60 displays an interface of the document application. When the user continues to modify a document on the tablet computer 50, document content on the television 60 is also automatically updated, so that different users share the document by using different terminals.

For another example, in a cycling or running scenario, when it is inconvenient for the user to frequently take out a mobile phone to view navigation information, collaborative display between the mobile phone and a watch may be triggered. In this way, the user may view the navigation information on the watch by raising the hand. For detailed content, refer to the foregoing content description of FIG. 6c-2A and FIG. 6c-2B.

For another example, different users may perform ordering at the same time, and may trigger collaborative display functions of respective terminals. For detailed content, refer to the foregoing content description of FIG. 6b-2A and FIG. 6b-2B.

The foregoing MVVM architecture is a software architecture mode. The MVVM architecture separates development of a graphical user interface (Graphical User Interface, GUI) from development of service logic or back-end logic (a data model). As shown in FIG. 26, an application based on the MVVM architecture is abstracted into a model (model, that is, data, also referred to as background data), a view (view, that is, UI control), and a ViewModel. An application developer can define the ViewModel and use the ViewModel to bind each control in the UI control to data. In this way, when the UI control changes, the data is automatically updated accordingly. When the data changes due to a service logic update or the like, the UI control is automatically updated accordingly. A process of automatic update of the data and the UI control does not require the user to write complex and repeated program code. This reduces development costs of the application developer. For example, the JetPack tool provided by Android^{®} can be used to assist the application developer in developing an application in the MVVM architecture and implement bidirectional binding of a UI control and data of the application in the MVVM architecture.

It should be noted that the existing JetPack tool is designed based on an application of a single device. In other words, an application developed by the application developer by using the JetPack tool runs on a single device, and when the application in the MVVM architecture runs on the single device, the JetPack tool implements only bidirectional binding of a UI control and data on the single device. In other words, the existing JetPack tool cannot implement cross-device bidirectional binding of a UI control and data.

In some technical solutions, when developing an application A (for example, a navigation application, a document application, or an ordering application), in addition to developing a UI interface of the application A, background service logic code, and the like according to a normal development process, the application developer further needs to develop related code for cross-device bidirectional binding of a UI control and data. For example, the application developer further needs to develop related program code of a data assembly module, a data parsing module, and a data transmission module for the application A. Then, the related program code of the data assembly module, the data parsing module, and the data transmission module, the UI control, the background service logic code, and the like are packaged into an installation package of the application A, and the installation package is released to an application market. After the terminal A and the associated device B download and install the installation package of the application A from the application market, cross-device bidirectional binding of a UI control and data during collaborative display may be implemented.

For example, FIG. 27 is a schematic block diagram of software modules of a terminal A and an associated device B. An application layer of the terminal A includes an application A, and the application A includes a data assembly module, a data parsing module, and a data transmission module. Certainly, the application A further includes another module, which is not shown in the figure. An application framework layer of the terminal A includes an MVVM module, and the MVVM module includes a view, view data, and data. Certainly, the application framework layer of the terminal A further includes another module, which is not shown in the figure. The terminal A may further include a system interface/basic library, an operating system kernel, and the like, which are not shown in the figure. A software framework of the associated device B is similar, and details are not described again.

When the terminal A and the associated device B collaboratively display an interface of the application A, and data of the application A on the terminal A changes, referring to an arrow shown by "1" in the figure, the MVVM module of the terminal A may enable the application A to automatically refresh a UI control bound to the data. In addition, referring to an arrow shown by "2" in the figure, the data assembly module of the application A assembles (including processing such as compression and encoding) changed data, and sends assembled data to the associated device B by using the data transmission module. After receiving the assembled data, the application A of the associated device B performs parsing by using the data parsing module, updates local data corresponding to the parsed data, and then automatically updates, by using the MVVM module, a UI control bound to the local data.

When the UI control of the application A on the terminal A changes, the MVVM module can automatically update data bound to the UI control. Then, a change of the data on the terminal A triggers automatic update of data and a UI control on the associated device B. For a specific update process, refer to the description in the previous paragraph, and details are not described herein again. It can be learned that, when the data/UI control on the terminal A changes, a function of automatically changing the data and the UI control on the associated device B is triggered. Correspondingly, when the data/UI control on the associated device B changes, a function of automatically changing the data and the UI control on the terminal A is also triggered. In this way, cross-device bidirectional binding of a UI control and data during collaborative display between the terminal A and the associated device B is implemented.

It may be noted that, when the foregoing method is used to implement cross-device binding of data and a UI control, the application developer needs to develop a data assembly module, a data parsing module, and a data transmission module for each application. The following problems exist: First, the application developer needs to have a communication programming capability to develop the data assembly module, the data parsing module, the data transmission module, and the like, and development is relatively difficult for the application developer. Second, a data assembly module, a data parsing module, a data transmission module, and the like of each application need to be repeatedly developed for each application, and a running device (a terminal running an application, such as the terminal A or the associated device B) includes a large amount of repeated program code.

Therefore, an embodiment of this application further provides an implementation solution of a distributed MVVM framework. In this solution, a distributed data object is used to replace a common data object in an MVVM framework of a single device. In this way, the distributed data object can maintain content synchronization of a same distributed data object between a plurality of collaborative display terminals in real time based on a distributed soft bus technology. The same distributed data object means that identifiers of distributed data objects are the same. The distributed soft bus provides a unified distributed communication capability for interconnection and interworking between the plurality of collaborative display terminals, and creates a condition for non-sense discovery and zero-wait transmission between the terminals. In this way, the application developer only needs to focus on implementation of service logic, and does not need to pay attention to a networking mode and an underlying protocol.

For example, when the terminal A runs the application A, a UI control 1 in an interface is bound to distributed data 1. The associated device B also runs the application A, and a UI control 2 in an interface is bound to distributed data 2. An identifier of the distributed data 2 is the same as that of the distributed data 1. In this case, when the distributed data 1 on the terminal A changes, based on the distributed MVVM framework, automatic refresh of the UI control 1 bound to the distributed data 1 on the terminal A can be implemented. In addition, when the distributed data 1 on the terminal A changes, the distributed data 2 on the associated device B also changes accordingly based on the distributed soft bus technology. Then, based on the distributed MVVM framework, automatic refresh of the UI control 2 bound to the distributed data 2 on the associated device B can be implemented. In conclusion, the distributed data object and distributed soft bus technology can be used to implement cross-device bidirectional binding of a UI control and data. It can be learned that the application developer does not need to develop program code of a data assembly module, a data parsing module, a data transmission module, and the like. The solution provided in embodiments of this application reduces development difficulty of the application developer, reduces development workload, and reduces repeated program code in the running device.

The following describes a distributed MVVM framework provided in embodiments of this application from two aspects: an application development process and an application running process.

### (1) Application development process

In some examples, an embodiment of this application provides a tool of a distributed MVVM framework. For example, the tool may be integrated into an IDE tool in a form of a Lib library. Alternatively, a developer imports the tool of the distributed MVVM framework provided in this embodiment of this application into an IDE tool by adding a dependency library. Then, the developer may call a capability provided by the distributed MVVM framework, to develop an application. It should be noted that the tool of the distributed MVVM framework provided in this embodiment of this application includes a module used on a development device, and the module used on the development device is also referred to as a distributed MVVM framework tool on a development device side.

Specifically, according to a design of an interface in an application A, the application developer may define specific ViewModel for the specific interface by using an IDE. The specific ViewModel is used to provide data for the specific interface, includes data processing service logic, communicates with a model, and the like. Then, the developer declares, in an interface description file, a binding relationship between a specified UI control in the specific interface and the specific ViewModel. In addition, the developer defines data (that is, a model) bound to the specific ViewModel, and a data base class data object (DataObject) provided by the distributed MVVM framework is inherited, to define a distributed data object. The distributed data object has a binding relationship with the specific ViewModel, and further has a binding relationship with the specified UI control.

The following Table 2 shows an example of code at a model layer in a navigation application that is written by the application developer.

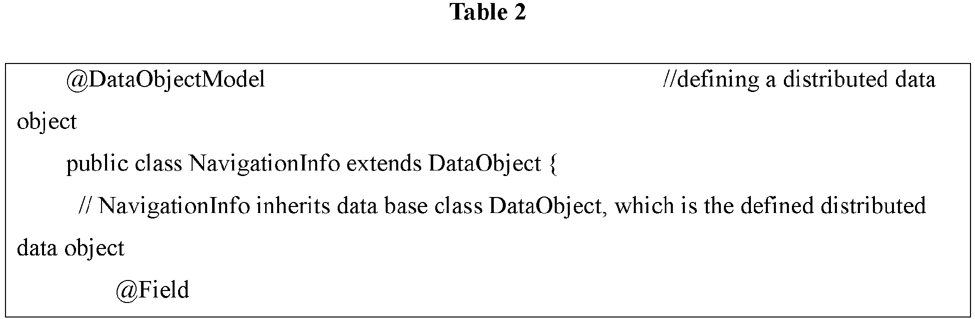

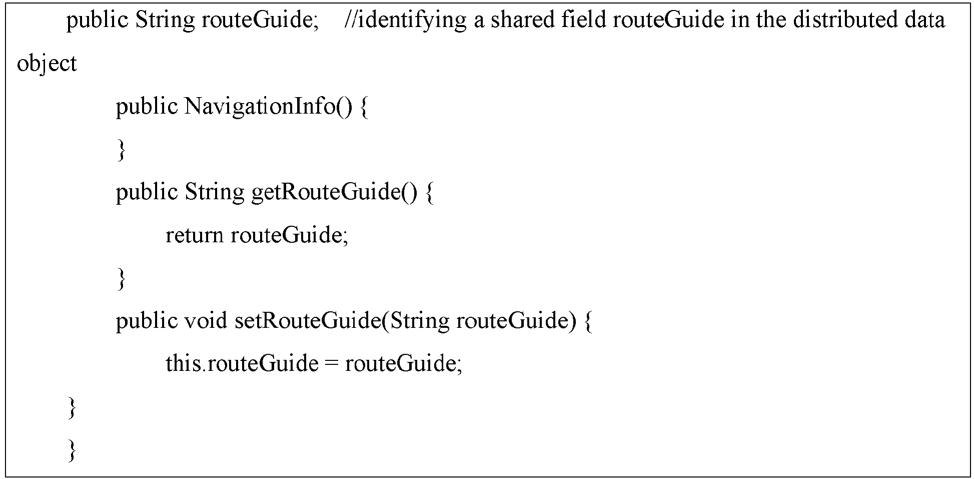

As shown in Table 2, the application developer may use the annotation "@Field" to identify the shared field in the distributed data object. The shared field means that when content of the shared field in the distributed data object changes, a shared field corresponding to the same distributed data object in another collaborative display terminal is updated based on a distributed soft bus technology, to implement content synchronization.

Then, the IDE compiles each UI interface of the application A developed by the application developer, packs the generated interface description file, service logic code, resource file, and the like into an installation package to obtain the installation package of the application A, and releases the installation package in an application market.

It can be learned from the foregoing that, compared with an existing process in which an application developer develops an application on a single device, in the development method provided in this embodiment of this application, only a defined common data object needs to be replaced with the distributed data object, and the shared field in the distributed data object needs to be identified. It is unnecessary to develop a data assembly module, a data parsing module, a data transmission module, and the like for the application separately. This reduces development difficulty for the application developer, reduces development workload, and helps the developer focus on service development.

### (2) Application running phase

A running device (that is, a terminal that runs the application A, for example, a terminal A or an associated device B) downloads the installation package of the application from the application market and installs the installation package. Then, when running the application A, the terminal A may implement cross-device bidirectional binding of a UI control and data by using the distributed MVVM framework provided in this embodiment of this application. It should be noted that the tool of the distributed MVVM framework provided in this embodiment of this application includes a module used on the running device, and the module used on the running device is also referred to as a distributed MVVM framework tool on a running device side.

FIG. 28 is a block diagram of software structures of a terminal A and an associated device B according to an embodiment of this application.

In some embodiments, a software system of the terminal A separately includes an application layer, an application framework layer, a data management framework layer, and remote procedure call (RPC) from top to bottom. The terminal A further includes a system interface/basic library layer and an operating system kernel layer, which are not shown in the figure. A software framework of the associated device B is similar to that of the terminal A, and details are not described herein again.

The application layer may include a series of application packages. For example, the application packages may include a navigation application, a document application, an ordering application, and the like.

The application framework layer may include an MVVM module, that is, a distributed MVVM module, which may be used by the terminal A to support a function of cross-device bidirectional binding of a UI control and data.

The data management framework layer depends on a lightweight memory database to provide an application with addition, deletion, modification, searching, and subscription management capabilities for a memory data object (including a distributed data object), and depends on RPC communication to provide a cross-device collaboration capability for the memory data object. The data management framework layer includes object management, a storage engine, and a collaboration engine. The object management provides interfaces for management such as creation, obtaining, deletion, and subscription of a data object for an application, and is responsible for completing serialization or deserialization of the data object. The storage engine is responsible for storing and managing serialized data and organizing data in order by using a memory database, to provide a quick data query capability. The collaboration engine is responsible for establishing a trusted communication channel between devices to support collaborative processing of a memory object between the devices, including subscription, synchronization, and concurrency of a data object.

It may be understood that the block diagram of the software structure of the terminal A shown in FIG. 28 is merely an example. The terminal A may have more or fewer software modules, or combine some software modules, or split some software modules. This is not limited in this embodiment of this application.

FIG. 29A and FIG. 29B are a flowchart of a method for synchronizing content of a distributed data object when a terminal A and an associated device B perform collaborative display according to an embodiment of this application. The method includes the following steps.

S3101: When an application A on the terminal A is started, the application A on the terminal A calls an object management module in a data management framework to create a distributed data object 1.

S3102: The object management module of the terminal A calls a storage engine module to store the distributed data object 1 created by the application A.

In this solution, a distributed data object is used to replace a common data object in an MVVM framework of a single device. In this way, the distributed data object can maintain content synchronization of a same distributed data object between a plurality of collaborative display terminals in real time based on a distributed soft bus technology.

In some other embodiments, the solution provided in this embodiment of this application further includes the following steps.

S3103: When the terminal A detects that collaborative display functions of the terminal A and the associated device B are enabled, the application A of the terminal A calls an application A of the associated device B.

In an example not according to the invention, if the application A has been installed on the associated device B, the associated device B starts the application A. According to the invention no application A is installed on the associated device B, a collaborative display request sent by the terminal A to the associated device B carries an installation package (for example, a lightweight installation package) of the application A, and the associated device B installs the installation package of the application A and then starts the application A. Alternatively, the associated device B automatically downloads the installation package of the application A from an application market, and installs and starts the application A.

In some embodiments, after starting the application A, the associated device B queries content of the distributed data object 1 from the terminal A. Optionally, the associated device B further subscribes to the distributed data object 1 from the terminal A. In an embodiment, this step includes step S3104 to step S3113.

S3104: After the associated device B starts the application A, the application A on the associated device B requests the content of the distributed data object 1 from an object management module in a data management framework. Optionally, the associated device B may further subscribe to the distributed data object 1 from the terminal A.

S3105: The object management module of the associated device B sends a request for obtaining the distributed data object 1 at a remote end and a request for subscribing to the distributed data object 1 at the remote end to a collaboration engine module.

S3106: The collaboration engine module of the associated device B sends a request to a collaboration engine module of the terminal A through RPC, to obtain the content of the distributed data object 1. Optionally, the sent request may be further used by the associated device B to subscribe to the distributed data object 1 at the remote end.

S3107: The collaboration engine module of the terminal A requests to obtain the content of the distributed data object 1 from the object management module.

S3108: The object management module of the terminal A returns the content of the distributed data object 1 to the collaboration engine module.

S3109: The collaboration engine module of the terminal A stores the subscription of the associated device B to the distributed data object 1.

In some examples, this step is performed after the associated device B requests to subscribe to the distributed data object 1 from the terminal A. In some other examples, if the associated device does not request to subscribe to the distributed data object 1 from the terminal A, this step may not be performed.

S3110: The collaboration engine module of the terminal A returns the content of the distributed data object 1 to the collaboration engine module of the associated device B through RPC.

S3111: The collaboration engine module of the associated device B calls a storage engine module to store the content of the distributed data object 1.

S3112: The collaboration engine module of the associated device B returns the content of the distributed data object 1 to the object management module.

S3113: The object management module of the associated device B returns the content of the distributed data object 1 to the application A.

Therefore, when being started, the associated device B obtains the content of the distributed data object 1 of the application A, and displays a related interface based on the content of the distributed data object 1.

It can be learned from the foregoing that, after starting the application A, the associated device B queries the content of the distributed data object 1 from the terminal A, to implement data synchronization between the application A on the associated device B and the application A on the terminal A.

In some other embodiments, the solution provided in this embodiment of this application further includes: after the application A of the terminal A modifies the content of the distributed data object 1, notifying the associated device B to update the interface based on modified content of the distributed data object 1. In a specific implementation, this step includes the following steps.

S3114: When the application A of the terminal A modifies the distributed data object 1, the application A notifies the object management module that the distributed data object 1 is modified.

For example, when the content of the distributed data object 1 changes due to service logic of the application A, the application A of the terminal A further implements automatic update of content of a UI control bound to the distributed data object 1. For example, in a navigation application, when a current location of a user changes, the navigation application automatically updates a navigation route, navigation information, and the like in a UI interface.

For another example, a user may also perform editing or modification through a UI control in the interface of the application A displayed on the terminal A. The terminal A automatically updates, based on a distributed MVVM module at an application framework layer, the content of the distributed data object 1 bound to the UI control.

S3115: The object management module of the terminal A calls the storage engine module to store the modified content of the distributed data object 1.

S3116: The storage engine module of the terminal A further pushes a content change of the distributed data object 1 to a collaboration engine sending subscriber.

When detecting that the content of the distributed data object 1 changes, the storage engine module of the terminal A pushes a content change notification of the distributed data object 1 to the subscriber.

S3117: The collaboration management module of the terminal A sends modified information of the distributed data object 1 to the collaboration management module of the associated device B through RPC.

S3118: The collaboration management module of the associated device B calls the storage engine module to store the modified content of the distributed data object 1.

S3119: The collaboration management module of the associated device B notifies the object management module that the content of the distributed data object 1 has changed.

S3120: The object management module of the associated device B notifies the application A that the content of the distributed data object 1 has changed.

Then, the associated device B modifies the corresponding interface based on the modified content of the distributed data object 1.

It should be noted that the foregoing steps are merely used to describe a technical idea of the distributed MVVM framework provided in this embodiment of this application. Some steps may be defaulted, and a sequence of some steps may be changed. In addition, a specific execution module, a specific operation to be performed, an execution sequence, and the like in the foregoing steps are not limited in this application.

It can be learned that, after the application A on the terminal A modifies the content of the distributed data object 1, the associated device B can also automatically obtain the modified content of the distributed data object 1, and can automatically refresh, based on the distributed MVVM module at the application framework layer, the UI control bound to the distributed data object 1. In other words, when data/a UI control on the terminal A changes, associated data/an associated UI control on the associated device B is also automatically updated.

It should be noted that, in the foregoing embodiment, a process of cross-device content synchronization of a distributed data object is described by using an example in which when the content of the distributed data object 1 of the application A on the terminal A changes, automatic update of data and a UI control associated with the application A on the associated device B is triggered. It may be understood that, the terminal A may also subscribe to the distributed data object 1 from the associated device B. In this case, after the application A on the associated device B modifies the content of the distributed data object 1, automatic update of associated data and an associated UI control on the terminal A can also be triggered. Details are not described herein again.

In conclusion, the distributed MVVM framework provided in embodiments of this application can implement cross-device bidirectional binding of data and a UI control. This enriches application scenarios of multi-terminal collaborative display.

It should be further noted that the solution of the distributed MVVM framework may be independently applied, or may be used in combination with the foregoing technical solution. This is not specifically limited in embodiments of this application. For example, the solution of the distributed MVVM framework may be used in combination with the foregoing fragment separation solution, FA migration solution, and the like. For example, the first page in the foregoing technical solution 1 includes a fragment A and a fragment B. After the page is separated, a second page displayed by the terminal A includes the fragment A, and a third page displayed by the associated device B includes the fragment B. In this case, the solution of the distributed MVVM framework may be used to implement bidirectional binding between a UI control (or data) in the second page and data (of a UI control) in the third page.

An embodiment of this application further provides an apparatus. The apparatus is included in a terminal, and the apparatus has a function of implementing behavior of the terminal (the terminal A or the associated device B) in any method in the foregoing embodiments. The function may be implemented by using hardware, or may be implemented by using hardware executing corresponding software. The hardware or the software includes at least one module or unit corresponding to the foregoing function, for example, a detection module or unit, a display module or unit, a determining module or unit, and a computing module or unit.

An embodiment of this application further provides a computer storage medium, including computer instructions. When the computer instructions are run on a terminal, the terminal is enabled to perform any method in the foregoing embodiments.

An embodiment of this application further provides a computer program product. When the computer program product runs on a computer, the computer is enabled to perform any method in the foregoing embodiments.

An embodiment of this application further provides a graphical user interface on a terminal. The terminal has a display, a camera, a memory, and one or more processors. The one or more processors are configured to execute one or more computer programs stored in the memory. The graphical user interface includes a graphical user interface displayed when the terminal performs any method in the foregoing embodiments.

It may be understood that to implement the foregoing functions, the terminal or the like includes corresponding hardware structures and/or software modules for performing the functions. A person skilled in the art should be easily aware that, with reference to the example units and algorithm steps described in the embodiments disclosed in this specification, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of the present invention.

In embodiments of this application, the terminal or the like may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that division into the modules in embodiments of the present invention is an example, and is merely logical function division. In actual implementation, there may be another division manner.

It may be clearly learned by a person skilled in the art from the foregoing description of the implementations that, for convenience and brevity of description, division into only the foregoing function modules is used as an example for description. In actual application, the foregoing functions may be allocated to different function modules for implementation according to a requirement, that is, an internal structure of an apparatus is divided into different function modules, to complete all or some of the functions described above. For a specific working process of the foregoing described system, apparatus, and unit, refer to a corresponding process in the foregoing method embodiments, and details are not described herein again.

Function units in embodiments of this application may be integrated into one processing unit, or each unit may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, for example, a flash memory, a removable hard disk, a read-only memory, a random access memory, a magnetic disk, or an optical disc.

The foregoing descriptions are merely specific implementations of this application. However, the protection scope of this application is not limited thereto. Any change or replacement within the technical scope disclosed in this application shall fall within the protection scope of this application. Therefore, the protection scope of this application shall be subject to the protection scope of the claims.

## Claims

1. A method for displaying different parts of an application interface on a plurality of devices including a first terminal and a second terminal, comprising:
displaying(S1202), by the first terminal, a first interface of a first application, wherein the first interface comprises a first part and a second part; and
when detecting(S1205) that a first preset condition is met, displaying(S1206), by the first terminal, a second interface of the first application, wherein the second interface comprises the first part, and the second interface does not comprise the second part; and sending, by the first terminal, a first message to the second terminal, wherein the first message is used to notify the second terminal to download and install one of the first application or a lightweight application of the first application if the second terminal has not installed the first application before receiving the first message, and display a third interface of the first application after installing the one of the first application or the lightweight application of the first application, the third interface comprises the second part, and the third interface does not comprise the first part;and
wherein the detecting that a first preset condition is met comprises:
detecting that a distance between the second terminal and the first terminal is less than or equal to a threshold; or
detecting that a distance between the second terminal and the first terminal is less than or equal to a threshold and the second terminal approaches the first terminal; or
detecting that the second terminal collides with the first terminal; or
detecting a first operation that a user enables a collaborative display function on the first terminal.

2. The method according to claim 1, wherein the method further comprises:
when detecting that the second terminal approaches the first terminal from a first side of the first terminal, determining, by the first terminal, that content on the first side in the first interface is the second part, and content that is not on the first side in the first interface is the first part.

3. The method according to claims 1 or 2, wherein a layout style of the first part in the second interface is different from a layout style of the first part in the first interface.

4. The method according to any one of claims 1 to 3, wherein
the displaying, by a first terminal, a first interface of a first application comprises:
creating, by the first terminal, a first memory data object, and displaying the first part of the first interface and the second part of the first interface based on the first memory data object; and
after the sending, by the first terminal, a first message to a second terminal, the method further comprises:
sending, by the first terminal, an identifier of the first memory data object to the second terminal, wherein the identifier of the first memory data object is used by the second terminal to display the third interface.

5. The method according to any one of claims 1 to 4, wherein after the sending, by the first terminal, a first message to a second terminal, the method further comprises:
displaying, by the first terminal, a fourth interface of the first application when the first terminal detects a second preset condition is met, wherein the fourth interface comprises the first part and the second part, wherein
the detecting that a second preset condition is met comprises:
detecting that the distance between the second terminal and the first terminal is greater than the threshold;
detecting that the second terminal moves away from the first terminal; or
detecting a second operation that the user exits the collaborative display function on the first terminal.

6. The method according to any one of claims 1 to 5, before the displaying, by the first terminal, a second interface, the method further comprises:
determining, by the first terminal based on one or more of a location of a second terminal relative to the first terminal, a type of the second terminal, a type of the first terminal, a device feature of the second terminal, a device feature of the first terminal, a device status of the second terminal, and a device status of the first terminal, that the first terminal is to display the second interface and the second terminal is to display the third interface.

7. The method according to claim 6, wherein the determining, based on one or more of a location of a second terminal relative to the first terminal, a type of the second terminal, a type of the first terminal, a device feature of the second terminal, a device feature of the first terminal, a device status of the second terminal, and a device status of the first terminal, that the first terminal is to display the first part of the first interface and the second terminal is to display the second part of the first interface comprises:
when the second terminal is located on the left of/above the first terminal, determining that the first terminal is to display right content of the first interface and the second terminal is to display left content of the first interface;
when the second terminal is located on the left of/above the first terminal, determining that the first terminal is to display lower content of the first interface and the second terminal is to display upper content of the first interface;
when the second terminal is located on the right of/below the first terminal, determining that the first terminal is to display left content of the first interface and the second terminal is to display right content of the first interface; or
when the second terminal is located on the right of/below the first terminal, determining that the first terminal is to display upper content of the first interface and the second terminal is to display lower content of the first interface.

8. The method according to claim 6, wherein the determining, based on one or more of a location of a second terminal relative to the first terminal, a type of the second terminal, a type of the first terminal, a device feature of the second terminal, a device feature of the first terminal, a device status of the second terminal, and a device status of the first terminal, that the first terminal is to display a second interface and the second terminal is to display a third interface further comprises:
when the first interface comprises a first page and a second page of a first application, determining that the first terminal is to display the first page of the first application and the second terminal is to display the second page of the first application;
when the first interface comprises a third page of a second application and a fourth page of a third application, determining that the first terminal is to display the third page of the second application and the second terminal is to display the fourth page of the third application; or
when the first interface comprises a fifth page of a fourth application and a floating window, determining that the first terminal is to display the fifth page of the fourth application and the second terminal is to display a page of an application corresponding to the floating window; or determining that the second terminal is to display the fifth page of the fourth application and the first terminal is to display a page of an application corresponding to the floating window.

9. The method according to claim 6, wherein the determining, based on one or more of a location of a second terminal relative to the first terminal, a type of the second terminal, a type of the first terminal, a device feature of the second terminal, a device feature of the first terminal, a device status of the second terminal, and a device status of the first terminal, that the first terminal is to display a second interface and the second terminal is to display a third interface further comprises:
when the device type of the first terminal is a first type, and/or the device type of the second terminal is a second type, displaying, by the first terminal, display-type content of the first interface, and displaying, by the second terminal, interaction-type content of the first interface, wherein
the display-type content comprises one or more of document content, web page content, video content, and main body content of an application; and the interaction-type content comprises one or more of a button, a menu, a catalog, a tool bar, a remark, a keyboard, and a tag; and
the first type is different from the second type.

10. The method according to claim 6, wherein the device feature comprises a screen size; and
the determining, based on one or more of a location of a second terminal relative to the first terminal, a type of the second terminal, a type of the first terminal, a device feature of the second terminal, a device feature of the first terminal, a device status of the second terminal, and a device status of the first terminal, that the first terminal is to display a second interface and the second terminal is to display a third interface further comprises:
when a screen size of the first terminal is greater than that of the second terminal, displaying, by the first terminal, display-type content of the first interface, and displaying, by the second terminal, interaction-type content of the first interface, wherein
the display-type content comprises one or more of document content, web page content, video content, and main body content of an application; and the interaction-type content comprises one or more of a button, a menu, a catalog, a tool bar, a remark, a keyboard, and a tag.

11. The method according to claim 6, wherein the device feature comprises a human-computer interaction manner; and
the determining, based on one or more of a location of a second terminal relative to the first terminal, a type of the second terminal, a type of the first terminal, a device feature of the second terminal, a device feature of the first terminal, a device status of the second terminal, and a device status of the first terminal, that the first terminal is to display a second interface and the second terminal is to display a third interface further comprises:
when a priority of a human-computer interaction manner of the first terminal is higher than a priority of a human-computer interaction manner of the second terminal, displaying, by the first terminal, interaction-type content of the first interface, and displaying, by the second terminal, display-type content of the first interface, wherein
the display-type content comprises one or more of document content, web page content, video content, and main body content of an application; and the interaction-type content comprises one or more of a button, a menu, a catalog, a tool bar, a remark, a keyboard, and a tag.

12. The method according to any one of claims 1 to 5, wherein the first part is display-type content of the first interface, wherein the display-type content comprises one or more of document content, web page content, video content, and main body content of an application.

13. The method according to any one of claims 1 to 5 or 12, wherein the second part is interaction-type content of the first interface, wherein the display-type content comprises one or more of document content, web page content, video content, and main body content of an application.

14. A terminal for displaying different parts of an application interface on a plurality of devices including the terminal, comprising a processor, a memory, and a display, wherein the memory and the display are coupled to the processor, the memory is configured to store computer program code, the computer program code comprises computer instructions, and when the processor reads the computer instructions from the memory, the terminal is enabled to perform the method according to any one of claims 1 to 13.

## Patentansprüche

1. Verfahren zum Anzeigen verschiedener Teile einer Anwendungsschnittstelle auf einer Vielzahl von Vorrichtungen, einschließlich eines ersten Endgeräts und eines zweiten Endgeräts, umfassend:
Anzeigen (S1202) einer ersten Schnittstelle einer ersten Anwendung durch das erste Endgerät, wobei die erste Schnittstelle einen ersten Teil und einen zweiten Teil umfasst; und
wenn detektiert wird (S1205), dass eine erste voreingestellte Bedingung erfüllt ist, Anzeigen (S1206) einer zweiten Schnittstelle der ersten Anwendung durch das erste Endgerät, wobei die zweite Schnittstelle den ersten Teil umfasst und die zweite Schnittstelle den zweiten Teil nicht umfasst; und Senden einer ersten Nachricht durch das erste Endgerät an das zweite Endgerät, wobei die erste Nachricht verwendet wird, um das zweite Endgerät zu benachrichtigen, eine von der ersten Anwendung oder einer leichten Anwendung der ersten Anwendung herunterzuladen und zu installieren, wenn das zweite Endgerät die erste Anwendung vor dem Empfangen der ersten Nachricht nicht installiert hat, und eine dritte Schnittstelle der ersten Anwendung nach dem Installieren der einen von der ersten Anwendung oder der leichten Anwendung der ersten Anwendung anzuzeigen, wobei die dritte Schnittstelle den zweiten Teil umfasst und die dritte Schnittstelle den ersten Teil nicht umfasst; und
wobei das Detektieren, dass eine erste voreingestellte Bedingung erfüllt ist, umfasst:
Detektieren, dass ein Abstand zwischen dem zweiten Endgerät und dem ersten Endgerät kleiner als oder gleich einem Schwellenwert ist; oder
Detektieren, dass ein Abstand zwischen dem zweiten Endgerät und dem ersten Endgerät kleiner als oder gleich einem Schwellenwert ist und sich das zweite Endgerät dem ersten Endgerät nähert; oder
Detektieren, dass das zweite Endgerät mit dem ersten Endgerät kollidiert; oder
Detektieren einer ersten Operation, bei der ein Benutzer eine kollaborative Anzeigefunktion auf dem ersten Endgerät aktiviert.

2. Verfahren nach Anspruch 1, wobei das Verfahren ferner umfasst:
wenn detektiert wird, dass sich das zweite Endgerät dem ersten Endgerät von einer ersten Seite des ersten Endgeräts nähert, Bestimmen durch das erste Endgerät, dass Inhalt auf der ersten Seite in der ersten Schnittstelle der zweite Teil ist und Inhalt, der nicht auf der ersten Seite in der ersten Schnittstelle ist, der erste Teil ist.

3. Verfahren nach Anspruch 1 oder 2, wobei sich ein Layout-Stil des ersten Teils in der zweiten Schnittstelle von einem Layout-Stil des ersten Teils in der ersten Schnittstelle unterscheidet.

4. Verfahren nach einem der Ansprüche 1 bis 3, wobei das Anzeigen einer ersten Schnittstelle einer ersten Anwendung durch ein erstes Endgerät umfasst:
Erstellen eines ersten Speicherdatenobjekts durch das erste Endgerät und Anzeigen des ersten Teils der ersten Schnittstelle und des zweiten Teils der ersten Schnittstelle basierend auf dem ersten Speicherdatenobjekt; und
nach dem Senden einer ersten Nachricht durch das erste Endgerät an ein zweites Endgerät das Verfahren ferner umfasst:
Senden einer Kennung des ersten Speicherdatenobjekts durch das erste Endgerät an das zweite Endgerät, wobei die Kennung des ersten Speicherdatenobjekts von dem zweiten Endgerät verwendet wird, um die dritte Schnittstelle anzuzeigen.

5. Verfahren nach einem der Ansprüche 1 bis 4, wobei nach dem Senden einer ersten Nachricht durch das erste Endgerät an ein zweites Endgerät das Verfahren ferner umfasst:
Anzeigen einer vierten Schnittstelle der ersten Anwendung durch das erste Endgerät, wenn das erste Endgerät detektiert, dass eine zweite voreingestellte Bedingung erfüllt ist, wobei die vierte Schnittstelle den ersten Teil und den zweiten Teil umfasst, wobei
das Detektieren, dass eine zweite voreingestellte Bedingung erfüllt ist, umfasst:
Detektieren, dass der Abstand zwischen dem zweiten Endgerät und dem ersten Endgerät größer als der Schwellenwert ist;
Detektieren, dass sich das zweite Endgerät von dem ersten Endgerät weg bewegt; oder
Detektieren einer zweiten Operation, bei der der Benutzer die kollaborative Anzeigefunktion auf dem ersten Endgerät beendet.

6. Verfahren nach einem der Ansprüche 1 bis 5, wobei vor dem Anzeigen einer zweiten Schnittstelle durch das erste Endgerät das Verfahren ferner umfasst:
Bestimmen durch das erste Endgerät basierend auf einem oder mehreren von einem Standort eines zweiten Endgeräts relativ zu dem ersten Endgerät, einem Typ des zweiten Endgeräts, einem Typ des ersten Endgeräts, einem Vorrichtungsmerkmal des zweiten Endgeräts, einem Vorrichtungsmerkmal des ersten Endgeräts, einem Vorrichtungsstatus des zweiten Endgeräts und einem Vorrichtungsstatus des ersten Endgeräts, dass das erste Endgerät die zweite Schnittstelle anzuzeigen hat und das zweite Endgerät die dritte Schnittstelle anzuzeigen hat.

7. Verfahren nach Anspruch 6, wobei das Bestimmen basierend auf einem oder mehreren von einem Standort eines zweiten Endgeräts relativ zu dem ersten Endgerät, einem Typ des zweiten Endgeräts, einem Typ des ersten Endgeräts, einem Vorrichtungsmerkmal des zweiten Endgeräts, einem Vorrichtungsmerkmal des ersten Endgeräts, einem Vorrichtungsstatus des zweiten Endgeräts und einem Vorrichtungsstatus des ersten Endgeräts, dass das erste Endgerät den ersten Teil der ersten Schnittstelle anzuzeigen hat und das zweite Endgerät den zweiten Teil der ersten Schnittstelle anzuzeigen hat, umfasst:
wenn sich das zweite Endgerät links von/über dem ersten Endgerät befindet, Bestimmen, dass das erste Endgerät rechten Inhalt der ersten Schnittstelle anzuzeigen hat und das zweite Endgerät linken Inhalt der ersten Schnittstelle anzuzeigen hat;
wenn sich das zweite Endgerät links von/über dem ersten Endgerät befindet, Bestimmen, dass das erste Endgerät unteren Inhalt der ersten Schnittstelle anzuzeigen hat und das zweite Endgerät oberen Inhalt der ersten Schnittstelle anzuzeigen hat;
wenn sich das zweite Endgerät rechts von/unter dem ersten Endgerät befindet, Bestimmen, dass das erste Endgerät linken Inhalt der ersten Schnittstelle anzuzeigen hat und das zweite Endgerät rechten Inhalt der ersten Schnittstelle anzuzeigen hat; oder
wenn sich das zweite Endgerät rechts von/unter dem ersten Endgerät befindet, Bestimmen, dass das erste Endgerät oberen Inhalt der ersten Schnittstelle anzuzeigen hat und das zweite Endgerät unteren Inhalt der ersten Schnittstelle anzuzeigen hat.

8. Verfahren nach Anspruch 6, wobei das Bestimmen basierend auf einem oder mehreren von einem Standort eines zweiten Endgeräts relativ zu dem ersten Endgerät, einem Typ des zweiten Endgeräts, einem Typ des ersten Endgeräts, einem Vorrichtungsmerkmal des zweiten Endgeräts, einem Vorrichtungsmerkmal des ersten Endgeräts, einem Vorrichtungsstatus des zweiten Endgeräts und einem Vorrichtungsstatus des ersten Endgeräts, dass das erste Endgerät eine zweite Schnittstelle anzuzeigen hat und das zweite Endgerät eine dritte Schnittstelle anzuzeigen hat, ferner umfasst:
wenn die erste Schnittstelle eine erste Seite und eine zweite Seite einer ersten Anwendung umfasst, Bestimmen, dass das erste Endgerät die erste Seite der ersten Anwendung anzuzeigen hat und das zweite Endgerät die zweite Seite der ersten Anwendung anzuzeigen hat;
wenn die erste Schnittstelle eine dritte Seite einer zweiten Anwendung und eine vierte Seite einer dritten Anwendung umfasst, Bestimmen, dass das erste Endgerät die dritte Seite der zweiten Anwendung anzuzeigen hat und das zweite Endgerät die vierte Seite der dritten Anwendung anzuzeigen hat; oder
wenn die erste Schnittstelle eine fünfte Seite einer vierten Anwendung und ein schwebendes Fenster umfasst, Bestimmen, dass das erste Endgerät die fünfte Seite der vierten Anwendung anzuzeigen hat und das zweite Endgerät eine Seite einer Anwendung anzuzeigen hat, die dem schwebenden Fenster entspricht; oder Bestimmen, dass das zweite Endgerät die fünfte Seite der vierten Anwendung anzuzeigen hat und das erste Endgerät eine Seite einer Anwendung anzuzeigen hat, die dem schwebenden Fenster entspricht.

9. Verfahren nach Anspruch 6, wobei das Bestimmen basierend auf einem oder mehreren von einem Standort eines zweiten Endgeräts relativ zu dem ersten Endgerät, einem Typ des zweiten Endgeräts, einem Typ des ersten Endgeräts, einem Vorrichtungsmerkmal des zweiten Endgeräts, einem Vorrichtungsmerkmal des ersten Endgeräts, einem Vorrichtungsstatus des zweiten Endgeräts und einem Vorrichtungsstatus des ersten Endgeräts, dass das erste Endgerät eine zweite Schnittstelle anzuzeigen hat und das zweite Endgerät eine dritte Schnittstelle anzuzeigen hat, ferner umfasst:
wenn der Vorrichtungstyp des ersten Endgeräts ein erster Typ ist und/oder der Vorrichtungstyp des zweiten Endgeräts ein zweiter Typ ist, Anzeigen von Inhalt vom Anzeigetyp der ersten Schnittstelle durch das erste Endgerät und Anzeigen von Inhalt vom Interaktionstyp der ersten Schnittstelle durch das zweite Endgerät, wobei
der Inhalt vom Anzeigetyp eines oder mehrere von Dokumenteninhalt, Webseiteninhalt, Videoinhalt und Hauptteilinhalt einer Anwendung umfasst; und der Inhalt vom Interaktionstyp eines oder mehrere von einer Schaltfläche, einem Menü, einem Katalog, einer Symbolleiste, einer Anmerkung, einer Tastatur und einem Tag umfasst; und
sich der erste Typ von dem zweiten Typ unterscheidet.

10. Verfahren nach Anspruch 6, wobei das Vorrichtungsmerkmal eine Bildschirmgröße umfasst; und
das Bestimmen basierend auf einem oder mehreren von einem Standort eines zweiten Endgeräts relativ zu dem ersten Endgerät, einem Typ des zweiten Endgeräts, einem Typ des ersten Endgeräts, einem Vorrichtungsmerkmal des zweiten Endgeräts, einem Vorrichtungsmerkmal des ersten Endgeräts, einem Vorrichtungsstatus des zweiten Endgeräts und einem Vorrichtungsstatus des ersten Endgeräts, dass das erste Endgerät eine zweite Schnittstelle anzuzeigen hat und das zweite Endgerät eine dritte Schnittstelle anzuzeigen hat, ferner umfasst:
wenn eine Bildschirmgröße des ersten Endgeräts größer als die des zweiten Endgeräts ist, Anzeigen von Inhalt vom Anzeigetyp der ersten Schnittstelle durch das erste Endgerät und Anzeigen von Inhalt vom Interaktionstyp der ersten Schnittstelle durch das zweite Endgerät, wobei
der Inhalt vom Anzeigetyp eines oder mehrere von Dokumenteninhalt, Webseiteninhalt, Videoinhalt und Hauptteilinhalt einer Anwendung umfasst; und der Inhalt vom Interaktionstyp eines oder mehrere von einer Schaltfläche, einem Menü, einem Katalog, einer Symbolleiste, einer Anmerkung, einer Tastatur und einem Tag umfasst.

11. Verfahren nach Anspruch 6, wobei das Vorrichtungsmerkmal eine Mensch-Computer-Interaktionsweise umfasst; und
das Bestimmen basierend auf einem oder mehreren von einem Standort eines zweiten Endgeräts relativ zu dem ersten Endgerät, einem Typ des zweiten Endgeräts, einem Typ des ersten Endgeräts, einem Vorrichtungsmerkmal des zweiten Endgeräts, einem Vorrichtungsmerkmal des ersten Endgeräts, einem Vorrichtungsstatus des zweiten Endgeräts und einem Vorrichtungsstatus des ersten Endgeräts, dass das erste Endgerät eine zweite Schnittstelle anzuzeigen hat und das zweite Endgerät eine dritte Schnittstelle anzuzeigen hat, ferner umfasst:
wenn eine Priorität einer Mensch-Computer-Interaktionsweise des ersten Endgeräts höher als eine Priorität einer Mensch-Computer-Interaktionsweise des zweiten Endgeräts ist, Anzeigen von Inhalt vom Interaktionstyp der ersten Schnittstelle durch das erste Endgerät und Anzeigen von Inhalt vom Anzeigetyp der ersten Schnittstelle durch das zweite Endgerät, wobei
der Inhalt vom Anzeigetyp eines oder mehrere von Dokumenteninhalt, Webseiteninhalt, Videoinhalt und Hauptteilinhalt einer Anwendung umfasst; und der Inhalt vom Interaktionstyp eines oder mehrere von einer Schaltfläche, einem Menü, einem Katalog, einer Symbolleiste, einer Anmerkung, einer Tastatur und einem Tag umfasst.

12. Verfahren nach einem der Ansprüche 1 bis 5, wobei der erste Teil Inhalt vom Anzeigetyp der ersten Schnittstelle ist, wobei der Inhalt vom Anzeigetyp eines oder mehrere von Dokumenteninhalt, Webseiteninhalt, Videoinhalt und Hauptteilinhalt einer Anwendung umfasst.

13. Verfahren nach einem der Ansprüche 1 bis 5 oder 12, wobei der zweite Teil Inhalt vom Interaktionstyp der ersten Schnittstelle ist, wobei der Inhalt vom Anzeigetyp eines oder mehrere von Dokumenteninhalt, Webseiteninhalt, Videoinhalt und Hauptteilinhalt einer Anwendung umfasst.

14. Endgerät zum Anzeigen verschiedener Teile einer Anwendungsschnittstelle auf einer Vielzahl von Vorrichtungen, einschließlich des Endgeräts, umfassend einen Prozessor, einen Speicher und eine Anzeige, wobei der Speicher und die Anzeige mit dem Prozessor gekoppelt sind, der Speicher konfiguriert ist, Computerprogrammcode zu speichern, der Computerprogrammcode Computeranweisungen umfasst, und wenn der Prozessor die Computeranweisungen aus dem Speicher liest, das Endgerät befähigt wird, das Verfahren nach einem der Ansprüche 1 bis 13 durchzuführen.

## Revendications

1. Procédé d'affichage des différentes parties d'une interface d'application sur une pluralité de dispositifs comportant un premier terminal et un second terminal, comprenant :
l'affichage (S1202), par le premier terminal, d'une première interface d'une première application, dans lequel la première interface comprend une première partie et une seconde partie ; et
lors de la détection (S1205) qu'une première condition prédéfinie est remplie, l'affichage (S1206), par le premier terminal, d'une deuxième interface de la première application, dans lequel la deuxième interface comprend la première partie et la deuxième interface ne comprend pas la seconde partie ; et l'envoi, par le premier terminal, d'un premier message au second terminal, dans lequel le premier message est utilisé pour notifier au second terminal de télécharger et d'installer l'une de la première application ou d'une version allégée d'application de la première application si le second terminal n'a pas installé la première application avant la réception du premier message, et afficher une troisième interface de la première application après l'installation de l'une de la première application ou de la version allégée d'application de la première application, la troisième interface comprend la seconde partie et la troisième interface ne comprend pas la première partie ; et
dans lequel la détection qu'une première condition prédéfinie est remplie comprend :
la détection qu'une distance entre le second terminal et le premier terminal est inférieure ou égale à un seuil ; ou
la détection qu'une distance entre le second terminal et le premier terminal est inférieure ou égale à un seuil et que le second terminal se rapproche du premier terminal ; ou
la détection que le second terminal entre en collision avec le premier terminal ; ou
la détection d'une première opération au cours de laquelle un utilisateur active une fonction d'affichage collaboratif sur le premier terminal.

2. Procédé selon la revendication 1, dans lequel le procédé comprend également :
lors de la détection que le second terminal s'approche du premier terminal à partir d'un premier côté du premier terminal, la détermination, par le premier terminal, que le contenu du premier côté de la première interface est la seconde partie, et que le contenu qui n'est pas du premier côté de la première interface est la première partie.

3. Procédé selon les revendications 1 ou 2, dans lequel le style de mise en page de la première partie dans la deuxième interface est différent du style de mise en page de la première partie dans la première interface.

4. Procédé selon l'une quelconque des revendications 1 à 3, dans lequel
l'affichage, par un premier terminal, d'une première interface d'une première application comprend :
la création, par le premier terminal, d'un premier objet de données en mémoire, et l'affichage de la première partie de la première interface et de la seconde partie de la première interface sur la base du premier objet de données en mémoire ; et
après l'envoi, par le premier terminal, d'un premier message à un second terminal, le procédé comprend également :
l'envoi, par le premier terminal, d'un identifiant du premier objet de données en mémoire au second terminal, dans lequel l'identifiant du premier objet de données en mémoire est utilisé par le second terminal pour afficher la troisième interface.

5. Procédé selon l'une quelconque des revendications 1 à 4, dans lequel après l'envoi, par le premier terminal, d'un premier message au dispositif terminal, le procédé comprend également :
l'affichage, par le premier terminal, d'une quatrième interface de la première application lorsque le premier terminal détecte qu'une seconde condition prédéfinie est remplie, dans lequel la quatrième interface comprend la première partie et la seconde partie, dans lequel
la détection qu'une seconde condition prédéfinie est remplie comprend :
la détection que la distance entre le second terminal et le premier terminal est supérieure au seuil ;
la détection que le second terminal s'éloigne du premier terminal ; ou
la détection d'une seconde opération que l'utilisateur quitte la fonction d'affichage collaboratif sur le premier terminal.

6. Procédé selon l'une quelconque des revendications 1 à 5, avant l'affichage, par le premier terminal, d'une deuxième interface, le procédé comprend également :
la détermination, par le premier terminal sur la base de l'un ou plusieurs d'un emplacement d'un second terminal par rapport au premier terminal, d'un type du second terminal, d'un type du premier terminal, d'une caractéristique de dispositif du second terminal, d'une caractéristique de dispositif du premier terminal, d'un état de dispositif du second terminal et d'un état de dispositif du premier terminal, que le premier terminal doit afficher la deuxième interface et que le second terminal doit afficher la troisième interface.

7. Procédé selon la revendication 6, dans lequel la détermination, sur la base de l'un ou plusieurs d'un emplacement d'un second terminal par rapport au premier terminal, d'un type du second terminal, d'un type du premier terminal, d'une caractéristique de dispositif du second terminal, d'une caractéristique de dispositif du premier terminal, d'un état de dispositif du second terminal et d'un état de dispositif du premier terminal, que le premier terminal doit afficher la première partie de la première interface et le second terminal doit afficher la seconde partie de la première interface comprend :
lorsque le second terminal est situé à gauche/au-dessus du premier terminal, la détermination que le premier terminal doit afficher le contenu de droite de la première interface et que le second terminal doit afficher le contenu de gauche de la première interface ;
lorsque le second terminal est situé à gauche/au-dessus du premier terminal, la détermination que le premier terminal doit afficher le contenu inférieur de la première interface et que le second terminal doit afficher le contenu supérieur de la première interface ;
lorsque le second terminal est situé à droite/en dessous du premier terminal, la détermination que le premier terminal doit afficher le contenu de gauche de la première interface et que le second terminal doit afficher le contenu de droite de la première interface ; ou
lorsque le second terminal est situé à droite/en dessous du premier terminal, la détermination que le premier terminal doit afficher le contenu supérieur de la première interface et que le second terminal doit afficher le contenu inférieur de la première interface.

8. Procédé selon la revendication 6, dans lequel la détermination, sur la base de l'un ou plusieurs d'un emplacement d'un second terminal par rapport au premier terminal, d'un type du second terminal, d'un type du premier terminal, d'une caractéristique de dispositif du second terminal, d'une caractéristique de dispositif du premier terminal, d'un état de dispositif du second terminal et d'un état de dispositif du premier terminal, que le premier terminal doit afficher une deuxième interface et le second terminal doit afficher une troisième interface comprend également :
lorsque la première interface comprend une première page et une deuxième page d'une première application, la détermination que le premier terminal doit afficher la première page de la première application et que le second terminal doit afficher la deuxième page de la première application ;
lorsque la première interface comprend une troisième page d'une deuxième application et une quatrième page d'une troisième application, la détermination que le premier terminal doit afficher la troisième page de la deuxième application et que le second terminal doit afficher la quatrième page de la troisième application ; ou
lorsque la première interface comprend une cinquième page d'une quatrième application et une fenêtre flottante, la détermination que le premier terminal doit afficher la cinquième page de la quatrième application et que le second terminal doit afficher une page d'une application correspondant à la fenêtre flottante ; ou la détermination que le second terminal doit afficher la cinquième page de la quatrième application et que le premier terminal doit afficher une page d'une application correspondant à la fenêtre flottante.

9. Procédé selon la revendication 6, dans lequel la détermination, sur la base de l'un ou plusieurs d'un emplacement d'un second terminal par rapport au premier terminal, d'un type du second terminal, d'un type du premier terminal, d'une caractéristique de dispositif du second terminal, d'une caractéristique de dispositif du premier terminal, d'un état de dispositif du second terminal et d'un état de dispositif du premier terminal, que le premier terminal doit afficher une deuxième interface et le second terminal doit afficher une troisième interface comprend également :
lorsque le type de dispositif du premier terminal est un premier type et/ou que le type de dispositif du second terminal est un second type, l'affichage, par le premier terminal, d'un contenu de type affichage de la première interface, et l'affichage, par le second terminal, d'un contenu de type interaction de la première interface, dans lequel
le contenu de type affichage comprend l'un ou plusieurs du contenu de document, du contenu de page Web, du contenu vidéo et du contenu de corps principal d'une application ; et le contenu de type interaction comprend l'un ou plusieurs d'un bouton, d'un menu, d'un catalogue, d'une barre d'outils, d'une remarque, d'un clavier et d'une étiquette ; et
le premier type est différent du second type.

10. Procédé selon la revendication 6, dans lequel la caractéristique de dispositif comprend une taille d'écran ; et la détermination, sur la base de l'un ou plusieurs d'un emplacement d'un second terminal par rapport au premier terminal, d'un type du second terminal, d'un type du premier terminal, d'une caractéristique de dispositif du second terminal, d'une caractéristique de dispositif du premier terminal, d'un état de dispositif du second terminal et d'un état de dispositif du premier terminal, que le premier terminal doit afficher une deuxième interface et le second terminal doit afficher une troisième interface comprend également :
lorsque la taille de l'écran du premier terminal est supérieure à celle du second terminal, l'affichage, par le premier terminal, du contenu de type affichage de la première interface, et l'affichage, par le second terminal, du contenu de type interaction de la première interface, dans lequel
le contenu de type affichage comprend l'un ou plusieurs du contenu de document, du contenu de page Web, du contenu vidéo et du contenu de corps principal d'une application ; et le contenu de type interaction comprend l'un ou plusieurs d'un bouton, d'un menu, d'un catalogue, d'une barre d'outils, d'une remarque, d'un clavier et d'une étiquette.

11. Procédé selon la revendication 6, dans lequel la caractéristique de dispositif comprend un mode d'interaction homme-machine ; et
la détermination, sur la base de l'un ou plusieurs d'un emplacement d'un second terminal par rapport au premier terminal, d'un type du second terminal, d'un type du premier terminal, d'une caractéristique de dispositif du second terminal, d'une caractéristique de dispositif du premier terminal, d'un état de dispositif du second terminal et d'un état de dispositif du premier terminal, que le premier terminal doit afficher une deuxième interface et le second terminal doit afficher une troisième interface comprend également :
lorsqu'une priorité d'un mode d'interaction homme-machine du premier terminal est supérieure à une priorité d'un mode d'interaction homme-machine du second terminal, l'affichage, par le premier terminal, du contenu de type interaction de la première interface, et l'affichage, par le second terminal, du contenu de type affichage de la première interface, dans lequel le contenu de type affichage comprend l'un ou plusieurs du contenu de document, du contenu de page Web, du contenu vidéo et du contenu de corps principal d'une application ; et le contenu de type interaction comprend l'un ou plusieurs d'un bouton, d'un menu, d'un catalogue, d'une barre d'outils, d'une remarque, d'un clavier et d'une étiquette.

12. Procédé selon l'une quelconque des revendications 1 à 5, dans lequel la première partie est le contenu de type affichage de la première interface, dans lequel le contenu de type affichage comprend l'un ou plusieurs du contenu de document, du contenu de page Web, du contenu vidéo et du contenu de corps principal d'une application.

13. Procédé selon l'une quelconque des revendications 1 à 5 ou 12, dans lequel la seconde partie est le contenu de type interaction de la première interface, dans lequel le contenu de type affichage comprend l'un ou plusieurs du contenu de document, du contenu de page Web, du contenu vidéo et du contenu de corps principal d'une application.

14. Terminal d'affichage des différentes parties d'une interface d'application sur une pluralité de dispositifs comportant le terminal comprenant un processeur, une mémoire, et un écran, dans lequel la mémoire et l'écran sont couplés au processeur, la mémoire est configurée pour stocker un code de programme informatique, le code de programme informatique comprend des instructions informatiques, et lorsque le processeur lit les instructions informatiques à partir de la mémoire, le terminal est activé pour réaliser le procédé selon l'une quelconque des revendications 1 à 13.
